# EUROPEAN PATENT APPLICATION

(11) **EP 4 617 911 A1**
(43) Date of publication of application: **17.09.2025**
(21) Application number: 24213835.2
(22) Date of filing: 19.11.2024
(51) Int. Cl.: G06F 16/901, G06N 3/00

(54) **NEURAL NETWORK ARCHITECTURE FOR TRANSFORMER-BASED MULTI-HEAD ATTENTION**

(30) Priority: 14.03.2024 KR 20240036096
(71) Applicant: SK hynix Inc., Bubal-eub Icheon-si Gyeonggi-do 17336 (KR)
(72) Inventor: KIM, Gu Hyun, Icheon-si, Gyeonggi-do 17336 (KR); KWON, Yong Kee, Icheon-si, Gyeonggi-do 17336 (KR); WON, Jong Soon, Icheon-si, Gyeonggi-do 17336 (KR)
(74) Representative: Isarpatent

(57) **Abstract**

A neural network architecture includes a plurality of processing-in-memory (PIM) devices configured to perform multi-head attention for transformer model. Each of the plurality of PIM devices includes a plurality of memory banks configured to store key vectors and value vectors that are used as input data of the multi-head attention, and a plurality of processing units corresponding to the plurality of memory banks and configured to perform the multi-head attention via the transformer model using the key vectors and the value vectors. The plurality of memory banks are configured to store the key vectors in a first manner and store the value vectors in a second manner that is different from the first manner.

## Description

### BACKGROUND

### 1. Technical Field

Various embodiments of the present teachings relate to neural network architectures and, more particularly, to neural network architectures for a transformer-based multi-head attention.

### 2. Related Art

Recently, the field of natural language processing (NLP) has been revolutionized by a new generation of deep neural networks that utilize transformer architecture. Transformers are deep neural networks that abandon recurrent connections in favor of layered "attention head" circuits, which facilitate self-supervised training and inference on massive real-world text corpora. Transformer architecture represents the meaning of a word as a numeric vector in a high-dimensional "embedding" space, where closely related words are located closer together. Unlike previous generation word embeddings, which assign a single static meaning to each word, that is, a meaning independent of context, the transformer assigns each word a contextual meaning through an embedding process that includes information about the order of the words. The attention head, a core circuit motif of the transformer, integrates a weighted sum of information exposed by different words, where the relative weights pay more attention to some words than to others. Within a transformer, the attention heads at each layer work in parallel to update their contextual embeddings, allowing for a sophisticated representation of linguistic structure.

### SUMMARY

A neural network architecture according to an embodiment of the present disclosure may include a plurality of processing-in-memory (PIM) devices configured to perform multi-head attention for a transformer model. Each of the plurality of PIM devices may include a plurality of memory banks configured to store key vectors and value vectors that are used as input data of the multi-head attention, and a plurality of processing units corresponding to the plurality of memory banks and configured to perform the multi-head attention via the transformer model using the key vectors and the value vectors. The plurality of memory banks may be configured to store the key vectors in a first manner and store the value vectors in a second manner that is different from the first manner.

A neural network architecture according to an embodiment of the present disclosure may include a plurality of processing-in-memory (PIM) devices configured to perform multi-head attention for a transformer model, a PIM controller configured to control the plurality of PIM devices, a local memory coupled to the PIM controller, and a local processing unit coupled to the PIM controller and the local memory. Each of the plurality of PIM devices may include a plurality of memory banks configured to store key vectors used in a first matrix-vector multiplication of the multi-head attention and value vectors used in a second matrix-vector multiplication of the multi-head attention, a global buffer configured to store query vectors used in the first matrix-vector multiplication of the multi-head attention and attention distribution vectors used in the second matrix-vector multiplication, and a plurality of processing units corresponding to the plurality of memory banks and configured to perform the first matrix-vector multiplication on the key vectors and the query vectors and the second matrix-vector multiplication on the value vectors and the attention distribution vectors.

A method for transformer-based multi-head attention operations for a neural network architecture according to an embodiment of the present disclosure may include generating a plurality of query vectors (Q), a plurality of key vectors (K), and a plurality of value vectors (V) in at least one PIM device, writing the plurality of query vectors, the plurality of key vectors, and the plurality of value vectors from the at least one PIM device to at least one local memory, writing the plurality of key vectors to a plurality of memory banks of the at least one PIM device in a first manner, writing the plurality of value vectors to the plurality of memory banks of the at least one PIM device in a second manner, writing the plurality of query vectors to a plurality of global buffers of the at least one PIM device, performing a first matrix multiplication of the operands Q·KT to generate an attention score vector in a plurality of processing units of the at least one PIM, wherein KT is the transpose of K, applying a softmax operation to generate a plurality a plurality of attention distribution vectors in the plurality of processing units of the at least one PIM, writing a plurality of attention distribution vectors to the plurality of global buffers of the at least one PIM device, and performing a second matrix-vector multiplication on the plurality of attention distribution vectors and the plurality of value vectors to generate at least one multi-head attention value vector.

### BRIEF DESCRIPTION OF THE DRAWINGS

FIG. 1 is a block diagram illustrating an example of a neural network architecture for a transformer-based multi-head attention according to embodiments of the present disclosure.
FIG. 2 is a block diagram illustrating an example of a processing-in-memory (PIM) device included in a neural network architecture of FIG. 1.
FIG. 3 is a circuit diagram illustrating an example of a processing unit included in a PIM device of FIG. 2.
FIG. 4 is a diagram illustrating a transformer model processed by a neural network architecture of FIG. 1 according to an embodiment of the present disclosure.
FIG. 5 is a diagram illustrating a multi-head attention of a transformer model of FIG. 4 according to an embodiment of the present disclosure.
FIG. 6 is a diagram illustrating how query vectors, key vectors, and value vectors are generated during one sequence of the multi-head attention according to an embodiment of the present disclosure.
FIG. 7 is a diagram illustrating a first matrix-vector multiplication processes in first, second, and third heads in a first sequence of the multi-head attention of FIG. 5.
FIG. 8 is a diagram illustrating a first matrix-vector multiplication process in the first, second, and third heads in a second sequence of the multi-head attention of FIG. 5.
FIG. 9 is a diagram illustrating a first matrix-vector multiplication process in the first, second, and third heads in a third sequence of the multi-head attention of FIG. 5.
FIG. 10 is a diagram illustrating a first matrix-vector multiplication process in the first, second, and third heads in a fourth sequence of the multi-head attention of FIG. 5.
FIG. 11 is a diagram illustrating a second matrix-vector multiplication process in the first, second, and third heads in a first sequence of the multi-head attention of FIG. 5.
FIG. 12 is a diagram illustrating a second matrix-vector multiplication process in the first, second, and third heads in a second sequence of the multi-head attention of FIG. 5.
FIG. 13 is a diagram illustrating a second matrix-vector multiplication process in the first, second, and third heads in a third sequence of the multi-head attention of FIG. 5.
FIG. 14 is a diagram illustrating a second matrix-vector multiplication process in the first, second, and third heads in a fourth sequence of the multi-head attention of FIG. 5.
FIG. 15 is a flowchart illustrating a process of performing multi-head attention in a neural network architecture according to an embodiment of the present disclosure.
FIG. 16 is a diagram illustrating an example of key matrices used as operands in first matrix-vector multiplication according to an embodiment of the present disclosure.
FIG. 17 is a diagram illustrating a method of writing first through eighth key vectors generated in a first sequence of the multi-head attention and a first matrix-vector multiplication performed on a first head according to an embodiment of the present disclosure.
FIG. 18 is a diagram illustrating a first matrix-vector multiplication performed on a second head while first through eighth key vectors generated in a first sequence of a multi-head attention are written according to an embodiment of the present disclosure.
FIG. 19 is a diagram illustrating a first matrix-vector multiplication performed on an eighth head while first through eighth key vectors generated in a first sequence of a multi-head attention are written according to an embodiment of the present disclosure.
FIG. 20 is a diagram illustrating a method of writing first through eighth key vectors generated in a second sequence of a multi-head attention and a first matrix-vector multiplication process performed on a first head according to an embodiment of the present disclosure.
FIG. 21 is a diagram illustrating a method of writing first through eighth key vectors generated in a sixteenth sequence of a multi-head attention and a first matrix-vector multiplication process performed on a first head according to an embodiment of the present disclosure.
FIG. 22 is a diagram illustrating a method of writing first through eighth key vectors generated in a seventeenth sequence of a multi-head attention and a first matrix-vector multiplication process performed on a first head according to an embodiment of the present disclosure.
FIG. 23 is a diagram illustrating a method of writing first through eighth key vectors generated in an eighteenth sequence of a multi-head attention and a first matrix-vector multiplication process performed on a first head according to an embodiment of the present disclosure.
FIG. 24 is a diagram illustrating a method of writing first through eighth key vectors generated in a 32^{nd} sequence of a multi-head attention and a first matrix-vector multiplication process performed on a first head according to an embodiment of the present disclosure.
FIG. 25 is a diagram illustrating a method of writing first through eighth key vectors generated in a 241^{st} through 256^{th} sequences of a multi-head attention and a first matrix-vector multiplication process performed on a first head of the 256^{th} sequence according to an embodiment of the present disclosure.
FIG. 26 is a diagram illustrating a method of writing first through eighth key vectors generated in a 257^{th} sequence of a multi-head attention and a first process of a first matrix-vector multiplication performed on a first head according to an embodiment of the present disclosure.
FIG. 27 is a diagram illustrating a second process of a first matrix-vector multiplication performed on a first head while first through eighth key vectors generated in a 257^{th} sequence of a multi-head attention are written according to an embodiment of the present disclosure.
FIG. 28 is a diagram illustrating another example of a method of writing first through eighth key vectors generated in first through 257^{th} sequences of a multi-head attention in memory banks of the PIM devices according to an embodiment of the present disclosure.
FIG. 29 is a diagram illustrating a further example of a method of writing first through eighth key vectors generated in first through 257^{th} sequences of a multi-head attention in memory banks of PIM devices according to an embodiment of the present disclosure.
FIG. 30 is a diagram illustrating an example of value vectors generated in sequences of a multi-head attention of FIG. 5 and value matrices used as operands in second matrix-vector multiplication according to an embodiment of the present disclosure.
FIG. 31 is a diagram illustrating how a first value vector generated in a first sequence of a multi-head attention is distributed and stored in a first group of PIM devices according to an embodiment of the present disclosure.
FIG. 32 is a diagram illustrating a process in which a first value vector generated in a first sequence of a multi-head attention is distributed in units of elements and stored in memory banks of a first group of PIM devices and in which second matrix-vector multiplication is performed on a first head according to an embodiment of the present disclosure.
FIG. 33 is a diagram illustrating how a second value vector generated in a first sequence of a multi-head attention is distributed and stored in a second group of PIM devices according to an embodiment of the present disclosure.
FIG. 34 is a diagram illustrating a process in which a second value vector generated in a first sequence of a multi-head attention is distributed in units of elements and stored in memory banks of a second group of PIM devices and in which second matrix-vector multiplication is performed on a second head according to an embodiment of the present disclosure.
FIG. 35 is a diagram illustrating how a third value vector generated in a first sequence of a multi-head attention is distributed and stored in a first group of PIM devices according to an embodiment of the present disclosure.
FIG. 36 is a diagram illustrating a process in which a third value vector generated in a first sequence of a multi-head attention is distributed in units of elements and stored in memory banks of a first group of PIM devices and in which second matrix-vector multiplication is performed on a third head according to an embodiment of the present disclosure.
FIG. 37 is a diagram illustrating how a fourth value vector generated in a first sequence of a multi-head attention is distributed and stored in a second group of PIM devices according to an embodiment of the present disclosure.
FIG. 38 is a diagram illustrating a process in which a fourth value vector generated in a first sequence of a multi-head attention is distributed in units of elements and stored in memory banks of a second group of PIM devices and in which second matrix-vector multiplication performed on a fourth head according to an embodiment of the present disclosure.
FIG. 39 is a diagram illustrating a process in which a fifth value vector generated in a first sequence of a multi-head attention is distributed in units of elements and stored in memory banks of a first group of PIM devices and in which second matrix-vector multiplication is performed on a fifth head according to an embodiment of the present disclosure.
FIG. 40 is a diagram illustrating a process in which a sixth value vector generated in a first sequence of a multi-head attention is distributed in units of elements and stored in memory banks of a second group of PIM devices and in which second matrix-vector multiplication performed on a sixth head according to an embodiment of the present disclosure.
FIG. 41 is a diagram illustrating a process in which a seventh value vector generated in a first sequence of a multi-head attention is distributed in units of elements and stored in memory banks of a first group of PIM devices and in which second matrix-vector multiplication performed on a seventh head according to an embodiment of the present disclosure.
FIG. 42 is a diagram illustrating a process in which an eighth value vector generated in a first sequence of a multi-head attention is distributed in units of elements and stored in memory banks of a second group of PIM devices and in which second matrix-vector multiplication performed on an eighth head according to an embodiment of the present disclosure.
FIG. 43 is a diagram illustrating a process in which first, third, fifth, and seventh value vectors generated in a second sequence of a multi-head attention are distributed in units of elements and stored in memory banks of a first group of PIM devices and in which second matrix-vector multiplication is performed on a seventh head according to an embodiment of the present disclosure.
FIG. 44 is a diagram illustrating a process in which second, fourth, sixth, and eighth value vectors generated in a second sequence of a multi-head attention are distributed in units of elements and stored in memory banks of a second group of PIM devices and in which second matrix-vector multiplication is performed on an eighth head according to an embodiment of the present disclosure.
FIG. 45 is a diagram illustrating a process in which first, third, fifth, and seventh value vectors generated in a 257^{th} sequence of a multi-head attention are distributed in units of elements and stored in memory banks of a first group of PIM devices and in which second matrix-vector multiplication performed on a seventh head according to an embodiment of the present disclosure.
FIG. 46 is a diagram illustrating a process in which second, fourth, sixth, and eighth value vectors generated in a 257^{th} sequence of a multi-head attention are distributed in units of elements and stored in memory banks of a second group of PIM devices and in which second matrix-vector multiplication performed on an eighth head according to an embodiment of the present disclosure.
FIG. 47 through FIG. 49 are diagrams illustrating examples writing value vectors generated in a first sequence in memory banks in a second manner in a neural network architecture according to embodiments of the present disclosure.
FIG. 50 through FIG. 52 are diagrams illustrating examples writing value vectors generated in a second sequence in memory banks in a second manner in a neural network architecture according to embodiments of the present disclosure.
FIG. 53 through FIG. 55 are diagrams illustrating examples of writing value vectors generated in a second sequence in memory banks in a second manner in a neural network architecture according to embodiments of the present disclosure.
FIG. 56 is a diagram illustrating another example of writing value vectors of a first sequence to a memory bank in a second manner in a neural network architecture according to an embodiment of the present disclosure.

### DETAILED DESCRIPTION

In the following description of embodiments, it will be understood that the terms "first" and "second" are intended to identify elements, but not used to define a particular number or sequence of elements. In addition, when an element is referred to as being located "on," "over," "above," "under," or "beneath" another element, it is intended to mean relative positional relationship, but not used to limit certain cases for which the element directly contacts the other element, or at least one intervening element is present between the two elements. Accordingly, the terms such as "on," "over," "above," "under," "beneath," "below," and the like that are used herein are for the purpose of describing particular embodiments only and are not intended to limit the scope of the present disclosure.

Further, when an element is referred to as being "connected" or "coupled" to another element, the element may be electrically or mechanically connected or coupled to the other element directly, or may be electrically or mechanically connected or coupled to the other element indirectly with one or more additional elements between the two elements. Moreover, when a parameter is referred to as being "predetermined," it may be intended to mean that a value of the parameter is determined in advance of when the parameter is used in a process or an algorithm. The value of the parameter may be set when the process or the algorithm starts or may be set during a period in which the process or the algorithm is executed.

A logic "high" level and a logic "row" level may be used to describe logic levels of electric signals. A signal having a logic "high" level may be distinguished from a signal having a logic "row" level. For example, when a signal having a first voltage corresponds to a signal having a logic "high" level, a signal having a second voltage may correspond to a signal having a logic "row" level. In an embodiment, the logic "high" level may be set as a voltage level that is higher than a voltage level of the logic "row" level. Logic levels of signals may be set to be different or opposite according to embodiment. For example, a certain signal having a logic "high" level in one embodiment may be set to have a logic "row" level in another embodiment.

Various embodiments of the present disclosure will be described hereinafter in detail with reference to the accompanying drawings. However, embodiments described herein are for illustrative purposes only and are not intended to limit the scope of the present disclosure.

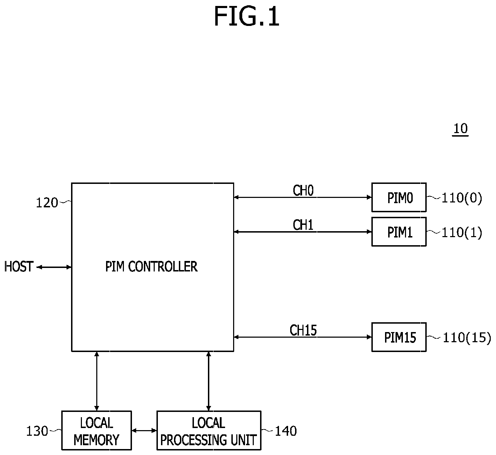

FIG. 1 is a block diagram illustrating an example of a neural network architecture for a transformer-based multi-head attention according to embodiments of the present disclosure.

Referring to FIG. 1, a neural network architecture 10 includes a plurality of processing-in-memory PIM devices, a PIM controller 120, a local memory 130, and a local processing unit 140. Hereinafter, a neural network architecture 10 including first through sixteenth PIM devices (PIMO through PIM15) 110(0) through 110(15) will be described as an example.

Each of the first through sixteenth PIM devices 110(0), 110(1), ..., and 110(15) may include data storage circuits, such as for example, memory banks and global buffers, and processing units that perform computation. In an example, the first through sixteenth PIM devices 110(0) through 110(15) may perform read operations, write operations, and computation operations. The first through sixteenth PIM devices 110(0) through 110(15) may perform the read operations to provide data stored in the memory banks to the PIM controller 120. The first through sixteenth PIM devices 110(0) through 110(15) may perform write operations to store the data provided from the PIM controller 120 in the memory banks. The first through sixteenth PIM devices 110(0) through 110(15) may, through computation operations, perform fully connected layer computations and matrix-vector multiplications that are included in the transformer-based multi-head attention.

In an example, the first through sixteenth PIM devices 110(0) through 110(15) may generate query data (or query vectors), key data (or key vectors), and value data (or value vectors) for an input token via a fully connected layer computation. In an example, the first through sixteenth PIM devices 110(0) through 110(15) may perform a first matrix-vector multiplication and a second matrix-vector multiplication of the multi-head attention. Here, the first matrix-vector multiplication may be a matrix-vector multiplication on the query data and transposed key data. The first through sixteenth PIM devices 110(0) through 110(15) may generate an attention score (or attention score vector) through the first matrix-vector multiplication. The second matrix-vector multiplication may be a matrix-vector multiplication on attention distribution (or attention distribution vector) generated by applying a softmax function to the attention score resulting from the first matrix-vector multiplication and the value data. The first through sixteenth PIM devices 110(0) through 110(15) may generate a multi-head attention value (or multi-head attention value vector) through the second matrix-vector multiplication.

The first through sixteenth PIM devices 110(0) through 110(15) are coupled to the PIM controller 120 through first through sixteenth channels CH0 through CH15, respectively. For example, the first PIM device 110(0) is coupled to the PIM controller 120 through the first channel CH0. Accordingly, the first PIM device 110(0) communicates with the PIM controller 120 through the first channel CH0. The second PIM device 110(1) is coupled to the PIM controller 120 through the second channel CH1. Accordingly, the second PIM device 110(1) communicates with the PIM controller 120 through the second channel CH1. Similarly, the sixteenth PIM device 110(15) is coupled to the PIM controller 120 through the sixteenth channel CH15. Accordingly, the sixteenth PIM device 110(15) communicates with the PIM controller 120 through the sixteenth channel CH15.

The PIM controller 120 is coupled to the first through sixteenth PIM devices 110(0) through 110(15), the local memory 130, the local processing unit 140, and a host. The PIM controller 120 may receive instructions from the host. The PIM controller 120 may control the first through sixteenth PIM devices 110(0) through 110(15), the local memory 130, and the local processing unit 140, based on the instructions from the host. Specifically, the PIM controller 120 controls the read operations, the write operations, and the computation operations of the first through sixteenth PIM devices 110(0) through 110(15). The PIM controller 120 controls the read operation and a local write operation of the local memory 130. The PIM controller 120 controls a local computation operation of the local processing unit 140.

In an example, the PIM controller 120 may read the query data, the key data, and the value data from the first through sixteenth PIM devices 110(0) through 110(15) to store the query data, the key data, and the value data in the local memory 130. The PIM controller 120 may read the query data, the key data, and the value data stored in the local memory 130 to provide the query data, the key data, and the value data to at least one of the first through sixteenth PIM devices 110(0) through 110(15). The PIM controller 120 may read the attention score or multi-head attention value from the first through sixteenth PIM devices 110(0) through 110(15) to store the attention score or multi-head attention value in the local memory 130, or provide the same to the local processing unit 140. The PIM controller 120 may control the local memory 130 such that the attention score or the multi-head attention value stored in the local memory 130 is provided to the local processing unit 140. The PIM controller 120 may allow the attention distribution generated in the local processing unit 140 to be stored in the local memory 130. The PIM controller 120 may read the attention distribution stored in the local memory 130 to provide the attention distribution to at least one of the first through sixteenth PIM devices 110(0) through 110(15). The PIM controller 120 may receive the attention distribution directly from the local processing unit 140 to provide the attention distribution to at least one of the first through sixteenth PIM devices 110(0) through 110(15).

The local memory 130 is coupled to the PIM controller 120 and the local processing unit 140. The local memory 130 performs local write operations and local read operations, based on control signals from the PIM controller 120. The local memory 130 may perform local write operations to store the data provided from the PIM controller 120 or the local processing unit 140. In an example, the local memory 130 may perform a local write operation to store the query data, the key data, and the value data provided from the PIM controller 120. In an example, the local memory 130 may perform a local write operation to store the attention score provided from the PIM controller 120. In an example, the local memory 130 may perform a local write operation to store the attention distribution provided from the local processing unit 140. In an example, the local memory 130 may perform a local write operation to store the multi-head attention value provided from the PIM controller 120.

The local memory 130 may provide stored data to the PIM controller 120 or the local processing unit 140 through local read operations. In an example, the local memory 130 may perform a local read operation to provide the query data, the key data, and the vector data to the PIM controller 120. In an example, the local memory 130 may perform a local read operation to provide the attention score to the local processing unit 140. In an example, the local memory 130 may perform a local read operation to provide the attention distribution to the PIM controller 120. In FIG. 1, the local memory 130 directly exchanges data with the local processing unit 140, but in other examples, the local memory 130 may exchange the data with the local processing unit 140 through the PIM controller 120.

The local processing unit 140 performs local computation operations based on the control signals from the PIM controller 120. The local processing unit 140 may perform the softmax function processing of the transformer-based multi-head attention. For this purpose, the local processing unit 140 may receive the attention score required for the softmax function processing from the PIM controller 120 or the local memory 130. In addition, the local processing unit 140 may transmit local computation result data generated by performing the local computation operation, such as for example the attention distribution generated by the softmax function processing, to the PIM controller 120 or the local memory 130.

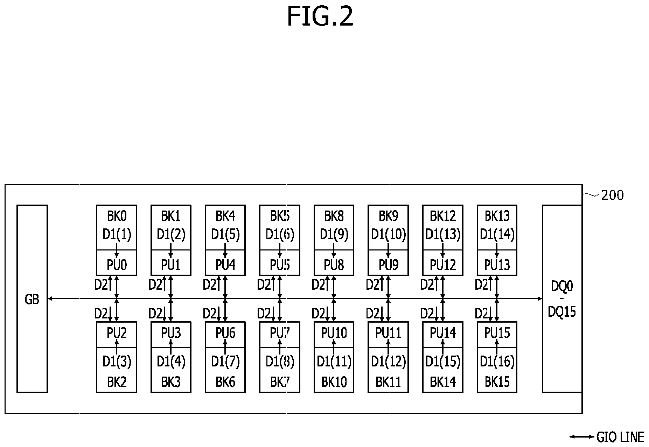

FIG. 2 is a block diagram illustrating an example of the processing-in-memory (PIM) device included in a neural network architecture of FIG. 1.

Referring to FIG. 2, a PIM device 200 includes a plurality of memory banks BKs, a plurality of processing units (PUs), a global buffer (GB), and a plurality of data input/output circuits DQs. Hereinafter in FIG. 2, a PIM device 200 includes first through sixteenth memory banks BK0 through BK15, first through sixteenth processing units PU0 through PU15, and first through sixteenth data input/output circuits DQ0 through DQ15 as an example. The following description for the PIM device 200 may be applied to any of the first through sixteenth PIM devices 110(0) through 110(15) included in the neural network architecture 10 of FIG. 1.

The first through sixteenth memory banks BK0 through BK15 may store first through sixteenth sets of first data D1(1) through D1(16), respectively. The global buffer GB may store the second data D2. The first through sixteenth memory banks BK0 through BK15 are coupled to the first through sixteenth processing units PU0 through PU15, respectively. On the other hand, the global buffer GB is coupled in common to the first through sixteenth processing units PU0 through PU15. Accordingly, the first through sixteenth processing units PU0 through PU15 are provided with the first through sixteenth sets of first data D1(1) through D1(16) for computation from the first through sixteenth memory banks BK0 through BK15, respectively. In addition, the first through sixteenth processing units PU0 through PU15 are provided with the second data D2 for computation in common from the global buffer GB. For example, the first processing unit PU0 is provided with the first set of first data D1(1) from the first memory bank BK0 and the second data D2 from the global buffer GB. The second processing unit PU1 is provided with the second set of first data 01(2) from the second memory bank BK1 and the second data D2 from the global buffer GB. In the same manner, the third through sixteenth processing units PU2 through PU15 are provided with the third through sixteenth sets of first data 01(3) through D1(16) from the third through sixteenth memory banks BK2 through BK15, respectively, and the second data D2 from the global buffer GB.

In an example, the first through sixteenth sets of first data D1(1) through D1(16) may be weight data used for each of the layers constituting a fully connected layer computation of the multi-head attention. The second data D2 may be vector data used for each of the layers constituting the fully connected layer computation. In an example, the first through sixteenth sets of first data D1(1) through D1(16) may be the key data used as operands in the first matrix-vector multiplications of the multi-head attention, and the second data D2 may be the query data used as an operand in the first matrix-vector multiplication of the multi-head attention. In an example, the first through sixteenth sets of first data D1(1) through D1(16) may be the value data used as operands in the second matrix-vector multiplications of the multi-head attention, and the second data D2 may be the attention distribution used as an operand in the second matrix-vector multiplication of the multi-head attention.

The first through sixteenth processing units PU0 through PU15 receive the first to sixteenth sets of first data D1(1) through D1(16) from the first through sixteenth memory banks BK0 through BK15, respectively. The first through sixteenth processing units PU0 through PU15 receive the second data D2 in common from the global buffer GB. The first through sixteenth processing units PU0 through PU15 perform the computation using the first through sixteenth sets of first data D1(1) through D1(16) and the second data D2 as operands. In an example, the first through sixteenth processing units PU0 through PU15 may perform the fully connected layer computation, the first matrix-vector multiplication, and the second matrix-vector multiplication of the multi-head attention.

The first through sixteenth data input/output circuits DQ0 through DQ15 provide data transmission paths between the PIM device 200 and the PIM controller (120 of FIG. 1). In an example, the first through sixteenth data input/output circuits DQ0 through DQ15 may receive the first through sixteenth set of first data D1(1) through D1(16) respectively and the second data D2 from the PIM controller (120 of FIG. 1). The first through sixteenth data input/output circuits DQ0 through DQ15 transmit the first through sixteenth sets of first data D1(1) through D1(16) and the second data D2 to the first through sixteenth memory banks BK0 through BK15 and the global buffer GB of the PIM device 200, respectively. In addition, the first through sixteenth data input/output circuits DQ0 through DQ15 may receive read data from the first through sixteenth memory banks BK0 through BK15, respectively. The first through sixteenth data input/output circuits DQ0 through DQ15 may also receive the computation result data from the first through sixteenth processing units PU0 through PU15, respectively. The first through sixteenth data input/output circuits DQ0 through DQ15 may transmit the read data and the computation result data to the PIM controller (120 of FIG. 1). The first through sixteenth data input/output circuits DQ0 through DQ15 may exchange data with the first through sixteenth processing units PU0 through PU15 and the global buffer GB through a global input/output (hereinafter, referred to as "GIO") line. Although not shown in FIG. 2, the first through sixteenth data input/output circuits DQ0 through DQ15 may also exchange data with the first through sixteenth memory banks BK0 through BK15, respectively, through the GIO line.

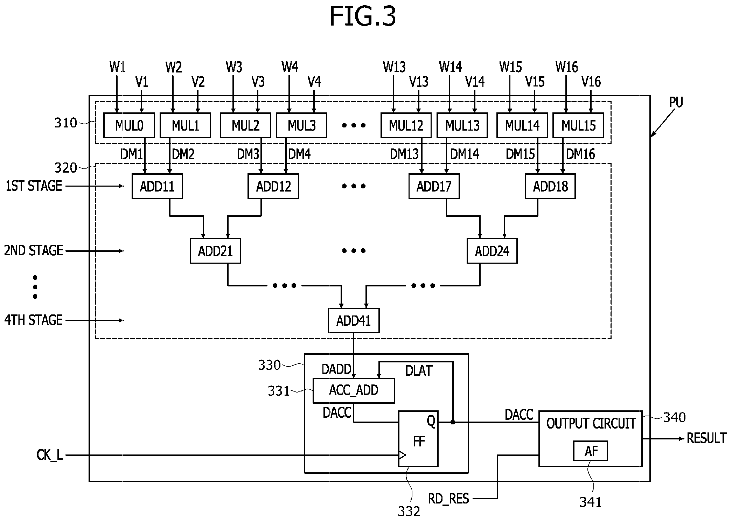

FIG. 3 is a circuit diagram illustrating an example of a processing unit included in a PIM device of FIG. 2. The following description of the processing unit PU may be equally applicable to the first through sixteenth processing units PU0 through PU15 included in the PIM device 200 of FIG. 2.

Referring to FIG. 3, a processing unit PU includes a multiplication circuit 310, an addition circuit 320, an accumulation circuit 330, and an output circuit 340. Hereinafter, FIG. 3 illustrates a processing unit PU that performs multiplication and accumulation (MAC) operations on weight data W and vector data V as an example. The following description of MAC operations of the processing unit PU may be equally applicable to a processing unit PU that performs fully connected layer computation, first matrix-vector multiplication, and second matrix-vector multiplication of the multi-head attention. In FIG. 3, it is assumed that the amount of data that the processing unit PU can process in one computation operation is 16 pieces of weight data and 16 pieces of vector data, but this is only an example and embodiments are not limited to these amounts.

The multiplication circuit 310 includes first through sixteenth multipliers MUL0 through MUL15. The first through sixteenth multipliers MUL0 through MUL15 receive first through sixteenth weight data W1 through W16 and first through sixteenth vector data V1 through V16, respectively. The first through sixteenth weight data W1 through W16 correspond to one of the first through sixteenth sets of first data D1(1) through D1(16) described above with reference to FIG. 2. In addition, the first through sixteenth vector data V1 through V16 correspond to the second data D2 described above with reference to FIG. 2. The first through sixteenth weight data W1 through W16 may be provided from memory banks. The first through sixteenth vector data V1 through V16 may be provided from a global buffer. The first through sixteenth multipliers MUL0 through MUL15 perform matrix-vector multiplications on the first through sixteenth weight data W1 through W16 and the first through sixteenth vector data V1 through V16 to generate and output first through sixteenth multiplication data DM1 through DM16, respectively. For example, the first multiplier MUL0 performs matrix-vector multiplication on the first weight data W1 and the first vector data V1 to output the first multiplication data DM1. The second multiplier MUL1 performs matrix-vector multiplication on the second weight data W2 and the second vector data V2 to generate and output the second multiplication data DM2. In the same manner, the remaining multipliers MUL2 through MUL15 outputs the third through sixteenth multiplication data DM3 through DM16, respectively. The first through sixteenth multiplication data DM1 through DM16 output from the multipliers MUL0 through MUL15 are transmitted to the addition circuit 320.

The addition circuit 320 may be configured by arranging a plurality of adders ADDERs in a layered structure such as a tree structure with stages. In this example, the addition circuit 320 includes half-adders. However, this is only one example, and the addition circuit 320 may include full-adders. In this example, eight adders ADD11, ..., and ADD18 are disposed at the uppermost first stage of the addition circuit 320. Four adders ADD21, ..., and ADD24 are disposed at the next lower second stage of the addition circuit 320. Although not shown in FIG. 3, two adders are disposed at the next lower third stage of the addition circuit 320. In addition, a single adder ADD41 is disposed at the fourth stage, the lowest stage of the addition circuit 320.

Each of the adders ADD11 through ADD18 of the first stage receives two pieces of multiplication data DMs from two of the first through sixteenth multipliers MUL0 through MUL15 of the multiplication circuit 310. Each of the adders ADD11 through ADD18 of the first stage performs an addition operation on the input multiplication data DMs to generate and output addition data. For example, the adder ADD11 of the first stage receives the first and second multiplication data DM1 and DM2 from the first and second multipliers MUL0 and MUL1, respectively, and performs addition on the first and second multiplication data DM1 and DM2 to output addition result data. Similarly, the adder ADD18 of the first stage receives the fifteenth and sixteenth multiplication data DM15 and DM16 from the fifteenth and sixteenth multipliers MUL14 and MUL15, respectively, and performs addition on the fifteenth and sixteenth multiplication data DM15 and DM16 to output addition result data.

Each of the adders ADD21, ..., and ADD24 of the second stage receives the addition result data from two of the adders ADD11 through ADD18 of the first stage and performs an addition operation on the addition result data to output resulting data. For example, the adder ADD21 of the second stage receives the addition result data from the adders ADD11 and ADD12 of the first stage. The adder ADD21 performs addition on the input addition result data to output the resulting data. The addition result data output from the adder ADD21 has a value that is the sum of the first through fourth multiplication data DM1 through DM4. In this manner, the adder ADD41 of the fourth stage performs an addition operation on the addition result data input from the two adders of the third stage to generate and output multiplication addition data DADD, which is the output data of the addition circuit 320. The multiplication addition data DADD output from the addition circuit 320 is transmitted to the accumulation circuit 330.

The accumulation circuit 330 performs a cumulative addition on the multiplication addition data DADD transmitted from the addition circuit 320 and latch data DLAT to generate accumulation data DACC. The accumulation circuit 330 latches the accumulation data DACC to output the accumulation data DACC as the latch data DLAT. In an example, the accumulation circuit 330 includes an accumulator (ACC_ADD) 331 and a latch circuit (FF) 332. The accumulator 331 receives the multiplication addition data DADD input from the addition circuit 320. The accumulator 331 receives the latch data DLAT generated by the previous MAC operation. The accumulator 331 performs cumulative addition on the multiplication addition data DADD and the latch data DLAT to generate and output the accumulation data DACC. The accumulation data DACC output from the accumulator 331 is transmitted to an input terminal of the latch circuit 332. The latch circuit 332 latches and outputs the accumulation data DACC transmitted from the accumulator 331 in synchronization with a clock signal CK_L. The accumulation data DACC output from the latch circuit 332 may be provided to the accumulator 331 as the latch data DLAT in the next MAC operation. The accumulation data DACC output from the latch circuit 332 is also transmitted to the output circuit 340.

The output circuit 340 outputs the accumulation data DACC transmitted from the latch circuit 332 of the accumulation circuit 330 in response to a logic level of, for example, result read signal RD_RES of a logic "high" level. In an example, when all scheduled MAC operations are performed in the processing unit PU, the accumulation data DACC transmitted from the latch circuit 332 of the accumulation circuit 330 during the last MAC operation constitutes a MAC result data RESULT. As all scheduled MAC operations are performed, the result read signal RD_RES of the logic "high" level is transmitted to the output circuit 340, for example, from the PIM controller. The output circuit 340 outputs the accumulation data DACC as the MAC result data RESULT in response to the result read signal RD_RES of the logic "high" level. On the other hand, when all of the scheduled MAC operations in the processing unit PU are not completed, the accumulation data DACC transmitted from the latch circuit 332 of the accumulation circuit 330 is not output from the output circuit 340 as the MAC result data RESULT. In other words, if not all of the scheduled MAC operations are completed, then the result read signal RD_RES transmitted from the PIM controller remains at a logic "low" level. The output circuit 340 does not output the accumulation data DACC as the MAC result data RESULT with the result read signal RD_RES at the logic "low" level. The output circuit 340 may include an activation function circuit (AF) 341 that applies an activation function to the accumulation data DACC, so that the output circuit 340 outputs data obtained by performing the activation function processing on the accumulation data DACC transmitted from the accumulation circuit 330 as the MAC result data RESULT.

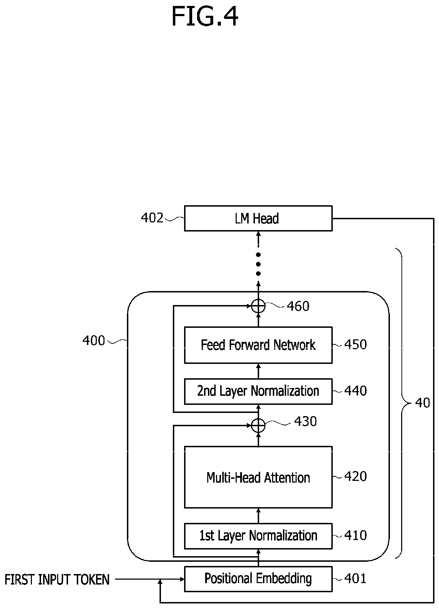

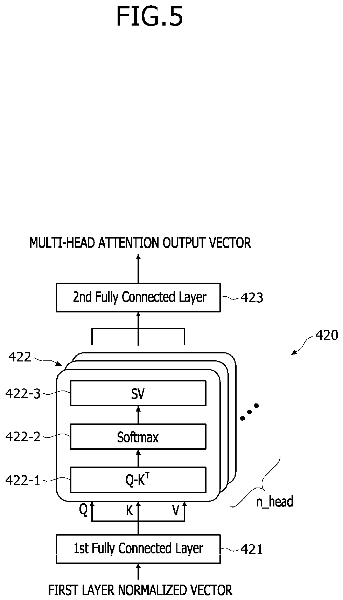

FIG. 4 is a diagram illustrating a transformer model processed by a the neural network architecture of FIG. 1 according to an embodiment of the present disclosure. In addition, FIG. 5 is a diagram illustrating a multi-head attention of the transformer model of FIG. 4 according to an embodiment of the present disclosure.

Referring first to FIG. 4, a transformer model includes a positional embedding block 401, a plurality of transformer blocks 40, and a language model (LM) head block 402. The plurality of transformer blocks 40 are sequentially disposed between the positional embedding block 401 and the language model head block 402. Although only a first transformer block 400 of the plurality of transformer blocks 40 is shown in FIG. 4, each of the remaining transformer blocks is configured identically to the first transformer block 400. The first transformer block 400 receives a positional embedded vector, which is input data, from the positional embedding block 401 and performs a first transformer computation to generate output data. The output data generated by the first transformer computation is input to a second transformer block (not illustrated). The output data generated by the last transformer block of the plurality of transformer blocks 40 is transmitted to the language model head block 402. The data output from the language model head block 402 in the current sequence is used as an input token for a positional embedding block 401 in the next sequence. For example, the positional embedding block 401 receives a first input token (that is, a first input word) in the first sequence. In another example, the positional embedding block 401 may receive multiple input tokens in the first sequence. The positional embedding block 401 receives the data output from the language model head block 402 as the input tokens for a second sequence. The positional embedding block 401 generates an embedded vector, based on the input tokens. The positional embedding block 401 generates a positional embedded vector with a positional information vector added to the embedded vector. The positional embedding block 401 transmits the positional embedded vector to the first transformer block 400.

The first transformer block (hereinafter, referred to as "transformer block") 400 includes a first layer normalization block 410, a multi-head attention block 420, a first residual connection adder 430, a second layer normalization block 440, a feed forward network block 450, and a second residual connection adder 460. In another example employing post-layer normalization, the first layer normalization block 410 may be positioned after the first residual connection adder 430, and the second layer normalization block 440 may be positioned after the second residual connection adder 460. In another example, when a different normalization scheme, such as root mean square normalization (RMSNorm), is employed instead of the layer normalization, the first layer normalization block 410 and the second layer normalization block 440 may each be replaced by a root mean square normalization (RMSNorm) block. In yet another example, the normalization blocks within the transformer block 400 may be omitted.

The first layer normalization block 410 of the transformer block 400 receives a positional embedded vector output from the positional embedding block 401. The first layer normalization block 410 performs a pre-layer normalization on the positional embedded vector to output a first layer normalized vector. The first layer normalized vector has the same dimension as the positional embedded vector. Specifically, the first layer normalization block 410 performs normalization of calculating the mean and standard deviation of data in units of samples of the positional embedded vector to generate the normalized vector. The first layer normalization block 410 multiplies the normalized vector by a beta (β) vector and adds a gamma (γ) vector to a result of the multiplication to generate the first layer normalized vector. Here, the beta β vector and gamma γ vector are parameters that can be learned. The first layer normalization block 410 transmits the first layer normalized vector to the multi-head attention block 420 as a multi-head attention input vector. The multi-head attention block 420 of the transformer block 400 performs multi-head attention on the multi-head attention input vector, that is, the first layer normalized vector transmitted from the first layer normalization block 410, and outputs a result of the multi-head attention as a multi-head attention output vector.

The multi-head attention block 420 is described in more detail with reference to FIG. 5. The multi-head attention block 420 includes a first fully connected layer 421, a plurality of multi-head attention layers 422, and a second fully connected layer 423. Each of the multi-head attention layers 422 includes a first matrix-vector multiplication block 422-1, a softmax function block 422-2, and a second matrix-vector multiplication block 422-3. The number of the multi-head attention layers 422, n_head, is equal to the number of heads in the multi-head attention.

The first fully connected layer 421 linearly transforms the first layer normalized vector transmitted from the first layer normalization block 410 to generate the query vectors Qs, key vectors Ks, and value vectors Vs in the same number as the number of heads n_head of the multi-head attention. The query vectors Qs are responsible for determining how an element, that is, a word is related to other elements, and accordingly, are used to calculate similarity with all other elements in the input sequence. The key vectors Ks, which are vectors used to calculate the similarity with the query vector Q, measure the similarity between the element and other elements. The value vectors Vs are vectors that represent the importance of the element and are used to assign weights. The query vectors Qs may be generated by matrix multiplications on the first layer normalized vector and the query weight matrices. The key vectors Ks may be generated by the matrix multiplications on the first layer normalized vector and the key weight matrices. The value vectors Vs may be generated by the matrix multiplications on the first layer normalized vector and the value weight matrices. The query vectors Qs, the key vectors Ks, and the value vectors Vs generated during such linear transformation processes may each have a dimension less than the dimension of the first layer normalized vector. The query vectors Qs, the key vectors Ks, and the value vectors Vs are transmitted to the multi-head attention layers 422. For example, a first query vector, a first key vector, and a first value vector are transmitted to a first multi-head attention layer. A second query vector, a second key vector, and a second value vector are transmitted to a second multi-head attention layer. Similarly, an "n_head"^{th} query vector, an "n_head"^{th} key vector, and an "n_head"^{th} value vector are transmitted to an "n_head"^{th} multi-head attention layer. However, this is only one example. In another example, multi-head attention layers may be disposed in a group format when using grouped-query attention, where one key vector and one value vector share multiple query vectors. As a result, the query vectors of each group may also be transmitted to the multi-head attention layers in a way that the query vectors share the key vectors and value vectors of that group.

Each of the multi-head attention layers 422 sequentially performs a first matrix-vector multiplication, a softmax function application, and a second matrix-vector multiplication using the query vector Q, the key vector K, and the value vector V that are transmitted from the first fully connected layer 421. Specifically, a first matrix-vector multiplication block 422-1 of each of the multi-head attention layers 422 performs a first matrix-vector multiplication Q.K^{T} on the query vector Q and a transposed key vector K^{T} to generate a matrix-vector multiplication attention score vector. A softmax function block 422-2 of each of the multi-head attention layers 422 performs scaling on the attention score vector output from the first matrix-vector multiplication block 422-1. The scaling on the attention score vector may be performed by dividing the attention score vector by the square root of the queue vector (and key vector) dimensions. The scaling on the attention score vector results in a scaled attention score vector. The softmax function block 422-2 applies the softmax function to the scaled attention score vector to generate an attention distribution vector, which is a weighted average of the scaled attention score vector. A second matrix-vector multiplication block 422-3 of each of the multi-head attention layers 422 performs a second matrix-vector multiplication (SV) on the attention distribution vector and the value vector to generate a multi-head attention value vector. In this manner, the "n_head" multi-head attention value vectors generated by the "n_head" multi-head attention layers 422 are all concatenated to generate a "concatenated multi-head attention value vector". The concatenated multi-head attention value vector generated in the multi-head attention layers 422 is transmitted to the second fully connected layer 423. The second fully connected layer 423 performs linear transformation operations of multiplying the concatenated multi-head attention value vector transmitted from the multi-head attention layers 422 by the weight matrix to generate a multi-head attention output vector that has the same dimension as the embedded vector.

Referring again to FIG. 4, the first residual connection adder 430 performs an element-wise addition on the positional embedded vector output from the positional embedding block 401 and the multi-head attention output vector generated in the second fully connected layer 423 of the multi-head attention block 420. The second layer normalization block 440 performs a second pre-layer normalization on the data generated as a result of the element-wise addition in the first residual connection adder 430 to output a second layer normalized vector. The feed forward network block 450 performs computation and activation function applications in two fully connected layers on the second layer normalized vector to generate and output an output vector. The second residual connection adder 460 performs the element-wise addition on the output vector output from the feed forward network block 450 and the data generated as a result of the element-wise addition in the first residual connection adder 430 to output a final encoding vector. The final encoding vector output from the second residual connection adder 460 passes through all the remaining transformer blocks of the plurality of transformer blocks 40. The final encoding vector output from the last transformer block is then transmitted to the language model head block 402.

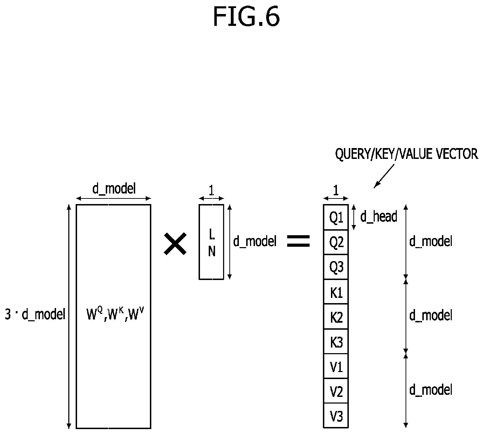

FIG. 6 is a diagram illustrating how query vectors, key vectors, and value vectors are generated during one sequence of the multi-head attention of FIG. 5 according to an embodiment of the present disclosure. In FIG. 6, the number of heads (n_heads of FIG. 5) of a multi-head attention is three as an illustrated example, but embodiments are not limited to only three heads.

Referring to FIG. 6, a first fully connected layer 421 of a multi-head attention block 420 receives a first layer normalized vector LN transmitted from the first layer normalization block (410 of FIG. 4). As described with reference to FIG. 4, the first layer normalized vector LN is generated by performing a first layer normalization on the positional embedded vector generated by adding a positional information vector to the embedded vector of the input token. As a result, the first layer normalized vector LN has the same dimension as the embedded vector. That is, the first layer normalized vector LN has a dimension of d_model × 1. Here, "d_model" represents the dimension of the embedded vector. The first fully connected layer 421 of the multi-head attention block 420 performs matrix-vector multiplication on the weight matrices WQ, WK, and WV (for the query, key, and value) and the first layer normalized vector LN. The matrix-vector multiplication results in a query/key/value vector with a first query vector Q1, a second query vector Q2, a third query vector Q3, a first key vector K1, a second key vector K2, a third key vector K3, a first value vector V1, a second value vector V2, and a third value vector V3 as elements. The weight matrix WQ, WK, and WV for the query, key, and value has a dimension of 3 d_model × d_model and the first layer normalized vector LN has the dimension of d_model × 1, so a resulting query/key/value vector has the dimension of 3 d_model × 1. However, this is only one example, and when the heads are arranged in a group format, the query/key/value vector may have different dimensions. In this embodiment, the first query vector Q1, the second query vector Q2, the third query vector Q3, the first key vector K1, the second key vector K2, the third key vector K3, the first value vector V1, the second value vector V2, and the third value vector V3 all have the same dimension of d_head × 1. Here, "d_head", which represents the dimension of one head, has a size equal to a value obtained by dividing d_model by 3, the number of heads. This process of generating the query/key/value vectors in the first fully connected layer 421 of the multi-head attention block 420 is repeated whenever an input token is input to the transformer model, that is, for each of all sequences.

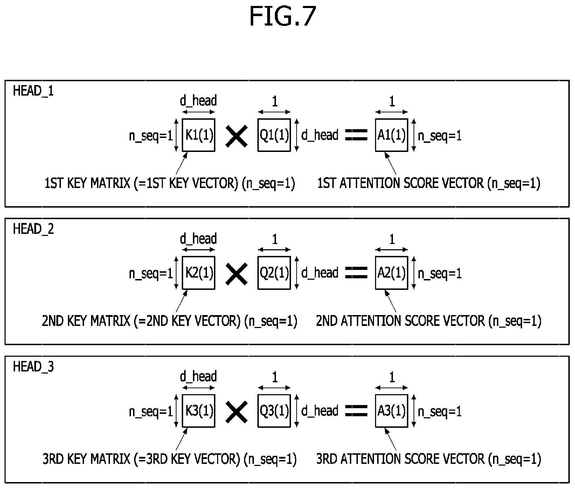

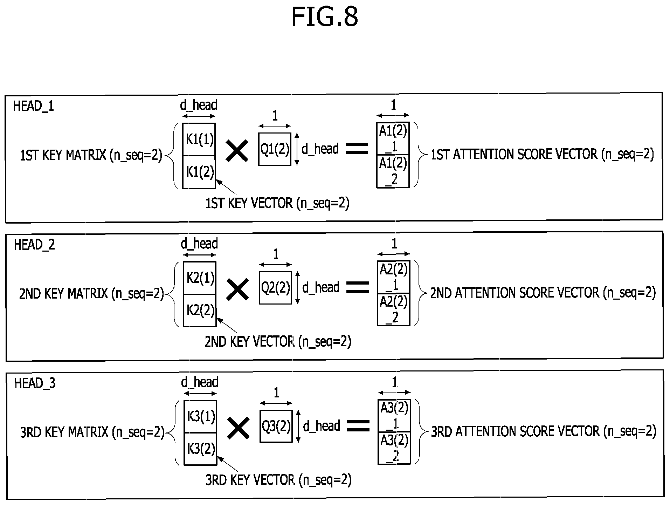

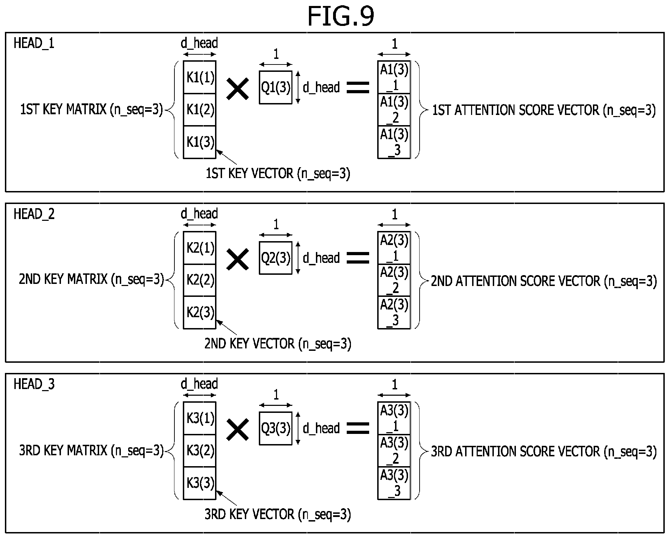

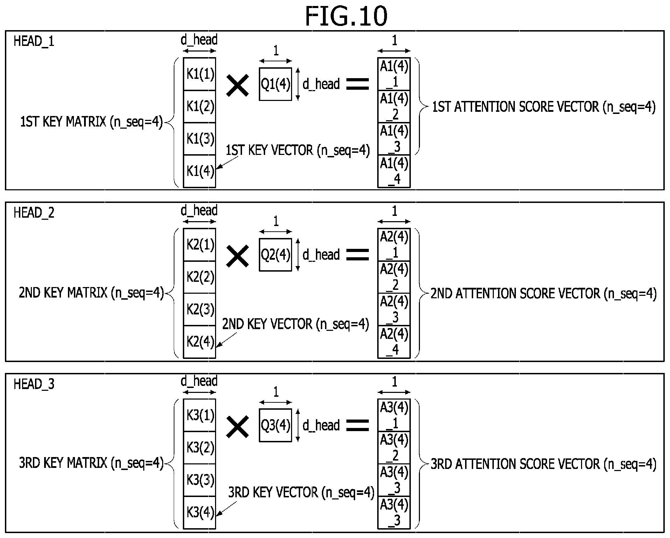

FIG. 7 through FIG. 10 are diagrams illustrating first matrix-vector multiplication processes of the multi-head attention of FIG. 5. Specifically, FIG. 7 is a diagram illustrating a first matrix-vector multiplication process in a first sequence of the multi-head attention of FIG. 5, FIG. 8 is a diagram illustrating a first matrix-vector multiplication process in a second sequence of the multi-head attention of FIG. 5, FIG. 9 is a diagram illustrating a first matrix-vector multiplication process in a third sequence of the multi-head attention of FIG. 5, and FIG. 10 is a diagram illustrating a first matrix-vector multiplication process in a fourth sequence of the multi-head attention of FIG. 5. In FIGS. 7 through 10, the number of heads n_head of the multi-head attention is three. In addition, the key vector herein has a matrix format in which the key vector generated in the first fully connected layer is transposed.

Referring first to FIG. 7, a first matrix-vector multiplication is performed on a first query vector Q1(1), a second query vector Q2(1), a third query vector Q3(1), a first key vector K1(1), a second key vector K2(1), and a third key vector K3(1), which are generated in a first sequence n_seq= 1 in which a first input token is input. As described above with reference to FIG. 4, in the first sequence n_seq= 1, a plurality of input tokens may be input simultaneously. In a first head HEAD_1, first matrix-vector multiplication is performed on the first key vector (or first key matrix) K1(1) and the first query vector Q1(1). In a second head HEAD_2, the first matrix-vector multiplication is performed on the second key vector (or second key matrix) K2(1) and the second query vector Q2(1). In a third head HEAD_3, the first matrix-vector multiplication is performed on the third key vector (or third key matrix) K3(1) and the third query vector Q3(1). In the first head HEAD_1 of the first sequence n_seq=1, a first attention score vector A1(1) of the first sequence n_seq=1 is generated as a result of the first matrix-vector multiplication on the first key vector K1(1) and the first query vector Q1(1). In the second head HEAD_2 of the first sequence n_seq=1, a second attention score vector A2(1) of the first sequence n_seq= 1 is generated as a result of the first matrix-vector multiplication on the second key vector K2(1) and the second query vector Q2(1). In addition, in the third head HEAD_3 of the first sequence n_seq= 1, a third attention score vector A3(1) of the first sequence n_seq= 1 is generated as a result of the first matrix-vector multiplication on the third key vector K3(1) and the third query vector Q3(1).

Each of the first key matrix K1(1), second key matrix K2(1), and third key matrix K3(1) used for the first matrix-vector multiplications of the first sequence n_seq= 1 has a size of n_seq × d_head. Here, "n_seq" denotes the number of current sequences, and when the number of tokens input in the first sequence is one, as in this example, the number of current sequences corresponds to the number of tokens input so far. Accordingly, each of the first, second, and third key vectors (or first, second, and third key matrices) K1(1), K2(1), and K3(1) used for the first matrix-vector multiplications of the first sequence n_seq= 1 has a size of 1 × d_head. In addition, each of the first, second, and third query vectors Q1(1), Q2(1), and Q3(1) used for the first sequence n_seq= 1 has a size of d_head × 1. Accordingly, each of the first, second, and third attention score vectors A1(1), A2(1), and A3(1) resulting from the first matrix-vector multiplications on the first, second, and third heads HEAD_1, HEAD_2, and HEAD_3 of the first sequence n_seq= 1, respectively, has a dimension of 1 × n_seq, that is, 1 × 1.

Referring next to FIG. 8, in a second sequence n_seq=2 where the result of the first sequence n_seq=1 is used as an input token, the first, second, and third query vectors Q1(2), Q2(2), and Q3(2) and the first, second, and third key vectors K1(2), K2(2), and K3(2) are generated. The first matrix-vector multiplications in the first head HEAD_1 of the second sequence n_seq=2 are performed on a first key matrix CONCAT(K1(1), K1(2)) of the second sequence n_seq=2 and the first query vector Q1(2) generated in the second sequence n_seq=2. Here, the first key matrix CONCAT(K1(1), K1(2)) of the second sequence n_seq=2 is formed by concatenating the first key vector K1(1) generated in the first sequence n_seq=1 and the first key vector K1(2) generated in the second sequence n_seq=2 in a direction of increasing rows (i.e., a vertical direction in the drawings) (hereinafter, referred to as "row direction"). The first matrix-vector multiplications in the second head HEAD_2 of the second sequence n_seq=2 are performed on the second key matrix CONCAT(K2(1), K2(2)) of the second sequence n_seq=2 and the second query vector Q2(2) generated in the second sequence n_seq=2. Here, the second key matrix CONCAT(K2(1), K2(2)) is the matrix generated by concatenating the second key vector K2(1) generated in the first sequence n_seq=1 and the second key vector K2(2) generated in the second sequence n_seq=2 in the row direction. The first matrix-vector multiplications in the third head HEAD_3 of the second sequence n_seq=2 are performed on the third key matrix CONCAT(K3(1), K3(2)) of the second sequence n_seq=2 and the third query vector Q3(2) generated in the second sequence n_seq=2. Here, the third key matrix CONCAT(K3(1), K3(2)) is the matrix generated by concatenating the third key vector K3(1) generated in the first sequence n_seq=1 and the third key vector K3(2) generated in the second sequence n_seq=2 in the row direction.

Each of the first, second, and third key vectors K1(2), K2(2), and K3(2) generated in the second sequence n_seq=2 has a size of 1 × d_head, but each of the first, second, and third key matrices CONCAT(K1(1), K1(2)), CONCAT(K2(1), K2(2)), and CONCAT(K3(1), K3(2)) has a size of n_seq × d_head, that is, 2 × d_head. On the other hand, each of the first, second, and third query vectors Q1(2), Q2(2), and Q3(2) generated in the second sequence n_seq=2 has a size of d_head × 1 and is used in the first matrix-vector multiplications with the same size. Accordingly, in the first head HEAD_1, as a result of the first matrix-vector multiplication on the first key matrix CONCAT(K1(1), K1(2)) and the first query vector Q1(2) of the second sequence n_seq=2, a first attention score vector CONCAT(A1(2)_1, A1(2)_2) with a size of n_seq × 1, that is, a size of 2 × 1, is generated. The first attention score vector CONCAT(A1(2)_1, A1(2)_2) of the second sequence n_seq=2 is formed by concatenating a first part A1(2)_1 and a second part A1(2)_2 of the first attention score vector CONCAT(A1(2)_1, A1(2)_2) in the row direction. Here, the first part A1(2)_1 of the first attention score vector CONCAT(A1(2)_1, A1(2)_2) is the vector generated by the first matrix-vector multiplication of the first key vector K1(1) of the first sequence (n_seq=1) and the first query vector Q1(2) of the second sequence (n_seq=2). In addition, the second part A1(2)_2 of the first attention score vector CONCAT(A1(2)_1, A1(2)_2) is the vector generated by the first matrix-vector multiplication of the first key vector K1(2) of the second sequence (n_seq=2) and the first query vector Q1(2) of the second sequence (n_seq=2).

In the second head HEAD_2, the second attention score vector CONCAT(A2(2)_1, A2(2)_2) with a size of 2 × 1 is generated as a result of the first matrix-vector multiplication on the second key matrix CONCAT(K2(1), K2(2)) and the second query vector Q2(2) of the second sequence n_seq=2. The second attention score vector CONCAT(A2(2)_1, A2(2)_2) of the second sequence n_seq=2 is formed by concatenating a first part A2(2)_1 and a second part A2(2)_2 of the second attention score vector CONCAT(A2(2)_1, A2(2)_2) in the row direction. Here, the first part A2(2)_1 of the second attention score vector CONCAT(A2(2)_1, A2(2)_2) is the vector generated by the first matrix-vector multiplication on the second key vector K2(1) of the first sequence n_seq=1 and the second query vector Q2(2) of the second sequence n_seq=2. In addition, the second part A2(2)_2 of the second attention score vector CONCAT(A2(2)_1, A2(2)_2) is the vector generated by the first matrix-vector multiplication on the second key vector K2(2) of the second sequence n_seq=2 and the second query vector Q2(2) of the second sequence n_seq=2.

In the same manner, in the third head HEAD_3, the third attention score vector CONCAT(A3(2)_1, A3(2)_2) with a size of 2 × 1 is generated as a result of the first matrix-vector multiplication on the third key matrix CONCAT(K3(1), K3(2)) and the third query vector Q3(2) of the second sequence n_seq=2. The third attention score vector CONCAT(A3(2)_1, A3(2)_2) of the second sequence n_seq=2 is constructed by concatenating a first part A3(2)_1 and a second part A3(2)_2 of the third attention score vector CONCAT(A3(2)_1, A3(2)_2) in the row direction. Here, the first part A3(2)_1 of the third attention score vector CONCAT(A3(2)_1, A3(2)_2) is the vector generated by the first matrix-vector multiplication on the third key vector K3(1) of the first sequence n_seq=1 and the third query vector Q3(2) of the second sequence n_seq=2. In addition, the second part A3(2)_2 of the third attention score vector CONCAT(A3(2)_1, A3(2)_2) is the vector generated by the first matrix-vector multiplication on the third key vector K3(2) of the second sequence n_seq=2 and the third query vector Q3(2) of the third sequence n_seq=3.

Referring next to FIG. 9, in a third sequence n_seq=3, where the result of the second sequence n_seq=2 is used as an input token, the first, second, and third query vectors Q1(3), Q2(3), and Q3(3) and the first, second, and third key vectors K1(3), K2(3), and K3(3) are generated. The first matrix-vector multiplication in the first head HEAD_1 of the third sequence n_seq=3 is performed on the first key matrix CONCAT(K1(1), K1(2), K1(3)) of the third sequence n_seq=3 and the first query vector Q1(3) generated in the third sequence n_seq=3. Here, the first key matrix CONCAT(K1(1), K1(2), K1(3)) of the third sequence n_seq=3 is formed by concatenating the first key vector K1(1) generated in the first sequence n_seq= 1, the first key vector K1(2) generated in the second sequence n_seq=2, and the first key vector K1(3) generated in the third sequence n_seq=3 in the row direction. The first matrix-vector multiplication in the second head HEAD_2 of the third sequence n_seq=3 is performed on the second key matrix CONCAT(K2(1), K2(2), K2(3)) of the third sequence n_seq=3 and the second query vector Q2(3) generated in the third sequence n_seq=3. Here, the second key matrix CONCAT(K2(1), K2(2), K2(3)) of the third sequence n_seq=3 is the matrix generated by concatenating the second key vector K2(1) generated in the first sequence n_seq=1, the second key vector K2(2) generated in the second sequence n_seq=2, and the second key vector K2(3) generated in the third sequence n_seq=3 in the row direction. The first matrix-vector multiplication in the third head HEAD_3 of the third sequence n_seq=3 is performed on the third key matrix CONCAT(K3(1), K3(2), K3(3)) of the third sequence n_seq=3 and the third query vector Q3(3) generated in the third sequence n_seq=3. Here, the third key matrix CONCAT(K3(1), K3(2), K3(3)) of the third sequence n_seq=3 is the matrix generated by concatenating the third key vector K3(1) generated in the first sequence n_seq=1, the third key vector K3(2) generated in the second sequence n_seq=2, and the third key vector K3(3) generated in the third sequence n_seq=3 in the row direction.

Each of the first, second, and third key vectors K1(3), K2(3), and K3(3) generated in the third sequence n_seq=3 has a size of 1 × d_head, but each of the first, second, and third key matrices CONCAT(K1(1), K1(2), K1(3)), CONCAT(K2(1), K2(2), K2(3)), and CONCAT(K3(1), K3(2), K3(3)) used for the first matrix-vector multiplication in the third sequence n_seq=3 has a size of n_seq × d_head, that is, a size of 3 × d_head. On the other hand, each of the first, second, and third query vectors Q1(3), Q2(3), and Q3(3) generated in the third sequence n_seq=3 has a size of d_head × 1 and is used in the first matrix-vector multiplication with the same size. Accordingly, in the first head HEAD_1, as a result of the first matrix-vector multiplication on the first key matrix CONCAT(K1(1), K1(2), K1(3)) and the first query vector Q1(3) of the third sequence n_seq=3, a first attention score vector CONCAT(A1(3)_1, A1(3)_2, A1(3)_3) with a size of n_seq × 1, that is, a size of 3 × 1 is generated. In the second head HEAD_2, a second attention score vector CONCAT(A2(3)_1, A2(3)_2, A2(3)_3) with a size of 3 × 1 is generated as a result of the first matrix-vector multiplication on the second key matrix CONCAT(K2(1), K2(2), K2(3)) and the second query vector Q2(3) of the third sequence n_seq=3. Similarly, in the third head HEAD_3, a third attention score vector CONCAT(A3(3)_1, A3(3)_2, A3(3)_3) with a size of 3 × 1 is generated as a result of the first matrix-vector multiplication on the third key matrix CONCAT(K3(1), K3(2), K3(3)) and the third query vector Q3(3) of the third sequence n_seq=3.

The first attention score vector CONCAT(A1(3)_1, A1(3)_2, A1(3)_3) generated in the first head HEAD_1 of the third sequence n_seq=3 is formed by concatenating a first part A1(3)_1, a second part A1(3)_2, and a third part A1(3)_3 of the first attention score vector CONCAT(A1(3)_1, A1(3)_2, A1(3)_3) in the row direction. Here, the first part A1(3)_1 of the first attention score vector CONCAT(A1(3)_1, A1(3)_2, A1(3)_3) is the vector generated by the first matrix-vector multiplication on the first key vector K1(1) of the first sequence n_seq=1 and the first query vector Q1(3) of the third sequence n_seq=3. The second part A1(3)_2 of the first attention score vector CONCAT(A1(3)_1, A1(3)_2, A1(3)_3) is the vector generated by the first matrix-vector multiplication on the first key vector K1(2) of the second sequence n_seq=2 and the first query vector Q1(3) of the third sequence n_seq=3. In addition, the third part A1(3)_3 of the first attention score vector CONCAT(A1(3)_1, A1(3)_2, A1(3)_3) is the vector generated by the first matrix-vector multiplication on the first key vector K1(3) of the third sequence n_seq=3 and the first query vector Q1(3) of the third sequence n_seq=3.

The second attention score vector CONCAT(A2(3)_1, A2(3)_2, A2(3)_3) generated in the second head HEAD_2 of the third sequence n_seq=3 is formed by concatenating a first part A2(3)_1, a second part A2(3)_2, and a third part A2(3)_3 of the second attention score vector CONCAT(A2(3)_1, A2(3)_2, A2(3)_3) in the row direction. Here, the first part A2(3)_1 of the second attention score vector CONCAT(A2(3)_1, A2(3)_2, A2(3)_3) is the vector generated by the first matrix-vector multiplication on the second key vector K2(1) of the first sequence n_seq=1 and the second query vector Q2(3) of the third sequence n_seq=3. The second part A2(3)_2 of the second attention score vector CONCAT(A2(3)_1, A2(3)_2, A2(3)_3) is the vector generated by the first matrix-vector multiplication on the second key vector K2(2) of the second sequence n_seq=2 and the second query vector Q2(3) of the third sequence n_seq=3. In addition, the third part A2(3)_3 of the second attention score vector CONCAT(A2(3)_1, A2(3)_2, A2(3)_3) is the vector generated by the first matrix-vector multiplication on the second key vector K2(3) of the third sequence n_seq=3 and the second query vector Q2(3) of the third sequence n_seq=3.

The third attention score vector CONCAT(A3(3)_1, A3(3)_2, A3(3)_3) generated in the third head HEAD_3 of the third sequence n_seq=3 is formed by concatenating a first part A3(3)_1, a second part A3(3)_2, and a third part A3(3)_3 of the third attention score vector CONCAT(A3(3)_1, A3(3)_2, A3(3)_3) in the row direction. Here, the first part A3(3)_1 of the third attention score vector CONCAT(A3(3)_1, A3(3)_2, A3(3)_3) is the vector generated by the first matrix-vector multiplication on the third key vector K3(1) of the first sequence n_seq=1 and the third query vector Q3(3) of the third sequence n_seq=3. The second part A3(3)_2 of the third attention score vector CONCAT(A3(3)_1, A3(3)_2, A3(3)_3) is the vector generated by the first matrix-vector multiplication on the third key vector K3(2) of the second sequence n_seq=2 and the third query vector Q3(3) of the third sequence n_seq=3. In addition, the third part A3(3)_3 of the third attention score vector CONCAT(A3(3)_1, A3(3)_2, A3(3)_3) is the vector generated by the first matrix-vector multiplication on the third key vector K3(3) of the third sequence n_seq=3 and the third query vector Q3(3) of the third sequence n_seq=3.

Referring next to FIG. 10, in a fourth sequence n_seq=4, where the result of the third sequence n_seq=3 is used as an input token, the first, second, and third query vectors Q1(4), Q2(4), and Q3(4) and the first, second, and third key vectors K1(4), K2(4), and K3(4) are generated. The first matrix-vector multiplication in the first head HEAD_1 of the fourth sequence n_seq=4 is performed on the first key matrix CONCAT(K1(1), K1(2), K1(3), K1(4)) of the fourth sequence n_seq=4 and the first query vector Q1(4) generated in the fourth sequence n_seq=4. Here, the first key matrix CONCAT(K1(1), K1(2), K1(3), K1(4)) of the fourth sequence n_seq=4 is formed by concatenating the first key vector K1(1) generated in the first sequence n_seq=1, the first key vector K1(2) generated in the second sequence n_seq=2, the first key vector K1(3) generated in the third sequence n_seq=3 and the first key vector K1(4) generated in the fourth sequence n_seq=4 in the row direction.

The first matrix-vector multiplication in the second head HEAD_2 of the fourth sequence n_seq=4 is performed on the second key matrix CONCAT(K2(1), K2(2), K2(3), K2(4)) of the fourth sequence n_seq=4 and the second query vector Q2(4) generated in the fourth sequence n_seq=4. Here, the second key matrix CONCAT(K2(1), K2(2), K2(3), K2(4)) of the fourth sequence n_seq=4 is formed by concatenating the second key vector K2(1) generated in the first sequence n_seq=1, the second key vector K2(2) generated in the second sequence n_seq=2, the second key vector K2(3) generated in the third sequence n_seq=3, and the second key vector K2(4) generated in the fourth sequence n_seq=4 in the row direction.

The first matrix-vector multiplication in the third head HEAD_3 of the fourth sequence n_seq=4 is performed on the third key matrix CONCAT(K3(1), K3(2), K3(3), K3(4)) of the fourth sequence n_seq=4 and the third query vector Q3(4) generated in the fourth sequence n_seq=4. Here, the third key matrix CONCAT(K3(1), K3(2), K3(3), K3(4)) of the fourth sequence n_seq=4 is formed by concatenating the third key vector K3(1) generated in the first sequence n_seq=1, the third key vector K3(2) generated in the second sequence n_seq=2, the third key vector K3(3) generated in the third sequence n_seq=3, and the third key vector K3(4) generated in the fourth sequence n_seq=4 in the row direction.

Each of the first, second, and third key vectors K1(4), K2(4), and K3(4) generated in the fourth sequence n_seq=4 has a size of 1 × d_head, but each of the first, second, and third key matrices CONCAT(K1(1), K1(2), K1(3), K1(4)), CONCAT(K2(1), K2(2), K2(3), K2(4), and CONCAT(K3(1), K3(2), K3(3), K3(4)) used in the first matrix operation in the fourth sequence has a size of n_seq × d_head, that is, a size of 4 × d_head. On the other hand, each of the first, second, and third query vectors Q1(4), Q2(4), and Q3(4) generated in the fourth sequence n_seq=4 has a size of d_head × 1 and is used in the first matrix-vector multiplication with the same size. Accordingly, in the first head HEAD_1, as a result of the first matrix-vector multiplication on the first key matrix CONCAT(K1(1), K1(2), K1(3), K1(4)) and the first query vector Q1(4) of the fourth sequence n_seq=4, a first attention score vector CONCAT(A1(4)_1, A1(4)_2, A1(4)_3, A1(4)_4) with a size of n_seq × 1, that is, a size of 4 × 1 is generated. In the second head HEAD_2, as a result of the first matrix-vector multiplication on the second key matrix CONCAT(K2(1), K2(2), K2(3), K2(4)) and the second query vector Q2(4) of the fourth sequence n_seq=4, a second attention score vector CONCAT(A2(4)_1, A2(4)_2, A2(4)_3, A2(4)_4) with a size of n_seq × 1, that is, a size of 4 × 1 is generated. In addition, in the third head HEAD_3, as a result of the first matrix-vector multiplication on the third key matrix CONCAT(K3(1), K3(2), K3(3), K3(4)) and the third query vector Q3(4) of the fourth sequence n_seq=4, a third attention score vector CONCAT(A3(4)_1, A3(4)_2, A3(4)_3, A3(4)_4) with a size of n_seq × 1, that is, a size of 4 × 1 is generated.

The first attention score vector CONCAT(A1(4)_1, A1(4)_2, A1(4)_3, A1(4)_4) generated in the first head HEAD_1 of the fourth sequence n_seq=4 is formed by concatenating a first part A1(4)_1, a second part A1(4)_2, a third part A1(4)_3, and a fourth part A1(4)_4 of the first attention score vector CONCAT(A1(4)_1, A1(4)_2, A1(4)_3, A1(4)_4) in the row direction. Here, the first part A1(4)_1 of the first attention score vector CONCAT(A1(4)_1, A1(4)_2, A1(4)_3, A1(4)_4) is the vector generated by the first matrix-vector multiplication on the first key vector K1(1) of the first sequence n_seq=1 and the first query vector Q1(4) of the fourth sequence n_seq=4. The second part A1(4)_2 of the first attention score vector CONCAT(A1(4)_1, A1(4)_2, A1(4)_3, A1(4)_4) is the vector generated by the first matrix-vector multiplication on the first key vector K1(2) of the second sequence n_seq=2 and the first query vector Q1(4) of the fourth sequence n_seq=4. The third part A1(4)_3 of the first attention score vector CONCAT(A1(4)_1, A1(4)_2, A1(4)_3, A1(4)_4) is the vector generated by the first matrix-vector multiplication on the first key vector K1(3) of the third sequence n_seq=3 and the first query vector Q1(4) of the fourth sequence n_seq=4. In addition, the fourth part A1(4)_4 of the first attention score vector CONCAT(A1(4)_1, A1(4)_2, A1(4)_3, A1(4)_4) is the vector generated by the first matrix-vector multiplication on the first key vector K1(4) of the fourth sequence n_seq=4 and the first query vector Q1(4) of the fourth sequence n_seq=4.

The second attention score vector CONCAT(A2(4)_1, A2(4)_2, A2(4)_3, A2(4)_4) generated in the second head HEAD_2 of the fourth sequence n_seq=4 is formed by concatenating a first part A2(4)_1, a second part A2(4)_2, a third part A2(4)_3, and a fourth part A2(4)_4 of the second attention score vector CONCAT(A2(4)_1, A2(4)_2, A2(4)_3, A2(4)_4) in the row direction. Here, the first part A2(4)_1 of the second attention score vector CONCAT(A2(4)_1, A2(4)_2, A2(4)_3, A2(4)_4) is the vector generated by the first matrix-vector multiplication on the second key vector K2(1) of the first sequence n_seq=1 and the second query vector Q2(4) of the fourth sequence n_seq=4. The second part A2(4)_2 of the second attention score vector CONCAT(A2(4)_1, A2(4)_2, A2(4)_3, A2(4)_4) is the vector generated by the first matrix-vector multiplication on the second key vector K2(2) of the second sequence n_seq=2 and the second query vector Q2(4) of the fourth sequence n_seq=4. The third part A2(4)_3 of the second attention score vector CONCAT(A2(4)_1, A2(4)_2, A2(4)_3, A2(4)_4) is the vector generated by the first matrix-vector multiplication on the second key vector K2(3) of the third sequence n_seq=3 and the second query vector Q2(4) of the fourth sequence n_seq=4. In addition, the fourth part A2(4)_4 of the second attention score vector CONCAT(A2(4)_1, A2(4)_2, A2(4)_3, A2(4)_4) is the vector generated by the first matrix-vector multiplication on the second key vector K2(4) of the fourth sequence n_seq=4 and the second query vector Q2(4) of the fourth sequence n_seq=4.

The third attention score vector CONCAT(A3(4)_1, A3(4)_2, A3(4)_3, A3(4)_4) generated in the third head HEAD_3 of the fourth sequence n_seq=4 is formed by concatenating a first part A3(4)_1, a second part A3(4)_2, a third part A3(4)_3, and a fourth part A3(4)_4 of the third attention score vector CONCAT(A3(4)_1, A3(4)_2, A3(4)_3, A3(4)_4) in the row direction. Here, the first part A3(4)_1 of the third attention score vector CONCAT(A3(4)_1, A3(4)_2, A3(4)_3, A3(4)_4) is the vector generated by the first matrix-vector multiplication on the third key vector K3(1) of the first sequence n_seq= 1 and the third query vector Q3(4) of the fourth sequence n_seq=4. The second part A3(4)_2 of the third attention score vector CONCAT(A3(4)_1, A3(4)_2, A3(4)_3, A3(4)_4) is the vector generated by the first matrix-vector multiplication on the third key vector K3(2) of the second sequence n_seq=2 and the third query vector Q3(4) of the fourth sequence n_seq=4. The third part A3(4)_3 of the third attention score vector CONCAT(A3(4)_1, A3(4)_2, A3(4)_3, A3(4)_4) is the vector generated by the first matrix-vector multiplication on the third key vector K3(3) of the third sequence n_seq=3 and the third query vector Q3(4) of the fourth sequence n_seq=4. In addition, the fourth part A3(4)_4 of the third attention score vector CONCAT(A3(4)_1, A3(4)_2, A3(4)_3, A3(4)_4) is the vector generated by the first matrix-vector multiplication on the third key vector K3(4) of the fourth sequence n_seq=4 and the third query vector Q3(4) of the fourth sequence n_seq=4.

As described with reference to FIG. 7 through FIG. 10, for the first sequence (that is, when the number of input tokens is one), the key vectors generated in the first sequence may be used in the same matrix form as the operands of the first matrix-vector multiplication for generating the attention score vectors of the multi-head attention. On the other hand, for sequences other than the first sequence, key matrices are used instead of the key vectors generated in each sequence. Key matrices result from concatenating all key vectors generated in the previous sequence and the key vectors generated in the current sequence. Accordingly, the dimension of an attention score vector generated by the first matrix-vector multiplications, and in particular, the dimension in the row direction, varies with the numbered sequences. The key vectors and query vectors generated in all sequences have the same dimension, so the size of the key vectors written to the memory banks of the PIM devices for each sequence is fixed. Key vectors numbering up to the current sequence are concatenated into key matrices, which are used as the operands of first matrix-vector multiplications performed in the processing units of the PIM devices. Thus, when writing the key vectors in the memory banks of the PIM devices, the key vectors generated for each sequence are written to one memory bank of one PIM device, so that the first matrix-vector multiplication can be performed in units of key matrix without separate data alignment. In addition, as the number of sequences increases, the degree of parallel execution of the first matrix-vector multiplications can be increased. The process of writing the key vectors in memory banks and the first matrix operation process will be described in more detail below.

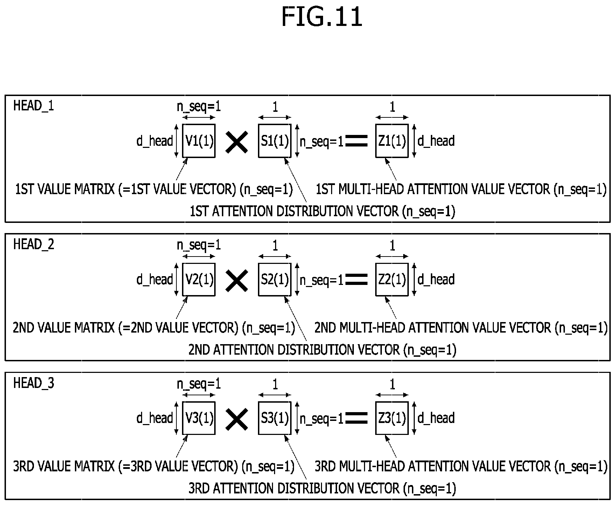

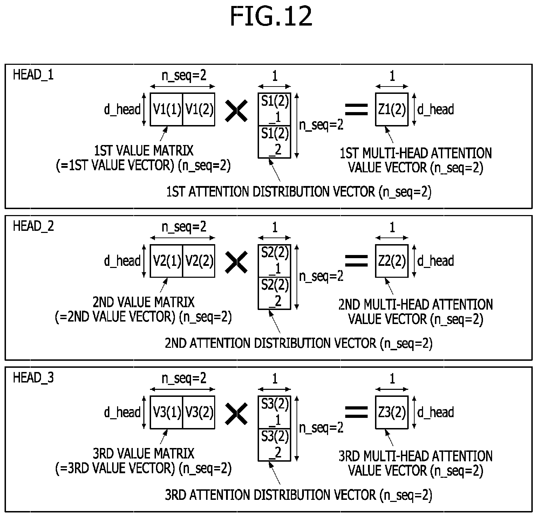

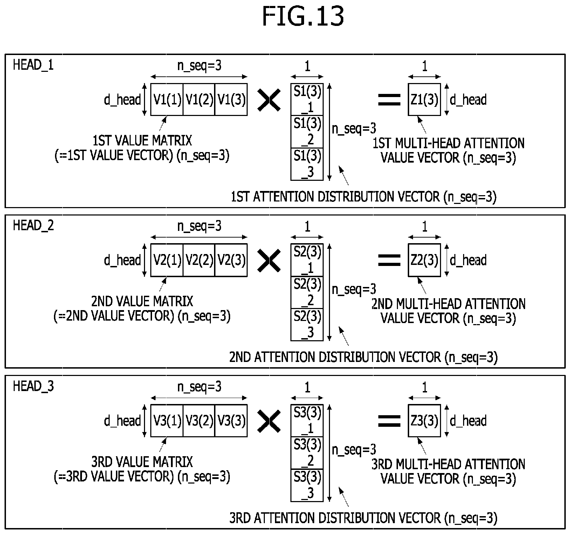

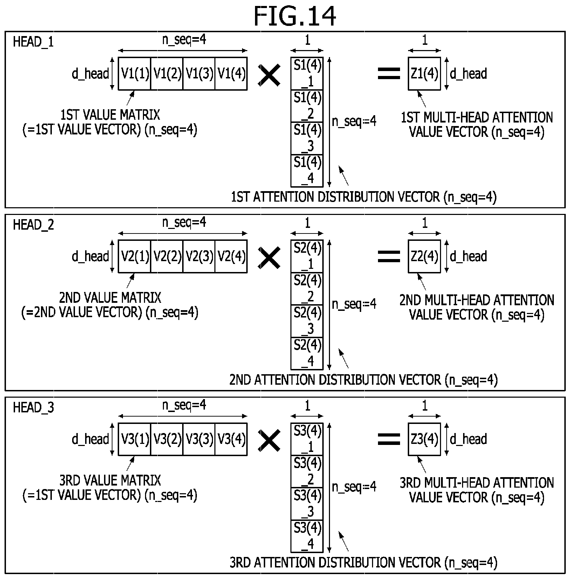

FIG. 11 through FIG. 14 are diagrams illustrating second matrix-vector multiplication processes of the multi-head attention of FIG. 5. In particular, FIG. 11 is a diagram illustrating a second matrix-vector multiplication process in a first sequence of the multi-head attention of FIG. 5. FIG. 12 is a diagram illustrating a second matrix-vector multiplication process in a second sequence of the multi-head attention of FIG. 5. FIG. 13 is a diagram illustrating a second matrix-vector multiplication process in a third sequence of the multi-head attention of FIG. 5. In addition, FIG. 14 is a diagram illustrating a second matrix-vector multiplication process in a fourth sequence of the multi-head attention of FIG. 5. In FIGS. 11 through 14, the number of heads (n_heads of FIG. 5) of a multi-head attention is three as an illustrated example, but embodiments are not limited to only three heads.

Referring first to FIG. 11, in a first sequence n_seq=1 in which a first input token is input, a second matrix-vector multiplication is performed on a first head HEAD_1, a second head HEAD_2, and a third head HEAD_3, that is, the second matrix-vector multiplication is performed on a value matrix and an attention distribution vector. The first, second, and third value matrices used as operands in the second matrix-vector multiplications in the first sequence n_seq=1 are the same as the first, second, and third value vectors V1(1), V2(1), and V3(1) generated in the first sequence n_seq=1, respectively.

Along with the value matrices, first, second, and third attention distribution vectors S1(1), S2(1), and S3(1) used as operands in the second matrix-vector multiplications in the first sequence n_seq=1 are generated through scaling and softmax function processing in the softmax function block (422-2 in FIG. 5), as described with reference to FIG. 5. Specifically, as described with reference to FIG. 7, a first attention score vector A1(1) of the first sequence n_seq=1 is generated through the first matrix-vector multiplication on the first head HEAD_1 of the first sequence n_seq=1. The first attention score vector A1(1) of the first sequence n_seq=1 is subjected to scaling processing and softmax function processing in the softmax function block 422-2, resulting in the first attention distribution vector S1(1) of the first sequence n_seq=1. Through the first matrix-vector multiplication on the second head HEAD_2 in the first sequence n_seq=1, the second attention score vector A2(1) of the first sequence n_seq=1 is generated. The second attention score vector A2(1) of the first sequence n_seq=1 is also subjected to scaling processing and softmax function processing in the softmax function block 422-2, resulting in the second attention distribution vector S2(1) of the first sequence n_seq=1. Through the first matrix-vector multiplication on the third head HEAD_3 in the first sequence n_seq=1, the third attention score vector A3(1) of the first sequence n_seq=1 is generated. The third attention score vector A3(1) of the first sequence n_seq=1 is also subjected to scaling processing and softmax function processing in the softmax function block 422-2, resulting in the third attention distribution vector S3(1) of the first sequence n_seq=1. Accordingly, the first, second, and third attention distribution vectors S1(1), S2(1), and S3(1) of the first sequence n_seq=1 have the same dimension as the first, second, and third attention score vectors A1(1), A2(1), and A3(1) of the first sequence n_seq=1, respectively, that is, the dimension of 1 × 1.

In the first head HEAD_1 of the first sequence n_seq=1, the second matrix-vector multiplication is performed on the first value matrix V1(1) of the first sequence n_seq=1 and the first attention distribution vector S1(1) of the first sequence n_seq=1, resulting in a first multi-head attention value vector Z1(1) of the first sequence n_seq=1. Because the first value matrix V1(1) of the first sequence n_seq=1 has a size of d_head × n_seq and the first attention distribution vector S1(1) of the first sequence n_seq=1 has a size of n_seq × 1, the first multi-head attention value vector Z1(1) of the first sequence n_seq= 1 has a size of d_head × 1. Because the size d_head of the head is a preset value for the multi-head attention, the first multi-head attention value vector Z1(1) has a fixed size.

In the second head HEAD_2 of the first sequence n_seq=1, the second matrix-vector multiplication is performed on the second value matrix V2(1) of the first sequence n_seq=1 and the second attention distribution vector S2(1) of the first sequence n_seq=1, resulting in a second multi-head attention value vector Z2(1) of the first sequence n_seq=1. Because the second value matrix V2(1) of the first sequence n_seq= 1 has a size of d_head × n_seq and the second attention distribution vector S2(1) of the first sequence n_seq=1 has a size of n_seq × 1, the second multi-head attention value vector Z2(1) of the first sequence n_seq=1 also has a fixed size of d_head × 1.

In the third head HEAD_3 of the first sequence n_seq=1, the second matrix-vector multiplication is performed on the third value matrix V3(1) of the first sequence n_seq= 1 and the third attention distribution vector S3(1) of the first sequence n_seq= 1, resulting in a third multi-head attention value vector Z3(1) of the first sequence n_seq=1. Because the third value matrix V3(1) of the first sequence n_seq= 1 has a size of d_head × n_seq and the third attention distribution vector S3(1) of the first sequence n_seq= 1 has a size of n_seq × 1, the third multi-head attention value vector Z3(1) of the first sequence n_seq= 1 also has a fixed size of d_head × 1. As such, the first, second, and third multi-head attention value vectors Z1(1), Z2(1), and Z3(1) generated by the second matrix-vector multiplications on the first, second, and third heads HEAD_1, HEAD_2, and HEAD_3 of the first sequence n_seq=1, respectively, all have the same size of d_head × 1.

Referring next to FIG. 12, in a second sequence n_seq=2 where a second input token is input, the second matrix-vector multiplication is performed on the value matrix and the attention distribution vector for each of the first head HEAD_1, the second head HEAD_2, and the third head HEAD_3. Specifically, the second matrix-vector multiplication for the first head HEAD_1 in the second sequence n_seq=2 is performed on the first value matrix CONCAT(V1(1), V1(2)) of the second sequence n_seq=2 and the first attention distribution vector CONCAT(S1(2)_1, S1(2)_2)) of the second sequence n_seq=2. Here, the first value matrix CONCAT(V1(1), V1(2)) of the second sequence n_seq=2 is formed by concatenating the first value vector V1(1) generated in the first sequence n_seq= 1 and the first value vector V1(2) generated in the second sequence n_seq=2 in the direction of increasing columns (hereinafter, referred to as "column direction"). The first attention distribution vector CONCAT(S1(2)_1, S1(2)_2) of the second sequence n_seq=2 is formed by concatenating the first part S1(2)_1 and second part S1(2)_2 of the first attention distribution vector CONCAT(S1(2)_1, S1(2)_2) generated in the first head HEAD_1 of the second sequence n_seq=2 in the row direction.

The second matrix-vector multiplication for the second head HEAD_2 of the second sequence n_seq=2 is performed on the second value matrix CONCAT(V2(1), V2(2)) of the second sequence n_seq=2 and the second attention distribution vector CONCAT(S2(2)_1, S2(2)_2) of the second sequence n_seq=2. Here, the second value matrix CONCAT(V2(1), V2(2)) of the second sequence n_seq=2 is formed by concatenating the second value vector V2(1) generated in the first sequence n_seq=1 and the second value vector V2(2) generated in the second sequence n_seq=2 in the column direction. The second attention distribution vector CONCAT(S2(2)_1, S2(2)_2) of the second sequence n_seq=2 is formed by concatenating the first part S2(2)_1 and second part S2(2)_2 of the second attention distribution vector CONCAT(S2(2)_1, S2(2)_2) generated in the second head HEAD_2 of the second sequence n_seq=2 in the row direction.

The second matrix-vector multiplication for the third head HEAD_3 of the second sequence n_seq=2 is performed on the third value matrix CONCAT(V3(1), V3(2)) of the second sequence n_seq=2 and the third attention distribution vector CONCAT(S3(2)_1, S3(2)_2) of the second sequence n_seq=2. Here, the third value matrix CONCAT(V3(1), V3(2)) of the second sequence n_seq=2 is formed by concatenating the third value vector V3(1) generated in the first sequence n_seq=1 and the third value vector V3(2) generated in the second sequence n_seq=2 in the column direction. The third attention distribution vector CONCAT(S3(2)_1, S3(2)_2) of the second sequence n_seq=2 is formed by concatenating the first part S3(2)_1 and second part S3(2)_2 of the third attention distribution vector CONCAT(S3(2)_1, S3(2)_2) generated in the third head HEAD_3 of the second sequence n_seq=2 in the row direction.

Along with the value matrices, the first, second, and third attention distribution vectors CONCAT(S1(2)_1, S1(2)_2), CONCAT(S2(2)_1, S2(2)_2), and CONCAT(S3(2)_1, S3(2)_2)) used as operands in the second matrix-vector multiplication in the second sequence n_seq=2 are generated through scaling processing and softmax function processing for the first, second, and third attention score vectors CONCAT(A1(2)_1, A1(2)_2), CONCAT(A2(2)_1, A2(2)_2), and CONCAT(A3(2)_1, A3(2)_2) generated by the first matrix-vector multiplications of the second sequence (n_seq=2) described above with reference to FIG. 8.

Specifically, as described with reference to FIG. 8, in the second sequence n_seq=2, as the first matrix-vector multiplications are performed on the first head HEAD_1 in the first matrix-vector multiplication block 422-1 of the multi-head attention block 420, the first part A1(2)_1 and second part A1(2)_2 of the first attention score vector constituting the first attention score vector CONCAT(A1(2)_1, A1(2)_2) are generated. The first part A1(2)_1 and second part A1(2)_2 of the first attention score vector of the second sequence n_seq=2 are subjected to scaling processing and softmax function processing in the softmax function block 422-2, as described with reference to FIG. 5, resulting in the first part S1(2)_1 and second part S1(2)_2 of the first attention distribution vector of the second sequence n_seq=2. The first attention distribution vector CONCAT(S1(2)_1, S1(2)_2) of the second sequence n_seq=2 is formed by concatenating the first part S1(2)_1 and second part S1(2)_2 of the first attention distribution vector of the second sequence n_seq=2 in the row direction.

In the second sequence n_seq=2, as the first matrix-vector multiplications are performed on the second head HEAD_2 in the first matrix-vector multiplication block 422-1 of the multi-head attention block 420, the first part A2(2)_1 and second part A2(2)_2 constituting the second attention score vector CONCAT(A2(2)_1, A2(2)_2) are generated. Scaling processing and softmax function processing are also performed in the softmax function block 422-2 for the first part A2(2)_1 and second part A2(2)_2 of the second attention score vector of the second sequence n_seq=2, resulting in the first part S2(2)_1 and second part S2(2)_2 of the second attention distribution vector of the second sequence n_seq=2. The second attention distribution vector CONCAT(S2(2)_1, S2(2)_2) of the second sequence n_seq=2 is formed by concatenating the first part S2(2)_1 and second part S2(2)_2 of the second attention distribution vector of the second sequence n_seq=2 in the row direction.

In the second sequence n_seq=2, as the first matrix-vector multiplications for the third head HEAD_3 in the first matrix-vector multiplication block 422-1 of the multi-head attention block 420 are performed, the first part A3(2)_1 and second part A3(2)_2 of the third attention score vector constituting the third attention score vector CONCAT(A3(2)_1, A3(2)_2) are generated. The scaling and softmax function processing are also performed on the first part A3(2)_1 and the second part A3(2)_2 of the third attention score vector of the second sequence n_seq=2, resulting in the first part S3(2)_1 and the second part S3(2)_2 of the third attention distribution vector of the second sequence n_seq=2. The third attention distribution vector (CONCAT(S3(2)_1, S3(2)_2) of the second sequence n_seq=2 is formed by concatenating the first part S3(2)_1 and the second part S3(2)_2 of the third attention distribution vector of the second sequence n_seq=2 in the row direction.

As a result of the second matrix-vector multiplication on the first head HEAD_1 of the second sequence n_seq=2, a first multi-head attention value vector Z1(2) is generated. The first value matrix CONCAT(V1(1), V1(2)) of the second sequence n_seq=2 has a size of d_head × n_seq, that is, a size of d_head × 2, and the first attention distribution vector CONCAT(S1(2)_1, S1(2)_2) of the second sequence n_seq=2 has a size of n_seq × 1, that is, a size of 2 × 1, so the first multi-head attention value vector Z1(2) of the second sequence n_seq=2 has a fixed size of d_head × 1.

As a result of the second matrix-vector multiplication on the second head HEAD_2 of the second sequence n_seq=2, a second multi-head attention value vector Z2(2) is generated. The second value matrix (V2(1), V2(2)) of the second sequence n_seq=2 has a size of d_head × n_seq, that is, a size of d_head × 2, and the second attention distribution vector CONCAT(S2(2)_1, S2(2)_2)) of the second sequence n_seq=2 has a size of n_seq × 1, that is, a size of 2 × 1, so the second multi-head attention value vector Z2(2) of the second sequence n_seq=2 also has a fixed size of d_head × 1.

As a result of the second matrix-vector multiplication on the third head HEAD_3 of the second sequence n_seq=2, a third multi-head attention value vector Z3(2) is generated. The third value matrix (V3(1), V3(2)) of the second sequence n_seq=2 has a size of d_head × n_seq, that is, a size of d_head × 2, and the third attention distribution vector CONCAT(S3(2)_1, S3(2)_2) of the second sequence n_seq=2 has a size of n_seq × 1, that is, a size of 2 × 1, so the third multi-head attention value vector Z3(2) of the second sequence n_seq=2 also has a fixed size of d_head × 1. As such, the first, second, and third multi-head attention value vectors Z1(2), Z2(2), and Z3(2) of the second sequence n_seq=2, which are generated by the second matrix-vector multiplications on the first, second, and third heads HEAD_1, HEAD_2, and HEAD_3 of the second sequence n_seq=2, respectively, all have the same size of d_head × 1.

Next, referring to FIG. 13, in the third sequence n_seq=3, the second matrix-vector multiplication is performed on the value matrix and the attention distribution vector for the first head HEAD_1, the second head HEAD_2, and the third head HEAD_3. The second matrix-vector multiplication on the first head HEAD_1 in the third sequence n_seq=3 is performed on the first value matrix CONCAT(V1(1), V1(2), V1(3)) of the third sequence n_seq=3 and the first attention distribution vector CONCAT(S1(3)_1, S1(3)_2, S1(3)_3) of the third sequence n_seq=3. Here, the first value matrix CONCAT(V1(1), V1(2), V1(3)) of the third sequence n_seq=3 is formed by concatenating the first value vector V1(1) generated in the first sequence n_seq=1, the first value vector V1(2) generated in the second sequence n_seq=2, and the first value vector V1(3) generated in the third sequence n_seq=3 in the column direction. The first attention distribution vector CONCAT(S1(3)_1, S1(3)_2, S1(3)_3)) of the third sequence n_seq=3 has a vector format and is formed by concatenating the first part S1(3)_1, the second part S1(3)_2, and the third part S1(3)_3 of the first attention distribution vector generated in the first head HEAD_1 of the third sequence n_seq=3 in the row direction.

The second matrix-vector multiplication on the second head HEAD_2 of the third sequence n_seq=3 is performed on the second value matrix CONCAT(V2(1), V2(2), V2(3)) of the third sequence n_seq=3 and the second attention distribution vector CONCAT(S2(3)_1, S2(3)_2, S2(3)_3) of the third sequence n_seq=3. Here, the second value matrix CONCAT(V2(1), V2(2), V2(3)) of the third sequence n_seq=3 is formed by concatenating the second value vector V2(1) generated in the first sequence n_seq=1, the second value vector V2(2) generated in the second sequence n_seq=2, and the second value vector V2(3) generated in the third sequence n_seq=3 in the column direction. The second attention distribution vector CONCAT(S2(3)_1, S2(3)_2, S2(3)_3) of the third sequence n_seq=3 has a vector format and is formed by concatenating the first part S2(3)_1, the second part S2(3)_2, and the third part S2(3)_3 of the second attention distribution vector generated in the second head HEAD_2 of the third sequence n_seq=3 in the row direction.

The second matrix-vector multiplication for the third head HEAD_3 of the third sequence n_seq=3 is performed on the third value matrix CONCAT(V3(1), V3(2), V3(3)) of the third sequence n_seq=3 and the third attention distribution vector CONCAT(S3(3)_1, S3(3)_2, S3(3)_3) of the third sequence n_seq=3. Here, the third value matrix CONCAT(V3(1), V3(2), V3(3)) of the third sequence n_seq=3 is formed by concatenating the third value vector V3(1) generated in the first sequence n_seq=1, the third value vector V3(2) generated in the second sequence n_seq=2, and the third value vector V3(3) generated in the third sequence n_seq=3 in the column direction. The third attention distribution vector CONCAT(S3(3)_1, S3(3)_2, S3(3)_3)) of the third sequence n_seq=3 has a vector format and is formed by concatenating the first part S3(3)_1, the second part S3(3)_2, and the third part S3(3)_3 of the third attention distribution vector generated in the third head HEAD_3 of the third sequence n_seq=3 in the row direction.

Along with the first, second, and third value matrices, the first through third parts S1(3)_1 through S1(3)_3 of the first attention distribution vector CONCAT(S1(3)_1, S1(3)_2, S1(3)_3), the first through third parts S2(3)_1 through S2(3)_3 of the second attention distribution vector CONCAT(S2(3)_1, S2(3)_2, S2(3)_3), and the first through third parts S3(3)_1 through S3(3)_3 of the third attention distribution vector CONCAT(S3(3)_1, S3(3)_2, S3(3)_3) are generated by scaling and softmax function processing in the softmax function block 422-2, as described above with reference to FIG. 5.

Specifically, as described with reference to FIG. 9, in the third sequence n_seq=3, as the first matrix-vector multiplications are performed on the first head HEAD_1 in the first matrix-vector multiplication block 422-1 of the multi-head attention block 420, the first part A1(3)_1, the second part A1(3)_2, and the third part A1(3)_3 of the first attention score vector CONCAT(A1(1), A1(2), A1(3)) are generated. The first through third parts A1(3)_1 through A1(3)_3 of the first attention score vector in the third sequence n_seq=3 are subjected to scaling processing and softmax function processing in the softmax function block 422-2, as described above with reference to FIG. 5, resulting in the first through third parts S1(3)_1 through S1(3)_3 of the first attention distribution vector in the third sequence n_seq=3. The first through third parts S1(3)_1 through S1(3)_3 of the first attention distribution vector of the third sequence n_seq=3 are concatenated in the row direction to form the first attention distribution vector CONCAT(S3(3)_1, S3(3)_2, S3(3)_3) in the third sequence n_seq=3.

In the third sequence n_seq=3, as the first matrix-vector multiplications are performed on the second head HEAD_2 in the first matrix-vector multiplication block 422-1 of the multi-head attention block 420, the first part A2(3)_1, the second part A2(3)_2, and the third part A2(3)_3 of the second attention score vector CONCAT(A2(3)_1, A2(3)_2, A2(3)_3) are generated. Scaling and softmax function processing are also performed on the first through third parts A2(3)_1 through A2(3)_3 of the second attention score vector of the third sequence n_seq=3 in the softmax function block 422-2, resulting in the first part S2(3)_1, the second part S2(3)_2, and the third part S2(3)_3 of the second attention distribution vector of the third sequence n_seq=3. The first through third parts S2(3)_1 through S2(3)_3 of the second attention distribution vector of the third sequence n_seq=3 are concatenated in the row direction to form the second attention distribution vector CONCAT(S2(3)_1, S2(3)_2, S2(3)_3) in the third sequence n_seq=3.

In the third sequence n_seq=3, as the first matrix-vector multiplications are performed on the third head HEAD_3 in the first matrix-vector multiplication block 422-1 of the multi-head attention block 420, the first part A3(3)_1, the second part A3(3)_2, and the third part A3(3)_3 of the third attention score vector CONCAT(A3(3)_1, A3(3)_2, A3(3)_3) are generated. Scaling and softmax function processing are also performed on the first through third parts A3(3)_1 through A3(3)_3 of the third attention score vector in the third sequence n_seq=3 in the softmax function block 422-2, resulting in the first through third parts S3(3)_1 through S3(3)_3 of the third attention distribution vector in the third sequence n_seq=3. The first through third parts S3(3)_1 through S3(3)_3 of the third attention distribution vector of the third sequence n_seq=3 are concatenated in the row direction to form the third attention distribution vector CONCAT(S3(3)_1, S3(3)_2, S3(3)_3) in the third sequence n_seq=3.

As a result of the second matrix-vector multiplication on the first head HEAD_1 of the third sequence n_seq=3, the first multi-head attention value vector Z1(3) is generated. The first value matrix CONCAT(V1(1), V1(2), V1(3)) of the third sequence n_seq=3 has a size of d_head × n_seq, that is, a size of d_head × 3, and the first attention distribution vector CONCAT(S1(3)_1, S1(3)_2, S1(3)_3) has a size of n_seq × 1, that is, a size of 3 × 1, so the first multi-head attention value vector Z1(3) of the third sequence n_seq=3 has a fixed size of d_head × 1. As a result of the second matrix-vector multiplication on the second head HEAD_2 of the third sequence n_seq=3, the second multi-head attention value vector Z2(3) is generated. The second value matrix CONCAT(V2(1), V2(2), V2(3)) of the third sequence n_seq=3 has a size of d_head × n_seq, that is, a size of d_head × 3, and the second attention distribution vector CONCAT(S2(3)_1, S2(3)_2, S2(3)_3)) has a size of n_seq × 1, that is, a size of 3 × 1, so the second multi-head attention value vector Z2(3) also has a size of d_head × 1. As a result of the second matrix-vector multiplication on the third head HEAD_3 of the third sequence n_seq=3, the third multi-head attention value vector Z3(3) is generated. The third value matrix CONCAT(V3(1), V3(2), V3(3)) of the third sequence n_seq=3 has a size of d_head × n_seq, that is, a size of d_head × 3, and the third attention distribution vector CONCAT(S3(3)_1, S3(3)_2, S3(3)_3) of the third sequence n_seq=3 has a size of n_seq × 1, that is, a size of 3 × 1, so the third multi-head attention value vector Z3(3) of the third sequence n_seq=3 also has a fixed size of d_head × 1. As such, the first, second, and third multi-head attention value vectors Z1(3), Z2(3), and Z3(3) generated by the second matrix-vector multiplications on the first, second, and third heads HEAD_1, HEAD_2, and HEAD_3 of the third sequence n_seq=3, respectively, all have the same size of d_head × 1.

Referring next to FIG. 14, in a fourth sequence n_seq=4, for the first head HEAD_1, the second head HEAD_2, and the third head HEAD_3, the second matrix-vector multiplication is performed on the value matrix and the attention distribution matrix. The second matrix-vector multiplications for the first head HEAD_1 in the fourth sequence n_seq=4 are performed on the first value matrix CONCAT(V1(1), V1(2), V1(3), V1(4)) and the first attention distribution vector CONCAT(S1(4)_1, S1(4)_2, S1(4)_3, S1(4)_4) of the fourth sequence n_seq=4. Here, the first value matrix CONCAT(V1(1), V1(2), V1(3), V1(4)) of the fourth sequence n_seq=4 is formed by concatenating the first value vector V1(1) generated in the first sequence n_seq=1, the first value vector V1(2) generated in the second sequence n_seq=2, the first value vector V1(3) generated in the third sequence n_seq=3, and the first value vector V1(4) generated in the fourth sequence n_seq=4 in the column direction. The first attention distribution vector CONCAT(S1(4)_1, S1(4)_2, S1(4)_3, S1(4)_4) of the fourth sequence n_seq=4 is formed by concatenating the first through fourth parts S1(4)_1 through S1(4)_4 of the first attention distribution vector generated in the first head HEAD_1 of the fourth sequence n_seq=4 in the row direction.

The second matrix-vector multiplication for the second head HEAD_2 of the fourth sequence n_seq=4 is performed on the second value matrix CONCAT(V2(1), V2(2), V2(3), V2(4)) and the second attention distribution vector CONCAT(S2(4)_1, S2(4)_2, S2(4)_3, S2(4)_4)). Here, the second value matrix CONCAT(V2(1), V2(2), V2(3), V2(4)) of the fourth sequence n_seq=4 is formed by concatenating the second value vector V2(1) generated in the first sequence n_seq=1, the second value vector V2(2) generated in the second sequence n_seq=2, the second value vector V2(3) generated in the third sequence n_seq=3, and the second value vector V2(4) generated in the fourth sequence n_seq=4 in the column direction. The second attention distribution vector CONCAT(S2(4)_1, S2(4)_2, S2(4)_3, S2(4)_4) of the fourth sequence n_seq=4 is formed by concatenating the first through fourth parts S2(4)_1 through S2(4)_4 of the second attention distribution vector generated in the second head HEAD_2 of the fourth sequence n_seq=4 in the row direction.

The second matrix-vector multiplication for the third head HEAD_3 of the fourth sequence n_seq=4 is performed on the third value matrix CONCAT(V3(1), V3(2), V3(3), V3(4)) and the third attention distribution vector CONCAT(S3(4)_1, S3(4)_2, S3(4)_3, S3(4)_4). Here, the third value matrix CONCAT(V3(1), V3(2), V3(3), V3(4)) for the fourth sequence n_seq=4 is formed by concatenating the third value vector V3(1) generated in the first sequence n_seq=1, the third value vector V3(2) generated in the second sequence n_seq=2, the third value vector V3(3) generated in the third sequence n_seq=3, and the fourth value vector V3(4) generated in the fourth sequence n_seq=4 in the column direction. The third attention distribution vector CONCAT(S3(4)_1, S3(4)_2, S3(4)_3, S3(4)_4) of the fourth sequence n_seq=4 is formed by concatenating the first through fourth parts S3(4)_1 through S3(4)_4 of the third attention distribution vector generated in the third head HEAD_3 of the fourth sequence n_seq=4 in the row direction.

Along with the first, second, and third value matrices, the first through fourth parts S1(4)_1 through S1(4)_4 of the first attention distribution vector, the first through fourth parts S2(4)_1 through S2(4)_4 of the second attention distribution vector, and the first through fourth parts S3(4)_1 through S3(4)_4 of the third attention distribution vector, which are used as operands in the second matrix-vector multiplications in the fourth sequence n_seq=4, are generated through scaling and softmax function processing in the softmax function block 422-2, as described above with reference to FIG. 5.

Specifically, as described above with reference to FIG. 10, in the fourth sequence n_seq=4, as the first matrix-vector multiplications are performed on the first head HEAD_1 in the first matrix-vector multiplication block 422-1 of the multi-head attention block 420, the first through fourth parts A1(4)_1 through A1(4)_4 of the first attention score vector CONCAT(A1(4)_1, A1(4)_2, A1(4)_3, A1(4)_4) are generated. Scaling and softmax function processing are performed on the first through fourth parts A1(4)_1 through A1(4)_4 of the first attention score vector of the fourth sequence n_seq=4 in the softmax function block 422-2, as described above with reference to FIG. 5. As a result, the first through fourth parts S1(4)_1 through S1(4)_4 of the first attention distribution vector of the fourth sequence n_seq=4 are generated. The first through fourth parts S1(4)_1 through S1(4)_4 of the first attention distribution vector of the fourth sequence n_seq=4 are concatenated in the row direction to form the first attention distribution vector CONCAT(S1(4)_1, S1(4)_2, S1(4)_3, S1(4)_4) of the fourth sequence n_seq=4.

In the fourth sequence n_seq=4, as the first matrix-vector multiplications are performed on the second head HEAD_2 in the first matrix-vector multiplication block 422-1 of the multi-head attention block 420, the first through fourth parts A2(4)_1, A2(4)_2, A2(4)_3, A2(4)_4 of the second attention score vector CONCAT(A2(4)_1, A2(4)_2, A2(4)_3, A2(4)_4) are generated. Scaling and softmax function processing are also performed on the first through fourth parts A2(4)_1 through A2(4)_4 of the second attention score vector of the fourth sequence n_seq=4 in the softmax function block 422-2. As a result, the first through fourth parts S2(4)_1 through S2(4)_4 of the second attention distribution vector of the fourth sequence n_seq=4 are generated. The first through fourth parts S2(4)_1 through S2(4)_4 of the second attention distribution vector in the fourth sequence n_seq=4 are concatenated in the row direction to form the second attention distribution vector CONCAT(S2(4)_1, S2(4)_2, S2(4)_3, S2(4)_4) in the fourth sequence n_seq=4.

In the fourth sequence n_seq=4, as the first matrix-vector multiplications are performed on the third head HEAD_3 in the first matrix-vector multiplication block 422-1 of the multi-head attention block 420, the first through fourth parts A3(4)_1 through A3(4)_4 of the third attention score vector CONCAT(A3(4)_1, A3(4)_2, A3(4)_3, A3(4)_4) are generated. Scaling and softmax function processing are also performed on the first through fourth parts A3(4)_1 through A3(4)_4 of the third attention score vector of the fourth sequence n_seq=4 in the softmax function block 422-2. As a result, the first through fourth parts S3(4)_1 through S3(4)_4 of the third attention distribution vector of the fourth sequence n_seq=4 are generated. The first through fourth parts S3(4)_1 through S3(4)_4 of the third attention distribution vector in the fourth sequence n_seq=4 are concatenated in the row direction to form the third attention distribution vector CONCAT(S3(4)_1, S3(4)_2, S3(4)_3, S3(4)_4) in the fourth sequence n_seq=4.

As a result of the second matrix-vector multiplication on the first head HEAD_1 of the fourth sequence n_seq=4, a first multi-head attention value vector Z1(4) of the fourth sequence n_seq=4 is generated. The first value matrix CONCAT(V1(1), V1(2), V1(3), V1(4)) of the fourth sequence n_seq=4 has a size of d_head × n_seq, that is, a size of d_head × 4, and the first attention distribution vector CONCAT(S1(4)_1, S1(4)_2, S1(4)_3, S1(4)_4) of the fourth sequence n_seq=4 has a size of n_seq × 1, that is, a size of 4 × 1, so the first multi-head attention value vector Z1(4) of the fourth sequence n_seq=4 has a fixed size of d_head × 1. As a result of the second matrix-vector multiplication on the second head HEAD_2 of the fourth sequence n_seq=4, a second multi-head attention value vector Z2(4) of the fourth sequence n_seq=4 is generated. The second value matrix CONCAT(V2(1), V2(2), V2(3), V2(4)) of the fourth sequence n_seq=4 has a size of d_head × n_seq, that is, a size of d_head × 4, and the second attention distribution vector CONCAT(S2(4)_1, S2(4)_2, S2(4)_3, S2(4)_4) has a size of n_seq × 1, that is, a size of 4 × 1, so the second multi-head attention value vector Z2(4) of the fourth sequence n_seq=4 also has a fixed size of d_head × 1. As a result of the second matrix-vector multiplication on the third head HEAD_3 of the fourth sequence n_seq=4, a third multi-head attention value vector Z3(4) of the fourth sequence (n_seq=4) is generated. The third value matrix CONCAT(V3(1), V3(2), V3(3), V3(4)) of the fourth sequence n_seq=4 has a size of d_head × n_seq, that is, a size of d_head × 4, and the third attention distribution vector CONCAT(S3(4)_1, S3(4)_2, S3(4)_3, S3(4)_4) has a size of n_seq × 1, that is, a size of 4 × 1, so the third multi-head attention value vector Z3(4) of the fourth sequence n_seq=4 also has a fixed size of d_head × 1. As such, the first, second, and third multi-head attention value vectors Z1(4), Z2(4), and Z3(4) generated through the second matrix-vector multiplications of the first, second, and third heads HEAD_1, HEAD_2, and HEAD_3 of the fourth sequence n_seq=4, respectively, all have the same size of d_head × 1.

As described with reference to FIG. 11 through FIG. 14, in the first sequence (that is, when the number of input tokens is one), the value vectors generated in the first sequence may be used in the same matrix format as the operands of the second matrix-vector multiplication to generate the multi-head attention value vector of the multi-head attention. On the other hand, in sequences other than the first sequence, value matrices, in which the value vectors generated in the previous sequence and the value vectors generated in the current sequence are concatenated, are used as the operands of the second matrix-vector multiplication instead of the value vectors generated in each sequence. However, the attention distribution vector in the vector format, used as the operands of the second matrix-vector multiplication along with the value matrix, is formed by concatenating all the parts of the attention distribution vector generated by applying scaling and a softmax function. Thus, as the operands of the second matrix-vector multiplication, the value matrix and the attention distribution vector increase together in the number of sequences in the column direction and the row direction, respectively, such that the dimensions of the multi-head attention value vectors generated as a result of the second matrix-vector multiplication are constant regardless of the number of sequences. Because the dimensions of the value vectors generated in all sequences are the same, the size of each of the key vectors written to the memory banks of the PIM devices for each sequence is a fixed size. On the other hand, the attention distribution matrices stored in the global buffers of the PIM devices for each sequence have different sizes depending on the number of sequences. Therefore, when writing the value vectors to the memory banks of the PIM devices, the value vectors generated for each sequence can be distributed and stored in the plurality of PIM devices and the plurality of memory banks, thereby increasing the degree of parallel execution of the second matrix-vector multiplication as the number of sequences increases. The process of distributing and storing the value vectors in the PIM devices and memory banks will be described in more detail below.

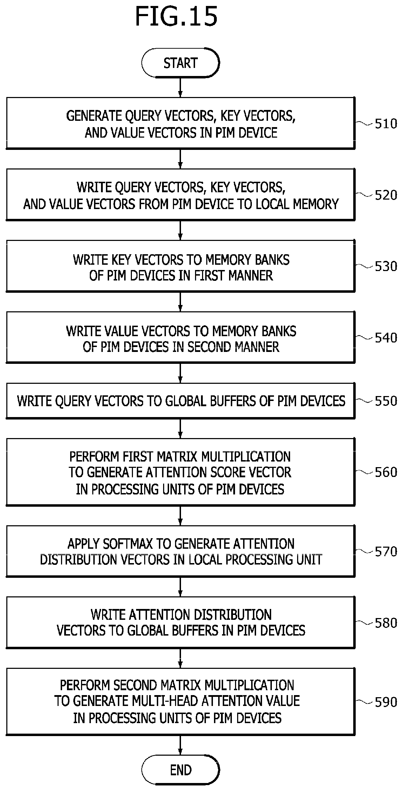

FIG. 15 is a flowchart illustrating a process of performing multi-head attention in a neural network architecture according to an embodiment of the present disclosure. The following description relates to multi-head attention in one sequence, but the process may be applied to each numbered sequence accordingly.

Referring to FIG. 15 together with FIG. 1 and FIG. 2, query vectors, key vectors, and value vectors are first generated in PIM devices 110(0), ..., and 110(15) (operation 510). The query vectors, key vectors, and value vectors are generated in the PIM devices 110(0), ..., and 110(15), but in other embodiments the query vectors, key vectors, and value vectors may be generated in separate computing devices other than the PIM devices 110(0), ..., and 110(15). The process of generating the query vectors, key vectors, and value vectors is the same as described above with reference to FIG. 6, and accordingly, the query vectors, key vectors, and value vectors are each generated as many times as the number of heads. The query vectors, key vectors, and value vectors generated by the first through sixteenth PIM devices 110(0) through 110(15) are then written to a local memory 130 (operation 520). To this end, PIM controller 120 reads the query vectors, key vectors, and value vectors from the first through sixteenth PIM devices 110(0) through 110(15). The PIM controller 120 then writes the query vectors, key vectors, and value vectors to the local memory 130.

Next, the key vectors are written to the memory banks of the PIM devices 110(0) , ..., and 110(15) in a first manner (operation 530). To this end, the PIM controller 120 reads the key vectors from the local memory 130. The PIM controller 120 then writes the key vectors read from the local memory 130 to the memory banks BKs of the first through sixteenth PIM devices 110(0) through 110(15). In an example, the key vectors are written in a first manner to one of the memory banks BKs of one PIM device of the first through sixteenth PIM devices 110(0) through 110(15). Next, the value vectors are written to the memory banks BKs of the PIM devices 110(0) through 110(15) in a second manner (operation 540). To this end, the PIM controller 120 reads the value vectors from the local memory 130. The PIM controller 120 then writes the value vectors read from the local memory 130 to the memory banks BKs of the first through sixteenth PIM devices 110(0) through 110(15). In an example, the value vectors are written in a second manner such that the value vectors are distributed to the memory banks BKs of the first through sixteenth PIM devices 110(0) through 110(15). Then, the query data is written to the global buffers GBs of the first through sixteenth PIM devices 110(0) through 110(15) (operation 550). Specifically, the PIM controller 120 reads the query data from the local memory 130. The PIM controller 120 then writes the query data read from the local memory 130 to the global buffers GBs of the first through sixteenth PIM devices 110(0) through 110(15). The processes of operation 530, operation 540, and operation 550 may be performed in a different order than illustrated in FIG. 15.

Next, the processing units PUs of the first through sixteenth PIM devices 110(0) through 110(15) perform first matrix-vector multiplication to generate an attention score vector (operation 560). Specifically, the PIM controller 120 transmits commands for the first matrix-vector multiplication to the first through sixteenth PIM devices 110(0) through 110(15). Among the memory banks of the first through sixteenth PIM devices 110(0) through 110(15), the memory banks storing the key vectors provide the key vectors to the processing units PUs. In addition, the first through sixteenth PIM devices 110(0) through 110(15) also provide the query vectors from the global buffer GBs to the first through sixteenth processing units PU0 through PU15. Among the first through sixteenth processing units PU0 through PU15, the processing units that receive the key vectors and the query vectors perform the first matrix-vector multiplications on the query vectors and the key vectors, and generate resulting data in the form of attention score vectors. The attention score vectors generated by the first through sixteenth PIM devices 110(0) through 110(15) are written to the local memory 130.

Next, the local processing unit 140 applies a softmax function to the attention score vector to generate the attention distribution vectors (operation 570). Specifically, the PIM controller 120 transmits control signals to the local memory 130 to cause the attention score vectors to be transmitted from the local memory 130 to the local processing unit 140. Next, the PIM controller 120 transmits control signals to the local processing unit 140 for applying the softmax function. Accordingly, the local processing unit 140 performs the scaling operation and softmax function application operation on the attention score vectors. Specifically, the local processing unit 140 performs the scaling operation on the attention score vectors transmitted from the local memory 130 to generate scaled attention score vectors. Next, the local processing unit 140 applies the softmax function to the scaled attention score vectors to generate the attention distribution vectors that are weighted averages of the attention score vectors.

Next, the attention distribution vectors are written to the global buffers GBs of the first through sixteenth PIM devices 110(0) through 110(15) (operation 580). The processing units PUs of the first through sixteenth PIM devices 110(0) through 110(15) perform second matrix-vector multiplications to generate the multi-head attention value vector (operation 590). Specifically, the PIM controller 120 transmits commands for the matrix-vector multiplication to the first through sixteenth PIM devices 110(0) through 110(15). The memory banks of the first through sixteenth PIM devices 110(0) through 110(15) provide the value vectors to the processing units. The global buffers GB of the first through sixteenth PIM devices 110(0) through 110(15) provide the attention distribution vectors to the processing units. The first through sixteenth processing units PU0 through PU15 perform second matrix-vector multiplication on the value vectors and the attention distribution vectors and generate the resulting data in the form of the multi-head attention value vectors. As described with reference to FIG. 5, an "n_head" number of multi-head attention value vectors are generated through "n_head" multi-head attention layers 422, which is the number of heads. The "n_head" multi-head attention value vectors are all concatenated and output from the multi-head attention layers 422 in the format of a concatenated multi-head attention matrix with a dimension equal to the dimension of the embedded vector.

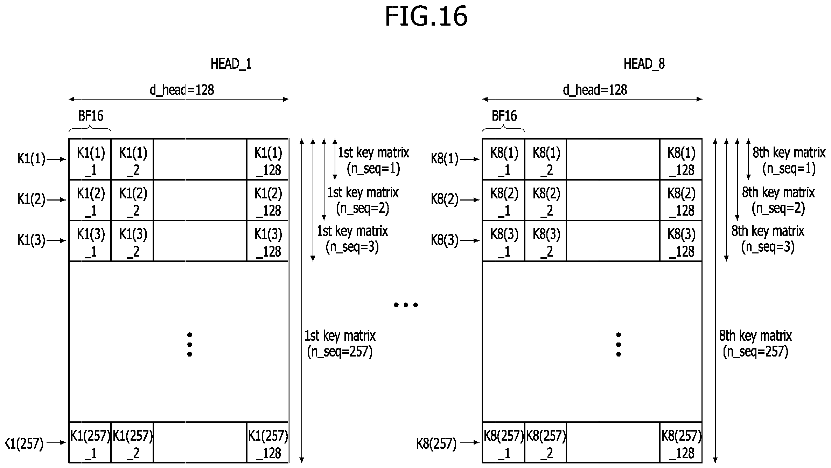

FIG. 16 is a diagram illustrating an example of key matrices used as operands in first matrix-vector multiplication according to an embodiment of the present disclosure. As an example, FIG. 16 assumes that the number of sequences n_seq of the multi-head attention is 257 and the number of heads n_head is 8. In addition, it is also assumed that the size of the head d_head is 128 and each of the head sizes is floating point data having a 16-bit BFloat16 (BF16) format. FIG. 16 illustrates only a first head HEAD_1 and an eighth head HEAD_8, but key vectors are generated in the same manner for the remaining second through seventh heads HEAD_2 through HEAD_7.

Referring to FIG. 16, in a first sequence n_seq=1, first through eighth key vectors K1(1) through K8(1) are generated for each of the first through eighth heads HEAD_1 through HEAD_8. The process of generating the first through eighth key vectors K1(1) through K8(1) is the same as described above with reference to FIG. 6. Because the head size d_head of the multi-head attention is 128, each of the first through eighth key vectors K1(1) through K8(1) has first through 128^{th} elements. As illustrated in the FIG. 16, the first key vector K1(1) has the first through 128^{th} elements K1(1)_1 through K1(1)_128. Similarly, the eighth key vector K8(1) has the first through 128^{th} elements K8(1)_1 through K8(1)_128. Each of the first through 128^{th} elements of each of the first through eighth key vectors K1(1) through K8(1) is composed of 16-bit floating point data in BF16 format. The first through eighth key vectors K1(1) through K8(1) generated in the first sequence n_seq= 1 are used as first through eighth key matrices, which are the operands in the first matrix-vector multiplications in the first through eighth heads HEAD_1 through HEAD_8 of the first sequence n_seq=1. For example, the first key vector K1(1) generated in the first sequence n_seq=1 is used as the first key matrix, which is an operand in the first matrix-vector multiplication in the first head HEAD_1 of the first sequence n_seq. In the same manner, the eighth key vector K8(1) generated in the first sequence n_seq= 1 is used as the eighth key matrix, which is an operand in the first matrix-vector multiplication in the eighth head HEAD_8 of the first sequence n_seq=1.

In a second sequence n_seq=2, first through eighth key vectors K1(2) through K8(2) are generated for each of the first through eighth heads HEAD_1 through HEAD_8. The first through eighth key matrices used as operands in the first matrix-vector multiplications in the second sequence n_seq=2 are formed by concatenating the first through eighth key vectors K1(1) through K8(1) generated in the first sequence n_seq=1 and the first through eighth key vectors K1(2) through K8(2) generated in the second sequence n_seq=2, respectively. For example, the first key matrix CONCAT(K1(1), K1(2)) used as an operand in the first matrix-vector multiplication on the first head HEAD_1 of the second sequence n_seq=2 is formed by concatenating the first key vector K1(1) of the first sequence n_seq=1 and the first key vector K1(2) of the second sequence n_seq=2 in the row direction. In the same manner, the eighth key matrix CONCAT(K8(1), K8(2)) used as an operand in the first matrix-vector multiplication in the eighth head HEAD_8 of the second sequence n_seq=2 is formed by concatenating the eighth key vector K8(1) of the first sequence n_seq=1 and the eighth key vector K8(2) of the second sequence n_seq=2 in the row direction.

In a third sequence n_seq=3, first through eighth key vectors K1(3) through K8(3) are generated for each of the first through eighth heads HEAD_1 through HEAD_8. The first through eighth key matrices used as the operands in the first matrix-vector multiplications in the third sequence n_seq=3 are formed by concatenating the first through eighth key vectors K1(1) through K8(1) generated in the first sequence n_seq= 1, the first through eighth key vectors K1(2) through K8(2) generated in the second sequence n_seq=2, and the first through eighth key vectors K1(3) through K8(3) generated in the third sequence n_seq=3, respectively. For example, the first key matrix CONCAT(K1(1), K1(2), K1(3)) used as an operand in the first matrix-vector multiplication on the first head HEAD_1 of the third sequence n_seq=3 is formed by concatenating the first key vector K1(1) of the first sequence n_seq= 1, the first key vector K1(2) of the second sequence n_seq=2, and the first key vector K1(3) of the third sequence n_seq=3 in the row direction. In the same manner, the eighth key matrix CONCAT(K8(1), K8(2), K8(3)) used as the operand in the first matrix-vector multiplication in the third sequence n_seq=3 is formed by concatenating the eighth key vector K8(1) of the first sequence n_seq= 1, the eighth key vector K8(2) of the second sequence n_seq=2, and the eighth key vector K8(3) of the third sequence n_seq=3 in the row direction.

Similarly, in the 257^{th} sequence n_seq=257, first through eighth key vectors K1(257) through K8(257) are generated for each of the first through eighth heads HEAD_1 through HEAD_8. The first through eighth key matrices used as the operands in the first matrix-vector multiplications in the 257^{th} sequence n_seq=257 are formed by concatenating the first through eighth key vectors of all sequences from the first through eighth key vectors K1(1) through K8(1) in the first sequence n_seq= 1 to the first through eighth key vectors K1(257) through K8(257) in the 257^{th} sequence n_seq=257 in the row direction, respectively. For example, the first key matrix CONCAT(K1(1), ..., K1(257)) used as an operand in the first matrix-vector multiplication in the first head HEAD_1 of the 257^{th} sequence n_seq=257 is formed by concatenating the first key vectors K1(1) through K1(257) of the first through 257^{th} sequences n_seq=1 through n_seq=257 in the row direction. In the same manner, the eighth key matrix CONCAT(K8(1), K8(2), K8(3), ..., K8(257)) is formed by concatenating the eighth key vectors K8(1) through K8(257) of the first through 257^{th} sequences n_seq=1 through n_seq=257 in the row direction.

To perform the transformer-based multi-head attention in the neural network architecture according to the present disclosure, the plurality of memory banks of the plurality of PIM devices store the key vectors in a first manner. Here, the first manner may be defined as a set of operations in which the key vectors generated in one of the plurality of sequences of the multi-head attention are stored in one of the plurality of memory banks of each of the plurality of PIM devices. In an example, when "P" is the number of the plurality of PIM devices included in the neural network architecture, "M" is the number of the plurality of memory banks included in each of the PIM devices, and "L" is a natural number from "1" to "P", the "L"^{th} PIM device is configured to store the key vectors generated in the "(L-1)·M+1"^{th} through "L·M"^{th} sequences among the plurality of sequences. In particular, the key vectors generated in the "(L-1)·M+1"^{th} through "L·M"^{th} sequences are sequentially stored in the first through "M"^{th} memory banks of the "L"^{th} PIM device in units of key vectors generated in one of the "(L-1)·M+1"^{th} through "L·M"^{th} sequences.

In an example, when the total size d_head × n_head of the key vectors generated in one sequence is less than or equal to the page size of each of the plurality of memory banks, the key vectors generated in the "(L-1)·M+1"^{th} through "L·M"^{th} sequences are stored in the same first rows in the first through "M"^{th} memory banks of the "L"^{th} PIM device. Here, the "first row" does not mean the physical first row in the memory bank, which applies equally below. When the number of heads is "N", "N" query vectors generated in each of the "(L-1)·M+1"^{th} through "L·M"^{th} sequences are stored in the global buffer. The "N" query vectors stored in the global buffer may be used as operands in the first matrix operation.

In particular, the first through "N"^{th} key vectors generated in a first sequence among the plurality of sequences are sequentially stored in the direction of increasing columns in the first row of the first memory bank of the first PIM device among the plurality of PIM devices, and the first through "N"^{th} query vectors generated in the first sequence are sequentially stored in the global buffer of the first PIM device. Then, when "K" is a natural number from "1" to "N", the first processing unit of the first PIM device performs the first matrix-vector multiplication on a "K"^{th} key vector and a "K"^{th} query vector to generate a "K"^{th} attention score vector in the first sequence.

The first through "N"^{th} key vectors generated in a second sequence are sequentially stored in the direction of increasing columns in the first row of the second memory bank of the first PIM device among the plurality of PIM devices, and the first through "N"^{th} query vectors generated in the second sequence are sequentially stored in the global buffer of the first PIM device. When "K" is a natural number from "1" to "N", the first processing unit of the first PIM device performs the first matrix-vector multiplication on the "K"^{th} key vector generated in the first sequence and the "K"^{th} query vector generated in the second sequence to generate a first part of the "K"^{th} attention score vector in the second sequence. In addition, the second processing unit of the first PIM device performs the first matrix-vector multiplication on the "K"^{th} key vector generated in the second sequence and the "K"^{th} query vector generated in the second sequence to generate a second part of the "K"^{th} attention score vector in the second sequence.

That is, the first through "N"^{th} key vectors generated in the "M"^{th} sequence are sequentially stored in the direction of increasing columns in the first row of the "M"^{th} memory bank of the first PIM device among the plurality of PIM devices, and the first through "N"^{th} query vectors generated in the "M"^{th} sequence are sequentially stored in the global buffer of the first PIM device. When "K" is a natural number from "1" to "N", the first through "M"^{th} processing units of the first PIM device perform the first matrix-vector multiplications on the "K"^{th} key vectors generated in the first through "M"^{th} sequences, and on the "K"^{th} query vectors generated in the "M"^{th} sequences in parallel, to generate the first through "N"^{th} parts of the "K"^{th} attention score vector in the "M"^{th} sequence.

In an example, the key vectors generated in the "(P+(L-1))·M+1"^{th} through "(P+L)·M"^{th} sequences are sequentially stored in the first through "M"^{th} memory banks of the "L"^{th} PIM device in units of key vectors generated in one of the "(P+(L-1))·M+1"^{th} through "(P+L)·M"^{th} sequences. The key vectors generated in the "(P+(L-1))·M+1"^{th} through "(P+L)·M"^{th} sequences are stored in the second row, which is the next row after the first row, in the first through "M"^{th} memory banks of the "L"^{th} PIM device. In particular, the first through "N"^{th} key vectors generated in the "(P+(L-1))·M+1"^{th} sequence are sequentially stored in the direction of increasing columns in the second row of the first memory bank of the "L"^{th} PIM device. In addition, the first through "N"^{th} query vectors generated in the "(P+(L-1))·M+1"^{th} sequence are sequentially stored in the global buffer of the "L"^{th} PIM device. When "K" is a natural number from "1" to "N", the first through "M"^{th} processing units of each of the first through "P"^{th} PIM devices perform the first operations of the matrix-vector multiplication in parallel on the "K"^{th} key vectors generated in the first through "(P+(L-1))·M"^{th} sequences, and on the "K"^{th} query vector generated in the "(P+(L-1))·M+1"^{th} sequence, to generate first through "(P+(L-1))·M"^{th} parts of the "K"^{th} attention score vector in the "(P+(L-1))·M+1"^{th} sequence. The first processing unit of the first PIM device performs sequentially the second operations of the first matrix-vector multiplication on the "K"^{th} key vectors generated in the "(P+(L-1))·M+1"^{th} sequence and the "K"^{th} query vector generated in the "(P+(L-1))·M+1"^{th} sequence to generate a "(P+(L-1))·M+1"^{th} part of the "K"^{th} attention score vector in the "(P+(L-1))·M+1"^{th} sequence.

In an example, when the total size of the key vectors generated in one sequence is greater than the page size of each of the plurality of memory banks, the key vectors generated in the "(L-1)·M+1"^{th} through "L·M"^{th} sequences are stored in successive first rows and second rows of the each of the first through "M"^{th} memory banks of the "L"^{th} PIM device. The key vectors generated in the "(P+(L-1))·M+1"^{th} through "(P+L)·M"^{th} sequences are stored sequentially in the first through the "M"^{th} memory banks of the "L"^{th} PIM device in units of key vectors generated in one sequence from among the "(P+(L-1))·M+1"^{th} through "(P+L)·M"^{th} sequences. The key vectors generated in the "(P+(L-1))·M+1"^{th} through "(P+L)·M"^{th} sequences are stored in successive third and fourth rows following the second rows in the first through "M"^{th} memory banks of the "L"^{th} PIM device.

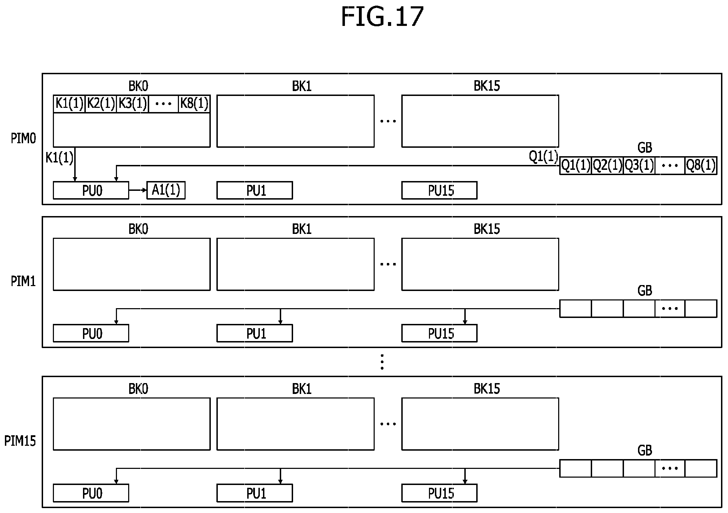

FIG. 17 to FIG. 27 illustrate a method of writing the key vectors generated in the plurality of sequences of the multi-head attention in the neural network architecture according to the present disclosure in the first manner and the first matrix-vector multiplication process performed using the written key vectors. In the following description, the process of generating the key vectors is the same as described above with reference to FIG. 16. Accordingly, in this example, the number of sequences n_seq of the multi-head attention is 257, the number of heads n_head is 8, the size of the head d_head is 128, and each element of the head size is 16-bit floating-point data in the BF16 format. In addition, it is assumed that the memory banks and the global buffer each have a page size of 2 KB.

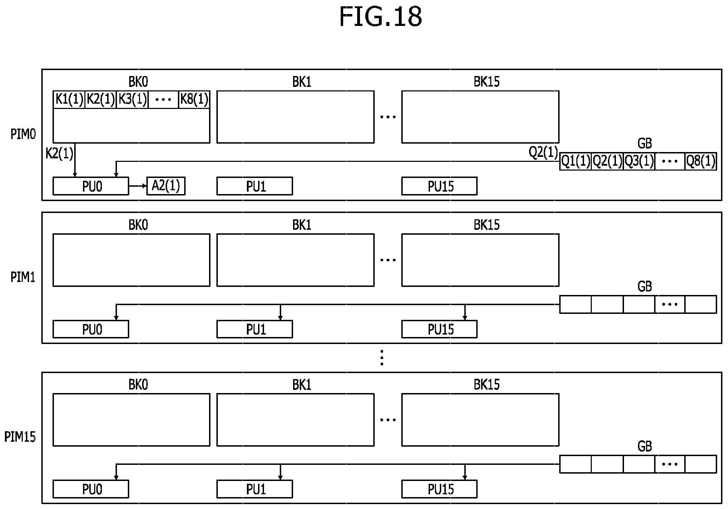

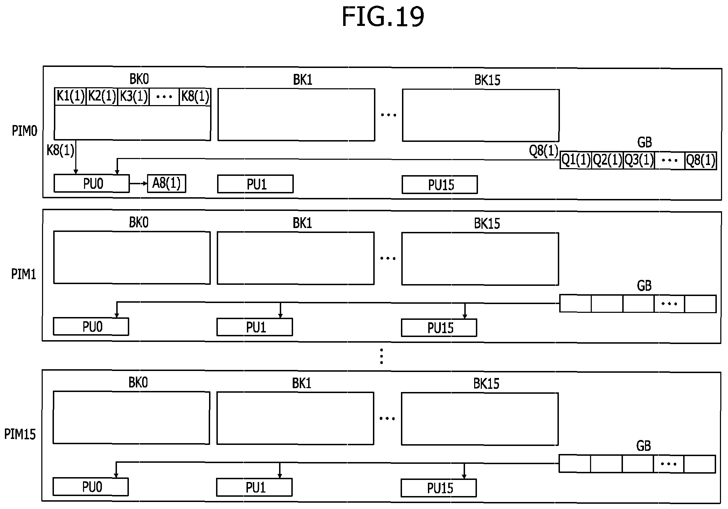

First, FIG. 17 is a diagram illustrating a method of writing first to eighth key vectors generated in a first sequence of a multi-head attention and a first matrix-vector multiplication process performed on a first head according to an embodiment of the present disclosure. FIG. 18 is a diagram illustrating a first matrix-vector multiplication performed on a second head while first to eighth key vectors generated in a first sequence of a multi-head attention are written according to an embodiment of the present disclosure. FIG. 19 is a diagram illustrating a first matrix-vector multiplication performed on an eighth head while first to eighth key vectors generated in a first sequence of a multi-head attention are written according to an embodiment of the present disclosure.

Referring first to FIG. 17, first through eighth key vectors K1(1) through K8(1) generated in a first sequence n_seq= 1 are written to a first memory bank BK0 of a first PIM device PIMO. In an example, the first through eighth key vectors K1(1) through K8(1) of the first sequence n_seq= 1 are stored in the same row (hereinafter, referred to as "first row") of the first memory bank BK0 of the first PIM device PIMO. In FIG. 17, because the total size (16 bits (i.e., 2 Bytes) (BF16) × 128 bits (i.e., 16 Bytes) (d_head) × 8 bits (i.e., 1 Byte) (n_head)) of the first through eighth key vectors K1(1) through K8(1) is the same as 2 KB, which is the page size of the first memory bank BK0, the first row of the first memory bank BK0 of the first PIM device PIMO is filled with all of the first through eighth key vectors K1(1) through K8(1) of the first sequence n_seq=1. The first through eighth query vectors Q1(1) through Q8(1) generated in the first through eighth heads of the first sequence n_seq=1 are written to the global buffer GB of the first PIM device PIMO.

When the first through eighth key vectors K1(1) through K8(1) are stored in the first memory bank BK0 of the first PIM device PIMO and the first through eighth query vectors Q1(1) through Q8(1) are stored in the global buffer GB of the first PIM device PIMO, the first matrix-vector multiplications in the first sequence n_seq=1 are performed sequentially. That is, the first matrix-vector multiplication is first performed on the first head HEAD_1 of the first sequence n_seq=1. Next, the first matrix-vector multiplication is performed on the second head HEAD_2 of the first sequence n_seq=1. Then, the first matrix-vector multiplications are performed sequentially on the remaining third through eighth heads HEAD_3 through HEAD_8 of the first sequence n_seq=1.

As shown in FIG. 17, the first matrix-vector multiplication on the first head HEAD_1 of the first sequence n_seq=1 is performed by the first processing unit PU0 of the first PIM device PIMO. Specifically, the first processing unit PU0 of the first PIM device PIMO receives the first key vector K1(1) and the first query vector Q1(1) from the first memory bank BK0 and the global buffer GB of the first PIM device PIMO, respectively. The first processing unit PU0 of the first PIM device PIMO performs the first matrix-vector multiplication on the first key vector K1(1) and the first query vector Q1(1) to generate the first attention score vector A1(1) of the first sequence n_seq=1. The first attention score vector A1(1) of the first sequence n_seq=1 generated by the first processing unit PU0 of the first PIM device PIMO may be transmitted to the local memory (130 of FIG. 1) via control operations of the PIM controller (120 of FIG. 1).

Next, as shown in FIG. 18, the first matrix-vector multiplication on the second head HEAD_2 of the first sequence n_seq=1 is performed by the first processing unit PU0 of the first PIM device PIMO. Specifically, the first processing unit PU0 of the first PIM device PIMO receives the second key vector K2(1) and the second query vector Q2(1) from the first memory bank BK0 and the global buffer GB of the first PIM device PIMO, respectively. The first processing unit PU0 of the first PIM device PIMO performs the first matrix-vector multiplication on the second key vector K2(1) and the second query vector Q2(1) to generate the second attention score vector A2(1) of the first sequence n_seq=1. The second attention score vector A2(1) of the first sequence n_seq=1 generated by the first processing unit PU0 of the first PIM device PIMO may be transmitted to the local memory (130 of FIG. 1) via the control operations of the PIM controller (120 of FIG. 1).

Although not shown in the figures, in the same manner, the first matrix-vector multiplications on the third through seventh heads of the first sequence n_seq=1 are performed sequentially by the first processing unit PU0 of the first PIM device PIMO. That is, the first processing unit PU0 of the first PIM device PIMO performs the first matrix-vector multiplication on the third key vector K3(1) of the first sequence n_seq=1 and the third query vector Q3(1) of the first sequence n_seq=1 to generate the third attention score vector of the first sequence n_seq=1. The first processing unit PU0 of the first PIM device PIMO performs the first matrix-vector multiplication on the fourth key vector of the first sequence n_seq=1 and the fourth query vector of the first sequence n_seq=1 to generate the fourth attention score vector of the first sequence n_seq= 1. The first processing unit PU0 of the first PIM device PIMO performs the first matrix-vector multiplication on the fifth key vector of the first sequence n_seq=1 and the fifth query vector of the first sequence n_seq=1 to generate the fifth attention score vector of the first sequence n_seq=1. The first processing unit PU0 of the first PIM device PIMO performs the first matrix-vector multiplication on the sixth key vector of the first sequence n_seq= 1 and the sixth query vector of the first sequence n_seq= 1 to generate the sixth attention score vector of the first sequence n_seq= 1. Then, the first processing unit PU0 of the first PIM device PIMO performs the first matrix-vector multiplication on the seventh key vector of the first sequence n_seq= 1 and the seventh query vector of the first sequence n_seq=1 to generate the seventh attention score vector of the first sequence n_seq=1.

Next, as shown in FIG. 19, the first matrix-vector multiplication on the eighth head HEAD_8 of the first sequence n_seq= 1 is performed by the first processing unit PU0 of the first PIM device PIMO. Specifically, the first processing unit PU0 of the first PIM device PIMO receives the eighth key vector K8(1) of the first sequence n_seq=1 and the eighth query vector Q8(1) of the first sequence n_seq=1 from the first memory bank BK0 and the global buffer GB of the first PIM device PIMO, respectively. The first processing unit PU0 of the first PIM device PIMO performs the first matrix-vector multiplication on the eighth key vector K8(1) and the eighth query vector Q8(1) to generate the eighth attention score vector A8(1) of the first sequence n_seq=1. The eighth attention score vector A8(1) generated by the first processing unit PU0 of the first PIM device PIMO may be transmitted to the local memory (130 of FIG. 1) via the control operations of the PIM controller (120 of FIG. 1). As such, as described with reference to FIG. 17 through FIG. 19, the first through eighth attention score vectors A1(1) through A8(1) in the first sequence n_seq=1 are generated through the eight first matrix-vector multiplications in the first sequence n_seq=1 and transmitted to the local memory (130 of FIG. 1).

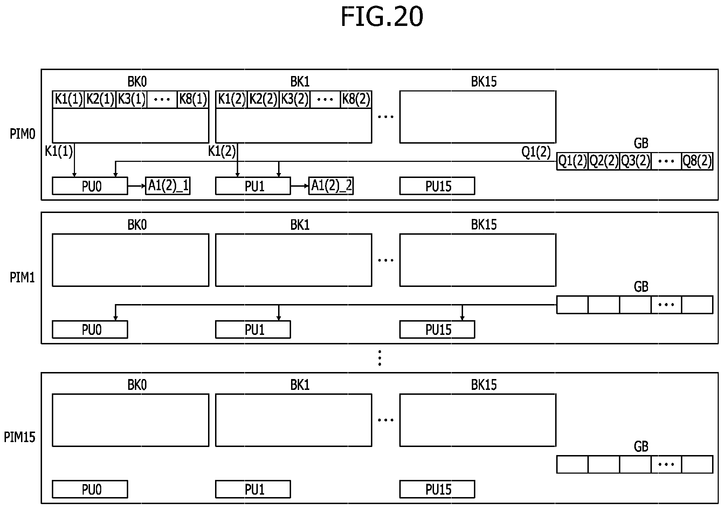

FIG. 20 is a diagram illustrating a method of writing first through eighth key vectors generated in a second sequence of a multi-head attention and a first matrix-vector multiplication process performed on a first head according to an embodiment of the present disclosure.

Referring to FIG. 20, first through eighth key vectors K1(2) through K8(2) generated in a second sequence n_seq=2 are written to a first row of the second memory bank BK1 of a first PIM device PIMO. In addition, first through eighth query vectors Q1(2) through Q8(2) generated in the second sequence n_seq=2 are stored in a global buffer GB of the first PIM device PIMO. The first processing unit PU0 of the first PIM device PIMO performs the first matrix-vector multiplications with the first through eighth key vectors K1(1) through K8(1) of the first sequence n_seq=1 and the first through eighth query vectors Q1(2) through Q8(2) of the second sequence n_seq=2 as operands. In addition, the second processing unit PU1 of the first PIM device PIMO performs the first matrix-vector multiplications using the first through eighth key vectors K1(2) through K8(2) of the second sequence n_seq=2 and the first through eighth query vectors Q1(2) through Q8(2) of the second sequence n_seq=2 as operands. The first matrix-vector multiplications in the first processing unit PU0 of the first PIM device PIMO and the first matrix-vector multiplications in the second processing unit PU1 of the first PIM device PIMO are performed in parallel.

First, the first processing unit PU0 and second processing unit PU1 of the first PIM device PIMO perform the first matrix-vector multiplications on the first head HEAD_1 of the second sequence n_seq=2 in parallel. Specifically, the first processing unit PU0 of the first PIM device PIMO receives the first key vector K1(1) of the first sequence n_seq=1 from the first memory bank BK0 of the first PIM device PIMO. The second processing unit PU1 of the first PIM device PIMO receives the first key vector K1(2) of the second sequence n_seq=2 from the second memory bank BK1 of the first PIM device PIMO. The first and second processing units PU0 and PU1 of the first PIM device PIMO receive the first query vector Q1(2) of the second sequence n_seq=2 in common from the global buffer GB of the first PIM device PIMO. The first processing unit PU0 of the first PIM device PIMO performs the first matrix-vector multiplication in the first head HEAD_1 on the first key vector K1(1) of the first sequence n_seq=1 and the first query vector Q1(2) of the second sequence n_seq=2 to generate the first part A1(2)_1 of the first attention score vector A1(2) of the second sequence n_seq=2. The second processing unit PU1 of the first PIM device PIMO performs the first matrix-vector multiplication in the first head HEAD_1 on the first key vector K1(2) of the second sequence n_seq=2 and the first query vector Q1(2) of the second sequence n_seq=2 to generate the second part A1(2)_2 of the first attention score vector A1(2) of the second sequence n_seq=2. The attention score vector A1(2) of the second sequence n_seq=2 is obtained by concatenating the first part A1(2)_1 and the second part A1(2)_2 in the row direction. The first part A1(2)_1 and the second part A1(2)_2 of the first attention score vector A1(2) in the first head HEAD_1 generated by the first and second processing units PU0 and PU1 of the first PIM device PIMO are transmitted to the local memory (130 of FIG. 1).

Although not shown in the figures, the first matrix-vector multiplications are performed on the second through eighth heads HEAD2 through HEAD8 in the same manner as the first matrix-vector multiplications on the first head HEAD_1. For example, the first processing unit PU0 of the first PIM device PIMO performs the first matrix-vector multiplication in the second head HEAD_2 on the second key vector K2(1) of the first sequence n_seq=1 and the second query vector Q2(2) of the second sequence n_seq=2 to generate the first part of the second attention score vector of the second sequence n_seq=2. The second processing unit PU1 of the first PIM device PIMO performs the first matrix-vector multiplication in the second head HEAD_2 on the second key vector K2(2) of the second sequence n_seq=2 and the second query vector Q2(2) of the second sequence n_seq=2 to generate the second part of the second attention score vector of the second sequence n_seq=2. In the same manner, the first processing unit PU0 of the first PIM device PIMO performs the first matrix-vector multiplication in the second head HEAD_2 on the eighth key vector K8(1) of the first sequence n_seq=1 and the eighth query vector Q8(2) of the second sequence n_seq=2 to generate the first part of the eighth attention score vector of the second sequence n_seq=2. The second processing unit PU1 of the first PIM device PIMO performs the first matrix-vector multiplication in the eighth head HEAD_8 on the eighth key vector K8(2) of the second sequence n_seq=2 and the eighth query vector Q8(2) of the second sequence n_seq=2 to generate the second part of the eighth attention score vector of the second sequence n_seq=2.

As described above with reference to FIG. 17 through FIG. 20, the first matrix-vector multiplications in the first sequence n_seq=1 and second sequence n_seq=2 are performed in the same manner for the third through fifteenth sequences n_seq=3 through n_seq=15. Accordingly, the first through eighth attention score vectors of the third sequence n_seq=3 are generated in the first through third processing units of the first PIM device PIMO. The first through eighth attention score vectors of the fourth sequence n_seq=4 are generated by the first through fourth processing units of the first PIM device PIMO. The first through eighth attention score vectors of the fifth sequence n_seq=5 are generated by the first through fifth processing units of the first PIM device PIMO. The first through eighth attention score vectors of the sixth sequence n_seq=6 are generated by the first through sixth processing units of the first PIM device PIMO. The first through eighth attention score vectors of the seventh sequence n_seq=7 are generated by the first through seventh processing units of the first PIM device PIMO. The first through eighth attention score vectors of the eighth sequence n_seq=8 are generated by the first through eighth processing units of the first PIM device PIMO. The first through eighth attention score vectors of the ninth sequence n_seq=9 are generated by the first through ninth processing units of the first PIM device PIMO. The first through eighth attention score vectors of the tenth sequence n_seq=10 are generated by the first through tenth processing units of the first PIM device PIMO. The first through eighth attention score vectors of the eleventh sequence n_seq=11 are generated by the first through eleventh processing units of the first PIM device PIMO. The first through eighth attention score vectors of the twelfth sequence n_seq=12 are generated by the first through twelfth processing units of the first PIM device PIMO. The first through eighth attention score vectors of the thirteenth sequence n_seq=13 are generated by the first through thirteenth processing units of the first PIM device PIMO. The first through eighth attention score vectors of the fourteenth sequence n_seq=14 are generated by the first through fourteenth processing units of the first PIM device PIMO. In addition, the first through eighth attention score vectors of the fifteenth sequence n_seq=15 are generated by the first through fifteenth processing units of the first PIM device PIMO.

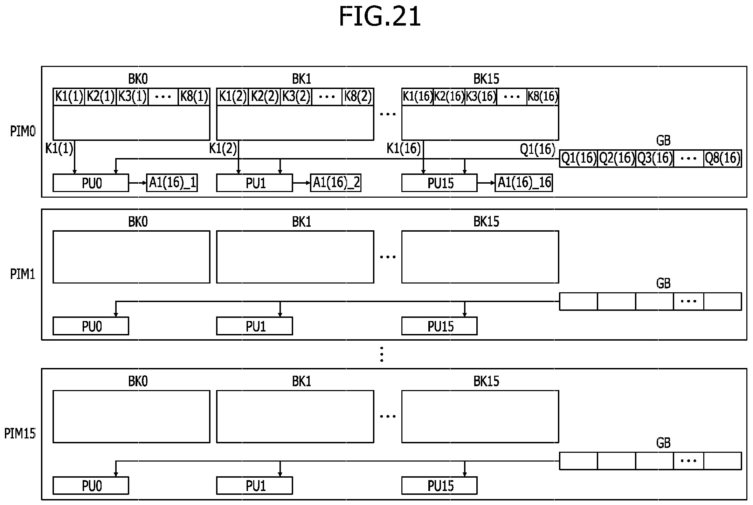

FIG. 21 is a diagram illustrating a method of writing first through eighth key vectors generated in the sixteenth sequence of a multi-head attention and a first matrix-vector multiplication process performed on a first head according to an embodiment of the present disclosure.

Referring to FIG. 21, first through eighth key vectors K1(16) through K8(16) generated in a sixteenth sequence n_seq=16 are stored in a first row of a sixteenth memory bank BK15 of a first PIM device PIMO. First through eighth query vectors Q1(16) through Q8(16) generated in the sixteenth sequence n_seq=16 are stored in a global buffer GB of the first PIM device PIMO. For each of the first through eighth heads, first through sixteenth processing units PU0 through PU15 of the first PIM device PIMO perform the first matrix-vector multiplications in parallel to generate first through sixteenth parts of each of the first through eighth attention score vectors of the sixteenth sequence n_seq=16.

First, the first through sixteenth processing units PU0 through PU15 of the first PIM device PIMO perform the first matrix-vector multiplications on a first head HEAD_1 of the sixteenth sequence n_seq= 16 in parallel. Specifically, the first processing unit PU0 of the first PIM device PIMO receives the first key vector K1(1) of the first sequence n_seq= 1 from the first memory bank BK0 of the first PIM device PIMO. The second processing unit PU1 of the first PIM device PIMO receives the first key vector K1(2) of the second sequence n_seq=2 from the second memory bank BK1 of the first PIM device PIMO. Although not shown, the third through fifteenth processing units of the first PIM device PIMO receive the first key vectors of the third through fifteenth sequences from the third through fifteenth memory banks of the first PIM device PIMO, respectively. The sixteenth processing unit PU15 of the first PIM device PIMO receives the first key vector K1(16) of the sixteenth sequence n_seq=16 from the sixteenth memory bank BK15 of the first PIM device PIMO. The first through sixteenth processing units PU0 through PU15 of the first PIM device PIMO receive the first query vector Q1(16) of the sixteenth sequence n_seq=16 in common from the global buffer GB of the first PIM device PIMO.

The first processing unit PU0 of the first PIM device PIMO performs the first matrix-vector multiplication on the first key vector K1(1) of the first sequence n_seq=1 and the first query vector Q1(16) of the sixteenth sequence n_seq=16 to generate the first part A1(16)_1 of the first attention score vector A1(16) of the sixteenth sequence n_seq=16. The second processing unit PU1 of the first PIM device PIMO performs the first matrix-vector multiplication on the first key vector K1(2) of the second sequence n_seq=2 and the first query vector Q1(16) of the sixteenth sequence n_seq=16 to generate the second part A1(16)_2 of the first attention score vector A1(16) of the sixteenth sequence n_seq=16. Although not shown, the third through fifteenth processing units of the first PIM device PIMO perform first matrix-vector multiplications on the first key vectors generated in the third to fifteenth sequences n_seq=3 through n_seq=15 and the first query vector Q1(16) of the sixteenth sequence n_seq=16 to generate the third through fifteenth parts A1(16)_3 through A1(16)_15 of the first attention score vector A1(16) of the sixteenth sequence n_seq=16. In addition, the sixteenth processing unit PU15 of the first PIM device PIMO performs the first matrix-vector multiplication on the first key vector K1(16) of the sixteenth sequence n_seq=16 and the first query vector Q1(16) of the sixteenth sequence n_seq=16 to generate the sixteenth part A1(16)_16 of the first attention score vector A1(16) of the sixteenth sequence n_seq=16. The attention score vector A1(16) of the sixteenth sequence n_seq=16 may be obtained by concatenating the first through sixteenth parts A1(16)_1 through A1(16)_16 in the row direction. The first through sixteenth parts A1(16)_1 through A1(16)_16 of the first attention score vector A1(16) in the first head HEAD_1 of the sixteenth sequence n_seq=16 generated by the first through sixteenth processing units PU0 through PU15 of the first PIM device PIMO are transmitted to the local memory (130 of FIG. 1). Although not shown, the first matrix-vector multiplications are performed for the second through eighth heads HEAD2 through HEAD8 in the same manner as the first matrix-vector multiplications performed for the first head HEAD_1. Accordingly, for each of the second through eighth heads, the first through sixteenth processing units PU0 through PU15 of the first PIM device PIMO perform first matrix-vector multiplications in parallel to generate the first through sixteenth parts of each of the second through eighth attention score vectors of the sixteenth sequence n_seq=16.

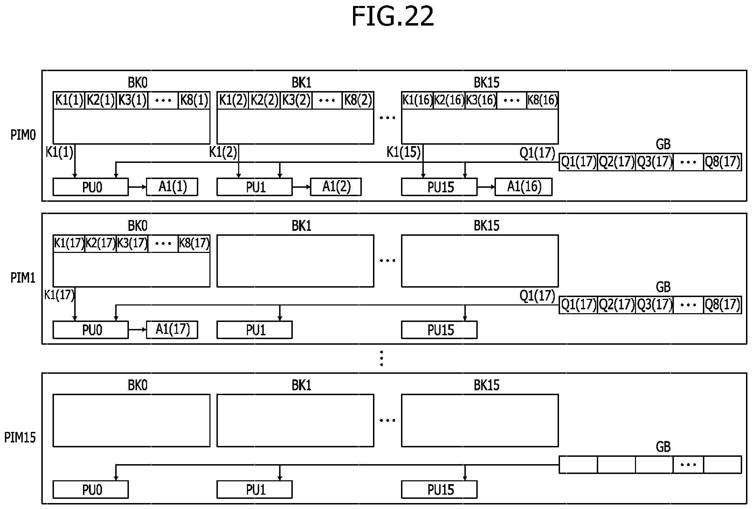

FIG. 22 is a diagram illustrating a method of writing first through eighth key vectors generated in a seventeenth sequence of a multi-head attention and a first matrix-vector multiplication process performed on a first head according to an embodiment of the present disclosure.

Referring to FIG. 22, in a process in which first through sixteenth sequences n_seq=1 through n_seq=16 are performed, key vectors are stored in all first rows of first through sixteenth memory banks BK0 through BK15 of a first PIM device PIMO. First through eighth key vectors K1(17) through K8(17) generated in a seventeenth sequence n_seq=17 are stored in the first row of a first memory bank BK0 of a second PIM device PIM1. The first through eighth query vectors Q1(17) through Q8(17) generated in the first through eighth heads of the seventeenth sequence n_seq=17 are stored in global buffers GBs of the first PIM device PIMO and second PIM device PIM1. For each of the first through eighth heads, the first through sixteenth processing units PU0 through PU15 of the first PIM device PIMO and the first processing unit PU0 of the second PIM device PIM1 perform first matrix-vector multiplications in parallel to generate the first through seventeenth parts of each of the first through eighth attention score vectors of the seventeenth sequence n_seq=17.

First, for the first matrix-vector multiplication in a first head HEAD_1 of the seventeenth sequence n_seq=17, the first processing unit PU0 of the first PIM device PIMO receives the first key vector K1(1) generated in the first sequence n_seq=1 from the first memory bank BK0 of the first PIM device PIMO. The second processing unit PU1 of the first PIM device PIMO receives the first key vector K1(2) generated in the second sequence n_seq=2 from the second memory bank BK1 of the first PIM device PIMO. Although not shown, the third through fifteenth processing units of the first PIM device PIMO receive the first key vectors generated in the third through fifteenth sequences from the third through fifteenth memory banks of the first PIM device PIMO, respectively. The sixteenth processing unit PU15 of the first PIM device PIMO receives the first key vector K1(16) generated in the sixteenth sequence n_seq=16 from the sixteenth memory bank BK15 of the first PIM device PIMO. The first processing unit PU0 of the second PIM device PIM1 receives the first key vector K1(17) generated in the seventeenth sequence n_seq=17 from the first memory bank BK0 of the second PIM device PIM1. The first through sixteenth processing units PU0 through PU15 of each of the first PIM device PIMO and second PIM device PIM1 receive the first query vector Q1(17) generated in the seventeenth sequence n_seq=17 in common from the global buffers GBs.

The first through sixteenth processing units PU0 through PU15 of the first PIM device PIMO and the first processing unit PU0 of the second PIM device PIM1 perform first matrix-vector multiplications in the first head HEAD_1 in parallel using the received first key vectors and the first query vectors as the operands. Specifically, the first processing unit PU0 of the first PIM device PIMO performs the first matrix-vector multiplication in the first HEAD_1 on the first key vector K1(1) of the first sequence n_seq=1 and the first query vector Q1(17) of the seventeenth sequence n_seq=17 to generate a first part A1(17)_1 of first attention score vector A1(17) of the first seventeenth sequence n_seq=17. The second processing unit PU1 of the first PIM device PIMO performs a first matrix-vector multiplication in the first head HEAD_1 on the first key vector K1(2) of the second sequence n_seq=2 and the first query vector Q1(17) of the seventeenth sequence n_seq=17 to generate a second part A1(17)_2 of the first attention score vector A1(17) of the seventeenth sequence n_seq=17. Although not shown, the third through fifteenth processing units of the first PIM device PIMO perform the first matrix-vector multiplications on the first key vectors generated in the third through fifteenth sequences and the first query vector Q1(17) generated in the seventeenth sequence n_seq=17 to generate third through fifteenth parts of the first attention score vector A1(17) of the seventeenth sequence n_seq=17. The sixteenth processing unit PU15 of the first PIM device PIMO performs the first matrix-vector multiplication in the first head HEAD_1 on the first key vector K1(16) of the sixteenth sequence n_seq=16 and the first query vector Q1(17) of the 17^{th} sequence n_seq=17 to generate a sixteenth part A1(17)_16 of the first attention score vector A1(17) of the seventeenth sequence n_seq=17. In addition, the first processing unit PU0 of the second PIM device PIM1 performs the first matrix-vector multiplication in the first head HEAD_1 on the first key vector K1(17) of the seventeenth sequence n_seq=17 and the first query vector Q1(17) of the seventeenth sequence n_seq=17 to generate a seventeenth part A1(17)_17 of the first attention score vector A1(17) of the seventeenth sequence n_seq=17. The attention score vector A1(17) of the 17^{th} sequence n_seq=17 may be obtained by concatenating the first through seventeenth parts A1(17)_1 through A1(17)_17 in the row direction. The first through seventeenth parts A1(17)_1 through A1(17)_17 of the first attention score vector A1(17) in the seventeenth sequence n_seq=17, which are generated in the first through sixteenth processing units PUO through PU15 of the first PIM device PIM0 and the first processing unit PUO of the second PIM device PIM1, are transmitted to the local memory (130 in FIG. 1). Although not shown, the first matrix-vector multiplications are performed on the second through eighth heads HEAD2 through HEAD8 in the same manner as the first matrix-vector multiplications performed on the first head HEAD_1. Accordingly, for each of the second through eighth heads, the first through sixteenth processing units PUO through PU15 of the first PIM device PIM0 and the first processing unit PUO of the second PIM device PIM1 perform the first matrix-vector multiplications in parallel to generate the first through seventeenth parts of each of the second through eighth attention score vectors of the seventeenth sequence n_seq=17.

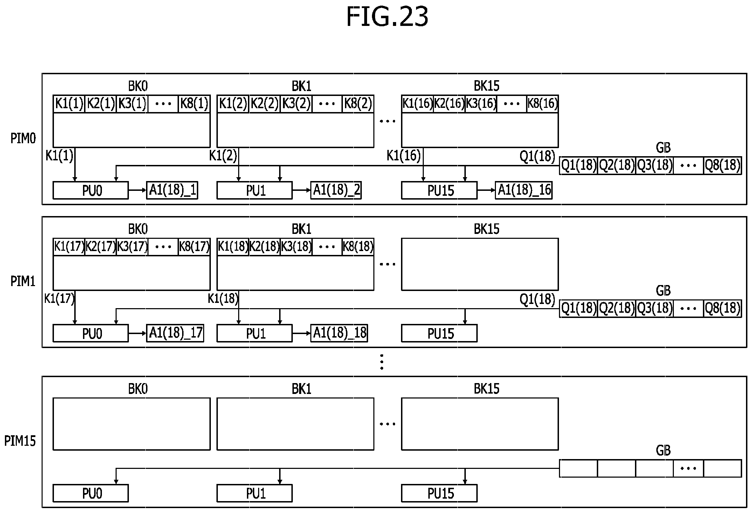

FIG. 23 is a diagram illustrating a method of writing first through eighth key vectors generated in the eighteenth sequence of a multi-head attention and a first matrix-vector multiplication process performed on a first head according to an embodiment of the present disclosure.

Referring to FIG. 23, first through eighth key vectors K1(18) through K8(18) generated in an eighteenth sequence n_seq=18 are stored in a first row of a second memory bank BK1 of a second PIM device PIM1. The first through eighth query vectors Q1(18) through Q8(18) generated in the eighteenth sequence n_seq=18 are stored in global buffers GBs of the first PIM device PIM0 and second PIM device PIM1. For each of the first through eighth heads, first through sixteenth processing units PUO through PU15 of the first PIM device PIM0 and first and second processing units PUO and PU1 of the second PIM device PIM1 perform the first matrix-vector multiplications in parallel to generate the first through eighteenth parts of each of the first through eighth attention score vectors of the eighteenth sequence n_seq=18.

First, the first through sixteenth processing units PUO through PU15 of the first PIM device PIM0 and the first and second processing units PUO and PU1 of the second PIM device PIM1 perform the first matrix-vector multiplications on a first head HEAD_1 of the eighteenth sequence n_seq= 18 in parallel. Specifically, for the first matrix-vector multiplications in the first head HEAD_1 of the eighteenth sequence n_seq=18, the first through sixteenth processing units PUO through PU15 of the first PIM device PIM0 receive the first key vectors K1(1) through K1(16) generated in the first through sixteenth sequences n_seq=1 through n_seq=16 from the first through sixteenth memory banks BK0 through BK15 of the first PIM device PIM0, respectively. The first processing unit PUO of the second PIM device PM1 receives the first key vector K1(17) generated in the seventeenth sequence n_seq=17 from the first memory bank BK0 of the second PIM device PIM1. In addition, the second processing unit PU1 of the second PIM device PIM1 receives the first key vector K1(18) generated in the eighteenth sequence n seq=18 from the second memory bank BK1 of the second PIM device PIM1. The first through sixteenth processing units PUO through PU15 of each of the first and second PIM devices PIM0 and PIM1 receive the first query vector Q1(18) generated in the eighteenth sequence n_seq=18 in common from the global buffers GBs.

The first processing unit PUO of the first PIM device PIM0 performs the first matrix-vector multiplication in the first head HEAD_1 on the first key vector K1(1) generated in the first sequence n_seq=1 and the first query vector Q1(18) generated in the eighteenth sequence n seq=18 to generate a first part A1(18)_1 of the first attention score vector A1(18) of the eighteenth sequence n_seq=18. The second processing unit PU1 of the first PIM device PIM0 performs the first matrix-vector multiplication in the first head HEAD_1 on the first key vector K1(2) generated in the second sequence n_seq=2 and the first query vector Q1(18) generated in the eighteenth sequence n seq=18 to generate a second part A1(18)_2 of the first attention score vector A1(18) of the eighteenth sequence n_seq=18. Although not shown, the third through fifteenth processing units of the first PIM device PIM0 perform the first matrix-vector multiplications on the first key vectors generated in the third through fifteenth sequences and the first query vector Q1(18) generated in the eighteenth sequence n_seq=18 to generate third through fifteenth parts of the first attention score vector A1(18) of the 18^{th} sequence n_seq=18. The sixteenth processing unit PU15 of the first PIM device PIM0 performs the first matrix-vector multiplication in the first head HEAD_1 on the first key vector K1(16) generated in the sixteenth sequence n_seq=16 and the first query vector Q1(18) generated in the sixteenth sequence n seq=16 to generate a sixteenth part A1(18)_16 of the first attention score vector A1(18) of the eighteenth sequence n_seq=18. The first processing unit PUO of the second PIM device PIM1 performs the first matrix-vector multiplication in the first head HEAD_1 on the first key vector K1(17) generated in the seventeenth sequence n_seq=17 and the first query vector Q1(18) generated in the eighteenth sequence n seq=18 to generate a seventeenth part A1(18)_17 of the first attention score vector A1(18) of the eighteenth sequence n_seq=18. In addition, the second processing unit PU1 of the second PIM device PIM1 performs the first matrix-vector multiplication in the first head HEAD_1 on the first key vector K1(18) generated in the eighteenth sequence n_seq=18 and the first query vector Q1(18) generated in the eighteenth sequence n_seq=18 to generate an eighteenth part A1(18)_18 of the first attention score vector A1(18) of the eighteenth sequence n_seq=18. The first attention score vector A1(18) of the eighteenth sequence n_seq=18 may be obtained by concatenating the first through eighteenth parts A1(18)_1 through A1(18)_18 in the row direction. The first through eighteenth parts A1(18)_1 through A1(18)_18 of the first attention score vector A1(18) in the first head HEAD_1 of the eighteenth sequence n_seq=18 generated in the first through sixteenth processing units PUO through PU15 of the first PIM device PIM0 and the first and second processing units PUO and PU1 of the second PIM device PIM1 are transmitted to the local memory (130 of FIG. 1). Although not shown, the first matrix-vector multiplications are performed for the second through eighth heads HEAD2 through HEAD8 in the same manner as the first matrix-vector multiplications performed for the first head HEAD_1. Accordingly, for each of the second through eighth heads, the first through sixteenth processing units PUO through PU15 of the first PIM device PIM0 and the first and second processing units PUO and PU1 of the second PIM device PIM1 perform the first matrix-vector multiplications in parallel to generate the first through eighteenth parts of each of the second through eighth attention score vectors of the eighteenth sequence n_seq=18.

The processes described with reference to FIG. 21 through FIG. 23 are performed identically in the nineteenth through 31^{st} sequences. Accordingly, in the nineteenth sequence, first through nineteenth parts of the first through eighth attention score vectors of the nineteenth sequence are generated in the first through sixteenth processing units of the first PIM device PIM0 and the first through third processing units of the second PIM device PIM1. In the 20^{th} sequence, first through 20^{th} parts of the first through eighth attention score vectors of the 20^{th} sequence are generated in the first through sixteenth processing units of the first PIM device PIM0 and the first through fourth processing units of the second PIM device PIM1. In a 21^{st} sequence, first through 21^{st} parts of the first to eighth attention score vectors of the 21^{st} sequence are generated in the first through sixteenth processing units of the first PIM device PIM0 and the first through fifth processing units of the second PIM device PIM1. In a 22^{nd} sequence, first through 22^{nd} parts of the first through eighth attention score vectors of the 22^{nd} sequence are generated in the first through sixteenth processing units of the first PIM device PIM0 and the first to sixth processing units of the second PIM device PIM1. In a 23^{rd} sequence, first through 23^{rd} parts of the first through eighth attention score vectors of the 23^{rd} sequence are generated in the first through sixteenth processing units of the first PIM device PIM0 and the first through seventh processing units of the second PIM device PIM1. In a 24^{th} sequence, first through 24^{th} parts of the first through eighth attention score vectors of the 24^{th} sequence are generated in the first through sixteenth processing units of the first PIM device PIM0 and the first through eighth processing units of the second PIM device PIM1. In a 25^{th} sequence, first to 25^{th} parts of the first through eighth attention score vectors of the 25^{th} sequence are generated in the first through sixteenth processing units of the first PIM device PIM0 and the first to ninth processing units of the second PIM device PIM1. In a 26^{th} sequence, first to 26^{th} parts of the first through eighth attention score vectors of the 26^{th} sequence are generated in the first through sixteenth processing units of the first PIM device PIM0 and the first through tenth processing units of the second PIM device PIM1. In a 27^{th} sequence, first through 27^{th} parts of the first through eighth attention score vectors of the 27^{th} sequence are generated in the first through sixteenth processing units of the first PIM device PIM0 and the first through eleventh processing units of the second PIM device PIM1. In a 28^{th} sequence, first through 28^{th} parts of the first through eighth attention score vectors of the 28^{th} sequence are generated in the first through sixteenth processing units of the first PIM device PIM0 and the first through twelfth processing units of the second PIM device PIM1. In a 29^{th} sequence, first through 29^{th} parts of the first through eighth attention score vectors of the 29^{th} sequence are generated in the first through sixteenth processing units of the first PIM device PIM0 and the first through thirteenth processing units of the second PIM device PIM1. In a 30^{th} sequence, first through 30^{th} parts of the first through eighth attention score vectors of the 30^{th} sequence are generated in the first through sixteenth processing units of the first PIM device PIM0 and the first through fourteenth processing units of the second PIM device PIM1. Further, in a 31^{st} sequence, first through 31^{st} parts of the first through eighth attention score vectors of the 31^{st} sequence are generated in the first through sixteenth processing units of the first PIM device PIM0 and the first through fifteenth processing units of the second PIM device PIM1.

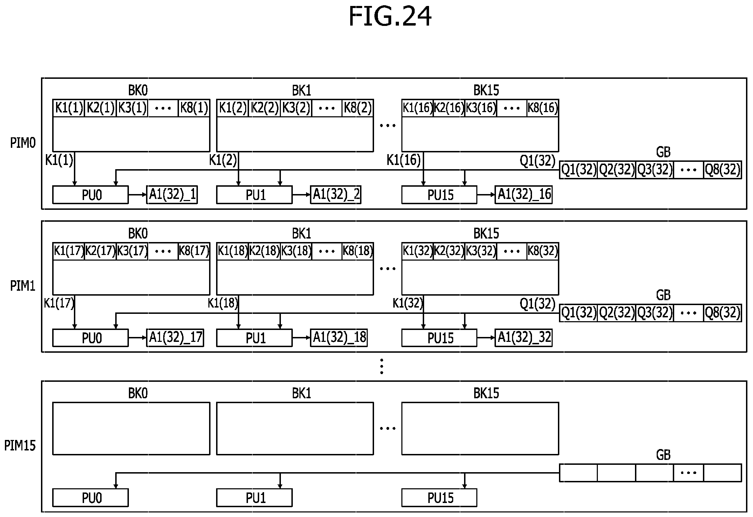

FIG. 24 is a diagram illustrating a method of writing first through eighth key vectors generated in a 32^{nd} sequence of a multi-head attention and a first matrix-vector multiplication process performed on the first head according to an embodiment of the present disclosure.

Referring to FIG. 24, first through eighth key vectors K1(32) through K8(32) generated in a 32^{nd} sequence n_seq=32 are stored in a first row of a sixteenth memory bank BK15 of a second PIM device PIM1. First through eighth query vectors Q1(32) through Q8(32) generated in the 32^{nd} sequence n_seq=32 are stored in global buffers GBs of first and second PIM devices PIM0 and PIM1. For each of the first through eighth heads, first through sixteenth processing units PUO through PU15 of the first PIM device PIM0 and first through sixteenth processing units PUO through PU15 of the second PIM device PIM1 perform first matrix-vector multiplications in parallel to generate the first through eighth parts of each of the first through eighth attention score vectors of the 32^{nd} sequence n_seq=32.

First, the first through sixteenth processing units PUO through PU15 of the first PIM device PIM0 and the first through sixteenth processing units PUO through PU15 of the second PIM device PIM1 perform the first matrix-vector multiplications on a first head HEAD_1 of the 32^{nd} sequence n_seq=32 in parallel. Specifically, for the first matrix-vector multiplications on the first head HEAD_1 of the 32^{nd} sequence n_seq=32, the first through sixteenth processing units PUO through PU15 of the first PIM device PIM0 receive first key vectors K1(1) through K1(16) of the first through sixteenth sequences n seq=1 through n_seq=16 from the memory banks BK0 through BK15 of the first PIM device PIM0, respectively. The first through sixteenth processing units PUO through PU15 of the second PIM device PIM1 receive first key vectors K1(17) through K1(32) of the seventeenth through 32^{nd} sequences n_seq=17 through n_seq=32 from the first through sixteenth memory banks BK0 through BK15 of the second PIM device PIM1, respectively. The first through sixteenth processing units PUO through PU15 of the first and second PIM devices PIM0 and PIM1 receive a first query vector Q1(32) of the 32^{nd} sequence n_seq=32 from the global buffers GBs in common.

The first through sixteenth processing units PUO through PU15 of the first PIM device PIM0 perform first matrix-vector multiplications on the first head HEAD_1 for the first key vectors K1(1) through K1(16) of the first through sixteenth sequences n_seq=1 through n seq=16 and the first query vector Q1(32) of the 32^{nd} sequence n_seq=32 to generate first through sixteenth parts A1(32)_1 through A1(32)_16 of the first attention score vector A1(32) of the 32^{nd} sequence n_seq=32. The first through sixteenth processing units PUO through PU15 of the second PIM device PIM1 perform the first matrix-vector multiplications on the first head HEAD_1 for the first key vectors K1(17) through K1(32) of the seventeenth through 32^{nd} sequences n_seq=17 through n_seq=32 and the first query vector Q1(32) of the 32^{nd} sequence n_seq=32 to generate the seventeenth through 32^{nd} parts A1(32)_17 through A1(32)_32 of the first attention score vector A1(32) of the 32^{nd} sequence n_seq=32. The first attention score vector A1(32) of the 32^{nd} sequence n_seq=32 may be obtained by concatenating the first through 32^{nd} parts A1(32)_1 through A1(32)_32 in the row direction. The first through 32^{nd} parts A1(32)_1 through A1(32)_32 of the first attention score vector A1(32) in the first head HEAD_1 of the 32^{nd} sequence n_seq=32, generated in the first through sixteenth processing units PUO through PU15 of the first PIM device PIM0 and the first through sixteenth processing units PUO through PU15 of the second PIM device PIM1 are transmitted to the local memory (130 of FIG. 1). Although not shown in the figures, the first matrix-vector multiplication process is performed for the second through eighth heads HEAD2 through HEAD8 in the same manner as the first matrix-vector multiplication for the first head HEAD_1. Accordingly, for each of the second to eighth heads, the first through sixteenth processing units PUO through PU15 of the first PIM device PIM0 and the first through sixteenth processing units PUO through PU15 of the second PIM device PIM1 perform the first matrix-vector multiplications in parallel to generate the first through sixteenth parts of each of the second through eighth attention score vectors of the 32^{nd} sequence n_seq=32.

In the same manner as the processes described above with reference to FIG. 17 through FIG. 24, first through eighth key vectors generated in 33^{rd} through 240^{th} sequences n_seq=33 through n_seq=240 are stored in first rows of the memory banks of the third through fifteenth PIM devices, respectively. The first through eighth query vectors generated in the 33^{rd} through 48^{th} sequences n_seq=33 through n_seq=48 are stored in the global buffers of the first through third PIM devices. The first through eighth query vectors generated in the 49^{th} through 64^{th} sequences n_seq=49 through n_seq=64 are stored in the global buffers of the first through fourth PIM devices. In a similar manner, the first through eighth query vectors generated in the 225^{th} through 240^{th} sequences n_seq=225 through n_seq=240 are stored in the global buffers of the first through fifteenth PIM devices. For each of the 33^{rd} through 240^{th} sequences n_seq=33 through n_seq = 240, the first matrix-vector multiplications using the first through eighth key vectors and the first through eighth query vectors as the operands are performed, and accordingly, the parts of the first through eighth attention score vectors for each of the 33^{rd} through 240^{th} sequences n_seq =33 through n_seq=240 are generated.

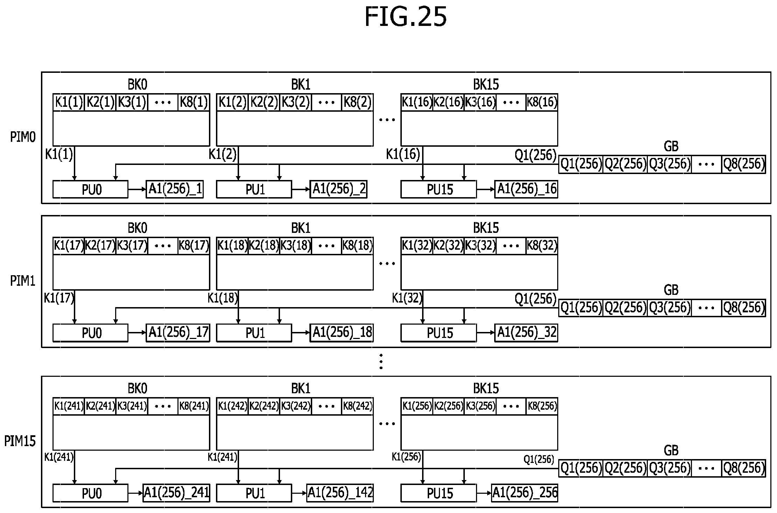

FIG. 25 is a diagram illustrating a method of writing first through eighth key vectors generated in a 241^{st} through 256^{th} sequences of a multi-head attention and a first matrix-vector multiplication process performed on a first head of the 256^{th} sequence according to an embodiment of the present disclosure.

Referring to FIG. 25, first, first through eighth key vectors K1(241) through K8(241) generated in a 241^{st} sequence n_seq=241 are stored in a first row of a first memory bank BK0 of a sixteenth PIM device PIM15. Although not shown in the drawings, the first through eighth query vectors generated in the 241^{st} sequence n_seq=241 are stored in global buffers GBs of first through sixteenth PIM devices PIM0 through PIM15. First to sixteenth processing units PUO through PU15 of each of the first through fifteenth PIM devices PIM0 through PIM14 and the first processing unit PUO of the sixteenth PIM device PIM15 perform the first matrix-vector multiplications in the 241^{st} sequence n_seq=241 to generate first through 241^{st} parts of each of the first through eighth attention score vectors of the 241^{st} sequence n_seq=241.

Next, first through eighth key vectors K1(242) through K8(242) generated in the 242^{nd} sequence n_seq=242 are stored in the first row of the second memory bank BK1 of the sixteenth PIM device PIM15. Although not shown in the drawings, the first through eighth query vectors generated in the 242^{nd} sequence n_seq=242 are stored in the global buffers GBs of the first through sixteenth PIM devices PIM0 through PIM15. The first through sixteenth processing units PUO through PU15 of each of the first through fifteenth PIM devices and the first and second processing units PUO and PU1 of the sixteenth PIM device PIM15 perform the first matrix-vector multiplications in the 242^{nd} sequence n_seq=242 to generate the first through 242^{nd} parts of each of the first through eighth attention score vectors of the 242^{nd} sequence n_seq=242.

Although not shown in the drawings, the first through eighth key vectors generated in the 243^{rd} through 255^{th} sequences n_seq=243 through n_seq=255 are stored in the first rows of the third through fifteenth memory banks of the sixteenth PIM device PIM15, respectively. In addition, the first through eighth query vectors generated in the 243^{rd} through 255^{th} sequences n_seq=243 through n_seq=255 are stored in the global buffers GBs of the first through sixteenth PIM devices PIM0 through PIM15. For the 243^{rd} through 255^{th} sequences n_seq=243 through n_seq=255, the first matrix-vector multiplications on the key vectors and the query vectors are also performed, resulting in parts of each of the first through eighth attention score vectors of the 243^{rd} through 255^{th} sequences n_seq=243 through n_seq=255.

Next, first through eighth key vectors K1(256) through K8(256) generated in the 256^{th} sequence n_seq=256 are stored in the first row of the sixteenth memory bank BK15 of the sixteenth PIM device PIM15. First through eighth query vectors Q1(256) through Q8(256) generated in the 256^{th} sequence n_seq=256 are stored in the global buffers GBs of the first through sixteenth PIM devices PIM0 through PIM15. The first through sixteenth processing units PUO through PU15 of each of the first through fifteenth PIM devices and the first through sixteenth processing units PUO through PU15 of the sixteenth PIM device PIM15 perform the first matrix-vector multiplications in the 256^{th} sequence n_seq=256 to generate the first through 256^{th} parts of each of the first through eighth attention score vectors of the 256^{th} sequence n_seq=256.

Specifically, the first matrix-vector multiplications on a first head HEAD_1 of the 256^{th} sequence n_seq=256 are performed in parallel in the first through sixteenth processing units PUO through PU15 of each of the first through sixteenth PIM devices PIM0 through PIM15. The first through sixteenth processing units PUO through PU15 of the first PIM device PIM0 perform the first matrix-vector multiplications on the first key vectors K1(1) through K1(16) generated in the first through sixteenth sequences n_seq=1 through n_seq=16 and the first query vector Q1(256) generated in the 256^{th} sequence n_seq=256 to generate first through sixteenth parts A1(256)_1 through A1(256)_16 of the first attention score vector A1(256) for the first head HEAD_1 of the 256^{th} sequence n_seq=256. The first through sixteenth processing units PUO through PU15 of the second PIM device PIM1 perform the first matrix-vector multiplications on the first key vectors K1(17) through K1(32) generated in the 17^{th} through 32^{nd} sequences n_seq=17 through n_seq=32 and the first query vector Q1(256) generated in the 256^{th} sequence n_seq=256 to generate 17^{th} through 32^{nd} parts A1(256)_17 through A1(256)_32 of the first attention score vector A1(256) for the first head HEAD_1 of the 256^{th} sequence n_seq=256. Although not shown in the drawings, the first through sixteenth processing units of each of the third through fifteenth PIM devices perform the first matrix-vector multiplications on the first key vectors generated in the 33^{rd} through 240^{th} sequences n_seq=33 through n_seq = 240 and the first query vector Q1(256) generated in the 256^{th} sequence n_seq=256 to generate 33^{rd} through 240^{th} parts of the first attention score vector A1(256) for the first head HEAD_1 of the 256^{th} sequence n_seq=256. The first through sixteenth processing units PUO through PU15 of the sixteenth PIM device PIM15 perform the first matrix-vector multiplications on the first key vectors K1(241) through K1(256) generated in the 241^{st} through 256^{th} sequences n_seq=241 through n_seq=256 and the first query vector Q1(256) generated in the 256^{th} sequence n_seq=256 to generate 241^{st} through 256^{th} parts of the first attention score vector A1(256) for the first head HEAD_1 of the 256^{th} sequence n_seq=256. The first attention score vector A1(256) of the 256^{th} sequence n_seq=256 may be obtained by concatenating the first through 256^{th} parts A1(256)_1 through A1(256)_256 in the row direction.

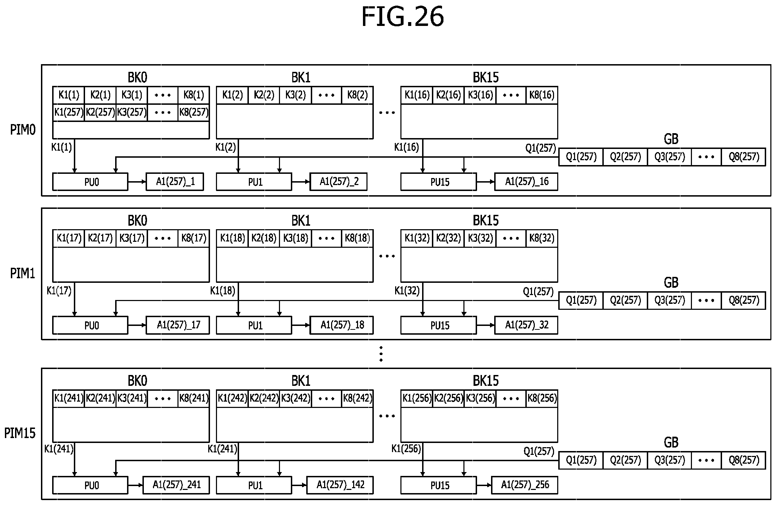

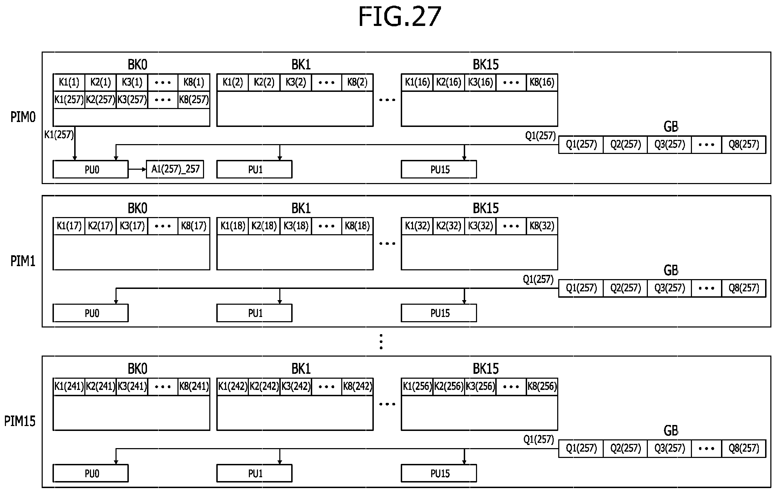

FIG. 26 is a diagram illustrating a method of writing first through eighth key vectors generated in the 257^{th} sequence of a multi-head attention and a first process of a first matrix-vector multiplication performed on a first head according to an embodiment of the present disclosure. FIG. 27 is a diagram illustrating a second process of a first matrix-vector multiplication performed for a first head while first through eighth key vectors generated in a 257^{th} sequence of a multi-head attention are written according to an embodiment of the present disclosure.

Referring to FIG. 26 and FIG. 27, when multi-head attention is performed for first through 256^{th} sequences n_seq=1 through n_seq=256, first through eighth key vectors generated in the first through 256^{th} sequences n_seq=1 through n_seq=256 are written to all the first rows of the first through sixteenth memory banks BK0 through BK15 of each of the first through sixteenth PIM devices PIM0 through PIM15. In this state, the first through eighth key vectors K1(257) through K8(257) generated in the 257^{th} sequence n_seq=257 are written to the first memory bank BK0 of the first PIM device PIM0. First through eighth key vectors K1(257) through K8(257) of the 257^{th} sequence n_seq=257 are written to a second row that is different from the first row in which the first through eighth key vectors of the first sequence are written among the rows of the first memory bank BK0 of the first PIM device PIM0. In an example, the second row may be a row following the first row. The first through eighth query vectors Q1(257) through Q(257) generated in the 257^{th} sequence n_seq=257 are stored in the global buffers GBs of the first through sixteenth PIM devices PIM0 through PIM15.

In the 257^{th} sequence n_seq=257, as the key vectors K1(1) through K8(1) generated in the first sequence n_seq=1 and the key vectors K1(257) through K8(257) generated in the 257^{th} sequence n_seq=257 are stored in the first row and the second row of the first memory bank BK0 of the first PIM device PIM0, respectively, the first matrix-vector multiplications in the first through eighth heads HEAD1 through HEAD8 of the 257^{th} sequence n_seq=257 are each divided and performed in two operations. The first operation of the first matrix-vector multiplication in the first head HEAD_1 of the 257^{th} sequence n_seq=257 is performed using as operands the first key vectors K1(1) through K1(256) generated in the first through 256^{th} sequences n_seq=1 through n_seq=256 and stored in the first rows of the first through sixteenth memory banks BK0 through BK15 of each of the first through sixteenth PIM devices PM0 through PM15. In addition, the second operation of the first matrix-vector multiplication in the first head HEAD_1 of the 257^{th} sequence n_seq=257 is performed using the first key vector K1 257 generated in the 257 sequence and stored in the second row of the first memory bank BK0 of the first PIM device PIM0 as an operand.

First, as shown in FIG. 26, to perform the first operation of the first matrix-vector multiplication in the first head HEAD_1 of the 257^{th} sequence n_seq=257, the first through sixteenth processing units PUO through PU15 of the first PIM device PIM0 receive the first key vectors K1(1) through K1(16) generated in the first through sixteenth sequences n_seq=1 through n_seq=16 from the first through sixteenth memory banks BK0 through BK15 of the first PIM device PIM0, respectively. The first through sixteenth processing units PUO through PU15 of the second PIM device PIM1 receive the first key vectors K1(17) through K1(32) generated in the 17^{th} through 32^{nd} sequences n_seq=17 through n_seq=32 from the first through sixteenth memory banks BK0 through BK15 of the second PIM device PIM1, respectively. In the same manner, the first through sixteenth processing units PUO through PU15 of the sixteenth PIM device PIM15 receive the first key vectors K1(241) through K1(256) generated in the 241^{st} through 256^{th} sequences n_seq=241 through n_seq=256 from the first through sixteenth memory banks BK0 through BK15 of the sixteenth PIM device PIM15, respectively. Although not shown, the first through sixteenth processing units of the third through fifteenth PIM devices receive the first key vectors of the 33^{rd} to 240^{th} sequences in the same manner. The first through sixteenth processing units PUO through PU15 of each of the first through sixteenth PIM devices PIM0 through PIM15 receive the first query vector Q1(257) generated in the 257^{th} sequence n_seq=257 in common from the global buffer GBs. The first through sixteenth processing units PUO through PU15 of the first through sixteenth PIM devices PIM0 through PIM15 perform the first matrix-vector multiplications in the first head HEAD_1 on the first key vectors K1(1) through K1(256) of the first through 256^{th} sequences n_seq=1 through n_seq=256 and the first query vector Q1(257) of the 257^{th} sequence n_seq=257 to generate first through 256^{th} parts A1(257)_1 through A1(257)_256 of the first attention score vector A1(257) of the 257^{th} sequence n_seq=257.

Next, as shown in FIG. 27, to perform the second operation of the first matrix-vector multiplication in the first head HEAD_1 of the 257^{th} sequence n_seq=257, the first processing unit PUO of the first PIM device PIM0 receives the first key vector K1(257) generated in the 257^{th} sequence n_seq=257 from the first memory bank BK0 of the first PIM device PIM0 and receives the first query vector Q1(257) generated in the 257^{th} sequence n_seq=257 from the global buffer GB of the first PIM device PIM0. The first processing unit PUO of the first PIM device PIM0 performs the first matrix-vector multiplications in the first head HEAD_1 on the first key vector K1(257) of the 257^{th} sequence n_seq=257 and the first query vector Q1(257) of the 257^{th} sequence n_seq=257 to generate the 257^{th} part A1(257)_257 of the first attention score vector A1(257) of the 257^{th} sequence n_seq=257. The attention score vector A1(257) of the 257^{th} sequence n_seq=257 may be obtained by concatenating the first through 256^{th} parts A1(257)_1 through A1(257)_256 generated through the first operation of the first matrix-vector multiplication and the 257^{th} part A1(257_257) generated through the second operation of the first matrix-vector multiplication in the row direction. The first and second operations of the first matrix-vector multiplication for the first head of the 257^{th} sequence n_seq=257 are equally applied to the second through eighth heads of the 257^{th} sequence n_seq=257. Accordingly, for each of the second through eighth heads, the first through 257^{th} parts of each of the second through eighth attention score vectors of the 257^{th} sequence n_seq=257 are generated.

As described with reference to FIG. 26 and FIG. 27, when the key vectors are stored in two different rows of the memory bank of at least one of the first through sixteenth PIM devices PIM0 through PIM15, the first matrix-vector multiplication is performed in two operations. In this case, the two operations of the first matrix-vector multiplication may be performed for each of the first through eighth heads HEAD1 through HEAD8. However, in another example, the first operations of the first matrix-vector multiplication may be performed successively for the first through eighth heads HEAD1 through HEAD8, and the second operations of the first matrix-vector multiplication may be performed successively for the first to eighth heads HEAD1-HEAD8. In this case, the first through 256^{th} parts of each of the first through eighth attention score vectors of the 257^{th} sequence n_seq=257 are generated sequentially first, and then the 257^{th} parts of the first through eighth attention score vectors of the 257^{th} sequence n_seq=257 are sequentially generated later.

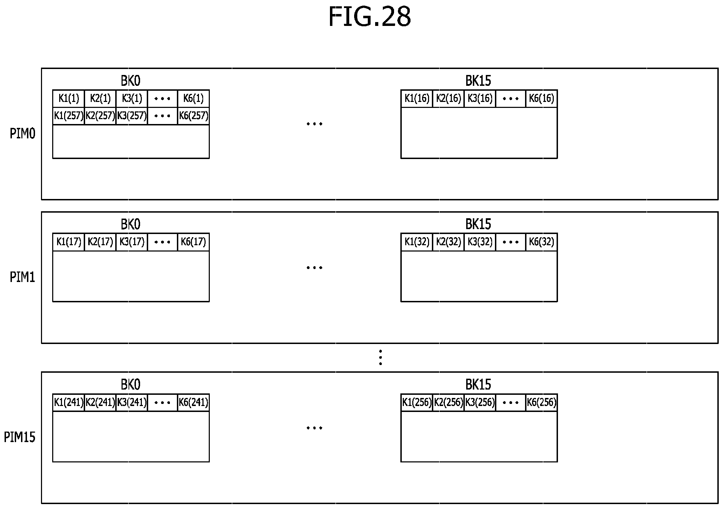

FIG. 28 is a diagram illustrating another example of a method of writing first through eighth key vectors generated in first through 257^{th} sequences of a multi-head attention in memory banks of the PIM devices according to an embodiment of the present disclosure. In FIG. 28, the global buffers and processing units are omitted for clarity. In this example, it is assumed that the total size of the key vectors generated in one sequence in the process of the multi-head attention of the neural network architecture is smaller than the page size of the memory bank. That is, in an example, the page size of the memory bank is 2 KB, the number of sequences n_seq of the multi-head attention is 257, the number of heads n_head is 6, and the size of the head d_head is 128. The key vector K generated in one sequence has a size of n_seq × d_head, that is, a size of n_seq × 128. It is assumed that each of the 128 elements included in a single row of the key vector K is a 16-bit floating-point data in BF16 format. Hereinafter, for convenience of explanation, the access unit for a column of the memory bank will not be considered, and accordingly, a column of the memory bank will be simply expressed in units of bits.

Referring to FIG. 28, first through sixth key vectors K1(1) through K6(1) generated in the first sequence n_seq=1 are stored in the first row of the first memory bank BK0 of the first PIM device PIM0. Because the total size of the first through sixth key vectors K1(1) through K6(1) is 16x 128x6, the first through sixth key vectors K1(1) through K6(1) are stored in the first through 12,288 columns of the first row in the first memory bank BK0. Because the page size of the first memory bank BK0 is 2 KB, the remaining columns of the first row in the first memory bank BK0, for example the 12,289^{th} through 16,384^{th} columns, are left empty. Although not shown, the first through sixth key vectors generated in the second through fifteenth sequences are stored in the first row and the first through 12,288^{th} columns of the second through fifteenth memory banks of the first PIM device PIM0. The first through sixth key vectors K1(16) through K6(16) generated in the first sequence n_seq=1 are stored in the first row and the first through 12,288^{th} columns of the sixteenth memory bank BK15 of the first PIM device PIM0.

The first through sixth key vectors K1(17) through K6(17) generated in the seventeenth sequence n_seq=17 are stored in the first row and the first through 12,288^{th} columns of the first memory bank BK0 of the second PIM device PIM1. Although not shown, the first through sixth key vectors generated in the eighteenth through 31^{st} sequences are stored in the first row and the first through 12,288^{th} columns of the second through fifteenth memory banks of the second PIM device PIM1. The first through sixth vectors K1(32) through K6(32) generated in the 32^{nd} sequence n_seq=32 are stored in the first row and first through 12,288^{th} columns of the sixteenth memory bank BK15 of the second PIM device PIM1. As with the first PIM device PIM0 and the second PIM device PIM1, the first through sixth key vectors generated in the 33^{rd} through 240^{th} sequences are stored in the first row and the first through 12,288^{th} columns of the first through sixteenth memory banks BK0 through BK15 of each of the third through fifteenth PIM devices PIM2 through PIM14.

The first through sixth key vectors K1(241) through K6(241) generated in the 241^{st} sequence n_seq=241 are stored in the first row and the first through 12,288^{th} columns of the first memory bank BK0 of the sixteenth PIM device PIM15. Although not shown, the first through sixth key vectors generated in each of the 242^{nd} through 255^{th} sequences are stored in the first row and the first through 12,288^{th} columns of the second through fifteenth memory banks of the sixteenth PIM device PIM15. The first through sixth key vectors K1(256) through K6(256) generated in the 256^{th} sequence n_seq=256 are stored in the first row and the first through 12,288^{th} columns of the sixteenth memory bank BK15 of the sixteenth PIM device PIM15. Because the first through sixth key vectors generated in each of the first through 256^{th} sequence are stored in all of the first rows of the first through sixteenth memory banks BK0 through BK15 of each of the first through sixteenth PIM devices PIM0 through PIM15, the first through sixth key vectors K1(257) through K6(257) generated in the 257^{th} sequence n_seq=257 are stored in the second row and the first through 12,288^{th} columns of the first memory bank BK0 in the first PIM device PIM0. Here, the second row is the next row with a row address after the row address of the first row. However, in other embodiments, the row address of the first row and the row address of the second row may not be consecutive row addresses.

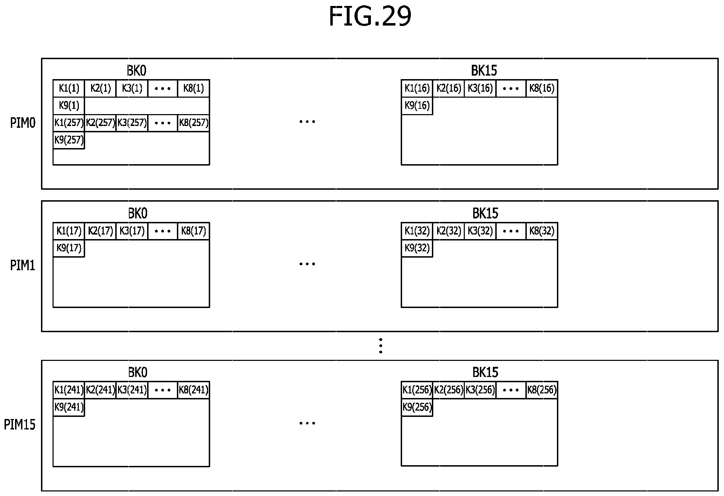

FIG. 29 is a diagram illustrating a further example of a method of writing first through eighth key vectors generated in first through 257^{th} sequences of a multi-head attention in memory banks of PIM devices. In FIG. 29, global buffers and processing units are omitted for clarity. In this example, it is assumed that, in a multi-head attention of a neural network architecture, the total size of key vectors generated in one sequence is greater than a page size of a memory bank. That is, in an example, the page size of the memory bank is 2 KB, the number of sequences n_seq of the multi-head attention is 257, the number of heads n_head is 9, and the size of the head d_head is 128. The key vector K generated in one sequence has a size of n_seq × d_head, that is, a size of n_seq × 128. It is assumed that each of the 128 elements included in one row of the key vector K is a 16-bit floating-point data in the BF16 format.

Referring to FIG. 29, a size of a first row of a first memory bank BK0 of a first PIM device PIM0 is 2 KB, while the total size of first through ninth key vectors K1(1) through K9(1) generated in a first sequence n_seq=1 is 16(BF16)x128(d_head)x9(n_head) bits, which is greater than 2 KB. Accordingly, among the first through ninth key vectors K1(1) through K9(1) generated in the first sequence n_seq=1, first through eighth key vectors K1(1) through K8(1) having the size of 2 KB are written to the first row of the first memory bank BK0 of the first PIM device PIM0. In addition, the remaining ninth key vector K9(1), from among the first through ninth key vectors K1(1) through K9(1) generated in the first sequence n_seq=1, is written to the second row of the first memory bank BK0 of the first PIM device PIM0. Among the first through ninth key vectors K1(257) through K9(257) generated in the 257^{th} sequence n_seq=257, the first through eighth key vectors K1(257) through K8(257) having the size of 2 KB are written to the third row of the first memory bank BK0 of the first PIM device PIM0. The remaining ninth key vector K9(257) of the first through ninth key vectors K1(257) through K9(257) generated in the 257^{th} sequence n_seq=257 is written to the fourth row of the first memory bank BK0 of the first PIM device PIM0.

The first through ninth key vectors generated in the second through 256^{th} sequences are also written in the same manner as the first through ninth key vectors generated in the first sequence. For example, as illustrated in FIG. 29, among the first through ninth key vectors K1(16) through K9(16) generated in the sixteenth sequence n_seq=16, the first through eighth key vectors K1(16) through K8(16) having the size of 2 KB are written to the first row of the sixteenth memory bank BK15 of the first PIM device PIM0. The remaining ninth key vector K9(16), from among the first through ninth key vectors K1(16) through K9(16) generated in the sixteenth sequence n_seq=16, is written to the second row of the sixteenth memory bank BK15 of the first PIM device PIM0. The first through eighth key vectors K1(17) through K8(17) generated in the seventeenth sequence n_seq=17 are written to the first row of the first memory bank BK0 of the second PIM device PIM1, and the ninth key vector K9(17) is written to the second row of the first memory bank BK0 of the second PIM device PIM1. The first through eighth key vectors K1(32) through K8(32) generated in the 32^{nd} sequence n_seq=32 are written to the first row of the sixteenth memory bank BK15 of the second PIM device PIM1, and the ninth key vector K9(32) is written to the second row of the sixteenth memory bank BK15 of the second PIM device PIM1. The first through eighth key vectors K1(241) through K8(241) generated in the 241^{st} sequence n_seq=241 are written to the first row of the first memory bank BK0 of the sixteenth PIM device PIM15, and the ninth key vector K9(241) is written to the second row of the first memory bank BK0 of the sixteenth PIM device PIM15. The first through eighth key vectors K1(256) through K8(256) generated in the 256^{th} sequence n_seq=256 are written to the first row of the sixteenth memory bank BK15 of the sixteenth PIM device PIM15, and the ninth key vector K9(256) is written to the second row of the sixteenth memory bank BK15 of the sixteenth PIM device PIM15.

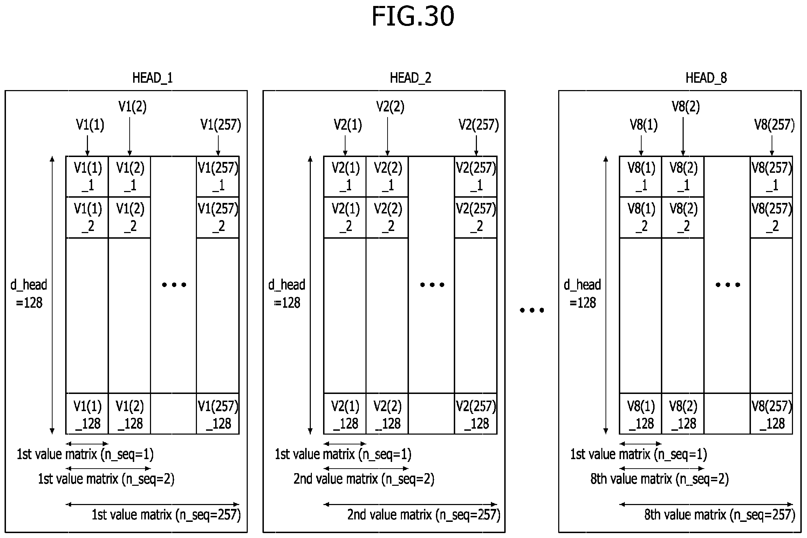

FIG. 30 is a diagram illustrating examples of value vectors generated in sequences of a multi-head attention of FIG. 5 and value matrices used as operands in second matrix-vector multiplication according to an embodiment of the present disclosure. In FIG. 30, the number of sequences n_seq in the multi-head attention is 257 and the number of heads n_head in the multi-head attention is 8. In addition, it is assumed that the size of the head d_head of the multi-head attention is 128, so that a value vector V has 128 elements. Hereinafter, each of the 128 elements of a value vector V is 16-bit floating point data in the BF16 format. FIG. 30 illustrates only first head HEAD_1, second head HEAD_2, and eighth head HEAD_8, but the description below can be applied in the same manner to the remaining third through seventh heads HEAD_3 through HEAD_7, which are not illustrated, while other embodiments may vary in the number and configuration of the illustrated components.

Referring to FIG. 30, for each of first through 257^{th} sequences n_seq= 1 through n_seq=257, as many value vectors as the number of heads of a multi-head attention, that is, eight value vectors, are generated. As illustrated in FIG. 30, first through eighth value vectors V1(1) through V8(1) are generated in a first sequence n seq=1. The first through eighth value vectors V1(1) through V8(1) generated in the first sequence n_seq=1 are used as operands for second matrix-vector multiplications of the first sequence n_seq=1 on the first through eighth heads HEAD_1 through HEAD_8. In a second sequence n_seq=2, the first through eighth value vectors V1(2) through V8(2) are generated. The first through eighth value vectors V1(2) through V8(2) generated in the second sequence n_seq=2 are used as the operands of the second matrix-vector multiplications of the second sequence n_seq=2 on the first through eighth heads HEAD_1 through HEAD_8 together with the first through eighth value vectors V1(1) through V8(1) generated in the first sequence n seq=1. In the 257^{th} sequence n_seq=257, the first through eighth value vectors V1(257) through V8(257) are generated. The first through eighth value vectors V1(257) through V8(257) generated in the 257^{th} sequence n_seq=257 are used as the operands of second matrix-vector multiplications of the 257^{th} sequence n_seq=257 on the first through eighth heads HEAD_1 through HEAD_8, together with the first through eighth value vectors generated in the first through 256^{th} sequences n_seq=1 through n_seq=256. The process of generating the first through eighth value vectors in each sequence is the same as described above with reference to FIG. 6.

More specifically, each of the first through eighth value vectors V1(1) through V8(1) generated in the first sequence n seq=1 has first through 128^{th} elements V1(1)_1 through V1(1)_128 disposed in the row direction. Each of the first to 128^{th} elements V1(1)_1 through V1(1)_128 is composed of 16-bit floating point data in the BF16 format. The first through eighth value vectors V1(1) through V8(1) generated in the first sequence n_seq=1 are used as the first through eighth value matrices, which are operands in the second matrix-vector multiplications in the first sequence n_seq= 1. For example, the first value vector V1(1) generated in the first sequence n_seq=1 is used as the first value matrix, which is the operand in the second matrix-vector multiplication on the first head HEAD_1 of the first sequence n_seq=1. The second value vector V2(1) generated in the first sequence n_seq=1 is used as the second value matrix, which is the operand in the second matrix-vector multiplication on the second head HEAD_2 of the first sequence n_seq=1. Similarly, the eighth value vector V8(1) generated in the first sequence n_seq= 1 is used as the eighth value matrix, which is the operand in the second matrix-vector multiplication on the eighth head HEAD_8 of the first sequence n_seq=1.

The first through eighth value vectors V1(2) through V8(2) generated in the second sequence n_seq=2 are used as the operands in the second matrix-vector multiplications in the second sequence n_seq=2, together with the first through eighth value vectors V1(1) through V8(1) generated in the first sequence n_seq=1. That is, the first through eighth value matrices used as the operands in the second matrix-vector multiplications in the second sequence n_seq=2 are formed by concatenating the first through eighth value vectors V1(1) through V8(1) generated in the first sequence n_seq=1 and the first through eighth value vectors V1(2) through V8(2) generated in the second sequence n_seq=2, respectively, in the column direction.

For example, the first value matrix CONCAT(V1(1), V1(2)) used as the operands in the second matrix-vector multiplications on the first head HEAD_1 of the second sequence n_seq=2 is formed by concatenating the first value vector V1(1) generated in the first sequence n_seq=1 and the first value vector V1(2) generated in the second sequence n_seq=2 in the column direction. The second value matrix CONCAT(V2(1), V2(2)) used as the operands in the second matrix-vector multiplications in the second head HEAD_2 of the second sequence n_seq=2 is formed by concatenating the second value vector V2(1) generated in the first sequence n_seq=1 and the second value vector V2(2) generated in the second sequence n_seq=2 in the column direction. In the same manner, the eighth value matrix CONCAT(V8(1), V8(2)) used as the operands in the second matrix-vector multiplications in the eighth head HEAD_8 of the second sequence n_seq=2 is formed by concatenating the eighth value vector V8(1) generated in the first sequence n_seq=1 and the eighth value vector V8(2) generated in the second sequence n_seq=2 in the column direction.

Similarly, the first through eighth value vectors V1(257) through V8(257) generated in the 257^{th} sequence n_seq=257 are used as the operands in the second matrix-vector multiplications in the 257^{th} sequence n_seq=257, together with the first through eighth value vectors generated in the first through 256^{th} sequences. That is, the first through eighth value matrices used as the operands in the second matrix-vector multiplications in the 257^{th} sequence n_seq=257 are formed by concatenating the first through eighth value vectors of all 257 sequences, from the first through eighth value vectors V1(1) through V8(1) generated in the first sequence n_seq=1 to the first through eighth value vectors V1(257) through V8(257) generated in the 257^{th} sequence n_seq=257 in the column direction.

For example, the first value matrix CONCAT(V1(1), V1(2), ..., V1(257)) used as operands in the second matrix-vector multiplications on the first head HEAD_1 of the 257^{th} sequence n_seq=257 is formed by concatenating the first value vectors V1(1) through V1(257) generated in the first through 257^{th} sequences n_seq=1 through n_seq=257 in the column direction. The second value matrix CONCAT(V2(1), V2(2), ... , V2(257)) used as operands in the second matrix-vector multiplications on the second head HEAD_2 of the 257^{th} sequence n_seq=257 is formed by concatenating all of the second value vectors V2(1) trough V2(257) generated in the first through 257^{th} sequences n_seq=1 through n_seq=257 in the column direction. In the same manner, the eighth value matrix CONCAT(V8(1), V8(2), ..., V8(257)) used as operands in the second matrix-vector multiplications on the eighth head HEAD_8 of the 257^{th} sequence n_seq=257 is formed by concatenating the eighth value vectors V8(1) through V8(257) generated in the first through 257^{th} sequences n_seq=1 through n_seq=257 in the column direction.

To perform the transformer-based multi-head attention in a neural network architecture according to the present disclosure, the plurality of memory banks of each of the plurality of PIM devices write the value vectors in the second manner. Here, the second manner may be defined as a set of operations in which the value vectors generated in one sequence among the plurality of sequences of the multi-head attention are distributed and stored in the plurality of memory banks of each of the plurality of PIM devices in the units of elements.

In an example, it is assumed that the number of the plurality of PIM devices is "P", the number of the plurality of memory banks included in each of the plurality of PIM devices is "M", the number of heads of the multi-head attention is "N", one head of the multi-head attention includes "D" elements, "K" is a natural number from 1 to "N", and "D/M" is less than "P". In this case, among the "N" value vectors generated in the first sequence, which is one of a plurality of sequences, the first through "D"^{th} elements of the "K"^{th} value vector are distributed and stored by "M" elements in the first through "D/M"^{th} PIM devices among the plurality of PIM devices. Among the first through "D"^{th} elements of the "K"^{th} value vector, the "M" elements written to each of the first through "D/M"^{th} PIM devices are distributed and written by one element to the "M" memory banks included in each of the first through "D/M" PIM devices. In particular, the "M" elements written by one element to the "M" memory banks included in each of the first through "D/M"^{th} PIM devices are written to the same first row and first column.

In the same manner, among the "N" value vectors generated in the second sequence, which is the sequence following the first sequence, the first through "D"^{th} elements of the "K"^{th} value vector are distributed and written by "M" elements to the first through "D/M"^{th} PIM devices among the plurality of PIM devices. The "M" elements written to each of the first through "D/M"^{th} PIM devices among the first through "D"^{th} elements of the "K"^{th} value vector are distributed and written by a single element to the "M" memory banks included in each of the first through "D/M"^{th} PIM devices. In the second sequence, the "M" elements distributed and written to the "M" memory banks included in each of the first through "D/M"^{th} PIM devices are written to the first row and the second column, which is the next column after first column.

In an example, it is assumed that each of the "N" heads of the multi-head attention includes "(P/2)-M" elements, that is, "D=(P/2)-M". In this case, the first through "D"^{th} elements of odd-numbered value vectors among the "N" value vectors generated in the first sequence, that is one of the plurality of sequences, may be stored in the first through "P/2"^{th} PIM devices among the plurality of PIM devices, and the first through "D"^{th} elements of even-numbered value vectors among the "N" value vectors generated in the first sequence may be stored in the "(P/2)+1"^{th} through "P"^{th} PIM devices among the plurality of PIM devices. That is, the first through "D"^{th} elements of the odd-numbered value vectors generated in the first sequence may be distributed in units of "M" elements and stored in the first through "P/2"^{th} PIM devices, and the first through "D"^{th} elements of the even-numbered value vectors generated in the first sequence may be distributed in units of "M" elements and stored in the "(P/2)+1"^{th} through "P"^{th} PIM devices. In particular, the "M" elements of the odd-numbered value vectors generated in the first sequence and distributed and written to the first through "P/2"^{th} PIM devices may be distributed in units of a single element and stored in the first through "M"^{th} memory banks of each of the first through "P/2"^{th} PIM devices, and the "M" elements of the even-numbered value vectors generated in the first sequence and distributed and stored in the "(P/2)+1"^{th} through "P"^{th} PIM devices may be distributed in units of a single element and stored in the first through "M"^{th} memory banks of each of the "(P/2)+1"^{th} through "P"^{th} PIM devices.

In an example, the odd-numbered value vectors generated in the first sequence may be stored in different rows in the first through "M"^{th} memory banks of each of the first through "P/2"^{th} PIM devices, from the first odd-numbered value vector to the last odd-numbered value vector. In addition, the even-numbered value vectors generated in the first sequence may be stored in different rows in the first through the "M"^{th} memory banks of each of the "(P/2)+1"^{th} through the "P"^{th} PIM devices, from the first even-numbered value vector to the last even-numbered value vector. In this case, the odd-numbered value vectors generated in the first sequence are stored and designated by the same first column address in the first through "M"^{th} memory banks of each of the first through "P/2"^{th} PIM devices, and the even-numbered value vectors generated in the first sequence are stored and designated by the same first column address in the first through "M"^{th} memory banks of each of the "(P/2)+1"^{th} through "P"^{th} PIM devices.

The odd-numbered value vectors generated in the second sequence, which is the sequence following the first sequence, among the plurality of sequences are stored in the same rows as the rows in which the odd-numbered value vectors generated in the first sequence are stored in the first through "M"^{th} memory banks of each of the first through "P/2"^{th} PIM devices, but are stored and designated by a second column address, which is the address following the first column address. In addition, the even-numbered value vectors generated in the second sequence are stored in the same rows as the rows in which the even-numbered value vectors generated in the first sequence are stored in the first through "M"^{th} memory banks of each of the "(P/2)+1"^{th} through "P"^{th} PIM devices, but are stored and designated by the second column address, which is the address following the first column address. To perform the second matrix-vector multiplications, the first through "D"^{th} elements of the odd-numbered attention distribution vectors are stored in the global buffers of the first through "Pj2"^{th} PIM devices, and the first through "D"^{th} elements of the even-numbered attention distribution vectors are stored in the global buffers of the "(P/2)+1"^{th} through "P"^{th} PIM devices.

In an example, the "D" elements of the first value vector among the "N" value vectors generated in the first sequence among the plurality of sequences are distributed, stored and designated by the first column address in the first rows of the first through "M"^{th} memory banks of each of the first through "P/2"^{th} PIM devices. The "D" elements of the second value vector among the "N" value vectors generated in the first sequence are distributed, stored and designated by the first column address in the first rows of the first through "M"^{th} memory banks of each of the "(P/2)+1"^{th} through "P"^{th} PIM devices. The "D" elements of the third value vector among the "N" value vectors generated in the first sequence are distributed, stored and designated by the first column address in the second rows of the first through "M"^{th} memory banks of each of the first through "P/2"^{th} PIM devices. In addition, the "D" elements of the fourth value vector among the "N" value vectors generated in the first sequence are distributed , stored and designated by the first column address in the second rows of the first through "M"^{th} memory banks of each of the "(P/2)+1"^{th} through "P"^{th} PIM devices. In this case, the odd-numbered attention distribution vectors among the attention distribution vectors are stored in the global buffers of the first through "P/2"^{th} PIM devices, and the even-numbered attention distribution vectors among the attention distribution vectors are stored in the global buffers of the "(P/2)+1"^{th} through "P"^{th} PIM devices.

The first through "M"^{th} processing units of each of the first through "P/2"^{th} PIM devices perform second matrix-vector multiplications, on the "M" elements of the first value vector stored in the first through "M"^{th} memory banks of each of the first through "P/2"^{th} PIM devices and the first attention distribution vectors stored in the global buffer of each of the first through "P/2"^{th} PIM devices, to generate the first through "D"^{th} segments of the first multi-head attention value vector. The first through "M"^{th} processing units of each of the "(P/2)+1"^{th} through "P"^{th} PIM devices perform second matrix-vector multiplications, on the "M" elements of the second value vector stored in the first through "M"^{th} memory banks of each of the "(P/2)+1"^{th} through "P"^{th} PIM devices and the second attention distribution vector stored in the global buffer of each of the "(P/2)+1"^{th} through "P"^{th} PIM devices, to generate the first through "D"^{th} segments of the second multi-head attention value vector.

The first through "M"^{th} processing units of each of the first through "P/2"^{th} PIM devices perform second matrix-vector multiplications, on the "M" elements of the third value vector stored in the first through "M"^{th} memory banks of each of the first through "P/2"^{th} PIM devices and the third attention distribution vector stored in the global buffer of each of the first through "Pj2"^{th} PIM devices, to generate the first through "D"^{th} segments of the third multi-head attention value vector. The first through "M"^{th} processing units of each of the "(P/2)+1"^{th} through "P"^{th} PIM devices perform second matrix-vector multiplications, on the "M" elements of the fourth value vector stored in the first through "M"^{th} memory banks of each of the "(P/2)+1"^{th} through "P"^{th} PIM devices and the second attention distribution vector stored in the global buffer of each of the "(P/2)+1"^{th} through "P"^{th} PIM devices, to generate the first through "D"^{th} segments of the fourth multi-head attention value vector.

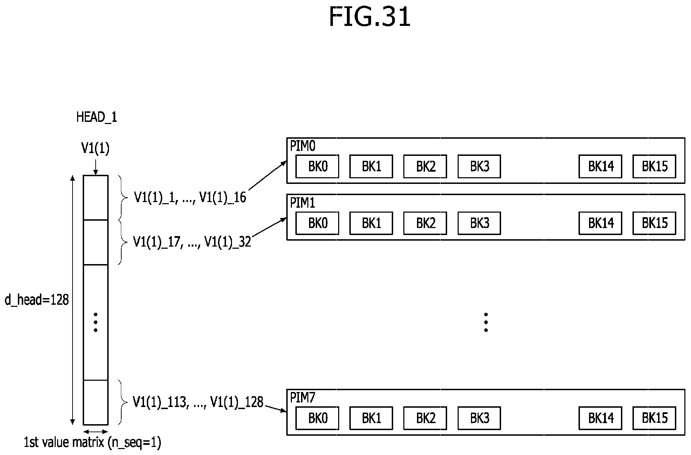

FIG. 31 through FIG. 46 are diagrams illustrating how value vectors generated in a plurality of sequences of a multi-head attention are distributed and stored in PIM devices in a neural network architecture according to embodiments of the present disclosure. The following descriptions are assumed to be applied to a neural network architecture (10 in FIG. 1) described above with reference to FIG. 1, but embodiments are not limited to this configuration. The neural network architecture 10 includes first through sixteenth PIM devices PIM0 through PIM15, and each PIM device includes 16 memory banks and 16 processing units. In this example, the process in which the value vectors are generated and the matrix format of the value matrices are the same as described with reference to FIG. 30. Accordingly, hereinafter, illustrated examples assume that the number of sequences n_seq of the multi-head attention is 257, the number of heads n_head is 8, the size of the heads d_head is 128, and each of the 128 elements of the value vector is 16-bit floating point data in the BF16 format. Furthermore, it is assumed that each of the memory banks and global buffers has a page size of 2 KB.

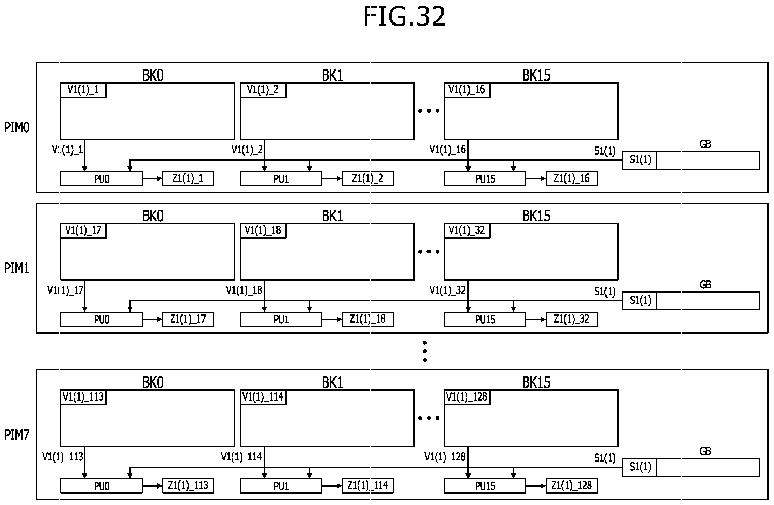

FIG. 31 is a diagram illustrating how a first value vector generated in a first sequence of a multi-head attention is distributed and stored in a first group of PIM devices according to an embodiment of the present disclosure. FIG. 32 is a diagram illustrating a process in which a first value vector generated in a first sequence of a multi-head attention is distributed in units of a single element and stored in memory banks of a first group of PIM devices and in which second matrix-vector multiplication is performed on a first head according to an embodiment of the present disclosure.

Referring first to FIG. 31, a first value vector V1(1) generated in a first sequence n_seq=1 is distributed in units of elements and written to memory banks BKs of a first group of PIM devices among the first through sixteenth PIM devices PIM0 through PIM15. The first through 128^{th} elements V1(1)_1 through V1(1)_128 of the first value vector V1(1) are distributed and written to each of the memory banks BKs of the first group of PIM devices. That is, one of the first through 128^{th} elements V1(1)_1 through V1(1)_128 of the first value vector V1(1) is written to each of the first through sixteenth memory banks BK0 through BK15 in each of the first group of PIM devices. Accordingly, because one PIM device includes 16 memory banks, the first group of PIM devices include the first through eighth PIM devices PIM0 through PIM7 to which the first through 128^{th} elements V1(1)_1 through V1(1)_128 of the first value vector V1(1) are written.

More specifically, because each of the first through 16 PIM devices PIM0 through PIM15 includes first through 16 memory banks BK0 through BK15, the first through 128^{th} elements V1(1)_1 through V1(1)_128 of the first value vector V1(1) are divided in units of 16 elements and written to different PIM devices. In other words, as illustrated in FIG. 31, the first through sixteenth elements V1(1)_1 through V1(1)_16 of the first value vector V1(1) are distributed and stored in the first through sixteenth memory banks BK0 through BK15 of the first PIM device PIM0, respectively. The 17^{th} through 32^{nd} elements V1(1)_17 through V1(1)_32 of the first value vector V1(1) are distributed and stored in the first through sixteenth memory banks BK0 through BK15 of the second PIM device PIM1, respectively. In the same manner, the 113^{th} through 128^{th} elements V1(1)_113 through V1(1)_128 of the first value vector V1(1) are distributed and stored in the first through sixteenth memory banks BK0 through BK15 of the eighth PIM device PIM7, respectively. Although not shown in FIG. 31, the 33^{rd} through 112^{th} elements of the first value vector V1(1) are distributed in units of 16 elements and stored in the third to seventh PIM devices, respectively.

More specifically, with reference to FIG. 32, the first element V1(1)_1 of the first value vector V1(1) is written to the first memory bank BK0 of the first PIM device PIM0. The first element V1(1)_1 of the first value vector V1(1) is stored in one of the rows, for example, the first row of the first memory bank BK0 of the first PIM device PIM0. The first element V1(1)_1 of the first value vector V1(1) may be specified by the first column address in the first row of the first memory bank BK0 of the first PIM device PIM0. Because one element of the first value vector V1(1) is in the BF16 format, that is, in the 16-bit floating point format, the first column address specifies 16 columns, for example, the first through sixteenth columns in the first row of the first memory bank BK0 of the first PIM device PIM0. The second element V1(1)_2 of the first value vector V1(1) is stored in the first row and the first through sixteenth columns of the second memory bank BK1 of the first PIM device PIM0. Although not shown, in the same manner, the third through fifteenth elements of the first value vector V1(1) are stored in the first row and first through sixteenth columns of the third through fifteenth memory banks of the first PIM device PIM0, respectively. The sixteenth element V1(1)_16 of the first value vector V1(1) is stored in the first row and the first through sixteenth columns of the sixteenth memory bank BK15 of the first PIM device PIM0.

The 17^{th} element V1(1)_17 of the first value vector V1(1) is stored in the first row and the first through sixteenth columns of the first memory bank BK0 of the second PIM device PIM1. The 18^{th} element V1(1)_18 of the first value vector V1(1) is stored in the first row and the first through sixteenth columns of the second memory bank BK1 of the second PIM device PIM1. Although not shown, in the same manner, the 19^{th} through 31^{st} elements of the first value vector V1(1) are stored in the first row and the first through sixteenth columns of the third through fifteenth memory banks of the second PIM device PIM1, respectively. The 32^{nd} element V1(1)_32 of the first value vector V1(1) is stored in the first row and the first through sixteenth columns of the sixteenth memory bank BK15 of the second PIM device PIM1.

Although not shown, the 33^{rd} through 48^{th} elements of the first value vector V1(1) are stored in the first row and the first through sixteenth columns of the first through sixteenth memory banks of the third PIM device PIM2, respectively. The 49^{th} through 64^{th} elements of the first value vector V1(1) are stored in the first row and the first through sixteenth columns of the first through sixteenth memory banks of the fourth PIM device PIM3, respectively. The 65^{th} through 80^{th} elements of the first value vector V1(1) are stored in the first row and the first through sixteenth columns of the first through sixteenth memory banks of the fifth PIM device PIM4, respectively. The 81^{st} through 96^{th} elements of the first value vector V1(1) are stored in the first row and the first through sixteenth columns of the first through sixteenth memory banks of the sixth PIM device PIM5, respectively. In addition, the 97^{th} through 112^{th} elements of the first value vector V1(1) are stored in the first row and the first through sixteenth columns of the first through sixteenth memory banks of the seventh PIM device PIM 6, respectively.

The 113^{th} element V1(1)_113 of the first value vector V1(1) is stored in the first row and the first through sixteenth columns of the first memory bank BK0 of the eighth PIM device PIM7. The 114^{th} element V1(1)_114 of the first value vector V1(1) is stored in the first row and the first through sixteenth columns of the second memory bank BK1 of the eighth PIM device PIM7. Although not shown, in the same manner, the 115^{th} through 127^{th} elements of the first value vector V1(1) are stored in the first row and the first through sixteenth columns of the third through fifteenth memory banks of the eighth PIM device PIM7, respectively. The 128^{th} element V1(1)_128 of the first value vector V1(1) is stored in the first row and the first through sixteenth columns of the sixteenth memory bank BK15 of the eighth PIM device PIM7, respectively.

In the same manner as above, while the first value vector V1(1) generated in the first sequence n_seq=1 is written to the first group of PIM devices, that is, the first through eighth PIM devices PIM0 through PIM7, the first attention distribution vector S1(1) is stored in each of global buffers GBs of the first through eighth PIM devices PIM0 through PIM7. As described above with reference to FIG. 17, the first attention distribution vector S1(1) has the same size as the first attention score vector A1(1), which is a result of first matrix-vector multiplications of the first key vector K1(1) and the first query vector Q1(1) generated in the first sequence n_seq=1. Accordingly, the first attention distribution vector S1(1) generated in the first sequence n_seq= 1 has a size of n_seq × 1, that is, a size of 1 × 1. Because the first attention distribution vector S1(1) is in the BF16 format, the first attention distribution vector S1(1) is stored in the first through sixteenth columns of each global buffer GB.

The first through sixteenth processing units PUO through PU15 of each of the first through eighth PIM devices PIM0 through PIM7 perform the second matrix-vector multiplications, on the first through 128^{th} elements V1(1)_1 through V1(1)_128 of the first value vector V1(1) and the first attention distribution vector S1(1), to generate the first multi-head attention value vector Z1(1). As the first value vector V1(1) generated in the first sequence n_seq= 1 has a size of d_head × 1, that is, a size of 128 × 1 and the first attention distribution vector S1(1) generated in the first sequence n_seq=1 has a size of 1 × 1, the first multi-head attention value vector Z1(1) generated by the second matrix-vector multiplications on the first head HEAD_1 of the first sequence n_seq=1 has a size of d_head × 1, that is, a size of 128 × 1. That is, first through 128^{th} elements Z1(1)_1 through Z1(1)_128 of the first multi-head attention value vector Z1(1) are generated when the second matrix-vector multiplications are performed on the first head HEAD_1 of the first sequence n_seq= 1 in the first through sixteenth processing units PUO through PU15 of each of the first through eighth PIM devices PIM0 through PIM7.

More specifically, the first processing unit PUO of the first PIM device PIM0 receives the first element V1(1)_1 of the first value vector V1(1) and the first attention distribution vector S1(1) from the first memory bank BK0 and the global buffer GB, respectively. The first processing unit PUO of the first PIM device PIM0 performs the second matrix-vector multiplication on the first element V1(1)_1 of the first value vector V1(1) and the first attention distribution vector S1(1) to generate the first element Z1(1)_1 of the first multi-head attention value vector Z1(1) of the first sequence n_seq=1. The second processing unit PU1 of the first PIM device PIM0 receives the second element V1(1)_2 of the first value vector V1(1) and the first attention distribution vector S1(1) from the second memory bank BK1 and the global buffer GB, respectively. The second processing unit PU1 of the first PIM device PIM0 performs the second matrix-vector multiplication on the second element V1(1)_2 of the first value vector V1(1) and the first attention distribution vector S1(1) to generate the second element Z1(1)_2 of the first multi-head attention value vector Z1(1) of the first sequence n_seq=1. In the same manner, the sixteenth processing unit PU15 of the first PIM device PIM0 receives the sixteenth element V1(1)_16 of the first value vector V1(1) and the first attention distribution vector S1(1) from the sixteenth memory bank BK15 and the global buffer GB, respectively. The sixteenth processing unit PU15 of the first PIM device PIM0 performs the second matrix-vector multiplication on the sixteenth element V1(1)_16 of the first value vector V1(1) and the first attention distribution vector S1(1) to generate the sixteenth element Z1(1)_16 of the first multi-head attention value vector Z1(1) of the first sequence n_seq=1. As such, the first through sixteenth processing units PUO through PU15 of the first PIM device PIM0 generate the first through sixteenth elements Z1(1)_1 through Z1(1)_16 of the first multi-head attention value vector Z1(1) of the first sequence n_seq=1.

The first processing unit PUO of the second PIM device PIM1 performs the second matrix-vector multiplication on the 17^{th} element V1(1)_17 of the first value vector V1(1) and the first attention distribution vector S1(1) to generate the 17^{th} element Z1(1)_17 of the first multi-head attention value vector Z1(1) of the first sequence n_seq=1. The second processing unit PU1 of the second PIM device PIM1 performs the second matrix-vector multiplication on the 18^{th} element V1(1)_18 of the first value vector V1(1) and the first attention distribution vector S1(1) to generate the 18^{th} element 1(1)_18 of the first multi-head attention value vector Z1(1) of the first sequence n_seq=1. In the same manner, the sixteenth processing unit PU15 of the second PIM device PIM1 performs the second matrix-vector multiplication on the 32^{nd} element V1(1)_32 of the first value vector V1(1) and the first attention distribution vector S1(1) to generate the 32^{nd} element Z1(1)_32 of the first multi-head attention value vector Z1(1) of the first sequence n_seq=1. In this manner, the first through sixteenth processing units PUO through PU15 of the second PIM device PIM1 generate the 17^{th} to 32^{nd} elements Z1(1)_17 through Z1(1)_32 of the first multi-head attention value vector Z1(1) of the first sequence n_seq=1. Although not shown, in the same manner, the first through sixteenth processing units of the third through seventh PIM devices generate the 33^{rd} through 112^{th} elements Z1(1)_33 through Z1(1)_112 of the first multi-head attention value vector Z1(1) of the first sequence n_seq=1.

The first processing unit PUO of the eighth PIM device PIM7 performs the second matrix-vector multiplication on the 113^{th} element V1(1)_113 of the first value vector V1(1) and the first attention distribution vector S1(1) to generate the 113^{th} element Z1(1)_113 of the first multi-head attention value vector Z1(1) of the first sequence n_seq=1. The second processing unit PU1 of the eighth PIM device PIM7 performs the second matrix-vector multiplication on the 114^{th} element V1(1)_114 of the first value vector V1(1) and the first attention distribution vector S1(1) to generate the 114^{th} element Z1(1)_114 of the first multi-head attention value vector Z1(1) of the first sequence n_seq=1. In the same manner, the sixteenth processing unit PU15 of the eighth PIM device PIM7 performs the second matrix-vector multiplication on the 128^{th} element V1(1)_128 of the first value vector V1(1) and the first attention distribution vector S1(1) to generate the 128^{th} element Z1(1)_128 of the first multi-head attention value vector Z1(1) of the first sequence n_seq=1. In this manner, the first through sixteenth processing units PUO through PU15 of the eighth PIM device PIM7 generate the 113^{th} through 128^{th} elements Z1(1)_113 through Z1(1)_128 of the first multi-head attention value vector Z1(1) of the first sequence n_seq=1. The second matrix-vector multiplications generating the first through 128^{th} elements Z1(1)_1 through Z1(1)_128 of the first multi-head attention value vector Z1(1) of the first sequence n_seq= 1 are performed in parallel on the first through eighth PIM devices PIM0 through PIM7.

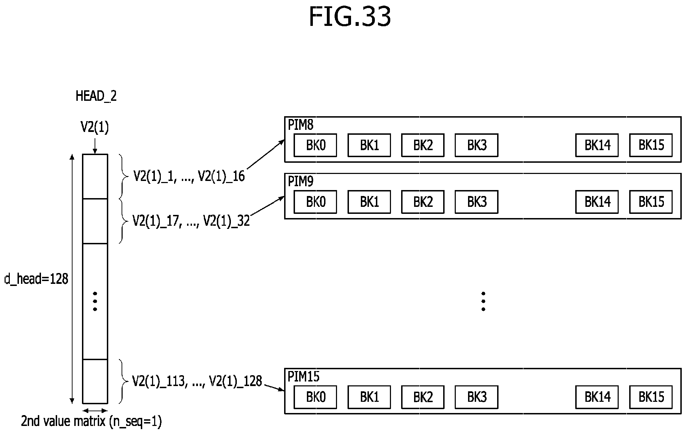

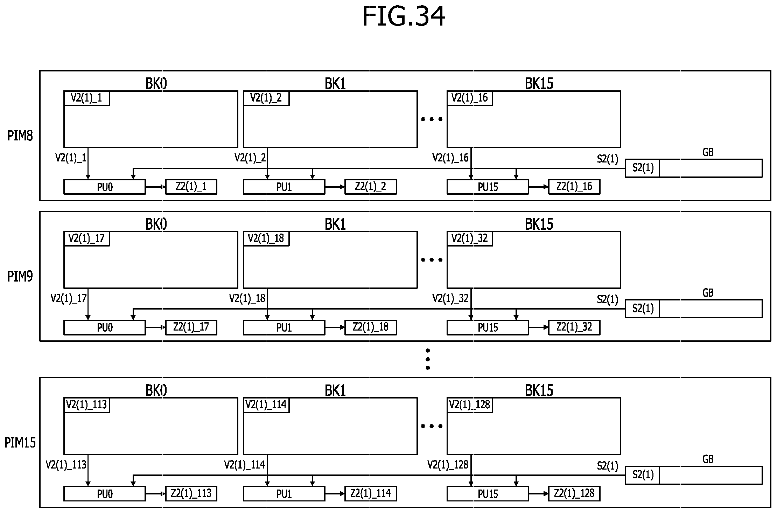

FIG. 33 is a diagram illustrating how the second value vector generated in a first sequence of a multi-head attention is distributed and stored in a second group of PIM devices according to an embodiment of the present disclosure. FIG. 34 is a diagram illustrating a process in which a second value vector generated in a first sequence of a multi-head attention is distributed in units of elements and stored in memory banks of a second group of PIM devices and in which second matrix-vector multiplication is performed on a second head according to an embodiment of the present disclosure.

Referring first to FIG. 33, a second value vector V2(1) generated in the first sequence n_seq= 1 is written in a manner similar to the manner in which the first value vector V1(1) is stored as illustrated in FIG. 31 and FIG. 32, except that the second value vector V2(1) is written to a second group of PIM devices, for example, ninth through sixteenth PIM devices PIM8 through PIM15. Accordingly, the second value vector V2(1) generated in the first sequence n_seq=1 is distributed in units of elements and written to the memory banks BKs of each of the second group of PIM devices, that is, the ninth through sixteenth PIM devices PIM8 through PIM15. The first through 128^{th} elements V2(1)_1 through V2(1)_128 of the second value vector V2(1) are divided and each element written to one memory bank BK. That is, one element among the first through 128^{th} elements V2(1)_1 through V2(1)_128 of the second value vector V2(1) generated in the first sequence n_seq=1 is written to each of first through sixteenth memory banks BK0 through BK15 of each of the ninth through sixteenth PIM devices PIM8 through PIM15.

As illustrated in FIG. 33, first through sixteenth elements V2(1)_1 through V2(1)_16 of the second value vector V2(1) generated in the first sequence n_seq= 1 are distributed and stored in the first through sixteenth memory banks BK0 through BK15 of each of the ninth PIM device PIM8, respectively. The 17^{th} through 32^{nd} elements V2(1)_17 through V2(1)_32 of the second value vector V2(1) generated in the first sequence n_seq= 1 are distributed and stored in the first through sixteenth memory banks BK0 through BK15 of the tenth PIM device PIM9, respectively. In the same manner, the 33^{rd} through 112^{th} elements of the second value vector V2(1) generated in the first sequence n_seq= 1 are distributed in units of 16 elements and stored in the eleventh through fifteenth PIM devices, respectively. The 113^{th} through 128^{th} elements V2(1)_113 through V2(1)_128 of the second value vector V2(1) generated in the first sequence n_seq= 1 are distributed and stored in the first through sixteenth memory banks BK0 through BK15 of the sixteenth PIM device PIM15, respectively.

Referring specifically to FIG. 34, first element V2(1)_1 of the second value vector V2(1) is written to the first memory bank BK0 of the ninth PIM device PIM8. The first element V2(1)_1 of the second value vector V2(1) is stored in the first row and the first through sixteenth columns of the first memory bank BK0 of the ninth PIM device PIM8. The second element V2(1)_2 of the second value vector V2(1) is stored in the first row and the first through sixteenth columns of the second memory bank BK1 of the ninth PIM device PIM8. Although not shown, in the same manner, the third through fifteenth elements of the second value vector V2(1) are stored in the first row and the first through sixteenth columns of the third through fifteenth memory banks of the ninth PIM device PIM8, respectively. The sixteenth element V2(1)_16 of the second value vector V2(1) is stored in the first row and the first through sixteenth columns of the sixteenth memory bank BK15 of the ninth PIM device PIM8.

The 17^{th} element V2(1)_17 of the second value vector V2(1) is stored in the first row and the first through sixteenth columns of the first memory bank BK0 of the tenth PIM device PIM9. The 18^{th} element V2(1)_18 of the second value vector V2(1) is stored in the first row and the first through sixteenth columns of the second memory bank BK1 of the tenth PIM device PIM9. Although not shown, in the same manner, the 19^{th} through 31^{st} elements of the second value vector V2(1) are stored in the first row and the first through sixteenth columns of the third through fifteenth memory banks of the tenth PIM device PIM9, respectively. The 32^{nd} element V2(1)_32 of the second value vector V2(1) is stored in the first row and the first through sixteenth columns of the sixteenth memory bank BK15 of the tenth PIM device PIM9.

Although not shown, the 33^{rd} through 48^{th} elements of the second value vector V2(1) are stored in the first row and the first through sixteenth columns of the first through sixteenth memory banks of the eleventh PIM device PIM10, respectively. The 49^{th} through 64^{th} elements of the second value vector V2(1) are stored in the first row and the first through sixteenth columns of the first through sixteenth memory banks of the twelfth PIM device PIM11, respectively. The 65^{th} through 80^{th} elements of the second value vector V2(1) are stored in the first row and the first through sixteenth columns of the first through sixteenth memory banks of the thirteenth PIM device PIM12, respectively. The 81^{st} through 96^{th} elements of the second value vector V2(1) are stored in the first row and the first through sixteenth columns of the first through sixteenth memory banks of the fourteenth PIM device PIM13, respectively. In addition, the 97^{th} through 112^{th} elements of the second value vector V2(1) are stored in the first row and the first through sixteenth columns of the first through sixteenth memory banks of the fifteenth PIM device PIM14, respectively.

The 113^{th} element V2(1)_113 of the second value vector V2(1) is stored in the first row and the first through sixteenth columns of the first memory bank BK0 of the sixteenth PIM device PIM15. The 114^{th} element V2(1)_114 of the second value vector V2(1) is stored in the first row and the first through sixteenth columns of the second memory bank BK1 of the sixteenth PIM device PIM15. Although not shown, in the same manner, the 115^{th} through 127^{th} elements of the second value vector V2(1) are stored in the first row and the first through sixteenth columns of the third through fifteenth memory banks of the sixteenth PIM device PIM15, respectively. The 128^{th} element V2(1)_128 of the second value vector V2(1) is stored in the first row and the first through sixteenth columns of the sixteenth memory bank BK15 of the sixteenth PIM device PIM15, respectively.

In the same manner as above, while the second value vector V2(1) generated in the first sequence_seq= 1 is written to the second group of PIM devices, that is, the ninth through sixteenth PIM devices PIM8 through PIM15, the second attention distribution vector S2(1) generated in the first sequence n_seq= 1 is stored in each of global buffers GBs of the ninth to sixteenth PIM devices PIM8 through PIM15. The second attention distribution vector S2(1) generated in the first sequence n_seq=1 has the same size as the second attention score vector A2(1), which is the result of the first matrix-vector multiplication of the second key vector K2(1) and the second query vector Q2(1) generated in the first sequence n_seq=1, as described above with reference to FIG. 18. Accordingly, the second attention distribution vector S2(1) generated in the first sequence n_seq=1 has a size of n_seq × 1, that is, a size of 1 × 1.

The first through sixteenth processing units PUO through PU15 of each of the ninth through sixteenth PIM devices PIM8 through PIM15 perform the second matrix-vector multiplications, on the first through 128^{th} elements V2(1)_1 through V2(1)_128 of the second value vector V2(1) and the second attention distribution vector S2(1), to generate the second multi-head attention value vector Z2(1). As the second value vector V2(1) generated in the first sequence n_seq=1 has a size of d_head × 1, that is, a size of 128 × 1, and the second attention distribution vector S2(1) generated in the first sequence n_seq=1 has a size of 1 × 1, the second multi-head attention value vector Z2(1) generated through the second matrix-vector multiplications on the second head HEAD_2 of the first sequence n seq=1 has a size of d_head × 1, namely, a size of 128 × 1. That is, first through 128^{th} elements Z2(1)_1 through Z2(1)_128 of the second multi-head attention value vector Z2(1) are generated when the second matrix-vector multiplications for the second head HEAD_2 of the first sequence n_seq=1 are performed in the first through sixteenth processing units PUO through PU15 of each of the ninth through sixteenth PIM devices PIM8 through PIM15.

More specifically, the first processing unit PUO of the ninth PIM device PIM8 receives the first element V2(1)_1 of the second value vector V2(1) and the second attention distribution vector S2(1) from the first memory bank BK0 and the global buffer GB, respectively. The first processing unit PUO of the ninth PIM device PIM8 performs the second matrix-vector multiplication on the first element V2(1)_1 of the second value vector V2(1) and the second attention distribution vector S2(1) to generate the first element Z2(1)_1 of the second multi-head attention value vector Z2(1) of the first sequence n_seq=1. Similarly, the second processing unit PU1 of the ninth PIM device PIM8 performs the second matrix-vector multiplication on the second element V2(1)_2 of the second value vector V2(1) and the second attention distribution vector S2(1) to generate the second element Z2(1)_2 of the second multi-head attention value vector Z2(1) of the first sequence n_seq=1. In the same manner, the sixteenth processing unit PU15 of the ninth PIM device PIM8 performs the second matrix-vector multiplication on the sixteenth element V2(1)_16 of the second value vector V2(1) and the second attention distribution vector S2(1) to generate the sixteenth element Z2(1)_16 of the second multi-head attention value vector Z2(1) of the first sequence n seq=1. In this manner, the first through sixteenth processing units PUO through PU15 of the ninth PIM device PIM8 generate the first through sixteenth elements Z2(1)_1 through Z2(1)_16 of the second multi-head attention value vector Z2(1) of the first sequence n_seq = 1.

The first processing unit PUO of the tenth PIM device PIM9 performs the second matrix-vector multiplication on the 17^{th} element V2(1)_17 of the second value vector V2(1) and the second attention distribution vector S2(1) to generate the 17^{th} element Z2(1)_17 of the second multi-head attention value vector Z2(1) of the first sequence n_seq=1. The second processing unit PU1 of the tenth PIM device PIM9 performs the second matrix-vector multiplication on the 18^{th} element V2(1)_18 of the second value vector V2(1) and the second attention distribution vector S2(1) to generate the 18^{th} element Z2(1)_18 of the second multi-head attention value vector Z2(1) of the first sequence n_seq=1. In the same manner, the sixteenth processing unit PU15 of the tenth PIM device PIM9 performs the second matrix-vector multiplication on the 32^{nd} element V2(1)_32 of the second value vector V2(1) and the second attention distribution vector S2(1) to generate the 32^{nd} element Z2(1)_32 of the second multi-head attention value vector Z2(1) of the first sequence n seq=1. In this manner, the first through sixteenth processing units PUO through PU15 of the tenth PIM device PIM9 generate the 17^{th} through 32^{nd} elements Z2(1)_17 through Z2(1)_32 of the second multi-head attention value vector Z2(1) of the first sequence n_seq=1. Although not shown, the first through sixteenth processing units of the eleventh through fifteenth PIM devices generate the 33^{rd} through 112^{th} elements Z2(1)_33 through Z2(1)_112 of the second multi-head attention value vector Z2(1) of the first sequence n_seq=1.

The first processing unit PUO of the sixteenth PIM device PIM15 performs the second matrix-vector multiplication on the 113^{th} element V2(1)_113 of the second value vector V2(1) and the second attention distribution vector S2(1) to generate the 113^{th} element Z2(1)_113 of the second multi-head attention value vector Z2(1) of the first sequence n_seq=1. The second processing unit PU1 of the sixteenth PIM device PIM15 performs the second matrix-vector multiplication on the 114^{th} element V2(1)_114 of the second value vector V2(1) and the second attention distribution vector S2(1) to generate the 114^{th} element Z2(1)_114 of the second multi-head attention value vector Z2(1) of the first sequence n_seq=1. In the same manner, the sixteenth processing unit PU15 of the sixteenth PIM device PIM15 performs the second matrix-vector multiplication on the 128^{th} element V2(1)_128 of the second value vector V2(1) and the second attention distribution vector S2(1) to generate the 128^{th} element Z2(1)_128 of the second multi-head attention value vector Z2(1) of the first sequence n_seq=1. In this manner, the first through sixteenth processing units PUO through PU15 of the sixteenth PIM device PIM15 generate the 113^{th} through 128^{th} elements Z2(1)_113 through Z2(1)_128 of the second multi-head attention value vector Z2(1) of the first sequence n_seq=1.

The first through 128^{th} elements V2(1)_1 through V2(1)_128 of the second value vector V2(1) of the first sequence n_seq=1 may be specified by the same row address and the same column address in the first through sixteenth memory banks BK0 through BK15 of each of the ninth through sixteenth PIM devices PIM8 through PIM15. Accordingly, the second matrix-vector multiplications generating the first through 128^{th} elements Z2(1)_1 through Z2(1)_128 of the second multi-head attention value vector Z2(1) of the first sequence n_seq=1 are performed in parallel in the ninth through sixteenth PIM devices PIM8 through PIM15. In addition, the first through 128^{th} elements V1(1)_1 through V1(1)_128 of the first value vector V1(1) of the first sequence n_seq=1 and the first through 128^{th} elements V2(1)_1 through V2(1)_128 of the second value vector V2(1) may be specified by the same row address and the same column address in the first through sixteenth memory banks BK0 through BK15 of each of the first through eighth PIM devices PIM0 through PIM7 and the first through sixteenth memory banks BK0 through BK15 of each of the ninth through sixteenth PIM devices PIM8 through PIM15, respectively. Accordingly, the second matrix-vector multiplications to generate the first through 128^{th} elements Z1(1)_1 through Z1(1)_128 of the first multi-head attention value vector Z1(1) of the first sequence n_seq=1 in the first through eighth PIM devices PIM0 through PIM7 and the second matrix-vector multiplications to generate the first through 128^{th} elements Z1(1)_1 through Z1(1)_128 of the second multi-head attention value vector Z2(1) of the first sequence n_seq=1 in the ninth through sixteenth PIM devices PIM8 through PIM15 may also be performed in parallel.

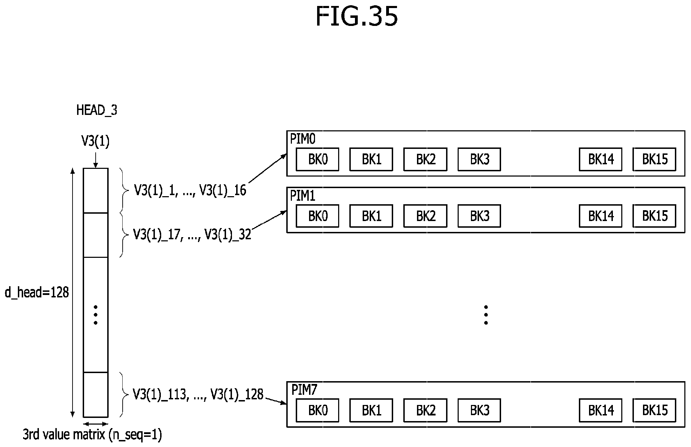

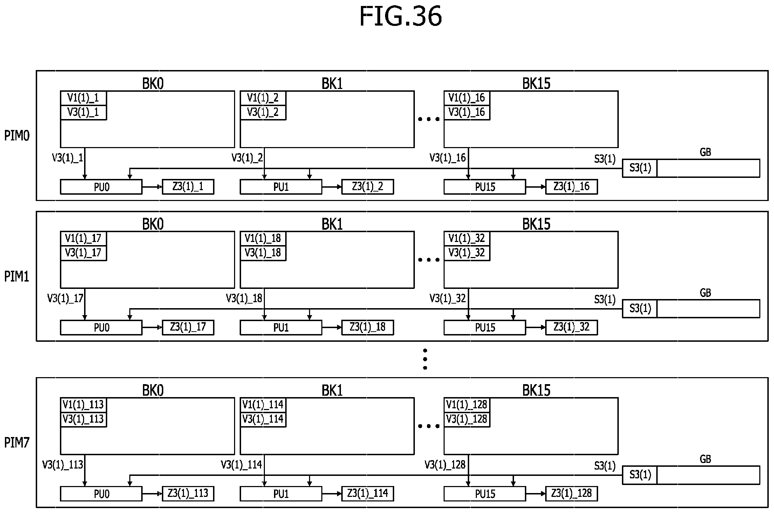

FIG. 35 is a diagram illustrating how a third value vector generated by a first sequence of a multi-head attention is distributed and stored in a first group of PIM devices according to an embodiment of the present disclosure. FIG. 36 is a diagram illustrating a process in which a third value vector generated in a first sequence of a multi-head attention is distributed in units of elements and stored in memory banks of a first group of PIM devices and in which second matrix-vector multiplication is performed on a third head according to an embodiment of the present disclosure.

Referring first to FIG. 35, a third value vector V3(1) generated in a first sequence n_seq=1 is stored in a manner similar to the manner in which the first value vector V1(1) of the first sequence n_seq=1 is stored as illustrated in FIG. 31 and FIG. 32, except that the third value vector V3(1) is stored in a different row of the memory banks from the first rows used to store the first value vector V1(1). That is, as illustrated in FIG. 35, first through sixteenth elements V3(1)_1 through V3(1)_16 of the third value vector V3(1) are distributed and stored in first through sixteenth memory banks BK0 through BK15 of the first PIM device PIM0, respectively. The 17^{th} through 32^{nd} elements V3(1)_17 through V3(1)_32 of the third value vector V3(1) are distributed and stored in the first through sixteenth memory banks BK0 through BK15 of the second PIM device PIM1, respectively. The 113^{th} through 128^{th} elements V3(1)_113 through V3(1)_128 of the third value vector V3(1) are distributed and stored in the first through sixteenth memory banks BK0 through BK15 of the eighth PIM device PIM7, respectively. Although not shown, in the same manner, the 33^{rd} through 112^{th} elements of the third value vector V3(1) are distributed in units of 16 elements and stored in the first through sixteenth memory banks BK0 through BK15 of the third through seventh PIM devices, respectively.

Referring specifically to FIG. 36, a first element V3(1)_1 of the third value vector V3(1) of the first sequence n_seq=1 is stored in the second row and the first through sixteenth columns of the first memory bank BK0 of the first PIM device PIM0. Here, the second row may be a row having a row address following the row address of the first row. The second element V3(1)_2 of the third value vector V3(1) of the first sequence n_seq=1 is stored in the second row and the first through sixteenth columns of the second memory bank BK1 of the first PIM device PIM0. Although not shown, in the same manner, the third through fifteenth elements of the third value vector V3(1) of the first sequence n_seq=1 are stored in the second row and the first through sixteenth columns of the third through fifteenth memory banks of the first PIM device PIM0, respectively. The sixteenth element V3(1)_16 of the third value vector V3(1) of the first sequence n_seq=1 is stored in the second row and the first through sixteenth columns of the sixteenth memory bank BK15 of the first PIM device PIM0.

The 17^{th} element V3(1)_17 of the third value vector V3(1) of the first sequence n_seq= 1 is stored in the second row and the first through sixteenth columns of the first memory bank BK0 of the second PIM device PIM1. The 18^{th} element V3(1)_18 of the third value vector V3(1) of the first sequence n_seq= 1 is stored in the second row and the first through sixteenth columns of the second memory bank BK1 of the second PIM device PIM1. Although not shown, in the same manner, the 19^{th} through 31^{st} elements of the third value vector V3(1) of the first sequence n_seq= 1 are stored in the second row and the first through sixteenth columns of the third to fifteenth memory banks of the second PIM device PIM1, respectively. The 32^{nd} element V3(1)_32 of the third value vector V3(1) of the first sequence n_seq= 1 is stored in the second row and the first through sixteenth columns of the sixteenth memory bank BK15 of the second PIM device PIM1.

Although not shown, the 33^{rd} through 48^{th} elements of the third value vector V3(1) of the first sequence n_seq= 1 are stored in the second row and the first through sixteenth columns of the first through sixteenth memory banks of the third PIM device PIM2, respectively. The 49^{th} through 64^{th} elements of the third value vector V3(1) of the first sequence n_seq=1 are stored in the second row and the first through sixteenth columns of the first through sixteenth memory banks of the fourth PIM device PIM3, respectively. The 65^{th} through 80^{th} elements of the third value vector V3(1) of the first sequence n_seq= 1 are stored in the second row and the first through sixteenth columns of the first through sixteenth memory banks of the fifth PIM device PIM4, respectively. The 81^{st} through 96^{th} elements of the third value vector V3(1) of the first sequence n_seq= 1 are stored in the second row and the first through sixteenth columns of the first through sixteenth memory banks of the sixth PIM device PIM5, respectively. In addition, the 97^{th} through 112^{th} elements of the third value vector V3(1) of the first sequence n_seq= 1 are stored in the second row and the first through sixteenth columns of the first through sixteenth memory banks of the seventh PIM device PIM6, respectively.

The 113^{th} element V3(1)_113 of the third value vector V3(1) of the first sequence n_seq= 1 is stored in the second row and the first through sixteenth columns of the first memory bank BK0 of the eighth PIM device PIM7. The 114^{th} element V3(1)_114 of the third value vector V3(1) of the first sequence n_seq= 1 is stored in the second row and first through sixteenth columns of the second memory bank BK1 of the eighth PIM device PIM7. Although not shown, in the same manner, the 115^{th} through 127^{th} elements of the third value vector V3(1) of the first sequence n_seq= 1 are stored in the second row and the first through sixteenth columns of the third through fifteenth memory banks of the eighth PIM device PIM7, respectively. The 128^{th} element V3(1)_128 of the third value vector V3(1) of the first sequence n_seq= 1 is stored in the second row and the first through sixteenth columns of the sixteenth memory bank BK15 of the eighth PIM device (PIM7).

In the same manner as above, when the third value vector V3(1) generated in the first sequence n seq=1 is written to the first group of PIM devices, that is, the first through eighth PIM devices PIM0 through PIM7, the third attention distribution vector S3(1) generated in the first sequence n_seq=1 is stored in each of the global buffers GBs of the first through eighth PIM devices PIM0 through PIM7. The third attention distribution vector S3(1) has the same size as the third attention score vector, which is the result of the first matrix-vector multiplication of the third key vector K3(1) and the third query vector Q3(1) generated in the first sequence n_seq=1. Accordingly, the third attention distribution vector S3(1) generated in the first sequence n_seq=1 has a size of n_seq × 1, that is, a size of 1 × 1.

The first through sixteenth processing units PUO through PU15 of the first through eighth PIM devices PIM0 through PIM7 perform second matrix-vector multiplications, on the first through 128^{th} elements V3(1)_1 through V3(1)_128 of the third value vector V3(1) and the third attention distribution vector S3(1), to generate the third multi-head attention value vector Z3(1) of the first sequence n_seq=1. Similar to the first multi-head attention value vector Z1(1) and the second multi-head attention value vector Z2(1) of the first sequence n seq=1, the third multi-head attention value vector Z3(1) of the first sequence n_seq=1 also has a size of d_head × 1, namely, a size of 128 × 1. That is, first through 128^{th} elements Z3(1)_1 through Z3(1)_128 of the third multi-head attention value vector Z3(1) of the first sequence n_seq=1 are generated when the second matrix-vector multiplications on the third head HEAD_3 of the first sequence n_seq=1 are performed in the first through sixteenth processing units PUO through PU15 of each of the first through eighth PIM devices PIM0 through PIM7.

More specifically, the first processing unit PUO of the first PIM device PIM0 performs the second matrix-vector multiplication on the first element V3(1)_1 of the third value vector V3(1) and the third attention distribution vector S3(1) to generate the first element Z3(1)_1 of the third multi-head attention value vector Z3(1) of the first sequence n_seq=1. The second processing unit PU1 of the first PIM device PIM0 performs the second matrix-vector multiplication on the second element V3(1)_2 of the third value vector V3(1) and the third attention distribution vector S3(1) to generate the second element Z3(1)_2 of the third multi-head attention value vector Z3(1) of the first sequence n_seq=1. Similarly, the sixteenth processing unit PU15 of the first PIM device PIM0 performs the second matrix-vector multiplication on the sixteenth element V3(1)_16 of the third value vector V3(1) and the third attention distribution vector S3(1) to generate the sixteenth element Z3(1)_16 of the third multi-head attention value vector Z3(1) of the first sequence n_seq=1. In this manner, the first through sixteenth processing units PUO through PU15 of the first PIM device PIM0 generate the first through sixteenth elements Z3(1)_1 through Z3(1)_16 of the third multi-head attention value vector Z3(1) of the first sequence n_seq=1.

The first processing unit PUO of the second PIM device PIM1 performs the second matrix-vector multiplication on the 17^{th} element V3(1)_17 of the third value vector V3(1) and the third attention distribution vector S3(1) to generate the 17^{th} element Z3(1)_17 of the third multi-head attention value vector Z3(1) of the first sequence n_seq=1. The second processing unit PU1 of the second PIM device PIM1 performs the second matrix-vector multiplication on the 18^{th} element V3(1)_18 of the third value vector V3(1) and the third attention distribution vector S3(1) to generate the 18^{th} element Z3(1)_18 of the third multi-head attention value vector Z3(1) of the first sequence n_seq=1. In the same manner, the sixteenth processing unit PU15 of the second PIM device PIM1 performs the second matrix-vector multiplication on the 32^{nd} element V3(1)_32 of the third value vector V3(1) and the third attention distribution vector S3(1) to generate the 32^{nd} element Z3(1)_32 of the third multi-head attention value vector Z3(1) of the first sequence n_seq=1. In this manner, the first through sixteenth processing units PUO through PU15 of the second PIM device PIM1 generate the 17^{th} through 32^{nd} elements Z3(1)_17 through Z3(1)_32 of the third multi-head attention value vector Z3(1) of the first sequence n_seq=1. Although not shown, in the same manner, the first through sixteenth processing units of the third through seventh PIM devices generate the 33^{rd} through 112^{th} elements Z3(1)_33 through Z3(1)_112 of the third multi-head attention value vector Z3(1) of the first sequence n_seq=1.

The first processing unit PUO of the eighth PIM device PIM7 performs the second matrix-vector multiplication on the 113^{th} element V3(1)_113 of the third value vector V3(1) and the third attention distribution vector S3(1) to generate the 113^{th} element Z3(1)_113 of the third multi-head attention value vector Z3(1) of the first sequence n_seq=1. The second processing unit PU1 of the eighth PIM device PIM7 performs the second matrix-vector multiplication on the 114^{th} element V3(1)_114 of the third value vector V3(1) and the third attention distribution vector S3(1) to generate the 114^{th} element Z3(1)_114 of the third multi-head attention value vector Z3(1) of the first sequence n_seq=1. In the same manner, the sixteenth processing unit PU15 of the eighth PIM device PIM7 performs the second matrix-vector multiplication on the 128^{th} element V3(1)_128 of the third value vector V3(1) and the third attention distribution vector S3(1) to generate the 128^{th} element Z3(1)_128 of the third multi-head attention value vector Z3(1) of the first sequence n_seq=1. In this manner, the first through sixteenth processing units PUO through PU15 of the eighth PIM device PIM7 generate the 113^{th} through 128^{th} elements Z3(1)_113 through Z3(1)_128 of the third multi-head attention value vector Z3(1) of the first sequence n_seq=1. The second matrix-vector multiplications generating the first through 128^{th} elements Z3(1)_1 through Z3(1)_128 of the third multi-head attention value vector Z3(1) of the first sequence n_seq=1 are performed in parallel in the first through eighth PIM devices PIM0 through PIM7.

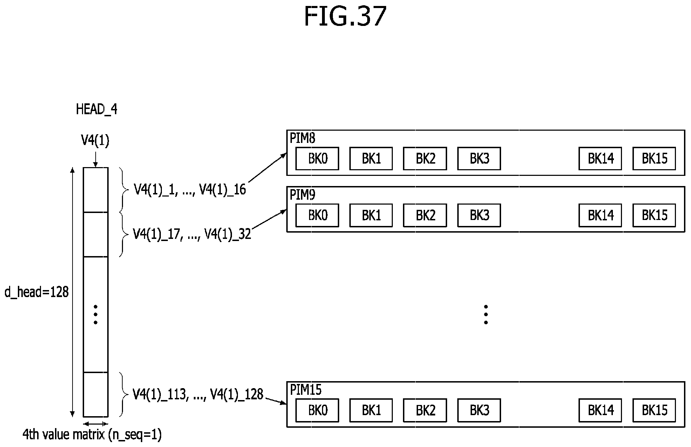

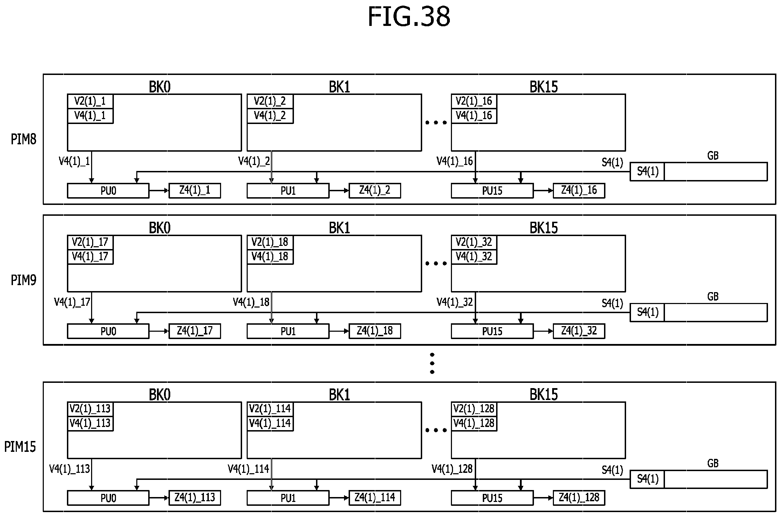

FIG. 37 is a diagram illustrating how a fourth value vector generated in a first sequence of a multi-head attention is distributed and stored in a second group of PIM devices according to an embodiment of the present disclosure. FIG. 38 is a diagram illustrating a process in which a fourth value vector generated in a first sequence of a multi-head attention is distributed in units of elements and stored in memory banks of a second group of PIM devices and in which second matrix-vector multiplication performed on a fourth head according to an embodiment of the present disclosure.

Referring first to FIG. 37, a fourth value vector V4(1) generated in a first sequence n_seq=1 is stored in a manner similar to the manner in which the third value vector V3(1) generated in the first sequence n_seq=1 is stored as illustrated in FIG. 35 and FIG. 36, except that the fourth value vector V4(1) is stored in ninth through sixteenth PIM devices PIM8 through PIM15. That is, as illustrated in FIG. 37, first through sixteenth elements V4(1)_1 through V4(1)_16 of the fourth value vector V4(1) are distributed and stored in first through sixteenth memory banks BK0 through BK15 of the ninth PIM device PIM8, respectively. The 17^{th} through 32^{nd} elements V4(1)_17 through V4(1)_32 of the fourth voltage vector V4(1) are distributed and stored in the first through sixteenth memory banks BK0 through BK15 of the tenth PIM device PIM9, respectively. The 113^{th} through 128^{th} elements V4(1)_113 through V4(1)_128 of the fourth value vector V4(1) are distributed and stored in the first through sixteenth memory banks BK0 through BK15 of the sixteenth PIM device PIM15, respectively. Although not shown, in the same manner, the 33^{rd} through 112^{th} elements of the fourth value vector V4(1) are distributed in units of 16 elements and stored in the eleventh through fifteenth PIM devices, respectively.

Referring specifically to FIG. 38, the first element V4(1)_1 of the fourth value vector V4(1) of the first sequence n_seq=1 is stored in the second row and the first through sixteenth columns of the first memory bank BK0 of the ninth PIM device PIM8. The second element V4(1)_2 of the fourth value vector V4(1) of the first sequence n_seq=1 is stored in the second row and the first through sixteenth columns of the second memory bank BK1 of the ninth PIM device PIM8. Although not shown, in the same manner, the third through fifteenth elements of the fourth value vector V4(1) of the first sequence n_seq=1 are stored in the second row and the first through sixteenth columns of the third through fifteenth memory banks of the ninth PIM device PIM8, respectively. The sixteenth element V4(1)_16 of the fourth value vector V4(1) of the first sequence n_seq=1 is stored in the second row and the first through sixteenth columns of the sixteenth memory bank BK15 of the ninth PIM device PIM8.

The 17^{th} element V4(1)_17 of the fourth value vector V4(1) of the first sequence n_seq=1 is stored in the second row and the first through sixteenth columns of the first memory bank BK0 of the tenth PIM device PIM9. The 18^{th} element V4(1)_18 of the fourth value vector V4(1) of the first sequence n_seq=1 is stored in the second row and the first through sixteenth columns of the second memory bank BK1 of the tenth PIM device PIM9. Although not shown, in the same manner, the 19^{th} through 31^{st} elements of the fourth value vector V4(1) of the first sequence n_seq=1 are stored in the second row and the first through sixteenth columns of the third through fifteenth memory banks of the tenth PIM device PIM9, respectively. The 32^{nd} element V4(1)_32 of the fourth value vector V4(1) of the first sequence n_seq=1 is stored in the second row and the first through sixteenth columns of the sixteenth memory bank BK15 of the tenth PIM device PIM9.

Although not shown, the 33^{rd} through 48^{th} elements of the fourth value vector V4(1) of the first sequence n_seq=1 are stored in the second row and the first through sixteenth columns of the first through sixteenth memory banks of the eleventh PIM device PIM10, respectively. The 49^{th} through 64^{th} elements of the fourth value vector V4(1) of the first sequence n_seq=1 are stored in the second row and the first through sixteenth columns of the first through sixteenth memory banks of the twelfth PIM device PIM11, respectively. The 65^{th} through 80^{th} elements of the fourth value vector V4(1) of the first sequence n_seq=1 are stored in the second row and the first through sixteenth columns of the first through sixteenth memory banks of the thirteenth PIM device PIM12, respectively. The 81^{st} through 96^{th} elements of the fourth value vector V4(1) of the first sequence n_seq=1 are stored in the second row and the first through sixteenth columns of the first through sixteenth memory banks of the fourteenth PIM device PIM13, respectively. In addition, the 97^{th} through 112^{th} elements of the fourth value vector V4(1) of the first sequence n_seq=1 are stored in the second row and the first through sixteenth columns of the first through sixteenth memory banks of the fifteenth PIM device PIM14, respectively.

The 113^{th} element V4(1)_113 of the fourth value vector V4(1) of the first sequence n_seq=1 is stored in the second row and the first through sixteenth columns of the first memory bank BK0 of the sixteenth PIM device PIM15. The 114^{th} element V4(1)_114 of the fourth value vector V4(1) of the first sequence n_seq=1 is stored in the second row and the first through sixteenth columns of the second memory bank BK1 of the sixteenth PIM device PIM15. Although not shown, in the same manner, the 115^{th} through 127^{th} elements of the fourth value vector V4(1) of the first sequence n_seq=1 are stored in the second row and the first through sixteenth columns of the third through fifteenth memory banks of the sixteenth PIM device PIM15, respectively. The 128^{th} element V4(1)_128 of the fourth value vector V4(1) of the first sequence n_seq=1 is stored in the second row and the first through sixteenth columns of the sixteenth memory bank BK15 of the sixteenth PIM device PIM15.

In the same manner as above, when the fourth value vector V4(1) generated in the first sequence n_seq=1 is written to the second group of PIM devices, that is, the ninth through sixteenth PIM devices PIM8 through PIM15, the fourth attention distribution vector S4(1) generated in the first sequence n_seq=1 is stored in each of the global buffers GBs of the ninth through sixteenth PIM devices PIM8 through PIM15. The fourth attention distribution vector S4(1) has the same size as the fourth attention score vector, which is the result of the first matrix-vector multiplication of the fourth key vector K4(1) and the fourth query vector Q4(1) generated in the first sequence n_seq=1. Accordingly, the fourth attention distribution vector S4(1) generated in the first sequence n_seq=1 has a size of n_seq × 1, that is, a size of 1 × 1.

The first through sixteenth processing units PUO through PU15 of the ninth through sixteenth PIM devices PIM8 through PIM15 perform the second matrix-vector multiplications, on the first through 128^{th} elements V4(1)_1 through V4(1)_128 of the fourth value vector V4(1) and the fourth attention distribution vector S4(1), to generate the fourth multi-head attention value vector Z4(1) of the first sequence n_seq=1. Similar to the first through third multi-head attention value vectors Z1(1) through Z3(1) of the first sequence n_seq=1, the fourth multi-head attention value vector Z4(1) of the first sequence n_seq=1 also has a size of d_head × 1, namely, a size of 128 × 1. That is, first through 128^{th} elements Z4(1)_1 through Z4(1)_128 of the fourth multi-head attention value vector Z4(1) of the first sequence n_seq=1 are generated when the second matrix-vector multiplications on the fourth head HEAD_4 of the first sequence n_seq=1 are performed in the first through sixteenth processing units PUO through PU15 of each of the ninth through sixteenth PIM devices PIM8 through PIM15.

More specifically, the first through sixteenth processing units PUO through PU15 of the ninth PIM device PIM8 perform the second matrix-vector multiplications on the first through sixteenth elements V4(1)_1 through V4(1)_16 of the fourth value vector V4(1) and the fourth attention distribution vector S4(1) to generate the first through sixteenth elements Z4(1)_1 through Z4(1)_16 of the fourth multi-head attention value vector Z4(1) of the first sequence n_seq=1. The first through sixteenth processing units PUO through PU15 of the tenth PIM device PIM9 perform the second matrix-vector multiplications on the 17^{th} through 32^{nd} elements V4(1)_17 through V4(1)_32 of the fourth value vector V4(1) and the fourth attention distribution vector S4(1) to generate the 17^{th} through 32^{nd} elements Z4(1)_17 through Z4(1)_32 of the fourth multi-head attention value vector Z4(1) of the first sequence n_seq=1. The first through sixteenth processing units PUO through PU15 of the sixteenth PIM device PIM15 perform the second matrix-vector multiplications on the 113^{th} through 128^{th} elements V4(1)_113 through V4(1)_128 of the fourth value vector V4(1) and the fourth attention distribution vector S4(1) to generate the 113^{th} through 128^{th} elements Z4(1)_113 through Z4(1)_128 of the fourth multi-head attention value vector Z4(1) of the first sequence n_seq=1. Although not shown, the first through sixteenth processing units of the eleventh through fifteenth PIM devices perform the second matrix-vector multiplications on the 33^{rd} through 112^{th} elements of the fourth value vector V4(1) and the fourth attention distribution vector S4(1) to generate the 33^{rd} through 112^{th} elements Z4(1)_33 through Z4(1)_112 of the fourth multi-head attention value vector Z4(1) of the first sequence n_seq=1. The second matrix-vector multiplications generating the first through 128^{th} elements Z4(1)_1 through Z4(1)_128 of the fourth multi-head attention value vector Z4(1) of the first sequence n_seq=1 are performed in parallel in the ninth through sixteenth PIM devices PIM8 through PIM15.

The second matrix-vector multiplications to generate the first through 128^{th} elements Z3(1)_1 through Z3(1)_128) of the third multi-head attention value vector Z3(1) of the first sequence n_seq=1 in the first through eighth PIM devices PIM0 through PIM7 and the second matrix-vector multiplications to generate the first through 128^{th} elements Z4(1)_1 through Z4(1)_128 of the fourth multi-head attention value vector Z4(1) of the first sequence n_seq=1 in the ninth through sixteenth PIM devices PIM8 through PIM15 may be performed in parallel.

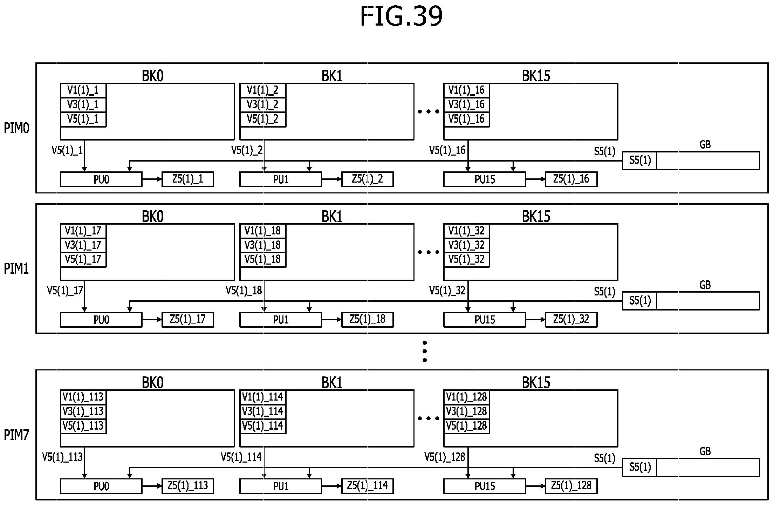

FIG. 39 is a diagram illustrating a process in which a fifth value vector generated in a first sequence of a multi-head attention is distributed in units of elements and stored in memory banks of a first group of PIM devices, and in which second matrix-vector multiplication is performed on a fifth head according to an embodiment of the present disclosure.

Referring to FIG. 39, first through 128^{th} elements V5(1)_1 through V5(1)_128 of a fifth value vector V5(1) generated in a first sequence n_seq=1 are stored in first through eighth PIM devices PIM0 through PIM7 in units of 16 elements. The first element V5(1)_1 of the fifth value vector V5(1) is stored in the third row and the first through sixteenth columns of the first memory bank BK0 of the first PIM device PIM0. Here, the third row may be the row having a row address following the row address of the second row. The second element V5(1)_2 of the fifth value vector V5(1) is stored in the third row and the first through sixteenth columns of the second memory bank BK1 of the first PIM device PIM0. Although not shown, in the same manner, the third through fifteenth elements of the fifth value vector V5(1) are stored in the third row and the first through sixteenth columns of each of the third through fifteenth memory banks of the first PIM device PIM0, respectively. The sixteenth element V5(1)_16 of the fifth value vector V5(1) is stored in the third row and the first through sixteenth columns of the sixteenth memory bank BK15 of the first PIM device PIM0.

The 17^{th} element V5(1)_17 of the fifth value vector V5(1) of the first sequence n_seq=1 is stored in the third row and the first through sixteenth columns of the first memory bank BK0 of the second PIM device PIM1. The 18^{th} element V5(1)_18 of the fifth value vector V5(1) of the first sequence n_seq=1 is stored in the third row and the first through sixteenth columns of the second memory bank BK1 of the second PIM device PIM1. The 32^{nd} element V5(1)_32 of the fifth value vector V5(1) of the first sequence n_seq=1 is stored in the third row and the first through sixteenth columns of the sixteenth memory bank BK15 of the second PIM device PIM1. Although not shown, in the same manner, the 19^{th} through 31^{st} elements of the fifth value vector V5(1) of the first sequence n_seq=1 are stored in the third row and the first through sixteenth columns of each of the third through fifteenth memory banks of the second PIM device PIM1, respectively.

Although not shown, the 33^{rd} through 48^{th} elements of the fifth value vector V5(1) of the first sequence n_seq=1 are stored in the third row and the first through sixteenth columns of each of the first through sixteenth memory banks of the third PIM device PIM2, respectively. The 49^{th} through 64^{th} elements of the fifth value vector V5(1) of the first sequence n_seq=1 are stored in the third row and the first through sixteenth columns of each of the first through sixteenth memory banks of the fourth PIM device PIM3, respectively. The 65^{th} through 80^{th} elements of the fifth value vector V5(1) of the first sequence n_seq=1 are stored in the third row and the first through sixteenth columns of each of the first through sixteenth memory banks of the fifth PIM device PIM4, respectively. The 81^{st} through 96^{th} elements of the fifth value vector V5(1) of the first sequence n_seq=1 are stored in the third row and the first through sixteenth columns of each of the first through sixteenth memory banks of the sixth PIM device PIM5, respectively. In addition, the 97^{th} through 112^{th} elements of the fifth value vector V5(1) of the first sequence n_seq=1 are stored in the third row and the first through sixteenth columns of each of the first through sixteenth memory banks of the seventh PIM device PIM6, respectively.

The 113^{th} element V5(1)_113 of the fifth value vector V5(1) of the first sequence n_seq=1 is stored in the third row and the first through sixteenth columns of the first memory bank BK0 of the eighth PIM device PIM7. The 114^{th} element V5(1)_114 of the fifth value vector V5(1) of the first sequence n_seq=1 is stored in the third row and the first through sixteenth columns of the second memory bank BK1 of the eighth PIM device PIM7. The 128^{th} element V5(1)_128 of the fifth value vector V5(1) of the first sequence n_seq=1 is stored in the third row and the first through sixteenth columns of the sixteenth memory bank BK15 of the eighth PIM device PIM7. Although not shown, in the same manner, the 115^{th} through 127^{th} elements of the fifth value vector V5(1) of the first sequence n_seq=1 are stored in the third row and the first through sixteenth columns of the third through fifteenth memory banks of the eighth PIM device PIM7, respectively.

In the same manner as above, when the fifth value vector V5(1) generated in the first sequence n_seq=1 is written to the first group of PIM devices, that is, the first through eighth PIM devices PIM0 through PIM7, the fifth attention distribution vector S5(1) generated in the first sequence n_seq=1 is stored in each of the global buffers GBs of the first through eighth PIM devices PIM0 through PIM7. The fifth attention distribution vector S5(1) has the same size as the fifth attention score vector, which is the result of the first matrix-vector multiplication of the fifth key vector and the fifth query vector generated in the first sequence n_seq=1. Accordingly, the fifth attention distribution vector S5(1) generated in the first sequence n_seq=1 has a size of n_seq × 1, that is, a size of 1 × 1.

The first through sixteenth processing units PUO through PU15 of each of the first through eighth PIM devices PIM0 through PIM7 perform second matrix-vector multiplications, on the first through 128^{th} elements V5(1)_1 through V5(1)_128 of the fifth value vector V5(1) and the fifth attention distribution vector S5(1), to generate the fifth multi-head attention value vector Z5(1) of the first sequence n_seq=1. The fifth multi-head attention value vector Z5(1) of the first sequence n_seq=1 has a size of d_head × 1, namely, a size of 128 × 1. That is, first through 128^{th} elements Z5(1)_1 through Z5(1)_128 of the fifth multi-head attention value vector Z5(1) of the first sequence n_seq=1 are generated when the second matrix-vector multiplications for the fifth head HEAD_5 of the first sequence n_seq=1 are performed in the first through sixteenth processing units PUO through PU15 of each of the first through eighth PIM devices PIM0 through PIM7.

More specifically, the first through sixteenth processing units PUO through PU15 of the first PIM device PIM0 perform the second matrix-vector multiplications on the first through sixteenth elements V5(1)_1 through V5(1)_16 of the fifth value vector V5(1) and the fifth attention distribution vector S5(1) to generate the first through sixteenth elements Z5(1)_1 through Z5(1)_16 of the fifth multi-head attention value vector Z5(1) of the first sequence n_seq=1. The first through sixteenth processing units PUO through PU15 of the second PIM device PIM1 perform the second matrix-vector multiplications on the 17^{th} through 32^{nd} elements V5(1)_17 through V5(1)_32 of the fifth value vector V5(1) and the fifth attention distribution vector S5(1) to generate the 17^{th} through 32^{nd} elements Z5(1)_17 through Z5(1)_32 of the fifth multi-head attention value vector Z5(1) of the first sequence n_seq=1. The first through sixteenth processing units PUO through PU15 of the eighth PIM device PIM7 perform the second matrix-vector multiplications on the 113^{th} through 128^{th} elements V5(1)_113 through V5(1)_128 of the fifth value vector V5(1) and the fifth attention distribution vector S5(1) to generate the 113^{th} through 128^{th} elements Z5(1)_113 through Z5(1)_128 of the fifth multi-head attention value vector Z5(1) of the first sequence n_seq=1. Although not shown, the first through sixteenth processing units of each of the third through seventh PIM devices perform the second matrix-vector multiplications on the 33^{rd} through 112^{th} elements of the fifth value vector V5(1) and the fifth attention distribution vector S5(1) to generate the 33^{rd} through 112^{th} elements Z5(1)_33 through Z5(1)_112 of the fifth multi-head attention value vector Z5(1) of the first sequence n_seq=1. The second matrix-vector multiplications generating the first through 128^{th} elements Z5(1)_1 through Z5(1)_128 of the fifth multi-head attention value vector Z5(1) of the first sequence n_seq=1 are performed in parallel in the first through eighth PIM devices PIM0 through PIM7.

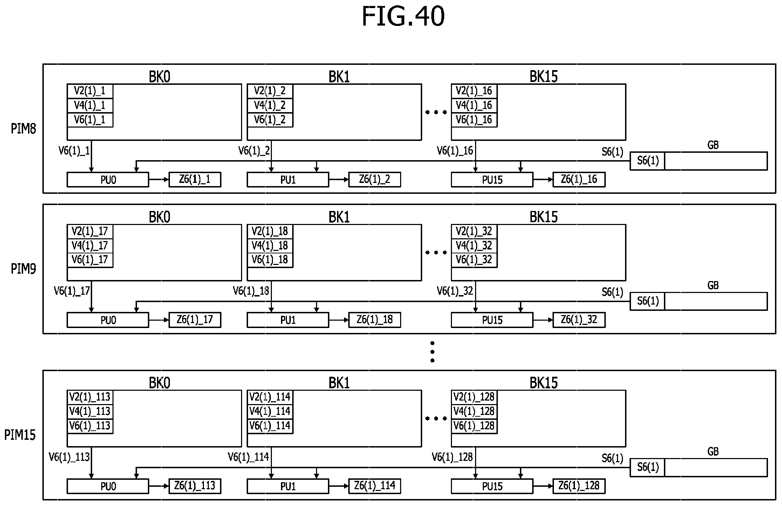

FIG. 40 is a diagram illustrating a process in which the sixth value vector generated in a first sequence of a multi-head attention is distributed in units of elements and stored in memory banks of a second group of PIM devices and in which second matrix-vector multiplication performed on a sixth head according to an embodiment of the present disclosure.

Referring to FIG. 40, first through 128^{th} elements V6(1)_1 through V6(1)_128 of a sixth value vector V6(1) generated in the first sequence n_seq=1 are divided into units of 16 elements and stored in the ninth through sixteenth PIM devices PIM8 through PIM15. The first element V6(1)_1 of the sixth value vector V6(1) of the first sequence n_seq=1 is stored in the third row and the first through sixteenth columns of the first memory bank BK0 of the ninth PIM device PIM8. The second element V6(1)_2 of the sixth value vector V6(1) of the first sequence n_seq=1 is stored in the third row and the first through sixteenth columns of the second memory bank BK1 of the ninth PIM device PIM8. The sixteenth element V6(1)_16 of the sixth value vector V6(1) of the first sequence n_seq=1 is stored in the third row and the first through sixteenth columns of the sixteenth memory bank BK15 of the ninth PIM device PIM8. Although not shown, in the same manner, the third through fifteenth elements of the sixth value vector V6(1) of the first sequence n_seq=1 are stored in the third through fifteenth memory banks of the ninth PIM device PIM8, respectively. Each of the third through fifteenth elements of the sixth value vector V6(1) of the first sequence n_seq=1 is stored in the third row and the first through sixteenth columns of a corresponding memory bank of the ninth PIM device PIM8.

The 17^{th} element V6(1)_17 of the sixth value vector V6(1) of the first sequence n_seq=1 is stored in the third row and the first through sixteenth columns of the first memory bank BK0 of the tenth PIM device PIM9. The 18^{th} element V6(1)_18 of the sixth value vector V6(1) of the first sequence n_seq=1 is stored in the third row and the first through sixteenth columns of the second memory bank BK1 of the tenth PIM device PIM9. The 32^{nd} element V6(1)_32 of the sixth value vector V6(1) of the first sequence n_seq=1 is stored in the third row and the first through sixteenth columns of the sixteenth memory bank BK15 of the tenth PIM device PIM9. Although not shown, in the same manner, the 19^{th} through 31^{st} elements of the sixth value vector V6(1) of the first sequence n_seq=1 are stored in the third through fifteenth memory banks of the tenth PIM device PIM9, respectively. Each of the 19^{th} through 31^{st} elements of the sixth value vector V6(1) of the first sequence n_seq=1 is stored in the third row and the first through sixteenth columns of a corresponding memory bank of the tenth PIM device PIM9.

Although not shown, the 33^{rd} through 48^{th} elements of the sixth value vector V6(1) of the first sequence n_seq=1 are stored in the first through sixteenth memory banks of the eleventh PIM device PIM 10, respectively. Each of the 33^{rd} through 48^{th} elements of the sixth value vector V6(1) of the first sequence n_seq=1 is stored in the third row and the first through sixteenth columns of a corresponding memory bank of the eleventh PIM device PIM10. The 49^{th} through 64^{th} elements of the sixth value vector V6(1) of the first sequence n_seq=1 are stored in the first through sixteenth memory banks of the twelfth PIM device PIM11, respectively. Each of the 49^{th} through 64^{th} elements of the sixth value vector V6(1) of the first sequence n_seq=1 is stored in the third row and the first through sixteenth columns of a corresponding memory bank of the twelfth PIM device PIM11. The 65^{th} through 80^{th} elements of the sixth value vector V6(1) of the first sequence n_seq=1 are stored in the first through sixteenth memory banks of the thirteenth PIM device PIM12, respectively. Each of the 65^{th} through 80^{th} elements of the sixth value vector V6(1) of the first sequence n_seq=1 is stored in the third row and the first through sixteenth columns of a corresponding memory bank of the thirteenth PIM device PIM12. The 81^{st} through 96^{th} elements of the sixth value vector V6(1) of the first sequence n_seq=1 are stored in the first through sixteenth memory banks of the fourteenth PIM device PIM13, respectively. Each of the 81^{st} through 96^{th} elements of the sixth value vector V6(1) of the first sequence n_seq=1 is stored in the third row and the first through sixteenth columns of a corresponding memory bank of the fourteenth PIM device PIM13. In addition, the 97^{th} through 112^{th} elements of the sixth value vector V6(1) of the first sequence n_seq=1 are stored in the first through sixteenth memory banks of the fifteenth PIM device PIM14, respectively. Each of the 97^{th} through 112^{th} elements of the sixth value vector V6(1) of the first sequence n_seq=1 is stored in the third row and the first through sixteenth columns of a corresponding memory bank of the fifteenth PIM device PIM14.

The 113^{th} element V6(1)_113 of the sixth value vector V6(1) of the first sequence n_seq=1 is stored in the third row and the first through sixteenth columns of the first memory bank BK0 of the sixteenth PIM device PIM15. The 114^{th} element V6(1)_114 of the sixth value vector V6(1) of the first sequence n_seq=1 is stored in the third row and the first through sixteenth columns of the second memory bank BK1 of the sixteenth PIM device PIM15. The 128^{th} element V6(1)_128 of the sixth value vector V6(1) of the first sequence n_seq=1 is stored in the third row and the first through sixteenth columns of the sixteenth memory bank BK15 of the sixteenth PIM device PIM15. Although not shown, in the same manner, the 115^{th} through 127^{th} elements of the sixth value vector V6(1) of the first sequence n_seq=1 are stored in the third through fifteenth memory banks of the sixteenth PIM device PIM15, respectively. Each of the 115^{th} through 127^{th} elements of the sixth value vector V6(1) of the first sequence n_seq=1 is stored in the third row and the first through sixteenth columns of a corresponding memory bank of the sixteenth PIM device PIM15.

In the same manner as above, when the sixth value vector V6(1) generated in the first sequence n_seq=1 is written to the second group of PIM devices, that is, the ninth through sixteenth PIM devices PIM8 through PIM15, the sixth attention distribution vector S6(1) generated in the first sequence n_seq=1 is stored in each of the global buffers GBs of the ninth through sixteenth PIM devices PIM8 through PIM15. The sixth attention distribution vector S6(1) has the same size as the sixth attention score vector, which is the result of the first matrix-vector multiplication on the sixth key vector K6(1) and the sixth query vector Q6(1) generated in the first sequence n_seq=1. Accordingly, the sixth attention distribution vector S6(1) generated in the first sequence n_seq=1 has a size of n_seq × 1, that is, a size of 1 × 1.

The first through sixteenth processing units PUO through PU15 of each of the ninth through sixteenth PIM devices PIM8 through PIM15 perform the second matrix-vector multiplications, on the first through 128^{th} elements V6(1)_1 through V6(1)_128 of the sixth value vector V6(1) and the sixth attention distribution vector S6(1), to generate the sixth multi-head attention value vector Z6(1) of the first sequence n_seq=1. The sixth multi-head attention value vector Z6(1) of the first sequence n_seq=1 has a size of d_head × 1, namely, a size of 128 × 1. That is, first through 128^{th} elements Z6(1)_1 through Z6(1)_128 of the sixth multi-head attention value vector Z6(1) of the first sequence n_seq=1 are generated when the second matrix-vector multiplications on the sixth head HEAD_6 of the first sequence n_seq=1 are performed in the first through the sixteenth processing units PUO through PU15 of each of the ninth through sixteenth PIM devices PIM8 through PIM15.

More specifically, the first through sixteenth processing units PUO through PU15 of the ninth PIM device PIM8 perform the second matrix-vector multiplications on the first through sixteenth elements V6(1)_1 through V6(1)_16 and the sixth attention distribution vector S6(1) to generate the first through sixteenth elements Z6(1)_1 through Z6(1)_16 of the sixth multi-head attention value vector Z6(1) of the first sequence n_seq=1. The first through sixteenth processing units PUO through PU15 of the tenth PIM device PIM9 perform the second matrix-vector multiplications on the 17^{th} through 32^{nd} elements V6(1)_17 through V6(1)_32 of the sixth value vector V6(1) and the sixth attention distribution vector S6(1) to generate the 17^{th} through 32^{nd} elements Z6(1)_17 through Z6(1)_32 of the sixth multi-head attention value vector Z6(1) of the first sequence n_seq=1. The first through sixteenth processing units PUO through PU15 of the sixteenth PIM device PIM15 perform the second matrix-vector multiplications on the 113^{th} through 128^{th} elements V6(1)_113 through V6(1)_128 of the sixth value vector V6(1) and the sixth attention distribution vector S6(1) to generate the 113^{th} through 128^{th} elements Z6(1)_113 through Z6(1)_128 of the sixth multi-head attention value vector Z6(1) of the first sequence n_seq=1. Although not shown, the first through sixteenth processing units of each of the eleventh through fifteenth PIM devices perform the second matrix-vector multiplications on the 33^{rd} through 112^{th} elements of the sixth value vector V6(1) and the sixth attention distribution vector S6(1) to generate the 33^{rd} through 112^{th} elements Z6(1)_33 through Z6(1)_112 of the sixth multi-head attention value vector Z6(1) of the first sequence n_seq=1. The second matrix-vector multiplications generating the first through 128^{th} elements Z6(1)_1 through Z6(1)_128 of the sixth multi-head attention value vector Z6(1) of the first sequence n_seq=1 are performed in parallel in the ninth through sixteenth PIM devices PIM8 through PIM15.

The second matrix-vector multiplications to generate the first through 128^{th} elements Z5(1)_1 through Z5(1)_128 of the fifth multi-head attention value vector Z5(1) of the first sequence n_seq=1 in the first through eighth PIM devices PIM0 through PIM7 and the second matrix-vector multiplications to generate the first through 128^{th} elements Z6(1)_1 through Z6(1)_128 of the sixth multi-head attention value vector Z6(1) of the first sequence n_seq=1 in the ninth through sixteenth PIM devices PIM8 through PIM15 may be performed in parallel.

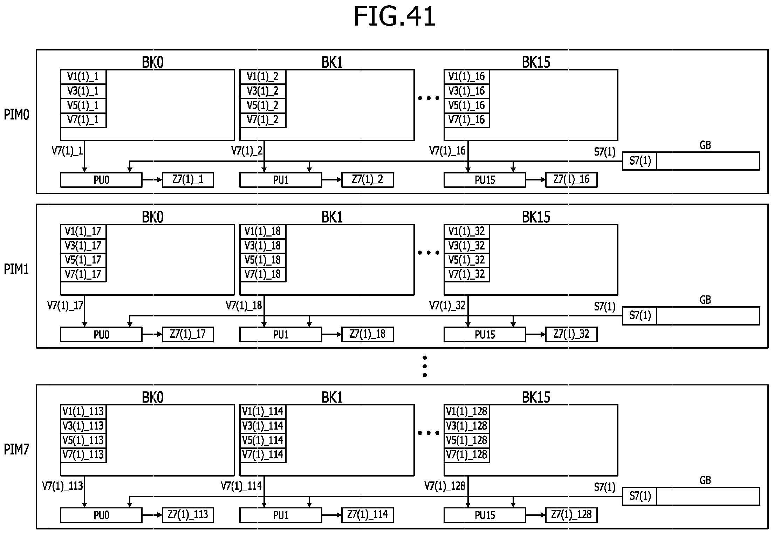

FIG. 41 is a diagram illustrating a process in which the seventh value vector generated in a first sequence of a multi-head attention is distributed in units of elements and stored in memory banks of a first group of PIM devices and in which second matrix-vector multiplication performed on a seventh head according to an embodiment of the present disclosure.

Referring to FIG. 41, first through 128^{th} elements V7(1)_1 through V7(1)_128 of a seventh value vector V7(1) generated in a first sequence n_seq=1 are divided in units of 16 elements and stored in first through eighth PIM devices PIM0 through PIM7. The first element V7(1)_1 of the seventh value vector V7(1) of the first sequence n_seq=1 is stored in the fourth row and the first through sixteenth columns of the first memory bank BK0 of the first PIM device PIM0. Here, the fourth row may be a row having a row address following the row address of the third row. The second element V7(1)_2 of the seventh value vector V7(1) of the first sequence n_seq=1 is stored in the fourth row and the first through sixteenth columns of the second memory bank BK1 of the first PIM device PIM0. The sixteenth element V7(1)_16 of the seventh value vector V7(1) of the first sequence n_seq=1 is stored in the fourth row and the first through sixteenth columns of the sixteenth memory bank BK15 of the first PIM device PIM0. Although not shown, in the same manner, the third through fifteenth elements of the seventh value vector V7(1) of the first sequence n_seq=1 are stored in the third through fifteenth memory banks of the first PIM device PIM0, respectively. Each of the third through fifteenth elements of the seventh value vector V7(1) of the first sequence n_seq=1 is stored in the fourth row and the first through sixteenth columns of a corresponding memory bank of the first PIM device PIM0.

The 17^{th} element V7(1)_17 of the seventh value vector V7(1) of the first sequence n_seq=1 is stored in the fourth row and the first through sixteenth columns of the first memory bank BK0 of the second PIM device PIM1. The 18^{th} element V7(1)_18 of the seventh value vector V7(1) of the first sequence n_seq=1 is stored in the fourth row and the first through the sixteenth columns of the second memory bank BK1 of the second PIM device PIM1. The 32^{nd} element V7(1)_32 of the seventh value vector V7(1) of the first sequence n_seq=1 is stored in the fourth row and the first through sixteenth columns of the sixteenth memory bank BK15 of the second PIM device PIM1. Although not shown, in the same manner, the 19^{th} through 31^{st} elements of the seventh value vector V7(1) of the first sequence n_seq=1 are stored in the third through fifteenth memory banks of the second PIM device PIM1, respectively. Each of the 19^{th} through 31^{st} elements of the seventh value vector V7(1) of the first sequence n_seq=1 is stored in the fourth row and the first through sixteenth columns of a corresponding memory bank of the second PIM device PIM1.

Although not shown, the 33^{rd} through 48^{th} elements of the seventh value vector V7(1) of the first sequence n_seq=1 are stored in the first through sixteenth memory banks of the third PIM device PIM2, respectively. Each of the 33^{rd} through 48^{th} elements of the seventh value vector V7(1) of the first sequence n_seq=1 is stored in the fourth row and the first through sixteenth columns a corresponding memory bank of the third PIM device PIM2. The 49^{th} through 64^{th} elements of the seventh value vector V7(1) of the first sequence n_seq=1 are stored in the first through sixteenth memory banks of the fourth PIM device PIM3, respectively. Each of the 49^{th} through 64^{th} elements of the seventh value vector V7(1) of the first sequence n_seq=1 is stored in the fourth row and the first through sixteenth columns of a corresponding memory bank of the fourth PIM device PIM3. The 65^{th} through 80^{th} elements of the seventh value vector V7(1) of the first sequence n_seq=1 are stored in the first through sixteenth memory banks of the fifth PIM device PIM4, respectively. Each of the 65^{th} through 80^{th} elements of the seventh value vector V7(1) of the first sequence n_seq=1 is stored in the fourth row and the first through sixteenth columns of a corresponding memory bank of the fifth PIM device PIM4. The 81^{st} through 96^{th} elements of the seventh value vector V7(1) of the first sequence n_seq=1 are stored in the first through sixteenth memory banks of the sixth PIM device PIM5, respectively. Each of the 81^{st} through 96^{th} elements of the seventh value vector V7(1) of the first sequence n_seq=1 is stored in the fourth row and the first through sixteenth columns of a corresponding memory bank of the sixth PIM device PIM5. In addition, the 97^{th} through 112^{th} elements of the seventh value vector V7(1) of the first sequence n_seq=1 are stored in the first through sixteenth memory banks of the seventh PIM device PIM6, respectively. Each of the 97^{th} through 112^{th} elements of the seventh value vector V7(1) of the first sequence n_seq=1 is stored in the fourth row and the first through sixteenth columns of a corresponding memory bank of the seventh PIM device PIM6.

The 113^{th} element V7(1)_113 of the seventh value vector V7(1) of the first sequence n_seq=1 is stored in the fourth row and the first through sixteenth columns of the first memory bank BK0 of the eighth PIM device PIM7. The 114^{th} element V7(1)_114 of the seventh value vector V7(1) of the first sequence n_seq=1 is stored in the fourth row and the first through sixteenth columns of the second memory bank BK1 of the eighth PIM device PIM7. The 128^{th} element V7(1)_128 of the seventh value vector V7(1) of the first sequence n_seq=1 is stored in the fourth row and the first through sixteenth columns of the sixteenth memory bank BK15 of the eighth PIM device PIM7. Although not shown, in the same manner, the 115^{th} through 127^{th} elements of the seventh value vector V7(1) of the first sequence n_seq=1 are stored in the third through fifteenth memory banks of the eighth PIM device PIM7, respectively. Each of the 115^{th} through 127^{th} elements of the seventh value vector V7(1) of the first sequence n_seq=1 is stored in the fourth row and the first through sixteenth columns of a corresponding memory bank of the eighth PIM device PIM7.

In the same manner as above, when the seventh value vector V7(1) generated in the first sequence n_seq=1 is written to the first group of PIM devices, that is, the first through eighth PIM devices PIM0 through PIM7, the seventh attention distribution vector S7(1) generated in the first sequence n_seq=1 is stored in each of the global buffers GBs of the first through eighth PIM devices PIM0 through PIM7. The seventh attention distribution vector S7(1) has the same size as the seventh attention score vector, which is the result of the first matrix-vector multiplications of the seventh key vector K7(1) and the seventh query vector Q7(1) generated in the first sequence n_seq=1. Accordingly, the seventh attention distribution vector S7(1) generated in the first sequence n_seq=1 has a size of n_seq × 1, that is , a size of 1 × 1.

The first through sixteenth processing units PUO through PU15 of each of the first through eighth PIM devices PIM0 through PIM7 perform the second matrix-vector multiplications, on the first through 128^{th} elements V7(1)_1 through V7(1)_128 of the seventh value vector V7(1) and the seventh attention distribution vector S7(1), to generate the seventh multi-head attention value vector Z7(1) of the first sequence n_seq=1. The seventh multi-head attention value vector Z7(1) of the first sequence n_seq=1 has a size of d_head × 1, namely, a size of 128 × 1. That is, first through 128^{th} elements Z7(1)_1 through Z7(1)_128 of the seventh multi-head attention value vector Z7(1) of the first sequence n_seq=1 are generated when the second matrix-vector multiplications on the seventh head HEAD_7 of the first sequence n_seq=1 are performed in the first through sixteenth processing units PUO through PU15 of each of the first through eighth PIM devices PIM0 through PIM7.

More specifically, the first through sixteenth processing units PUO through PU15 of the first PIM device PIM0 perform the second matrix-vector multiplications on the first through sixteenth elements V7(1)_1 through V7(1)_16 of the seventh value vector V7(1) and the seventh attention distribution vector S7(1) to generate the first through sixteenth elements Z7(1)_1 through Z7(1)_16 of the seventh multi-head attention value vector Z7(1) of the first sequence n_seq=1. The first through sixteenth processing units PUO through PU15 of the second PIM device PIM1 perform the second matrix-vector multiplications on the 17^{th} through 32^{nd} elements V7(1)_17 through V7(1)_32 of the seventh value vector V7(1) and the seventh attention distribution vector S7(1) to generate the 17^{th} through 32^{nd} elements Z7(1)_17 through Z7(1)_32 of the seventh multi-head attention value vector Z7(1) of the first sequence n_seq=1. The first through sixteenth processing units PUO through PU15 of the eighth PIM device PIM7 perform the second matrix-vector multiplications on the 113^{th} through 128^{th} elements V7(1)_113 through V7(1)_128 of the seventh value vector V7(1) and the seventh attention distribution vector S7(1) to generate the 113^{th} through 128^{th} elements Z7(1)_113 through Z7(1)_128 of the seventh multi-head attention value vector Z7(1) of the first sequence n_seq=1. Although not shown, the first through sixteenth processing units of each of the third through seventh PIM devices perform the second matrix-vector multiplications on the 33^{rd} through 112^{th} elements of the seventh value vector V7(1) and the seventh attention distribution vector S7(1) to generate the 33^{rd} through 112^{th} elements Z7(1)_33 through Z7(1)_112 of the seventh multi-head attention value vector Z7(1) of the first sequence n_seq=1. The second matrix-vector multiplications generating the first through 128^{th} elements Z7(1)_1 through Z7(1)_128 of the seventh multi-head attention value vector Z7(1) of the first sequence n_seq=1 are performed in parallel in the first to eighth PIM devices PIM0 through PIM7.

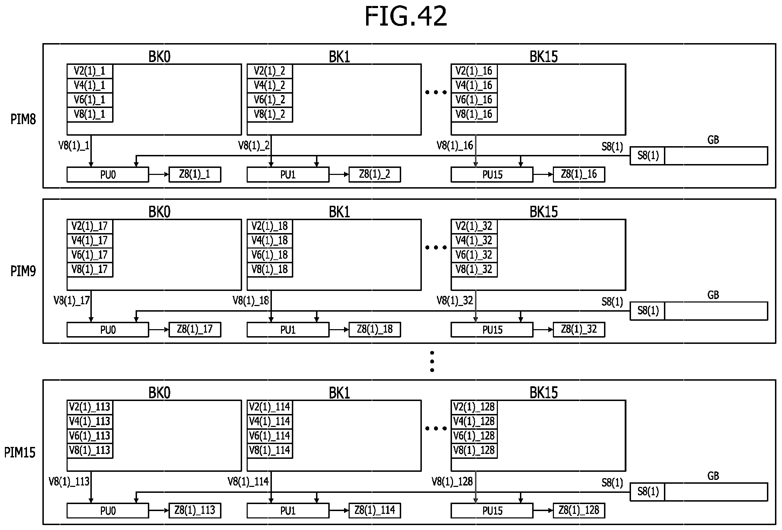

FIG. 42 is a diagram illustrating a process in which the eighth value vector generated in a first sequence of a multi-head attention operation is distributed in units of elements and stored in memory banks of a second group of PIM devices and in which second matrix-vector multiplication performed on an eighth head according to an embodiment of the present disclosure.

Referring to FIG. 42, first through 128^{th} elements V8(1)_1 through V8(1)_128 of an eighth value vector V8(1) generated in the first sequence n_seq=1 are divided into units of 16 elements and stored in the ninth through sixteenth PIM devices PIM8 through PIM15. The first element V8(1)_1 of the eighth value vector V8(1) of the first sequence n_seq=1 is stored in the fourth row and the first through sixteenth columns of the first memory bank BK0 of the ninth PIM device PIM8. The second element V8(1)_2 of the eighth value vector V8(1) of the first sequence n_seq= 1 is stored in the fourth row and the first through sixteenth columns of the second memory bank BK1 of the ninth PIM device PIM8. The sixteenth element V8(1)_16 of the eighth value vector V8(1) of the first sequence n_seq=1 is stored in the fourth row and the first through sixteenth columns of the sixteenth memory bank BK15 of the ninth PIM device PIM8. Although not shown, in the same manner, the third through fifteenth elements of the eighth value vector V8(1) of the first sequence n_seq=1 are stored in the third through fifteenth memory banks of the ninth PIM device PIM8, respectively. Each of the third through fifteenth elements of the eighth value vector V8(1) of the first sequence n_seq=1 is stored in the fourth row and the first through sixteenth columns of a corresponding memory bank of the ninth PIM device PIM8.

The 17^{th} element V8(1)_17 of the eighth value vector V8(1) of the first sequence n_seq=1 is stored in the fourth row and the first through sixteenth columns of the first memory bank BK0 of the tenth PIM device PIM9. The 18^{th} element V8(1)_18 of the eighth value vector V8(1) of the first sequence n_seq=1 is stored in the fourth row and the first through sixteenth columns of the second memory bank BK1 of the tenth PIM device PIM9. The 32^{nd} element V8(1)_32 of the eighth value vector V8(1) of the first sequence n_seq=1 is stored in the fourth row and the first through sixteenth columns of the sixteenth memory bank BK15 of the tenth PIM device PIM9. Although not shown, in the same manner, the 19^{th} through 31^{st} elements of the eighth value vector V8(1) of the first sequence n_seq=1 are stored in the third through fifteenth memory banks of the tenth PIM device PIM9, respectively. Each of the 19^{th} through 31^{st} elements of the eighth value vector V8(1) of the first sequence n_seq=1 is stored in the fourth row and the first through sixteenth columns of a corresponding memory bank of the tenth PIM device PIM9.

Although not shown, the 33^{rd} through 48^{th} elements of the eighth value vector V8(1) of the first sequence n_seq=1 are stored in the first through sixteenth memory banks of the eleventh PIM device PIM10, respectively. Each of the 33^{rd} through 48^{th} elements of the eighth value vector V8(1) of the first sequence n_seq=1 is stored in the fourth row and the first through sixteenth columns of a corresponding memory bank of the eleventh PIM device PIM10. The 49^{th} through 64^{th} elements of the eighth value vector V8(1) of the first sequence n_seq=1 are stored in the first through sixteenth memory banks of the twelfth PIM device PIM11, respectively. Each of the 49^{th} through 64^{th} elements of the eighth value vector V8(1) of the first sequence n_seq=1 is stored in the fourth row and the first through sixteenth columns of a corresponding memory bank of the twelfth PIM device PIM11. The 65^{th} through 80^{th} elements of the eighth value vector V8(1) of the first sequence n_seq=1 are stored in the first through sixteenth memory banks of the thirteenth PIM device PIM12, respectively. Each of the 65^{th} through 80^{th} elements of the eighth value vector V8(1) of the first sequence n_seq=1 is stored in the fourth row and the first through sixteenth columns of a corresponding memory bank of the thirteenth PIM device PIM12. The 81^{st} through 96^{th} elements of the eight value vector V8(1) of the first sequence n_seq=1 are stored in the first through sixteenth memory banks of the fourteenth PIM device PIM13, respectively. Each of the 81^{st} through 96^{th} elements of the eight value vector V8(1) of the first sequence n_seq=1 is stored in the fourth row and the first through sixteenth columns of a corresponding memory bank of the fourteenth PIM device PIM13. In addition, the 97^{th} through 112^{th} elements of the eighth value vector V8(1) of the first sequence n_seq=1 are stored in the first through sixteenth memory banks of the fifteenth PIM device PIM14, respectively. Each of the 97^{th} through 112^{th} elements of the eighth value vector V8(1) of the first sequence n_seq=1 is stored in the fourth row and the first through sixteenth columns of a corresponding memory bank of the fifteenth PIM device PIM14.

The 113^{th} element V8(1)_113 of the eighth value vector V8(1) of the first sequence n_seq=1 is stored in the fourth row and the first through sixteenth columns of the first memory bank BK0 of the sixteenth PIM device PIM15. The 114^{th} element V8(1)_114 of the eighth value vector V8(1) of the first sequence n_seq=1 is stored in the fourth row and the first through sixteenth columns of the second memory bank BK1 of the sixteenth PIM device PIM15. The 128^{th} element V8(1)_128 of the eighth value vector V8(1) of the first sequence n_seq=1 is stored in the fourth row and the first through sixteenth columns of the sixteenth memory bank BK15 of the sixteenth PIM device PIM15. Although not shown, in the same manner, the 115^{th} through 127^{th} elements of the eighth value vector V8(1) of the first sequence n_seq=1 are stored in the third through fifteenth memory banks of the sixteenth PIM device PIM15, respectively. Each of the 115^{th} through 127^{th} elements of the eighth value vector V8(1) of the first sequence n_seq=1 is stored in the fourth row and the first through sixteenth columns of a corresponding memory bank of the sixteenth PIM device PIM15.

In the same manner as above, when the eighth value vector V8(1) generated in the first sequence n_seq=1 is written to the second group of PIM devices, that is, the ninth through sixteenth PIM devices PIM8 through PIM15, the eighth attention distribution vector S8(1) generated in the first sequence n_seq=1 is stored in each of the global buffers GBs of the ninth through sixteenth PIM devices PIM8 through PIM15. The eighth attention distribution vector S8(1) has the same size as the eighth attention score vector, which is the result of the first matrix-vector multiplication of the eighth key vector K8(1) and the eighth query vector Q8(1) generated in the first sequence n_seq=1. Accordingly, the eighth attention distribution vector S8(1) generated in the first sequence n_seq=1 has a size of n_seq × 1, that is, a size of 1 × 1.

The first through sixteenth processing units PU0 through PU15 of each of the ninth through sixteenth PIM devices PIM8 through PIM15 perform the second matrix-vector multiplications, on the first through 128^{th} elements V8(1)_1 through V8(1)_128 of the eighth value vector V8(1) and the eighth attention distribution vector S8(1), to generate the eighth multi-head attention value vector Z8(1) of the first sequence n_seq=1. The eighth multi-head attention value vector Z8(1) of the first sequence n_seq=1 has a size of d_head × 1, namely, a size of 128 × 1. That is, first through 128^{th} elements Z8(1)_1 through Z8(1)_128 of the eighth multi-head attention value vector Z8(1) of the first sequence n_seq=1 are generated when the second matrix-vector multiplications on the eighth head HEAD_8 of the first sequence n_seq=1 are performed in the first through sixteenth processing units PU0 through PU15 of each of the ninth through sixteenth PIM devices PIM8 through PIM15.

More specifically, the first through sixteenth processing units PU0 through PU15 of the ninth PIM device PIM8 perform the second matrix-vector multiplications on the first though sixteenth elements V8(1)_1 through V8(1)_16 of the eighth value vector V8(1) and the eighth attention distribution vector S8(1) to generate the first through sixteenth elements Z8(1)_1 through Z8(1)_16 of the eighth multi-head attention value vector Z8(1) of the first sequence n_seq=1. The first through sixteenth processing units PU0 through PU15 of the tenth PIM device PIM9 perform the second matrix-vector multiplications on the 17^{th} through 32^{nd} elements V8(1)_17 through V8(1)_32 of the eighth value vector V8(1) and the eighth attention distribution vector S8(1) to generate the 17^{th} through 32^{nd} elements Z8(1)_17 through Z8(1)_32 of the eighth multi-head attention value vector Z8(1) of the first sequence n_seq=1. The first through sixteenth processing units PU0 through PU15 of the sixteenth PIM device PIM15 perform the second matrix-vector multiplications on the first 113^{th} through 128^{th} elements V8(1)_113 through V8(1)_128 of the eighth value vector V8(1) and the eighth attention distribution vector S8(1) to generate the 113^{th} through 128^{th} elements Z8(1)_113 through Z8(1)_128 of the eighth multi-head attention value vector Z8(1) of the first sequence n_seq=1. Although not shown, the first through sixteenth processing units of each of the eleventh through fifteenth PIM devices perform the second matrix-vector multiplications on the 33^{rd} through 112^{th} elements of the eighth value vector V8(1) and the eighth attention distribution vector S8(1) to generate the 33^{rd} through 112^{th} elements Z8(1)_33 through Z8(1)_112 of the eighth multi-head attention value vector Z8(1) of the first sequence n_seq=1. The second matrix-vector multiplications generating the first through 128^{th} elements Z8(1)_1 through Z8(1)_128 of the eighth multi-head attention value vector Z8(1) of the first sequence n_seq=1 are performed in parallel in the ninth through sixteenth PIM devices PIM8 through PIM15.

The second matrix-vector multiplications to generate the first through 128^{th} elements Z7(1)_1 through Z7(1)_128 of the seventh multi-head attention value vector Z7(1) of the first sequence n_seq=1 in the first through eighth PIM devices PIM0 through PIM7 and the second matrix-vector multiplications to generate the first through 128^{th} elements Z8(1)_1 through Z8(1)_128 of the eighth multi-head attention value vector Z8(1) of the first sequence n_seq=1 in the ninth through sixteenth PIM devices PIM8 through PIM15 may be performed in parallel.

As described with reference to FIG. 31 through FIG. 42, the first value vector V1(1), third value vector V3(1), fifth value vector V5(1), and seventh value vector V7(1), which are the odd-numbered value vectors among the first through eighth value vectors V1(1) through V8(1) generated in the first sequence n_seq=1, are stored in the first through eighth PIM devices PIM0 through PIM7, which comprise the first group of PIM devices. On the other hand, the second value vector V2(1), fourth value vector V4(1), sixth value vector V6(1), and eighth value vector V8(1), which are the even-numbered value vectors among the first through eighth value vectors V1(1) through V8(1), are stored in the ninth through sixteenth PIM devices PIM8 through PIM15, which comprise the second group of PIM devices. The first through eighth value vectors V1(1) through V8(1) are stored in the same columns in the first through the sixteenth memory banks BK0 through BK15 of each of the first through sixteenth PIM devices PIM0 through PIM15, that is, in the first through sixteenth columns. In other embodiments however, the columns of the memory banks in which the first through eighth value vectors V1(1) through V8(1) are written may be different in the first through sixteenth PIM devices PIM0 through PIM15.

The first odd-numbered first value vector V1(1) and the first even-numbered second value vector V2(1) are stored in the first row in each of the first through sixteenth memory banks BK0 through BK15 of each of the first through sixteenth PIM devices PIM0 through PIM15. The next odd-numbered third value vector V3(1) and the next even-numbered fourth value vector V4(1) are stored in the second row in each of the first through sixteenth memory banks BK0 through BK15 of each of the first through sixteenth PIM devices PIM0 through PIM15. The next odd-numbered fifth value vector V5(1) and the next even-numbered sixth value vector V6(1) are stored in the third row in each of the first through sixteenth memory banks BK0 through BK15 of each of the first through sixteenth PIM devices PIM0 through PIM15. The next odd-numbered seventh value vector V7(1) and the next even-numbered eighth value vector V8(1) are stored in the fourth row in each of the first through sixteenth memory banks BK0 through BK15 of each of the first through sixteenth PIM devices PIM0 through PIM15.

When the second matrix operations described with reference to FIG. 31 through FIG. 42 are performed, the second matrix operations in the first sequence n_seq=1 are completed. In the second matrix operations in the first sequence n_seq=1, among the first through eighth value vectors V1(1) through V8(1) generated in the first sequence n_seq=1, the odd-numbered value vector and the even-numbered value vector adjacent thereto are stored as pairs in the same row and corresponding columns of the same row in the first group of PIM devices and the second group of PIM devices, respectively. Accordingly, the second matrix-vector multiplications performed using the odd-numbered value vector and the even-numbered value vector adjacent thereto as operands may be performed in parallel, based on the same column address. In another example, even though the odd-numbered value vector and the even-numbered value vector adjacent thereto among the first through eighth value vectors V1(1) through V8(1) generated in the first sequence n_seq=1 are stored in pairs in different columns of the same row in the first group of PIM devices and the second group of PIM devices, the second matrix-vector multiplications performed using the odd-numbered value vector and the even-numbered value vector adjacent thereto as operands may be performed in parallel, based on different column addresses.

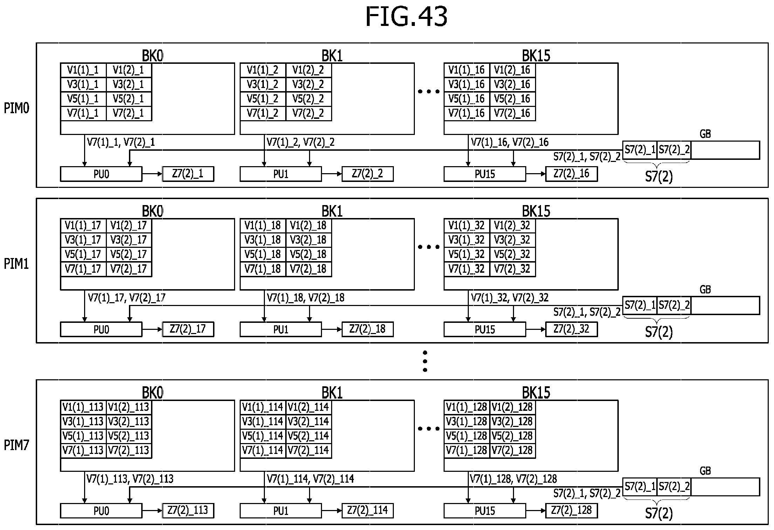

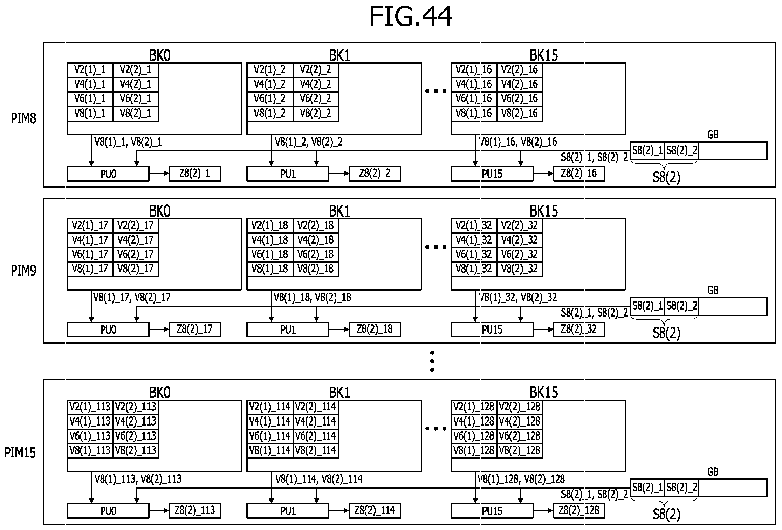

FIG. 43 is a diagram illustrating a process in which first, third, fifth, and seventh value vectors generated in a second sequence of a multi-head attention are distributed in units of elements and stored in memory banks of a first group of PIM devices and in which second matrix-vector multiplication is performed on a seventh head according to an embodiment of the present disclosure. FIG. 44 is a diagram illustrating a process in which second, fourth, sixth, and eighth value vectors generated in a second sequence of a multi-head attention are distributed in units of elements and stored in memory banks of a second group of PIM devices and in which second matrix-vector multiplication performed on an eighth head according to an embodiment of the present disclosure.

Referring to FIG. 43 and FIG. 44, when a process of a first sequence n_seq=1 is completed and a process of a second sequence n_seq=2 is started, first through eighth value vectors V1(2) through V8(2) of the second sequence n_seq=2 are generated. The first through eighth value vectors V1(2) through V8(2) generated in the second sequence n_seq=2 are stored in first through sixteenth memory banks BK0 through BK15 of each of the first through sixteenth PIM devices PIM0 through PIM15 in the same manner that the first through eighth value vectors V1(1) through V8(1) generated in the first sequence n_seq=1 are stored. However, the first through 128^{th} elements of each of the first through eighth value vectors V1(1) through V8(1) of the first sequence n_seq=1 are stored in the first through sixteenth columns in each of the memory banks BK0 through BK15 of each of the first through sixteenth PIM devices PIM0 through PIM15, whereas the first through 128^{th} elements of each of the first through eighth value vectors V1(2) through V8(2) of the second sequence n_seq=2 are stored in the 16 columns following the sixteenth column in each of the first through sixteenth memory banks BK0 through BK15 of each of the first through sixteenth PIM devices PIM0 through PIM15, that is, in the 17^{th} through 32^{nd} columns. The odd-numbered value vectors V1(2), V3(2), V5(2), and V7(2) among the first through eighth value vectors V1(2) through V8(2) of the second sequence n_seq=2 are stored in a first group of PIM devices, that is, in the first through eighth PIM devices PIM0 through PIM7. The even-numbered value vectors V2(2), V4(2), V6(2), and V8(2) among the first through eighth value vectors V1(2) through V8(2) of the second sequence n_seq=2 are stored in a second group of PIM devices, that is, in the ninth through sixteenth PIM devices PIM8 through PIM15.

More specifically, as illustrated in FIG. 43, first through sixteenth elements V1(2)_1 through V1(2)_16 of the first value vector V1(2) of the second sequence n_seq=2 are stored in the first through sixteenth memory banks BK0 through BK15 of the first PIM device PIM0, respectively. Each of the first through sixteenth elements V1(2)_1 through V1(2)_16 of the first value vector V1(2) of the second sequence n_seq=2 is stored in the first row and the 17^{th} through 32^{nd} columns of each of the first through sixteenth memory banks BK0 through BK15 of the first PIM device PIM0. The 17^{th} through 32^{nd} elements V1(2)_17 through V1(2)_32 of the first value vector V1(2) of the second sequence n_seq=2 are stored in the first through sixteenth memory banks BK0 through BK15 of the second PIM device PIM1, respectively. Each of the 17^{th} through 32^{nd} elements V1(2)_17 through V1(2)_32 of the first value vector V1(2) of the second sequence n_seq=2 is stored in the first row and the 17^{th} through 32^{nd} columns of each of the first through sixteenth memory banks BK0 through BK15 of the second PIM device PIM1. Although not shown, the 33^{rd} through 112^{th} elements of the first value vector V1(2) of the second sequence n_seq=2 are stored in the first through sixteenth memory banks of each of the third through seventh PIM devices, respectively. Each of the 33^{rd} through 112^{th} elements of the first value vector V1(2) of the second sequence n_seq=2 is stored in the first row and the 17^{th} through 32^{nd} columns of corresponding first through sixteenth memory banks of the third through seventh PIM devices. In the same manner, the 113^{th} through 128^{th} elements V1(2)_113 through V1(2)_128 of the first value vector V1(2) of the second sequence n_seq=2 are stored in the first through sixteenth memory banks BK0 through BK15 of the eighth PIM device PIM7, respectively. Each of the 113^{th} through 128^{th} elements V1(2)_113 through V1(2)_128 of the first value vector V1(2) of the second sequence n_seq=2 is stored in the first row and the 17^{th} through 32^{nd} columns of each of the first through sixteenth memory banks BK0 through BK15 of the eighth PIM device PIM7. Although not shown, when the first through 128^{th} elements V1(2)_1 through V1(2)_128 of the first value vector V1(2) of the second sequence n_seq=2 are written to the first through eight PIM devices PIM0 through PIM7, the first and second parts of the first attention distribution vector generated in the second sequence n_seq=2 are stored in each of the global buffers GBs of the first through eighth PIM devices PIM0 through PIM7. In addition, the second matrix-vector multiplications on the first head of the second sequence n_seq=2 are performed using the first value vectors V1(1) and V1(2) constituting the first value matrix CONCAT(V1(1), V1(2)) and the first and second parts of the first attention distribution vector as the operands. As a result of the second matrix-vector multiplications on the first head of the second sequence n_seq=2, the first through 128^{th} elements of the first multi-head attention value vector of the second sequence n_seq=2 are generated.

The first through sixteenth elements V3(2)_1 through V3(2)_16 of the third value vector V3(2) of the second sequence n_seq=2 are stored in the first through sixteenth memory banks BK0 through BK15 of the first PIM device PIM0, respectively. Each of the first through sixteenth elements V3(2)_1 through V3(2)_16 of the third value vector V3(2) of the second sequence n_seq=2 is stored in the second row and the 17^{th} through 32^{nd} columns of each of the first through sixteenth memory banks BK0 through BK15 of the first PIM device PIM0. The 17^{th} through 32^{nd} elements V3(2)_17 through V3(2)_32 of the third value vector V3(2) of the second sequence n_seq=2 are stored in the first through sixteenth memory banks BK0 through BK15 of the second PIM device PIM1, respectively. Each of the 17^{th} through 32^{nd} elements V3(2)_17 through V3(2)_32 of the third value vector V3(2) of the second sequence n_seq=2 is stored in the second row and the 17^{th} through 32^{nd} columns of each of the first through sixteenth memory banks BK0 through BK15 of the second PIM device PIM1. Although not shown, the 33^{rd} through 112^{th} elements of the third value vector V3(2) of the second sequence n_seq=2 are stored in the first through sixteenth memory banks of each of the third through seventh PIM devices, respectively. Each of the 33^{rd} through 112^{th} elements of the third value vector V3(2) of the second sequence n_seq=2 is stored in the second row and the 17^{th} through 32^{nd} columns of corresponding first through sixteenth memory banks of the third through seventh PIM devices. In the same manner, the 113^{th} through 128^{th} elements V3(2)_113 through V3(2)_128 of the third value vector V3(2) of the second sequence n_seq=2 are stored in the first through sixteenth memory banks BK0 through BK15 of the eighth PIM device PIM7, respectively. Each of the 113^{th} through 128^{th} elements V3(2)_113 through V3(2)_128 of the third value vector V3(2) of the second sequence n_seq=2 is stored in the second row and the 17^{th} through 32^{nd} columns of the first through sixteenth memory banks BK0 through BK15 of the eighth PIM device PIM7. Although not shown, when the first through 128^{th} elements V3(2)_1 through V3(2)_128 of the third value vector V3(2) of the second sequence n_seq=2 are written to the first through eighth PIM devices PIM0 through PIM7, the first and second parts of the third attention distribution vector generated in the second sequence n_seq=2 are stored in each of the global buffers GBs of the first through eighth PIM devices PIM0 through PIM7. In addition, the second matrix-vector multiplications are performed on the third head of the second sequence n_seq=2 using the third value vectors V3(1) and V3(2) constituting the third value matrix CONCAT(V3(1), V3(2)) and the first and second parts of the third attention distribution vector as the operands. As a result of the second matrix-vector multiplications on the third head of the second sequence n_seq=2, the first through 128^{th} elements of the third multi-head attention value vector of the second sequence n_seq=2 are generated.

The first through sixteenth elements V5(2)_1 through V5(2)_16 of the fifth value vector V5(2) of the second sequence n_seq=2 are stored in the first through sixteenth memory banks BK0 through BK15 of the first PIM device PIM0,respectively. Each of the first through sixteenth elements V5(2)_1 through V5(2)_16 of the fifth value vector V5(2) of the second sequence n_seq=2 is stored in the third row and the 17^{th} through 32^{nd} columns of each of the first through sixteenth memory banks BK0 through BK15 of the first PIM device PIM0. The 17^{th} through 32^{nd} elements V5(2)_17 through V5(2)_32 of the fifth value vector V5(2) of the second sequence n_seq=2 are stored in the first through sixteenth memory banks BK0 through BK15 of the second PIM device PIM1, respectively. Each of the 17^{th} through 32^{nd} elements V5(2)_17 through V5(2)_32 of the fifth value vector V5(2) of the second sequence n_seq=2 is stored in the third row and the 17^{th} through 32^{nd} columns of each of the first through sixteenth memory banks BK0 through BK15 of the second PIM device PIM1. Although not shown, the 33^{rd} through 112^{th} elements of the fifth value vector V5(2) of the second sequence n_seq=2 are stored in the first through sixteenth memory banks of each of the third through seventh PIM devices, respectively. Each of the 33^{rd} through 112^{th} elements of the fifth value vector V5(2) of the second sequence n_seq=2 is stored in the third row and the 17^{th} through 32^{nd} columns of corresponding first through sixteenth memory banks of the third through seventh PIM devices. In the same manner, the 113^{th} through 128^{th} elements V5(2)_113 through V5(2)_128 of the fifth value vector V5(2) of the second sequence n_seq=2 are stored in the first through sixteenth memory banks BK0 through BK15 of the eighth PIM device PIM7, respectively. Each of the 113^{th} through 128^{th} elements V5(2)_113 through V5(2)_128 of the fifth value vector V5(2) of the second sequence n_seq=2 is stored in the third row and the 17^{th} through 32^{nd} columns of the first through sixteenth memory banks BK0 through BK15 of the eighth PIM device PIM7. Although not shown, when the first through 128^{th} elements V5(2)_1 through V5(2)_128 of the fifth value vector V5(2) of the second sequence n_seq=2 are written to the first through eighth PIM devices PIM0 through PIM7, the first and second parts of the fifth attention distribution vector generated in the second sequence n_seq=2 are stored in each of the global buffers GBs of the first through eighth PIM devices PIM0 through PIM7. In addition, the second matrix-vector multiplications are performed on the fifth head of the second sequence n_seq=2 using the fifth value vectors V5(1) and V5(2) constituting the fifth value matrix CONCAT(V5(1), V5(2)) and the first and second parts of the fifth attention distribution vector as the operands. As a result of the second matrix-vector multiplications on the fifth head of the second sequence n_seq=2, the first through 128^{th} elements of the fifth multi-head attention value vector of the second sequence n_seq=2 are generated.

The first through sixteenth elements V7(2)_1 through V7(2)_16 of the seventh value vector V7(2) of the second sequence n_seq=2 are stored in the first through sixteenth memory banks BK0 through BK15 of the first PIM device PIM0, respectively. Each of the first through sixteenth elements V7(2)_1 through V7(2)_16 of the seventh value vector V7(2) of the second sequence n_seq=2 is stored in the fourth row and the 17^{th} through 32^{nd} columns of each of the first through sixteenth memory banks BK0 through BK15 of the first PIM device PIM0. The 17^{th} through 32^{nd} elements V7(2)_17 through V7(2)_32 of the seventh value vector V7(2) of the second sequence n_seq=2 are stored in the first through sixteenth memory banks BK0 through BK15 of the second PIM device PIM1, respectively. Each of the 17^{th} through 32^{nd} elements V7(2)_17 through V7(2)_32 of the seventh value vector V7(2) of the second sequence n_seq=2 is stored in the fourth row and the 17^{th} through 32^{nd} columns of each of the first through sixteenth memory banks BK0 through BK15 of the second PIM device PIM1. Although not shown, the 33^{rd} through 112^{th} elements of the seventh value vector V7(2) of the second sequence n_seq=2 are stored in the first through sixteenth memory banks of each of the third through seventh PIM devices, respectively. Each of the 33^{rd} through 112^{th} elements of the seventh value vector V7(2) of the second sequence n_seq=2 is stored in the fourth row and the 17^{th} through 32^{nd} columns of corresponding first through sixteenth memory banks of the third through seventh PIM devices. In the same manner, the 113^{th} through 128^{th} elements V7(2)_113 through V7(2)_128 of the seventh value vector V7(2) of the second sequence n_seq=2 are stored in the first through sixteenth memory banks BK0 through BK15 of the eighth PIM device PIM7, respectively. Each of the 113^{th} through 128^{th} elements V7(2)_113 through V7(2)_128 of the seventh value vector V7(2) of the second sequence n_seq=2 is stored in the fourth row and the 17^{th} through 32^{nd} columns of the first through sixteenth memory banks BK0 through BK15 of the eighth PIM device PIM7.

When the first through 128^{th} elements V7(2)_1 through V7(2)_128 of the seventh value vector V7(2) of the second sequence n_seq=2 are written to the first through eighth PIM devices PIM0 through PIM7, the first and second parts S7(2)_1 and S7(2)_2 of the seventh attention distribution vector S7(2) generated in the second sequence n_seq=2 are stored in each of the global buffers GBs of the first through eighth PIM devices PIM0 through PIM7. The first and second parts S7(2)_1 and S7(2)_2 of the seventh attention distribution vector S7(2) of the second sequence n_seq=2 may be generated by performing scaling processing and softmax function processing on the first and second parts A7(2)_1 and A7(2)_2 of the seventh attention score vector A7(2) generated through the first matrix-vector multiplications in the second sequence n_seq=2, in the same manner as described above with reference to FIG. 20.

The second matrix-vector multiplications on the seventh head of the second sequence n_seq=2 are performed on the seventh value vectors V7(1) and V7(2) constituting the seventh value matrix CONCAT(V7(1), V7(2)) and the first and second parts S7(2)_1 and S7(2)_2 of the seventh attention distribution vector S7(2). The seventh value vectors V7(1) and V7(2) constituting the seventh attention matrix CONCAT(V7(1), V7(2)) constitute the first and second columns of the seventh attention matrix CONCAT(V7(1), V7(2)), respectively. The seventh value vectors V7(1) and V7(2) constituting the seventh value matrix CONCAT(V7(1), V7(2)) are the seventh value vectors generated in the first sequence n_seq=1 and the second sequence n_seq=2, respectively. More specifically, the second matrix-vector multiplication on the seventh head of the second sequence n_seq=2 is performed on the first column of the seventh value matrix CONCAT(V7(1), V7(2)), that is, the first through 128^{th} elements V7(1)_1 through V7(1)_128 of the seventh value vector V7(1) and the first part S7(2)_1 of the seventh attention distribution vector CONCAT(S7(2)_1, S7(2)_2)). In addition, the second matrix-vector multiplication on the seventh head of the second sequence n_seq=2 is also performed on the second column of the seventh value matrix CONCAT(V7(1), V7(2)), that is, the first through 128^{th} elements V7(2)_1 through V7(2)_128 of the seventh value vector V7(2) and the second part S7(2)_2 of the seventh attention distribution vector CONCAT(S7(2)_1, S7(2)_2). The results of the two second matrix-vector multiplications are accumulated, and as a result of accumulation, the first through 128^{th} elements Z7(2)_1 through Z7(2)_128 of the seventh multi-head attention value vector Z7(2) of the second sequence n_seq=2 are generated.

More specifically, the first processing unit PU0 of the first PIM device PIM0 performs the second matrix-vector multiplication on the first element V7(1)_1 of the first column V7(1) of the seventh value matrix CONCAT(V7(1), V7(2)) and the first part S7(2)_1 of the seventh attention distribution vector S7(2). Next, the first processing unit PU0 of the first PIM device PIM0 performs the second matrix-vector multiplication on the first element V7(2)_1 of the second column V7(2) of the seventh value matrix CONCAT(V7(1), V7(2)) and the second part S7(2)_2 of the seventh attention distribution vector S7(2). The result generated by the two second matrix-vector multiplications is accumulated by the first processing unit PU0 of the first PIM device PIM0, and the first processing unit PU0 of the first PIM device PIM0 outputs the accumulated result as the first element Z7(2)_1 of the seventh multi-head attention value vector Z7(2) of the second sequence n_seq=2.

In the same manner, the second processing unit PU1 of the first PIM device PIM0 outputs the second element Z7(2)_2 of the seventh multi-head attention value vector Z7(2) of the second sequence n_seq=2. In the same manner, the sixteenth processing unit PU15 of the first PIM device PIM0 outputs the sixteenth element Z7(2)_16 of the seventh multi-head attention value vector Z7(2) of the second sequence n_seq=2. Although not shown, the third through fifteenth processing units PU2 through PU14 of the first PIM device PIM0 output the third through fifteenth elements Z7(2)_3 through Z7(2)_15 of the seventh multi-head attention value vector Z7(2) of the second sequence n_seq=2, respectively. The first through sixteenth processing units PU0 through PU15 of the second PIM device PIM1 output the 17^{th} through 32^{nd} elements Z7(2)_17 through Z7(2)_32 of the seventh multi-head attention value vector Z7(2) of the second sequence n_seq=2, respectively. Although not shown, the first through sixteenth processing units PU0 through PU15 of each of the third through seventh PIM devices output the 33^{rd} through 112^{th} elements Z7(2)_33 through Z7(2)_112 of the seventh multi-head attention value vector Z7(2) of the second sequence n_seq=2, respectively. The first through sixteenth processing units PU0 through PU15 of the eighth PIM device PIM7 output the 113^{th} through 128^{th} elements Z7(2)_113 through Z7(2)_128 of the seventh multi-head attention value vector Z7(2) of the second sequence n_seq=2.

The manner in which the second matrix-vector multiplication on the seventh head of the second sequence n_seq=2 is performed is applied equally to the second matrix-vector multiplications on the first, third, and fifth heads of the second sequence n_seq=2. Accordingly, the first to sixteenth processing units PU0 through PU15 of each of the first through eighth PIM devices PIM0 through PIM7 perform the second matrix-vector multiplications on the first head of the second sequence n_seq=2 to output the first through 128^{th} elements of the first multi-head attention value vector of the second sequence n_seq=2. The first through sixteenth processing units PU0 through PU15 of the each of first through eighth PIM devices PIM0 through PIM7 perform the second matrix-vector multiplications on the third head of the second sequence n_seq=2 to output the first through 128^{th} elements of the third multi-head attention value vector of the second sequence n_seq=2. The first through sixteenth processing units PU0 through PU15 of each of the first through eighth PIM devices PIM0 through PIM7 perform the second matrix-vector multiplications on the fifth head of the second sequence n_seq=2 to output the first through 128^{th} elements of the fifth multi-head attention value vector of the second sequence n_seq=2.

Next, as illustrated in FIG. 44, first through sixteenth elements V2(2)_1 through V2(2)_16 of the second value vector V2(2) of the second sequence n_seq=2 are stored in the first through sixteenth memory banks BK0 through BK15 of the ninth PIM device PIM8, respectively. Each of the first through sixteenth elements V2(2)_1 through V2(2)_16 of the second value vector V2(2) of the second sequence n_seq=2 is stored in the first row and the 17^{th} through 32^{nd} columns of each of the first through sixteenth memory banks BK0 through BK15 of the ninth PIM device PIM8. The 17^{th} through 32^{nd} elements V2(2)_17 through V2(2)_32 of the second value vector V2(2) of the second sequence n_seq=2 are stored in the first through sixteenth memory banks BK0 through BK15 of the ninth PIM device PIM8, respectively. Each of the 17^{th} through 32^{nd} elements V2(2)_17 through V2(2)_32 of the second value vector V2(2) of the second sequence n_seq=2 is stored in the first row and the 17^{th} through 32^{nd} columns of each of the first through sixteenth memory banks BK0 through BK15 of the tenth PIM device PIM9. Although not shown, the 33^{rd} through 112^{th} elements of the second value vector V2(2) of the second sequence n_seq=2 are stored in the first through sixteenth memory banks of each of the eleventh through fifteenth PIM devices, respectively. Each of the 33^{rd} through 112^{th} elements of the second value vector V2(2) of the second sequence n_seq=2 is stored in the first row and the 17^{th} through 32^{nd} columns of corresponding first through sixteenth memory banks of the eleventh through fifteenth PIM devices. In the same manner, the 113^{th} through 128^{th} elements V2(2)_113 through V2(2)_128 of the second value vector V2(2) of the second sequence n_seq=2 are stored in the first through sixteenth memory banks BK0 through BK15 of the sixteenth PIM device PIM15, respectively. Each of the 113^{th} through 128^{th} elements V2(2)_113 through V2(2)_128 of the second value vector V2(2) of the second sequence n_seq=2 is stored in the first row and the 17^{th} through 32^{nd} columns of each of the first through sixteenth memory banks BK0 through BK15 of the sixteenth PIM device PIM15. Although not shown, when the first through 128^{th} elements V2(2)_1 through V2(2)_128 of the second value vector V2(2) of the second sequence n_seq=2 are written to the ninth to sixteenth PIM devices PIM8 through PIM15, the first and second parts of the second attention distribution vector generated in the second sequence n_seq=2 are stored in each of the global buffers GBs of the ninth through sixteenth PIM devices PIM8 through PIM15. In addition, the second matrix-vector multiplications are performed on the second head of the second sequence n_seq=2 using the second value vectors V2(1) and V2(2) constituting the second value matrix CONCAT(V2(1), V2(2)) and the first and second parts of the second attention distribution vector as the operands. As a result of the second matrix-vector multiplications on the second head of the second sequence n_seq=2, the first through 128^{th} elements of the second multi-head attention value vector of the second sequence n_seq=2 are generated.

The first through sixteenth elements V4(2)_1 through V4(2)_16 of the fourth value vector V4(2) of the second sequence n_seq=2 are stored in the first through sixteenth memory banks BK0 through BK15 of the ninth PIM device PIM8, respectively. Each of the first through sixteenth elements V4(2)_1 through V4(2)_16 of the fourth value vector V4(2) of the second sequence n_seq=2 is stored in the second row and the 17^{th} through 32^{nd} columns of each of the first through sixteenth memory banks BK0 through BK15 of the ninth PIM device PIM8. The 17^{th} through 32^{nd} elements V4(2)_17 through V4(2)_32 of the fourth value vector V4(2) of the second sequence n_seq=2 are stored in the first through sixteenth memory banks BK0 through BK15 of the tenth PIM device PIM9, respectively. Each of the 17^{th} through 32^{nd} elements V4(2)_17 through V4(2)_32 of the fourth value vector V4(2) of the second sequence n_seq=2 is stored in the second row and the 17^{th} through 32^{nd} columns of each of the first through sixteenth memory banks BK0 through BK15 of the tenth PIM device PIM9. Although not shown, the 33^{rd} through 112^{th} elements of the fourth value vector V4(2) of the second sequence n_seq=2 are stored in the first through sixteenth memory banks of each of the eleventh through fifteenth PIM devices, respectively. Each of the 33^{rd} through 112^{th} elements of the fourth value vector V4(2) of the second sequence n_seq=2 is stored in the second row and the 17^{th} through 32^{nd} columns of corresponding first through sixteenth memory banks of the eleventh through fifteenth PIM devices. In the same manner, the 113^{th} through 128^{th} elements V4(2)_113 through V4(2)_128 of the fourth value vector V4(2) of the second sequence n_seq=2 are stored in the first through sixteenth memory banks BK0 through BK15 of the sixteenth PIM device PIM15, respectively. Each of the 113^{th} through 128^{th} elements V4(2)_113 through V4(2)_128 of the fourth value vector V4(2) of the second sequence n_seq=2 is stored in the second row and the 17^{th} through 32^{nd} columns of each of the first through sixteenth memory banks BK0 through BK15 of the sixteenth PIM device PIM15. Although not shown, when the first through 128^{th} elements V4(2)_1 through V4(2)_128 of the fourth value vector V4(2) of the second sequence n_seq=2 are written to the ninth through sixteenth PIM devices PIM8 through PIM15, the first and second parts of the fourth attention distribution vector generated in the second sequence n_seq=2 are stored in each of the global buffers GBs of the ninth through sixteenth PIM devices PIM8 through PIM15. In addition, the second matrix-vector multiplications are performed on the fourth head of the second sequence n_seq=2 using the fourth value vectors V4(1) and V4(2) constituting the fourth value matrix CONCAT(V4(1), V4(2)) and the first and second parts of the fourth attention distribution vector as the operands. As a result of the second matrix-vector multiplications on the fourth head of the second sequence n_seq=2, the first through 128^{th} elements of the fourth multi-head attention value vector of the second sequence n_seq=2 are generated.

The first through sixteenth elements V6(2)_1 through V6(2)_16 of the sixth value vector V6(2) of the second sequence n_seq=2 are stored in the first through sixteenth memory banks BK0 through BK15 of the ninth PIM device PIM8, respectively. Each of the first through sixteenth elements V6(2)_1 through V6(2)_16 of the sixth value vector V6(2) of the second sequence n_seq=2 is stored in the third row and the 17^{th} through 32^{nd} columns of the first through sixteenth memory banks BK0 through BK15 of the ninth PIM device PIM8. The 17^{th} through 32^{nd} elements V6(2)_17 through V6(2)_32 of the sixth value vector V6(2) of the second sequence n_seq=2 are stored in the first through sixteenth memory banks BK0 through BK15 of the tenth PIM device PIM9, respectively. Each of the 17^{th} through 32^{nd} elements V6(2)_17 through V6(2)_32 of the sixth value vector V6(2) of the second sequence n_seq=2 is stored in the third row and the 17^{th} through 32^{nd} columns of each of the first through sixteenth memory banks BK0 through BK15 of the tenth PIM device PIM9. Although not shown, the 33^{rd} through 112^{th} elements of the sixth value vector V6(2) of the second sequence n_seq=2 are stored in the first through sixteenth memory banks of each of the eleventh through fifteenth PIM devices, respectively. Each of the 33^{rd} through 112^{th} elements of the sixth value vector V6(2) of the second sequence n_seq=2 is stored in the third row and the 17^{th} through 32^{nd} columns of corresponding first through sixteenth memory banks of the eleventh through fifteenth PIM devices. In the same manner, the 113^{th} through 128^{th} elements V6(2)_113 through V6(2)_128 of the sixth value vector V6(2) of the second sequence n_seq=2 are stored in the first through sixteenth memory banks BK0 through BK15 of the sixteenth PIM device PIM15, respectively. Each of the 113^{th} through 128^{th} elements V6(2)_113 through V6(2)_128 of the sixth value vector V6(2) of the second sequence n_seq=2 is stored in the third row and the 17^{th} through 32^{nd} columns of each of the first through sixteenth memory banks BK0 through BK15 of the sixteenth PIM device PIM15. Although not shown, when the first through 128^{th} elements V6(2)_1 through V6(2)_128 of the sixth value vector V6(2) of the second sequence n_seq=2 are written to the ninth through sixteenth PIM devices PIM8 through PIM15, the first and second parts of the sixth attention distribution vector generated in the second sequence n_seq=2 are stored in each of the global buffers GBs of the ninth through sixteenth PIM devices PIM8 through PIM15. In addition, the second matrix-vector multiplications are performed on the sixth head of the second sequence n_seq=2 using the sixth value vectors V6(1) and V6(2) constituting the sixth value matrix CONCAT(V6(1), V6(2)) and the first and second parts of the sixth attention distribution vector as the operands. As a result of the second matrix-vector multiplications on the sixth head of the second sequence n_seq=2, the first through 128^{th} elements of the sixth multi-head attention value vector of the second sequence n_seq=2 are generated.

The first through sixteenth elements V8(2)_1 through V8(2)_16 of the eighth value vector V8(2) of the second sequence n_seq=2 are stored in the first through sixteenth memory banks BK0 through BK15 of the ninth PIM device PIM8, respectively. Each of the first through sixteenth elements V8(2)_1 through V8(2)_16 of the eighth value vector V8(2) of the second sequence n_seq=2 is stored in the fourth row and the 17^{th} through 32^{nd} columns of each of the first through sixteenth memory banks BK0 through BK15 of the ninth PIM device PIM8. The 17^{th} through 32^{nd} elements V8(2)_17 through V8(2)_32 of the eighth value vector V8(2) of the second sequence n_seq=2 are stored in the first through sixteenth memory banks BK0 through BK15 of the tenth PIM device PIM9, respectively. Each of the 17^{th} through 32^{nd} elements V8(2)_17 through V8(2)_32 of the eighth value vector V8(2) of the second sequence n_seq=2 is stored in the fourth row and the 17^{th} through 32^{nd} columns of each of the first through sixteenth memory banks BK0 through BK15 of the tenth PIM device PIM9. Although not shown, the 33^{rd} through 112^{th} elements of the eighth value vector V8(2) of the second sequence n_seq=2 are stored in the first through sixteenth memory banks of each of the eleventh through fifteenth PIM devices, respectively. Each of the 33^{rd} through 112^{th} elements of the eighth value vector V8(2) of the second sequence n_seq=2 is stored in the fourth row and the 17^{th} through 32^{nd} columns of corresponding first through sixteenth memory banks of the eleventh through fifteenth PIM devices. In the same manner, the 113^{th} through 128^{th} elements V8(2)_113 through V8(2)_128 of the eighth value vector V8(2) of the second sequence n_seq=2 are stored in the first through sixteenth memory banks BK0 through BK15 of the sixteenth PIM device PIM15, respectively. Each of the 113^{th} through 128^{th} elements V8(2)_113 through V8(2)_128 of the eighth value vector V8(2) of the second sequence n_seq=2 is stored in the fourth row and the 17^{th} through 32^{nd} columns of each of the first through sixteenth memory banks BK0 through BK15 of the sixteenth PIM device PIM15.

When the first through 128^{th} elements V8(2)_1 through V8(2)_128 of the eighth value vector V8(2) of the second sequence n_seq=2 are written to the ninth through sixteenth PIM devices PIM8 through PIM15, the first and second parts S8(2)_1 and S8(2)_2 of the eighth attention distribution vector S8(2) generated in the second sequence n_seq=2 are stored in each of the global buffers GBs of the ninth through sixteenth PIM devices PIM8 through PIM15. The first and second parts S8(2)_1 and S8(2)_2 of the eighth attention distribution vector S8(2) of the second sequence n_seq=2 may be generated by performing scaling processing and softmax function processing on the first and second parts A8(2)_1 and A8(2)_2 of the eighth attention score vector A8(2) generated through the first matrix-vector multiplications in the second sequence n_seq=2, in the same manner as described with reference to FIG. 20.

The second matrix-vector multiplications on the eighth head of the second sequence n_seq=2 are performed on the eighth value vectors V8(1) and V8(2) constituting the eighth value matrix CONCAT(V8(1), V8(2)) and the first and second parts S8(2)_1 and S8(2)_2 of the eighth attention distribution vector S8(2). The eighth attention vectors V8(1) and V8(2) constituting the eighth value matrix CONCAT(V8(1), V8(2)) constitute the first and second columns of the eighth value matrix CONCAT(V8(1), V8(2)), respectively. The eighth value vectors V8(1) and V8(2) constituting the eighth value matrix CONCAT(V8(1), V8(2)) are the eighth value vectors generated in the first sequence n_seq=1 and the second sequence n_seq=2, respectively. More specifically, the second matrix-vector multiplication on the eighth head of the second sequence n_seq=2 is performed on the first column of the eighth value matrix CONCAT(V8(1), V8(2)), that is, the first through 128^{th} elements V8(1)_1 through V8(1)_128 of the eighth value vector V8(1) and the first part S8(2)_1 of the eighth attention distribution vector S8(2). In addition, the second matrix-vector multiplication on the eighth head of the second sequence n_seq=2 is performed on the second column of the eighth value matrix CONCAT(V8(1), V8(2)), that is, the first through 128^{th} elements V8(2)_1 through V8(2)_128 of the eighth value vector V8(2) and the second part S8(2)_2 of the eighth attention distribution vector S8(2). The results of the two second matrix-vector multiplications are accumulated, and as a result of accumulation, the first through 128^{th} elements Z8(2)_1 through Z8(2)_128 of the eighth multi-head attention value vector Z8(2) of the second sequence n_seq=2 are generated.

More specifically, the first processing unit PU0 of the ninth PIM device PIM8 performs the matrix-vector multiplication on the first element V8(1)_1 of the first column V8(1) of the eighth value matrix CONCAT(V8(1), V8(2)) and the first part S8(2)_1 of the eighth attention distribution vector S8(2). Next, the first processing unit PU0 of the ninth PIM unit PIM8 performs the matrix-vector multiplication on the first element V8(2)_1 of the second column V8(2) of the eighth value matrix CONCAT(V8(1), V8(2)) and the second part S8(2)_2 of the eighth attention distribution vector S8(2). The results generated by the two matrix-vector multiplications are accumulated by the first processing unit PU0 of the ninth PIM device PIM8, and the first processing unit PU0 of the ninth PIM device PIM8 outputs the accumulated result as the first element Z8(2)_1 of the eighth multi-head attention value vector Z8(2) of the second sequence n_seq=2.

In the same manner, the second processing unit PU1 of the ninth PIM device PIM8 outputs the second element Z8(2)_2 of the eighth multi-head attention value vector Z8(2) of the second sequence n_seq=2. In the same manner, the sixteenth processing unit PU15 of the ninth PIM device PIM8 outputs the sixteenth element Z8(2)_16 of the eighth multi-head attention value vector Z8(2) of the second sequence n_seq=2. Although not shown, the third through fifteenth processing units of the ninth PIM device PIM8 output the third through fifteenth elements Z8(2)_3 through Z8(2)_15 of the eighth multi-head attention value vector Z8(2) of the second sequence n_seq=2, respectively. The first through sixteenth processing units PU0 through PU15 of the tenth PIM device PIM9 output the 17^{th} through 32^{nd} elements Z8(2)_17 through Z8(2)_32 of the eighth multi-head attention value vector Z8(2) of the second sequence n_seq=2, respectively. Although not shown, the first through sixteenth processing units of each of the eleventh through fifteenth PIM devices output the 33^{rd} through 112^{th} elements Z8(2)_33 through Z8(2)_112 of the eighth multi-head attention value vector Z8(2) of the second sequence n_seq=2. The first through sixteenth processing units PU0 through PU15 of the sixteenth PIM device PIM15 output the 113^{th} through 128^{th} elements Z8(2)_113 through Z8(2)_128 of the eighth multi-head attention value vector Z8(2) of the second sequence n_seq=2, respectively.

The manner in which the second matrix-vector multiplication on the eighth head of the second sequence n_seq=2 is performed is applied identically to the second matrix-vector multiplications on the second, fourth, and sixth heads of the second sequence n_seq=2. Accordingly, the first through sixteenth processing units PU0 through PU15 of each of the ninth through sixteenth PIM devices PIM8 through PIM15 perform the second matrix-vector multiplications on the second head of the second sequence n_seq=2 to output the first through 128^{th} elements of the second multi-head attention value vector of the second sequence n_seq=2. The first through sixteenth processing units PU0 through PU15 of each of the ninth through sixteenth PIM devices PIM8 through PIM15 perform the second matrix-vector multiplications on the fourth head of the second sequence n_seq=2 to output the first through 128^{th} elements of the fourth multi-head attention value vector of the second sequence n_seq=2. The first through sixteenth processing units PU0 through PU15 of each of the ninth through sixteenth PIM devices PIM8 through PIM15 perform the second matrix-vector multiplications on the sixth head of the second sequence n_seq=2 to output the first through 128^{th} elements of the sixth multi-head attention value vector of the second sequence n_seq=2.

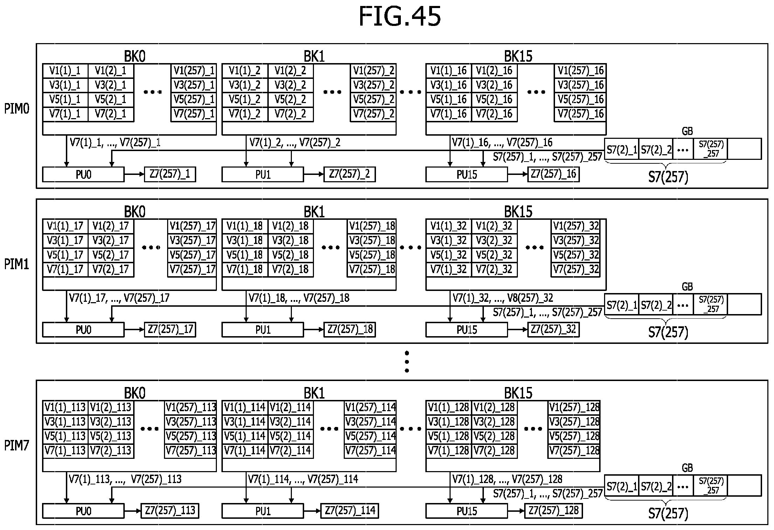

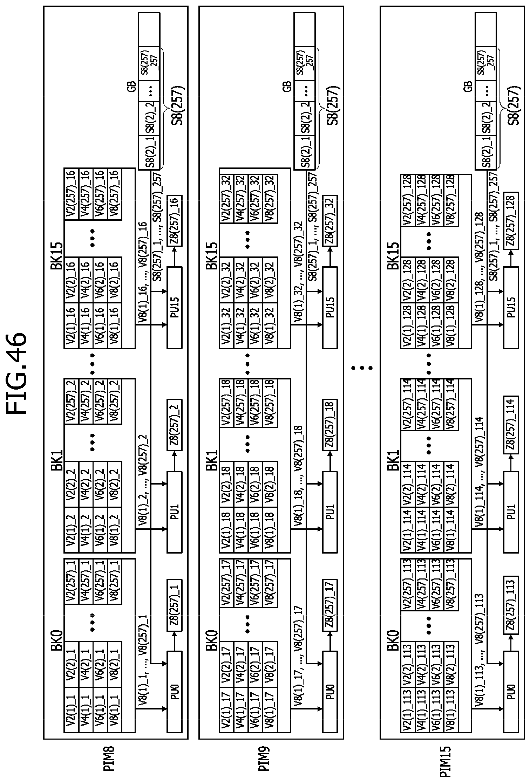

FIG. 45 is a diagram illustrating a process in which first, third, fifth, and seventh value vectors generated in a 257^{th} sequence of a multi-head attention are distributed in units of elements and stored in memory banks of a first group of PIM devices and in which second matrix-vector multiplication performed on a seventh head according to an embodiment of the present disclosure. In addition, FIG. 46 is a diagram illustrating a process in which second, fourth, sixth, and eighth value vectors generated in a 257^{th} sequence of a multi-head attention are distributed in units of elements and stored in memory banks of a second group of PIM devices and in which second matrix-vector multiplication performed on an eighth head according to an embodiment of the present disclosure.

Referring to FIG. 43 through FIG. 46, although not illustrated, first through eighth value vectors generated in each of the third through 256^{th} sequences are also stored in the first through sixteenth PIM devices PIM0 through PIM15 in the same manner as in the second sequence, and the first through 128^{th} elements of the first through eighth multi-head attention value vectors in each of the third through 256^{th} sequences are output from the first through sixteenth PIM devices PIM0 through PIM15 by the subsequent second matrix-vector multiplications. The first through 128^{th} elements of each of the first through eight value vectors V1(257) through V8(257) of the last sequence of the multi-head attention, the 257^{th} sequence n_seq=257, are stored in the 4,097^{th} through 4,112^{th} columns in each of the first through sixteenth memory banks BK0 through BK15 of each of the first through sixteenth PIM devices PIM0 through PIM15. The odd-numbered value vectors of the first through eighth value vectors V1(257) through V8(257) generated in the 257^{th} sequence n_seq=257, that is, the first value vector V1(257), third value vector V3(257), fifth value vector V5(257), and seventh value vector V7(257) are stored in the first group of PIM devices, that is, the first through eighth PIM devices PIM0 through PIM7. On the other hand, the even-numbered value vectors of the first through eighth value vectors V1(257) through V8(257) generated in the 257^{th} sequence n_seq=257, that is, the second value vector V2(257), fourth value vector V4(257), sixth value vector V6(257), and eighth value vector V8(257) are stored in the second group of PIM devices, that is, the ninth through sixteenth PIM devices PIM8 through PIM15.

More specifically, as illustrated in FIG. 45, the first through sixteenth elements V1(257)_1 through V1(257)_16 of the first value vector V1(257) of the 257^{th} sequence n_seq=257 are stored in the first through sixteenth memory banks BK0 through BK15 of the first PIM device PIM0, respectively. Each of the first through sixteenth elements V1(257)_1 through V1(257)_16 of the first value vector V1(257) of the 257^{th} sequence n_seq=257 is stored in the first row and the 4,097^{th} through 4,112^{th} columns of each of the first through sixteenth memory banks BK0 through BK15 of the first PIM device PIM0. The 17^{th} through 32^{nd} elements V1(257)_17 through V1(257)_32 of the first value vector V1(257) of the 257^{th} sequence n_seq=257 are stored in the first through sixteenth memory banks BK0 through BK15 of the second PIM device PIM1, respectively. Each of the 17^{th} through 32^{nd} elements V1(257)_17 through V1(257)_32 of the first value vector V1(257) of the 257^{th} sequence n_seq=257 is stored in the first row and the 4,097^{th} through 4,112^{th} columns of each of the first through sixteenth memory banks BK0 through BK15 of the second PIM device PIM1. Although not shown, the 33^{rd} through 112^{th} elements of the first value vector V1(257) of the 257^{th} sequence n_seq=257 are stored in the first through sixteenth memory banks of each of the third through seventh PIM devices, respectively. Each of the 33^{rd} through 112^{th} elements of the first value vector V1(257) of the 257^{th} sequence n_seq=257 is stored in the first row and the 4,097^{th} through 4,112^{th} columns of corresponding first through sixteenth memory banks of the third through seventh PIM devices. In the same manner, the 113^{th} through 128^{th} elements V1(257)_113 through V1(257)_128 of the first value vector V1(257) of the 257^{th} sequence n_seq=257 are stored in the first through sixteenth memory banks BK0 through BK15 of the eighth PIM device PIM7, respectively. Each of the 113^{th} through 128^{th} elements V1(257)_113 through V1(257)_128 of the first value vector V1(257) of the 257^{th} sequence n_seq=257 is stored in the first row and the 4,097^{th} through 4,112^{th} columns of each of the first through sixteenth memory banks BK0 through BK15 of the eighth PIM device PIM7. Although not shown, when the first through 128^{th} elements V1(257)_1 through V1(257)_128 of the first value vector V1(257) of the 257^{th} sequence n_seq=257 are written to the first through eighth PIM devices PIM0 through PIM7, the first through 257^{th} parts of the first attention distribution vector generated in the 257^{th} sequence n_seq=257 are stored in each of the global buffers GBs of the first through eighth PIM devices PIM0 through PIM7. In addition, the second matrix-vector multiplications on the first head of the 257^{th} sequence n_seq=257 are performed using the first value vectors V1(1) through V1(257) constituting the first attention matrix CONCAT(V1(1), ..., V1(257)) and the first through 257^{th} parts of the first attention distribution vector as the operands. As a result of the second matrix-vector multiplications on the first head of the 257^{th} sequence n_seq=257, the first through 128^{th} elements of the first multi-head attention value vector of the 257^{th} sequence n_seq=257 are generated.

The first through sixteenth elements V3(257)_1 through V3(257)_16 of the third value vector V3(257) of the 257^{th} sequence n_seq=257 are stored in the first through sixteenth memory banks BK0 through BK15 of the first PIM device PIM0, respectively. Each of the first through sixteenth elements V3(257)_1 through V3(257)_16 of the third value vector V3(257) of the 257^{th} sequence n_seq=257 is stored in the second row and the 4,097^{th} through 4,112^{th} columns of each of the first through sixteenth memory banks BK0 through BK15 of the first PIM device PIM0. The 17^{th} through 32^{nd} elements V3(257)_17 through V3(257)_32 of the third value vector V3(257) of the 257^{th} sequence n_seq=257 are stored in the first through sixteenth memory banks BK0 through BK15 of the second PIM device PIM1, respectively. Each of the 17^{th} through 32^{nd} elements V3(257)_17 through V3(257)_32 of the third value vector V3(257) of the 257^{th} sequence n_seq=257 is stored in the second row and the 4,097^{th} through 4,112^{th} columns of each of the first through sixteenth memory banks BK0 through BK15 of the second PIM device PIM1. Although not shown, the 33^{rd} through 112^{th} elements of the third value vector V3(257) of the 257^{th} sequence n_seq=257 are stored in the first through sixteenth memory banks of each of the third through seventh PIM devices, respectively. Each of the 33^{rd} through 112^{th} elements of the third value vector V3(257) of the 257^{th} sequence n_seq=257 is stored in the second row and the 4,097^{th} through 4,112^{th} columns of corresponding first through sixteenth memory banks of the third through seventh PIM devices. In the same manner, the 113^{th} through 128^{th} elements V3(257)_113 through V3(257)_128 of the third value vector V3(257) of the 257^{th} sequence n_seq=257 are stored in the first through sixteenth memory banks BK0 through BK15 of the eighth PIM device PIM7, respectively. Each of the 113^{th} through 128^{th} elements V3(257)_113 through V3(257)_128 of the third value vector V3(257) of the 257^{th} sequence n_seq=257 is stored in the second row and the 4,097^{th} through 4,112^{th} columns of each of the first through sixteenth memory banks BK0 through BK15 of the eighth PIM device PIM7. Although not shown, when the first through 128^{th} elements V3(257)_1 through V3(257)_128 of the third value vector V3(257) of the 257^{th} sequence n_seq=257 are written to the first through eight PIM devices PIM0 through PIM7, the first through 257^{th} parts of the third attention distribution vector generated in the 257^{th} sequence n_seq=257 are stored in each of the global buffers GBs of the first through eighth PIM devices PIM0 through PIM7. In addition, the second matrix-vector multiplications on the third head of the 257^{th} sequence n_seq=257 are performed using the third value vectors V3(1) through V3(257) constituting the third attention matrix CONCAT(V3(1), ..., V3(257)) and the first through the 257^{th} parts of the third attention distribution vector as the operands. As a result of the second matrix-vector multiplications on the third head of the 257^{th} sequence n_seq=257, the first through 128^{th} elements of the third multi-head attention value vector of the 257^{th} sequence n_seq=257 are generated.

The first through sixteenth elements V5(257)_1 through V5(257)_16 of the fifth value vector V5(257) of the 257^{th} sequence n_seq=257 are stored in the first through sixteenth memory banks BK0 through BK15 of the first PIM device PIM0, respectively. Each of the first through sixteenth elements V5(257)_1 through V5(257)_16 of the fifth value vector V5(257) of the 257^{th} sequence n_seq=257 is stored in the third row and the 4,097^{th} through 4,112^{th} columns of each of the first through sixteenth memory banks BK0 through BK15 of the first PIM device PIM0. The 17^{th} through 32^{nd} elements V5(257)_17 through V5(257)_32 of the fifth value vector V5(257) of the 257^{th} sequence n_seq=257 are stored in the first through sixteenth memory banks BK0 through BK15 of the second PIM device PIM1, respectively. Each of the 17^{th} through 32^{nd} elements V5(257)_17 through V5(257)_32 of the fifth value vector V5(257) of the 257^{th} sequence n_seq=257 is stored in the third row and the 4,097^{th} through 4,112^{th} columns of each of the first through sixteenth memory banks BK0 through BK15 of the second PIM device PIM1. Although not shown, the 33^{rd} through 112^{th} elements of the fifth value vector V5(257) of the 257^{th} sequence n_seq=257 are stored in the first through sixteenth memory banks of each of the third through seventh PIM devices, respectively. Each of the 33^{rd} through 112^{th} elements of the fifth value vector V5(257) of the 257^{th} sequence n_seq=257 is stored in the third row and the 4,097^{th} through 4,112^{th} columns of corresponding first through sixteenth memory banks of the third through seventh PIM devices. In the same manner, the 113^{th} through 128^{th} elements V5(257)_113 through V5(257)_128 of the fifth value vector V5(257) of the 257^{th} sequence n_seq=257 are stored in the first through sixteenth memory banks BK0 through BK15 of the eighth PIM device PIM7, respectively. Each of the 113^{th} through 128^{th} elements V5(257)_113 through V5(257)_128 of the fifth value vector V5(257) of the 257^{th} sequence n_seq=257 is stored in the third row and the 4,097^{th} through 4,112^{th} columns of each of the first through sixteenth memory banks BK0 through BK15 of the eighth PIM device PIM7. Although not shown, when the first through 128^{th} elements V5(257)_1 through V5(257)_128 of the fifth value vector V5(257) of the 257^{th} sequence n_seq=257 are written to the first through eight PIM devices PIM0 through PIM7, the first through 257^{th} parts of the fifth attention distribution vector generated in the 257^{th} sequence n_seq=257 are stored in each of the global buffers GBs of the first through eighth PIM devices PIM0 through PIM7. In addition, the second matrix-vector multiplications on the fifth head of the 257^{th} sequence n_seq=257 are performed using the fifth value vectors V5(1) through V5(257) constituting the fifth value matrix CONCAT(V5(1), ..., V5(257)) and the first through fifth parts of the fifth attention distribution vector as the operands. As a result of the second matrix-vector multiplications on the fifth head of the 257^{th} sequence n_seq=257, the first through 128^{th} elements of the fifth multi-head attention value vector of the 257^{th} sequence n_seq=257 are generated.

The first through sixteenth elements V7(257)_1 through V7(257)_16 of the seventh value vector V7(257) of the 257^{th} sequence n_seq=257 are stored in the first through sixteenth memory banks BK0 through BK15 of the first PIM device PIM0, respectively. Each of the first through sixteenth elements V7(257)_1 through V7(257)_16 of the seventh value vector V7(257) of the 257^{th} sequence n_seq=257 is stored in the fourth row and the 4,097^{th} through 4,112^{th} columns of each of the first through sixteenth memory banks BK0 through BK15 of the first PIM device PIM0. The 17^{th} through 32^{nd} elements V7(257)_17 through V7(257)_32 of the seventh value vector V7(257) of the 257^{th} sequence n_seq=257 are stored in the first through sixteenth memory banks BK0 through BK15 of the second PIM device PIM1, respectively. Each of the 17^{th} through 32^{nd} elements V7(257)_17 through V7(257)_32 of the seventh value vector V7(257) of the 257^{th} sequence n_seq=257 is stored in the fourth row and the 4,097^{th} through 4,112^{th} columns of each of the first through sixteenth memory banks BK0 through BK15 of the second PIM device PIM1. Although not shown, the 33^{rd} through 112^{th} elements of the seventh value vector V7(257) of the 257^{th} sequence n_seq=257 are stored in the first through sixteenth memory banks of each of the third through seventh PIM devices, respectively. Each of the 33^{rd} through 112^{th} elements of the seventh value vector V7(257) of the 257^{th} sequence n_seq=257 is stored in the fourth row and the 4,097^{th} through 4,112^{th} columns of corresponding first through sixteenth memory banks of the third through seventh PIM devices. In the same manner, the 113^{th} through 128^{th} elements V7(257)_113 through V7(257)_128 of the seventh value vector V7(257) of the 257^{th} sequence n_seq=257 are stored in the first through sixteenth memory banks BK0 through BK15 of the eighth PIM device PIM7, respectively. Each of the 113^{th} through 128^{th} elements V7(257)_113 through V7(257)_128 of the seventh value vector V7(257) of the 257^{th} sequence n_seq=257 is stored in the fourth row and the 4,097^{th} through 4,112^{th} columns of each of the first through sixteenth memory banks BK0 through BK15 of the eighth PIM device PIM7.

When the first through 128^{th} elements V7(257)_1 through V7(257)_128 of the seventh value vector V7(257) of the 257^{th} sequence n_seq=257 are written to the first through eighth PIM devices PIM0 through PIM7, the first through 257^{th} parts S7(257)_1 through S7(257)_257 of the seventh attention distribution vector S7(257) generated in the 257^{th} sequence n_seq=257 are stored in each of the global buffers GBs of the first through eighth PIM devices PIM0 through PIM7. The first through first 257^{th} parts S7(257)_1 through S7(257)_257 of the seventh attention distribution vector S7(257) of the 257^{th} sequence n_seq=257 may be generated by performing scaling processing and softmax function processing on the first through 257^{th} parts of the seventh attention score vector generated by the first matrix-vector multiplications in the 257^{th} sequence n_seq=257.

The second matrix-vector multiplications on the seventh head of the 257^{th} sequence n_seq=257 are performed on the seventh value vectors V7(1) through V7(257) constituting the seventh value matrix CONCAT(V7(1), ..., V7(257)) and the first through the 257^{th} parts S7(257)_1 through S7(257)_257 of the seventh attention distribution vector S7(257). The seventh value vectors V7(1) through V7(257) constituting the seventh value matrix CONCAT(V7(1), ..., V7(257)) constitute the first through the 257^{th} columns of the seventh value matrix CONCAT(V7(1), ..., V7(257)), respectively. The seventh value vectors V7(1) through V7(257) constituting the seventh value matrix CONCAT(V7(1), ..., V7(257)) are the seventh value vectors generated in the first through 257^{th} sequences n_seq=1 through n_seq=257, respectively. More specifically, the second matrix-vector multiplications on the seventh head of the 257^{th} sequence n_seq=257 are performed on the first column of the seventh value matrix CONCAT(V7(1), ..., V7(257)), that is, the first through 128^{th} elements V7(1)_1 through V7(1)_128 generated in the first sequence n_seq=1 and the first part S7(257)_1 of the seventh attention distribution vector S7(257). In addition, the second matrix-vector multiplications on the seventh head of the 257^{th} sequence n_seq=257 are also performed on the second column of the seventh value matrix CONCAT(V7(1), ..., V7(257)), that is, the first through the 128^{th} elements V7(2)_1 through V7(2)_128 generated in the second sequence n_seq=2 and the second part S7(257)_2 of the seventh attention distribution vector S7(257). The second matrix-vector multiplications are repeatedly performed until the second matrix-vector multiplications are performed on the 257^{th} column of the seventh value matrix CONCAT(V7(1), ..., V7(257)), that is, the first through 128^{th} elements V7(257)_1 through V7(257)_128 of the seventh value vector V7(257) and the 257^{th} part S7(257)_257 of the seventh attention distribution vector S7(257). The 257 second matrix-vector multiplication results are accumulated, and as a result of accumulation, the first through 128^{th} elements Z7(257)_1 through Z7(257)_128 of the seventh multi-head attention value vector Z7(257) of the 257^{th} sequence n_seq=257 are generated.

More specifically, the first processing unit PU0 of the first PIM device PIM0 performs the matrix-vector multiplication on the first element V7(1)_1 of the first column V7(1) of the seventh value matrix CONCAT(V7(1), ..., V7(257)) and the first part S7(257)_1 of the seventh attention distribution vector S7(257). Next, the first processing unit PU0 of the first PIM device PIM0 performs the matrix-vector multiplication on the first element V7(2)_1 of the second column V7(2) of the seventh value matrix CONCAT(V7(1), ..., V7(257)) and the second part S7(257)_2 of the seventh attention distribution vector S7(257). Next, the first processing unit PU0 of the first PIM device PIM0 performs the matrix-vector multiplications on the first elements of the third through 256^{th} columns of the seventh value matrix CONCAT(V7(1), ..., V7(257)) and the third through 256^{th} parts of the seventh attention distribution vector S7(257), respectively. Finally, the first processing unit PU0 of the first PIM device PIM0 performs the matrix-vector multiplication on the first element V7(257)_1 of the 257^{th} column V7(257) of the seventh value matrix CONCAT(V7(1), ..., V7(257)) and the 257^{th} part S7(257)_257 of the seventh attention distribution vector S7(257). The results generated by the 257 matrix-vector multiplications are accumulated by the first processing unit PU0 of the first PIM device PIM0, and the first processing unit PU0 of the first PIM device PIM0 outputs the accumulated result as the first element Z7(257)_1 of the seventh multi-head attention value vector Z7(257) of the 257^{th} sequence n_seq=257.

In the same manner, the second processing unit PU1 of the first PIM device PIM0 outputs the second element Z7(257)_2 of the seventh multi-head attention value vector Z7(257) of the 257^{th} sequence n_seq=257. In the same manner, the sixteenth processing unit PU15 of the first PIM device PIM0 outputs the sixteenth element Z7(257)_16 of the seventh multi-head attention value vector Z7(257) of the 257^{th} sequence n_seq=257. Although not shown, the third through fifteenth processing units of the first PIM device PIM0 output the third through fifteenth elements Z7(257)_3 through Z7(257)_15 of the seventh multi-head attention value vector Z7(257) of the 257^{th} sequence n_seq=257, respectively. The first through sixteenth processing units PU0 through PU15 of the second PIM device PIM1 output the 17^{th} through 32^{nd} elements Z7(257)_17 through Z7(257)_32 of the seventh multi-head attention value vector Z7(257) of the 257^{th} sequence n_seq=257, respectively. Although not shown, the first through sixteenth processing units of each of the third through seventh PIM devices output the 33^{rd} through 112^{th} elements Z7(257)_33 through Z7(257)_112 of the seventh multi-head attention value vector Z7(257) of the 257^{th} sequence n_seq=257. The first through sixteenth processing units PU0 through PU15 of the eighth PIM device PIM7 output the 113^{th} through 128^{th} elements Z7(257)_113 through Z7(257)_128 of the seventh multi-head attention value vector Z7(257) of the 257^{th} sequence n_seq=257, respectively.

The manner in which the second matrix-vector multiplications on the seventh head of the 257^{th} sequence n_seq=257 are performed is applied identically to the second matrix-vector multiplications on the first, third, and fifth heads of the 257^{th} sequence n_seq=257. Accordingly, the first through sixteenth processing units PU0 through PU15 of each of the first through eighth PIM devices PIM0 through PIM7 perform the second matrix-vector multiplications on the first head of the 257^{th} sequence n_seq=257 to output the first through 128^{th} elements of the first multi-head attention value vector of the 257^{th} sequence n_seq=257. The first through sixteenth processing units PU0 through PU15 of each of the first through eighth PIM devices PIM0 through PIM7 perform the second matrix-vector multiplications on the third head of the 257^{th} sequence n_seq=257 to output the first through 128^{th} elements of the third multi-head attention value vector of the 257^{th} sequence n_seq=257. The first through sixteenth processing units PU0 through PU15 of each of the first through eighth PIM devices PIM0 through PIM7 perform the second matrix-vector multiplications on the fifth head of the 257^{th} sequence n_seq=257 to output the first through 128^{th} elements of the fifth multi-head attention value vector of the 257^{th} sequence n_seq=257.

Next, as illustrated in FIG. 46, the first through sixteenth elements V2(257)_1 through V2(257)_16 of the second value vector V2(257) of the 257^{th} sequence n_seq=257 are stored in the first through sixteenth memory banks BK0 through BK15 of the ninth PIM device PIM8, respectively. Each of the first through sixteenth elements V2(257)_1 through V2(257)_16 of the second value vector V2(257) of the 257^{th} sequence n_seq=257 is stored in the first row and the 4,097^{th} through 4,112^{th} columns of each of the first through sixteenth memory banks BK0 through BK15 of the ninth PIM device PIM8. The 17^{th} through 32^{nd} elements V2(257)_17 through V2(257)_32 of the second value vector V2(257) of the 257^{th} sequence n_seq=257 are stored in the first through sixteenth memory banks BK0 through BK15 of the tenth PIM device PIM9, respectively. Each of the 17^{th} through 32^{nd} elements V2(257)_17 through V2(257)_32 of the second value vector V2(257) of the 257^{th} sequence n_seq=257 is stored in the first row and the 4,097^{th} through 4,112^{th} columns of each of the first through sixteenth memory banks BK0 through BK15 of the tenth PIM device PIM9. Although not shown, the 33^{rd} through 112^{th} elements of the second value vector V2(257) of the 257^{th} sequence n_seq=257 are stored in the first through sixteenth memory banks of each of the eleventh through fifteenth PIM devices, respectively. Each of the 33^{rd} through 112^{th} elements of the second value vector V2(257) of the 257^{th} sequence n_seq=257 is stored in the first row and the 4,097^{th} through 4,112^{th} columns of corresponding first through sixteenth memory banks of the eleventh through fifteenth PIM devices. In the same manner, the 113^{th} through 128^{th} elements V2(257)_113 through V2(257)_128 of the second value vector V2(257) of the 257^{th} sequence n_seq=257 are stored in the first through sixteenth memory banks BK0 through BK15 of the sixteenth PIM device PIM15, respectively. Each of the 113^{th} through 128^{th} elements V2(257)_113 through V2(257)_128 of the second value vector V2(257) of the 257^{th} sequence n_seq=257 is stored in the first row and the 4,097^{th} through 4,112^{th} columns of each of the first through sixteenth memory banks BK0 through BK15 of the sixteenth PIM device PIM15. Although not shown, when the first through 128^{th} elements V2(257)_1 through V2(257)_128 of the second value vector V2(257) of the 257^{th} sequence n_seq=257 are written to the ninth to sixteenth PIM devices PIM8 through PIM15, the first through 257^{th} parts of the second attention distribution vector generated in the 257^{th} sequence n_seq=257 are stored in each of the global buffers GBs of the ninth to sixteenth PIM devices PIM8 through PIM15. In addition, the second matrix-vector multiplications are performed on the second head of the 257^{th} sequence n_seq=257 using the second value vectors V2(1) through V2(257) constituting the second value matrix CONCAT(V2(1), ..., V2(257)) and the first through 257^{th} parts of the second attention distribution vector as the operands. As a result of the second matrix-vector multiplications on the second head of the 257^{th} sequence n_seq=257, the first through 128^{th} elements of the second multi-head attention value vector of the 257^{th} sequence n_seq=257 are generated.

The first through sixteenth elements V4(257)_1 through V4(257)_16 of the fourth value vector V4(257) of the 257^{th} sequence n_seq=257 are stored in the first through sixteenth memory banks BK0 through BK15 of the ninth PIM device PIM8, respectively. Each of the first through sixteenth elements V4(257)_1 through V4(257)_16 of the fourth value vector V4(257) of the 257^{th} sequence n_seq=257 is stored in the second row and the 4,097^{th} through 4,112^{th} columns of each of the first through sixteenth memory banks BK0 through BK15 of the ninth PIM device PIM8. The 17^{th} through 32^{nd} elements V4(257)_17 through V4(257)_32 of the fourth value vector V4(257) of the 257^{th} sequence n_seq=257 are stored in the first through sixteenth memory banks BK0 through BK15 of the tenth PIM device PIM9, respectively. Each of the 17^{th} through 32^{nd} elements V4(257)_17 through V4(257)_32 of the fourth value vector V4(257) of the 257^{th} sequence n_seq=257 is stored in the second row and the 4,097^{th} through 4,112^{th} columns of each of the first through sixteenth memory banks BK0 through BK15 of the tenth PIM device PIM9. Although not shown, the 33^{rd} through 112^{th} elements of the fourth value vector V4(257) of the 257^{th} sequence n_seq=257 are stored in the first through sixteenth memory banks of each of the eleventh through fifteenth PIM devices, respectively. Each of the 33^{rd} through 112^{th} elements of the fourth value vector V4(257) of the 257^{th} sequence n_seq=257 is stored in the second row and the 4,097^{th} through 4,112^{th} columns of corresponding first through sixteenth memory banks of the eleventh through fifteenth PIM devices. In the same manner, the 113^{th} through 128^{th} elements V4(257)_113 through V4(257)_128 of the fourth value vector V4(257) of the 257^{th} sequence n_seq=257 are stored in the first through sixteenth memory banks BK0 through BK15 of the sixteenth PIM device PIM15, respectively. Each of the 113^{th} through 128^{th} elements V4(257)_113 through V4(257)_128 of the fourth value vector V4(257) of the 257^{th} sequence n_seq=257 is stored in the second row and the 4,097^{th} through 4,112^{th} columns of each of the first through sixteenth memory banks BK0 through BK15 of the sixteenth PIM device PIM15. Although not shown, when the first through 128^{th} elements V4(257)_1 through V4(257)_128 of the fourth value vector V4(257) of the 257^{th} sequence n_seq=257 are written to the ninth to sixteenth PIM devices PIM8 through PIM15, the first through the 257^{th} parts of the fourth attention distribution vector generated in the 257^{th} sequence n_seq=257 are stored in each of the global buffers GBs of the ninth to sixteenth PIM devices PIM8 through PIM15. In addition, the second matrix-vector multiplications on the fourth head of the 257^{th} sequence n_seq=257 are performed using the fourth value vectors V4(1) through V4(257) constituting the fourth value matrix CONCAT(V4(1), ..., V4(257)) and the first through the 257^{th} parts of the fourth attention distribution vector as the operands. As a result of the second matrix-vector multiplications on the fourth head of the 257^{th} sequence n_seq=257, the first through 128^{th} elements of the fourth multi-head attention value vector of the 257^{th} sequence n_seq=257 are generated.

The first through sixteenth elements V6(257)_1 through V6(257)_16 of the sixth value vector V6(257) of the 257^{th} sequence n_seq=257 are stored in the first through sixteenth memory banks BK0 through BK15 of the ninth PIM device PIM8, respectively. Each of the first through sixteenth elements V6(257)_1 through V6(257)_16 of the sixth value vector V6(257) of the 257^{th} sequence n_seq=257 is stored in the third row and the 4,097^{th} through 4,112^{th} columns of each of the first through sixteenth memory banks BK0 through BK15 of the ninth PIM device PIM8. The 17^{th} through 32^{nd} elements V6(257)_17 through V6(257)_32 of the sixth value vector V6(257) of the 257^{th} sequence n_seq=257 are stored in the first through sixteenth memory banks BK0 through BK15 of the tenth PIM device PIM9, respectively. Each of the 17^{th} through 32^{nd} elements V6(257)_17 through V6(257)_32 of the sixth value vector V6(257) of the 257^{th} sequence n_seq=257 is stored in the third row and the 4,097^{th} through 4,112^{th} columns of each of the first through sixteenth memory banks BK0 through BK15 of the tenth PIM device PIM9. Although not shown, the 33^{rd} through 112^{th} elements of the sixth value vector V6(257) of the 257^{th} sequence n_seq=257 are stored in the first through sixteenth memory banks of each of the eleventh through fifteenth PIM devices, respectively. Each of the 33^{rd} through 112^{th} elements of the sixth value vector V6(257) of the 257^{th} sequence n_seq=257 is stored in the third row and the 4,097^{th} through 4,112^{th} columns of corresponding first through sixteenth memory banks of the eleventh through fifteenth PIM devices. In the same manner, the 113^{th} through 128^{th} elements V6(257)_113 through V6(257)_128 of the sixth value vector V6(257) of the 257^{th} sequence n_seq=257 are stored in the first through sixteenth memory banks BK0 through BK15 of the sixteenth PIM device PIM15, respectively. Each of the 113^{th} through 128^{th} elements V6(257)_113 through V6(257)_128 of the sixth value vector V6(257) of the 257^{th} sequence n_seq=257 is stored in the third row and the 4,097^{th} through 4,112^{th} columns of each of the first through sixteenth memory banks BK0 through BK15 of the sixteenth PIM device PIM15. Although not shown, when the first through 128^{th} elements V6(257)_1 through V6(257)_128 of the sixth value vector V6(257) of the 257^{th} sequence n_seq=257 are written to the ninth through sixteenth PIM devices PIM8 through PIM15, the first through 257^{th} parts of the sixth attention distribution vector generated in the 257^{th} sequence n_seq=257 are stored in each of the global buffers GBs of the ninth through sixteenth PIM devices PIM8 through PIM15. In addition, the second matrix-vector multiplications on the sixth head of the 257^{th} sequence n_seq=257 are performed using the sixth value vectors V6(1) through V6(257) constituting the sixth value matrix CONCAT(V6(1), ..., V6(257)) and the first through 257^{th} parts of the sixth attention distribution vector as the operands. As a result of the second matrix-vector multiplications on the sixth head of the 257^{th} sequence n_seq=257, the first through 128^{th} elements of the sixth multi-head attention value vector of the 257^{th} sequence n_seq=257 are generated.

The first through sixteenth elements V8(257)_1 through V8(257)_16 of the eighth value vector V8(257) of the 257^{th} sequence n_seq=257 are stored in the first through sixteenth memory banks BK0 through BK15 of the ninth PIM device PIM8, respectively. Each of the first through sixteenth elements V8(257)_1 through V8(257)_16 of the eighth value vector V8(257) of the 257^{th} sequence n_seq=257 is stored in the fourth row and the 4,097^{th} through 4,112^{th} columns of each of the first through sixteenth memory banks BK0 through BK15 of the ninth PIM device PIM8. The 17^{th} through 32^{nd} elements V8(257)_17 through V8(257)_32 of the eighth value vector V8(257) of the 257^{th} sequence n_seq=257 are stored in the first through sixteenth memory banks BK0 through BK15 of the tenth PIM device PIM9, respectively. Each of the 17^{th} through 32^{nd} elements V8(257)_17 through V8(257)_32 of the eighth value vector V8(257) of the 257^{th} sequence n_seq=257 is stored in the fourth row and the 4,097^{th} through 4,112^{th} columns of each of the first through sixteenth memory banks BK0 through BK15 of the tenth PIM device PIM9. Although not shown, the 33^{rd} through 112^{th} elements of the eighth value vector V8(257) of the 257^{th} sequence n_seq=257 are stored in the first through sixteenth memory banks of each of the eleventh through fifteenth PIM devices, respectively. Each of the 33^{rd} through 112^{th} elements of the eighth value vector V8(257) of the 257^{th} sequence n_seq=257 is stored in the fourth row and the 4,097^{th} through 4,112^{th} columns of corresponding first through sixteenth memory banks of the eleventh through fifteenth PIM devices. In the same manner, the 113^{th} through 128^{th} elements V8(257)_113 through V8(257)_128 of the eighth value vector V8(257) of the 257^{th} sequence n_seq=257 are stored in the first through sixteenth memory banks BK0 through BK15 of the sixteenth PIM device PIM15, respectively. Each of the 113^{th} through 128^{th} elements V8(257)_113 through V8(257)_128 of the eighth value vector V8(257) of the 257^{th} sequence n_seq=257 is stored in the fourth row and the 4,097^{th} through 4,112^{th} columns of each of the first through sixteenth memory banks BK0 through BK15 of the sixteenth PIM device PIM15.

When the first through 128^{th} elements V8(257)_1 through V8(257)_128 of the eighth value vector V8(257) of the 257^{th} sequence n_seq=257 are written to the ninth through sixteenth PIM devices PIM8 through PIM15, the first through 257^{th} parts S8(257)_1 through S8(257)_257 of the eighth attention distribution vector S8(257) generated in the 257^{th} sequence n_seq=257 are stored in each of the global buffers GBs of the ninth through sixteenth PIM devices PIM8 through PIM15. The first through 257^{th} parts S8(257)_1 through S8(257)_257 of the eighth attention distribution vector S8(257) of the 257^{th} sequence n_seq=257 may be generated by performing scaling processing and softmax function processing on the first through 257^{th} parts of the eighth attention score vector generated by the first matrix-vector multiplications in the 257^{th} sequence n_seq=257.

The second matrix-vector multiplications on the eighth head of the 257^{th} sequence n_seq=257 are performed on the eighth value matrix CONCAT(V8(1), ..., V8(257)) and the eighth attention distribution vector S8(257). The eighth value vectors V8(1) through V8(257) constituting the eighth value matrix CONCAT(V8(1), ..., V8(257)) constitute the first through the 257^{th} columns of the eighth value matrix CONCAT(V8(1), ..., V8(257)), respectively. The second matrix-vector multiplications on the eighth head of the 257^{th} sequence n_seq=257 are first performed on the first column of the eighth value matrix CONCAT(V8(1), ..., V8(257)), that is, the first through 128^{th} elements V8(1)_1 through V8(1)_128 of the eighth value vector V8(1) and the first part S8(257)_1 of the eighth attention distribution vector S8(257). Next, the second matrix-vector multiplications on the eighth head of the 257^{th} sequence n_seq=257 are performed on the second column of the eighth value matrix CONCAT(V8(1), ..., V8(257)), that is, the first through 128^{th} elements V8(2)_1 through V8(2)_128 of the eighth value vector V8(2) and the second part S8(257)_2 of the seventh attention distribution vector S8(257). These second matrix-vector multiplications are repeatedly performed until the second matrix-vector multiplications are performed on the 257^{th} column of the eighth value matrix CONCAT(V8(1), ..., V8(257)), that is, the first through the 128^{th} elements V8(257)_1 through V8(257)_128 of the eighth value vector V8(257) and the 257^{th} part S8(257)_257 of the eighth attention distribution vector S8(257). The results of the 257 second matrix-vector multiplications are accumulated, and as a result of accumulation, the first through 128^{th} elements Z8(257)_1 through Z8(257)_128 of the eighth multi-head attention value vector Z8(257)_128 of the 257^{th} sequence n_seq=257 are generated.

More specifically, the first processing unit PU0 of the ninth PIM device PIM8 performs the matrix-vector multiplication on the first element V8(1)_1 of the first column V8(1) of the eighth value matrix CONCAT(V8(1), ..., V8(257)) and the first part S8(257)_1 of the eighth attention distribution vector S8(257). Next, the first processing unit PU0 of the ninth PIM device PIM8 performs the matrix-vector multiplication on the first element V8(2)_1 of the second column V8(2) of the eighth value matrix CONCAT(V8(1), ..., V8(257)) and the second part S8(257)_2 of the eighth attention distribution vector S8(257). Subsequently, the first processing unit PU0 of the ninth PIM device PIM8 performs the matrix-vector multiplications on the first elements of the third through 256^{th} columns of the eighth value matrix CONCAT(V8(1), ..., V8(257)) and the third through 256^{th} parts of the eighth attention distribution vector S8(257), respectively. Finally, the first processing unit PU0 of the ninth PIM device PIM8 performs the matrix-vector multiplication on the first element V8(257)_1 of the 257^{th} column V8(257) of the eighth value matrix CONCAT(V8(1), ..., V8(257)) and the 257^{th} part S8(257)_257 of the eighth attention distribution vector S8(257). The results generated by the 257 matrix-vector multiplications are accumulated by the first processing unit PU0 of the ninth PIM device PIM8, and the first processing unit PU0 of the ninth PIM device PIM8 outputs the accumulated results as the first element Z8(257)_1 of the eighth multi-head attention value vector Z8(257) of the 257^{th} sequence n_seq=257.

In the same manner, the second processing unit PU1 of the ninth PIM device PIM8 outputs the second element Z8(257)_2 of the eighth multi-head attention value vector Z8(257) of the 257^{th} sequence n_seq=257. In the same manner, the sixteenth processing unit PU15 of the ninth PIM device PIM8 outputs the sixteenth element Z8(257)_16 of the eighth multi-head attention value vector Z8(257) of the 257^{th} sequence n_seq=257. Although not shown, the third through fifteenth processing units of the ninth PIM device PIM8 output the third through fifteenth elements Z8(257)_3 through Z8(257)_15 of the eighth multi-head attention value vector Z8(257) of the 257^{th} sequence n_seq=257, respectively. The first through sixteenth processing units PU0 through PU15 of the tenth PIM device PIM9 output the 17^{th} through 32^{nd} elements Z8(257)_17 through Z8(257)_32 of the eighth multi-head attention value vector Z8(257) of the 257^{th} sequence n_seq=257, respectively. Although not shown, the first through sixteenth processing units of each of the eleventh through fifteenth PIM devices output the 33^{rd} through 112^{th} elements Z8(257)_33 through Z8(257)_112 of the eighth multi-head attention value vector Z8(257) of the 257^{th} sequence n_seq=257. The first through sixteenth processing units PU0 through PU15 of the sixteenth PIM device PIM15 output the 113^{th} through 128^{th} elements Z8(257)_113 through Z8(257)_128 of the eighth multi-head attention value vector Z8(257) of the 257^{th} sequence n_seq=257, respectively.

The manner in which the second matrix-vector multiplications on the eighth head of the 257^{th} sequence n_seq=257 are performed is applied identically to the second matrix-vector multiplications on the second, fourth, and sixth heads of the 257^{th} sequence n_seq=257. Accordingly, the first through sixteenth processing units PU0 through PU15 of each of the ninth to sixteenth PIM devices PIM8 through PIM15 perform the second matrix-vector multiplications on the second head of the 257^{th} sequence n_seq=257 to output the first through 128^{th} elements of the second multi-head attention value vector of the 257^{th} sequence n_seq=257. The first through sixteenth processing units PU0 through PU15 of each of the ninth through sixteenth PIM devices PIM8 through PIM15 perform the second matrix-vector multiplications on the fourth head of the 257^{th} sequence n_seq=257 to output the first through 128^{th} elements of the fourth multi-head attention value vector of the 257^{th} sequence n_seq=257. The first through sixteenth processing units PU0 through PU15 of each of the ninth through sixteenth PIM devices PIM8 through PIM15 perform the second matrix-vector multiplications on the sixth head of the 257^{th} sequence n_seq=257 to output the first through 128^{th} elements of the sixth multi-head attention value vector of the 257^{th} sequence n_seq=257.

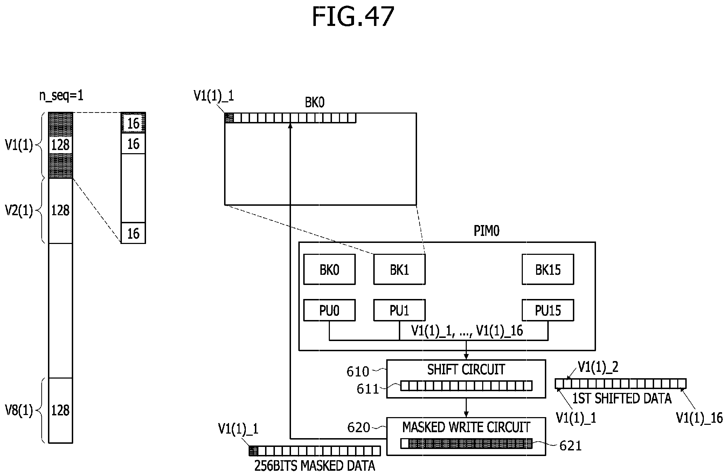

FIG. 47 through FIG. 49 are diagrams illustrating examples of writing value vectors generated in a first sequence to memory banks in a second manner in a neural network architecture according to embodiments of the present disclosure. Hereinafter in FIG. 47 through FIG. 49, the number of heads of the multi-head attention is 8 and the size of the heads are 128, the neural network architecture includes eight PIM devices, and each of the PIM devices includes 16 memory banks and 16 processing units, but embodiments are not limited to these configurations. In addition, each of the 128 elements of the value vector is 16-bit floating point data in BF16 format. Furthermore, it is assumed that the data access unit during the read and write operations of the memory bank is 256 bits.

Referring to FIG. 47, in a first sequence n_seq=1, a number of value vectors equal to the number of heads, that is, first through eighth value vectors V1(1) through V8(1), are generated in the PIM devices. In this example, because the neural network architecture includes eight PIM devices, the first through eighth value vectors V1(1) through V8(1) are stored in the first through eighth PIM devices PIM0 through PIM7, respectively. Specifically, the first through 128^{th} elements V1(1)_1 through V1(1)_128 of the first value vector V1(1) of the first sequence n_seq=1 are divided into units of 16 elements and stored in the first through eighth PIM devices PIM0 through PIM7. In other words, 16 elements written to one PIM device, from among the first through 128^{th} elements V1(1)_1 through V1(1)_128 of the first value vector V1(1) of the first sequence n_seq=1, may constitute one element group. The first through sixteenth elements V1(1)_1 through V1(1)_16 of the first value vector V1(1) are written to the first through sixteenth memory banks of the first PIM device PIM0, respectively. Hereinafter, the process of writing the first through sixteenth elements V1(1)_1 through V1(1)_16 of the first value vector V1(1) of the first sequence n_seq=1 to the first through sixteenth memory banks BK0 through BK15 of the first PIM device PIM0, respectively, and the process of writing the first through sixteenth elements V1(2)_1 through V1(2)_16 of the second value vector V1(2) of the second sequence n_seq=2 to the first through sixteenth memory banks BK0 through BK15 of the first PIM device PIM0, respectively, are described. The description below is applied equally to the remaining elements of the first value vector V1(1) and second through eighth value vectors V2(1) through V8(1).

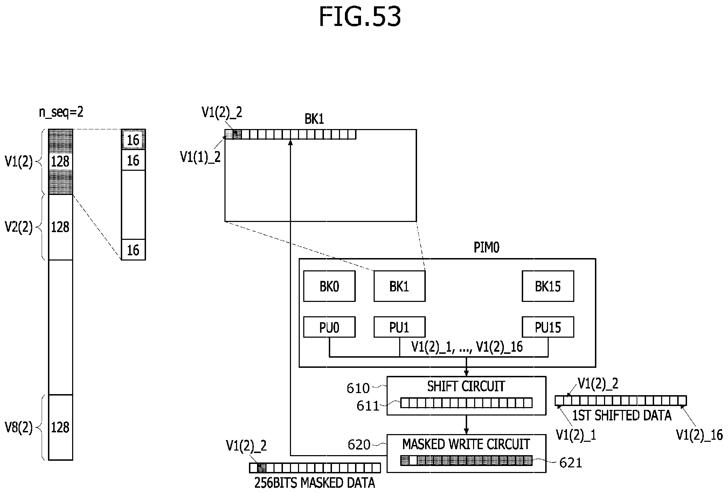

In an example, the first through sixteenth elements V1(1)_1 through V1(1)_16, from among the 128 elements of the first value vector V1(1) generated in the first sequence n_seq=1, are generated in the first through sixteenth processing units PU0 through PU15 of the first PIM device PIM0, respectively. The first through sixteenth elements V1(1)_1 through V1(1)_16 of the first value vector generated by the first through sixteenth processing units PU0 through PU15 of the first PIM device PIM0 are transmitted to a shift circuit 610. The shift circuit 610 includes a shifter 611. The shifter 611 has a size of 256 bits and performs a cyclic shifting operation in the left direction in units of 16 bits. Accordingly, each time the shifter 611 performs a single shifting operation, 256-bit input data is shifted to the left by 16 bits, and as a result, the uppermost 16-bit data on the left is shifted to the right to become lowermost 16-bit data. In an example, the shifter 611 may perform an initial shifting operation at the first writing time of each of the sequences. The initial shifting operation of the shifter 611 may be performed differently for different sequences. For example, the initial shifting operation of the shifter 611 in the first sequence may be an operation that outputs 256-bit input data as is, without the shifting operation. The initial shifting operation of the shifter 611 in the second sequence may be an operation that performs the shifting operation once to the right. The initial shifting operation of the shifter 611 in the third sequence may be an operation that performs the shifting operation twice to the right in succession. As such, the initial shifting operation of the shifter 611 may be performed in the right direction continuously "W-1" times in the "W"^{th} sequence. In another example, the shifter 611 may not perform the initial shifting operation in every sequence. This is described in more detail below with reference to FIG. 53 through FIG. 55.

In an example, the shift circuit 610 may be included in a PIM controller (120 in FIG. 1) that is included in a neural network architecture (10 in FIG. 1) described above with reference to FIG. 1. The PIM controller (120 in FIG. 1) may perform a control operation of reading an operation result for a first PIM device PIM0 to cause first through sixteenth elements V1(1)_1 through V1(1)_16 of the first value vector to be transmitted to the shift circuit 610. The first through sixteenth elements V1(1)_1 through V1(1)_16 of the first value vector are input to the shifter 611 as 256-bit input data. That is, the lowermost 16 bits of the 256-bit input data input to the shifter 611 is also the sixteenth element V1(1)_16 of the first value vector, and the uppermost 16 bits of the 256-bit input data is also the first element V1(1)_1 of the first value vector. In the first sequence n_seq=1, the shifter 611 outputs 256-bit output data that is the same as the 256-bit input data as the first shifted data, without the initial shifting operation. Accordingly, the lowermost 16 bits and the uppermost 16 bits of the 256-bit output data from the shifter 611 become the sixteenth element V1(1)_16 and the first element V1(1)_1 of the first value vector, respectively.

The first shifted data output from the shifter 611 (that is, the shift circuit 610) is transmitted to a masked write circuit 620. In an example, the masked write circuit 620 is included in the first PIM device PIM0. In this case, the PIM controller (120 in FIG. 1) may transmit the 256-bit output data to the masked write circuit 620 of the first PIM device PIM0 to write the first shifted data to the first PIM device PIM0. The masked write circuit 620 includes a 256-bit mask 621. The 256-bit mask 621 outputs input bits for only 16 selected bits from among the 256-bit output data from the shifter 611, and masks all remaining bits. The selected 16 bits in the 256-bit mask 621 may vary depending on the sequence of the multi-head attention. For example, in the first sequence, the 256-bit mask 621 may select the uppermost 16 bits as the output bits of the masked write circuit 620. In addition, in the second sequence, the 256-bit mask 621 may select the second set of 16 bits from the uppermost as the output bits of the masked write circuit 620. In this manner, as the sequence progresses, the selected bits in the 256-bit mask 621 may be shifted in a lower bit direction. In the first sequence n_seq=1, the masked write circuit 620 writes the 256-bit masked data, in which all the remaining lower bits except for the uppermost 16 bits (i.e., the first element V1(1)_1 of the first value vector) are disabled from among the 256 bits of the first shifted data, to the first memory bank BK0. As a result, the first element V1(1)_1 of the first value vector is written to the first row and the first column of the first memory bank BK0.

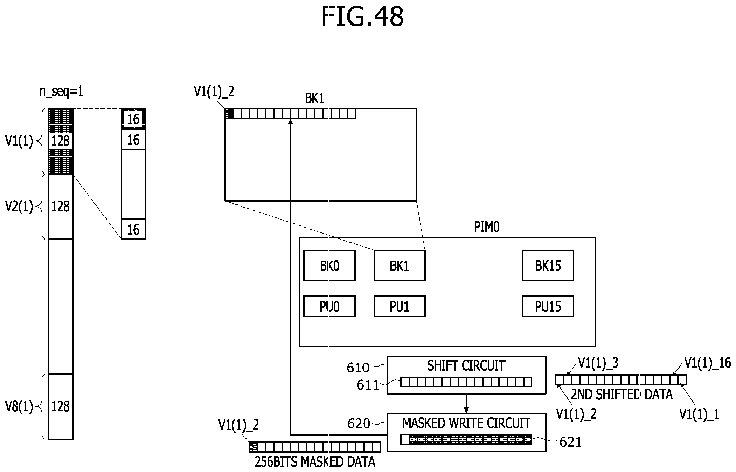

Referring next to FIG. 48, when the first element V1(1)_1 of the first value vector is written to the first memory bank BK0, the shifter 611 of the shift circuit 610 outputs second shifted data generated by shifting the 256-bit input data by 1 bit to the left. The uppermost 16 bits of the second shifted data become the second element V1(1)_2 of the first value vector. The second shifted data output from the shift circuit 610 is transmitted to the masked write circuit 620. The 256-bit mask 621 of the masked write circuit 620 writes the 256-bit masked data, in which all the lower bits except the uppermost 16 bits (i.e., the second element V1(1)_2 of the first value vector) among the 256 bits of the second shifted data are disabled, to the second memory bank BK1. Accordingly, the second element V1(1)_2 of the first value vector is written to the first row and the first column of the second memory bank BK1. Although not shown, the third through fifteenth elements of the first value vector are written to the third through fifteenth memory banks, respectively, in the same manner.

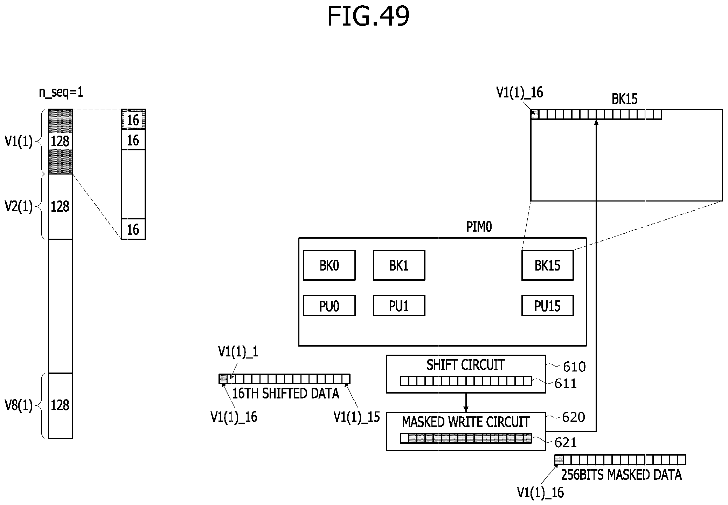

Next, referring to FIG. 49, when the fifteenth element of the first value vector is written to the fifteenth memory bank, the shifter 611 of the shift circuit 610 outputs sixteenth shifted data in which the 256-bit input data is shifted by 240 bits to the left. Accordingly, the uppermost 16 bits of the sixteenth shifted data become the sixteenth element V1(1)_16 of the first value vector. The sixteenth shifted data output from the shift circuit 610 is transmitted to the masked write circuit 620. The 256-bit mask 621 of the masked write circuit 620 writes the 256-bit masked data, in which all the lower bits except the uppermost 16 bits (i.e., the sixteenth element V1(1)_16 of the first value vector) among the 256 bits of the sixteenth shifted data are disabled, to the sixteenth memory bank BK15. Accordingly, the sixteenth element V1(1)_16 of the first value vector is written to the first row and the first column of the sixteenth memory bank BK15.

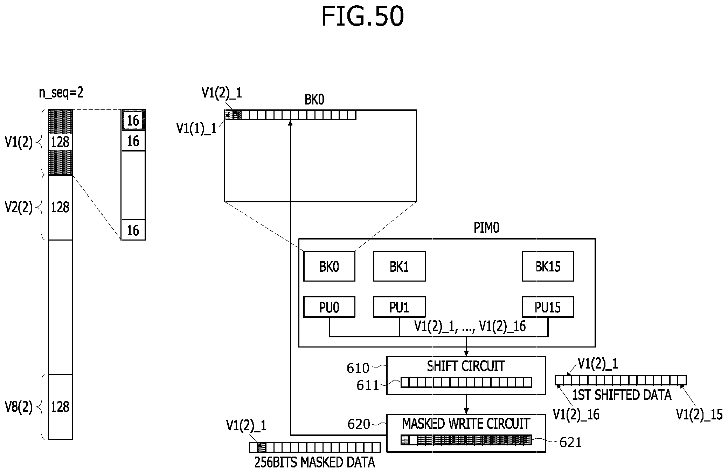

FIG. 50 through FIG. 52 are diagrams illustrating examples of writing value vectors generated in a second sequence to memory banks a second manner in a neural network architecture according to embodiments of the present disclosure.

Referring to FIG. 50, the first through sixteenth elements V1(2)_1 through V1(2)_16 of the 128 elements of the first value vector V1(2) generated in the second sequence n_seq=2 may be generated in the first through sixteenth processing units PU0 through PU15 of the first PIM device PIM0, respectively. The first through sixteenth elements V1(2)_1 through V1(2)_16 of the first value vector V1(2) generated by the first through sixteenth processing units PU0 through PU15 of the first PIM device PIM0 are input to the shifter 611 of the shift circuit 610 as the 256-bit input data. In other words, the lowermost 16 bits of the 256-bit input data input to the shifter 611 are the sixteenth element V1(2)_16 of the first value vector V1(2) of the second sequence n_seq=2, and the uppermost 16 bits of the 256-bit input data are the first element V1(2)_1 of the first value vector V1(2) of the second sequence n_seq=2. In the second sequence, the shifter 611 performs the initial shifting operation once to the right and outputs the result as the first shifted data. Accordingly, the uppermost 16 bits of the first shifted data are the sixteenth element V1(2)_16 of the first value vector V1(2), and the second uppermost 16 bits are the first element V1(2)_1. The first shifted data output from the shifter 611 is transmitted to the 256-bit mask 621 of the masked write circuit 620. In the second sequence n_seq=2, the 256-bit mask 621 is changed such that the second upper 16 bits from the uppermost are selected as the output bits. Accordingly, the 16-bit data output from the masked write circuit 620 and written to the first memory bank BK0 becomes the first element V1(2)_1 of the first value vector V1(2) of the second sequence n_seq=2. The first element V1(2)_1 of the first value vector V1(2) of the second sequence n_seq=2 is written to the first row and the second column of the first memory bank BK0.

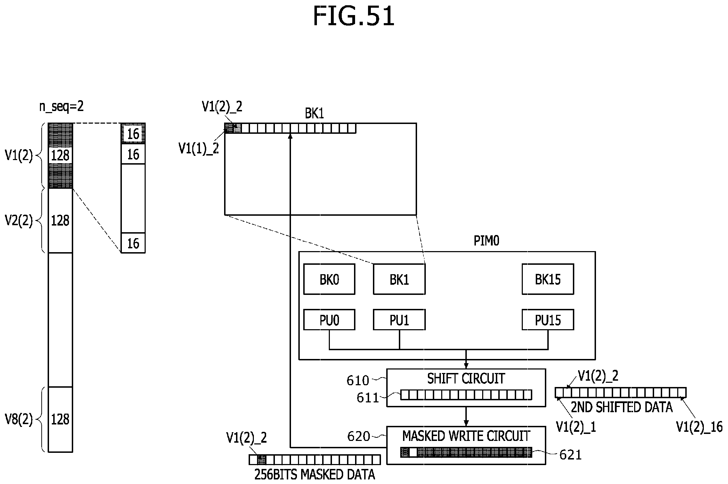

Referring next to FIG. 51, when the first element V1(2)_1 of the first value vector V1(2) of the second sequence n_seq=2 is written to the first memory bank BK0, the shifter 611 of the shift circuit 610 shifts the 256-bit first shifted data by 16 bits to the left to output second shifted data. The uppermost 16 bits of the second shifted data become the first element V1(2)_1 of the first value vector V1(2) of the second sequence n_seq=2, and the next upper 16 bits become the second element V1(2)_2 of the first value vector V1(2) of the second sequence n_seq=2. The second shifted data output from the shift circuit 610 is transmitted to the masked write circuit 620. The 256-bit mask 621 of the masked write circuit 620 writes the 256-bit masked data, in which all the lower order bits except the second uppermost 16 bits (i.e., the second element V1(2)_2 of the first value vector among the 256 bits of the second shifted data) are disabled, to the second memory bank BK1. Accordingly, the second element V1(2)_2 of the first value vector V1(2) of the second sequence n_seq=2 is written to the first row and the second column of the second memory bank BK1. Although not shown, the third through fifteenth elements of the first value vector V1(2) of the second sequence n_seq=2 are written to the third through fifteenth memory banks, respectively, in the same manner.

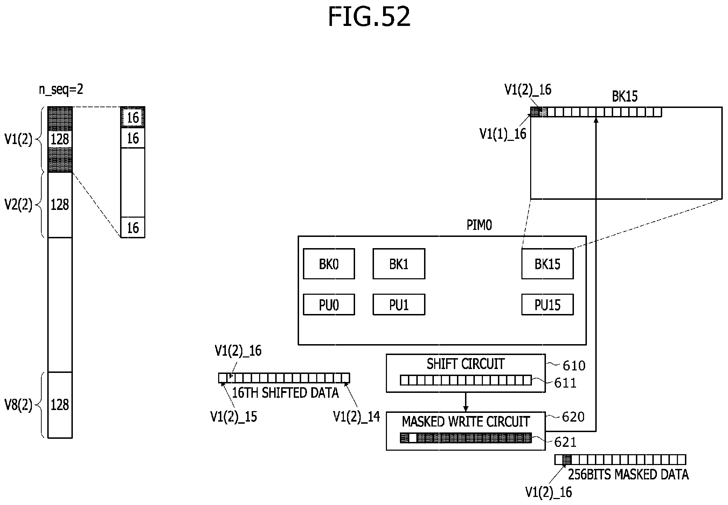

Referring next to FIG. 52, when the fifteenth element of the first value vector V1(2) of the second sequence n_seq=2 is written to the fifteenth memory bank, the shifter 611 of the shift circuit 610 shifts the 256-bit fifteenth shifted data by 16 bits to the left to output sixteenth shifted data. The uppermost 16 bits of the sixteenth shifted data become the fifteenth element V1(2)_15 of the first value vector V1(2) of the second sequence n_seq=2, and the next upper 16 bits become the sixteenth element V1(2)_16 of the first value vector V1(2) of the second sequence n_seq=2. The sixteenth shifted data output from the shift circuit 610 is transmitted to the masked write circuit 620. The 256-bit mask 621 of the masked write circuit 620 writes the 256-bit masked data, in which all the lower bits except the uppermost 16 bits (i.e., the sixteenth element V1(2)_16 of the first value vector among the 256-bit second shifted data) are disabled, to the sixteenth memory bank BK15. Accordingly, the sixteenth element V1(2)_16 of the first value vector V1(2) of the second sequence n_seq=2 is written to the first row and the second columns of the sixteenth memory bank BK15.

FIG. 53 through FIG. 55 are diagrams illustrating examples of writing value vectors generated in a second sequence to memory banks in a second manner in a neural network architecture according to embodiments of the present disclosure. The methods disclosed in these examples differ from the methods described above with reference to FIG. 50 through FIG. 52 in that the order in which the value vectors are written to the memory banks in the sequences, after the second sequence is changed, takes place without performing the initial shifting operation in the shifter of the shift circuit. Otherwise, the process of writing the value vectors generated in the first sequence to the memory banks is the same as described with reference to FIG. 47 through FIG. 49.

Referring first to FIG. 53, the first through sixteenth elements V1(2)_1 through V1(2)_16 of the first value vector V1(2) among the first through eighth value vectors V1(2) through V8(2) generated in the second sequence n_seq=2 are written to the first row and the second column of the first through sixteenth memory banks BK0 through BK15 of the first PIM device PIM0, respectively. As described with reference to FIG. 50 through FIG. 52, in the second sequence n_seq=2, the 256-bit mask 621 of the masked write circuit 620 selects and outputs the second upper 16 bits from the uppermost and disables all remaining bits. In this example, because the shifter 611 of the shift circuit 610 does not perform the initial shifting operation, the order of the memory banks into which the elements of the value vector are written is set differently. That is, in the first sequence n_seq=1, the elements of the value vector are written sequentially from the first memory bank BK0 to the sixteenth memory bank BK15, but in the second sequence n_seq=2, the elements of the value vector start to be written from the second memory bank BK1.

Specifically, in the second sequence n_seq=2, the first through sixteenth elements V1(2)_1 through V1(2)_16 among the 128 elements of the first value vector V1(2) generated in the first through sixteenth processing units PU0 through PU15 of the first PIM device PIM0 are input to the shifter 611 of the shift circuit 610 as the 256-bit input data. In other words, the lowermost 16 bits of the 256-bit input data input to the shifter 611 become the sixteenth element V1(2)_16 of the first value vector V1(2) of the second sequence n_seq=2, and the uppermost 16 bits of the 256-bit input data become the first element V1(2)_1 of the first value vector V1(2) of the second sequence n_seq=2. The shifter 611 outputs the 256-bit input data as the first shifted data. Accordingly, the uppermost 16 bits of the first shifted data become the first element V1(2)_1 of the first value vector V1(2), and the second upper 16 bits become the second element V1(2)_2 of the first value vector V1(2). The first shifted data output from the shifter 611 is transmitted to the 256-bit mask 621 of the masked write circuit 620.

In the second sequence n_seq=2, the 256-bit mask 621 is changed such that the second upper 16 bits from the uppermost are selected as the output bits. Accordingly, for the 256-bit masked data output from the 256-bit mask 621 of the masked write circuit 620, only the second element V1(2)_2 of the first value vector V1(2) of the second sequence n_seq=2 located in the second upper 16 bits from the uppermost is enabled, and all remaining bits are disabled. The masked write circuit 620 writes the 256-bit masked data output from the 256-bit mask 621 to the second memory bank BK1 rather than the first memory bank BK0. Accordingly, the second element V1(2)_2 of the first value vector V1(2) of the second sequence n_seq=2 is written to the first row and the second column of the second memory bank BK1. In the same manner, the third through fifteenth elements of the first value vector V1(2) of the second sequence n_seq=2 are written to the first row and the second column of the third through fifteenth memory banks, respectively.

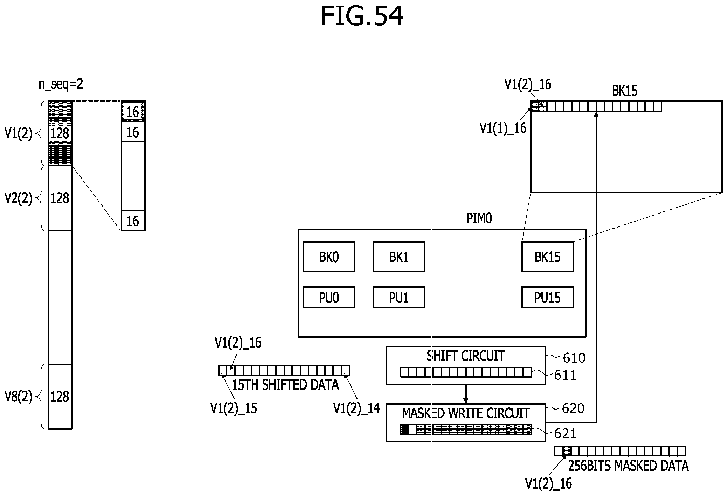

Referring next to FIG. 54, after writing the fifteenth element of the first value vector V1(2) of the second sequence n_seq=2 to the first row and the second column of the fifteenth memory bank, the shifter 611 of the shift circuit 610 shifts the data (that is, the fourteenth shifted data) stored in the shifter 611 by 16 bits to the left to generate and output fifteenth shifted data. The uppermost 16 bits of the fifteenth shifted data become the fifteenth element V1(2)_15 of the first value vector V1(2), and the second upper 16 bits become the sixteenth element V1(2)_16 of the first value vector V1(2). The fifteenth shifted data output from the shifter 611 is transmitted to the 256-bit mask 621 of the masked write circuit 620. The 256-bit mask 621 of the masked write circuit 620 outputs the 256-bit masked data in which only the sixteenth element V1(2)_16 of the first value vector V1(2) of the second sequence n_seq=2 located in the second upper 16 bits from the uppermost is enabled and all the remaining bits are disabled. The masked write circuit 620 writes the 256-bit masked data output from the 256-bit mask 621 to the sixteenth memory bank BK15. Accordingly, the sixteenth element V1(2)_16 of the first value vector V1(2) of the second sequence n_seq=2 is written to the first row and the second column of the sixteenth memory bank BK15.

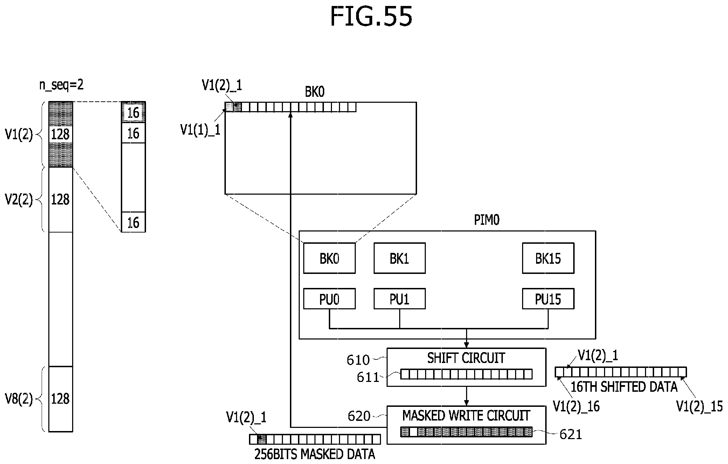

Referring next to FIG. 55, after writing the sixteenth element V1(2)_16 of the first value vector V1(2) of the second sequence n_seq=2 to the first row and the second column of the sixteenth memory bank BK15, the shifter 611 of the shift circuit 610 shifts the data (that is, the fifteenth shifted data in FIG. 54) stored in the shifter 611 by 16 bits to the left to generate and output sixteenth shifted data. The uppermost 16 bits of the sixteenth shifted data become the sixteenth element V1(2)_16 of the first value vector V1(2), and the second upper 16 bits become the first element V1(2)_1 of the first value vector V1(2). The sixteenth shifted data output from the shifter 611 is transmitted to the 256-bit mask 621 of the masked write circuit 620. The 256-bit mask 621 of the masked write circuit 620 outputs the 256-bit masked data in which only the first element V1(2)_1 of the first value vector V1(2) of the second sequence n_seq=2 located in the second uppermost 16 bits from the uppermost is enabled and all the remaining bits are disabled. The masked write circuit 620 writes the 256-bit masked data output from the 256-bit mask 621 to the first memory bank BK0. Accordingly, the first element V1(2)_1 of the first value vector V1(2) of the second sequence n_seq=2 is written to the first row and the second column of the first memory bank BK0.

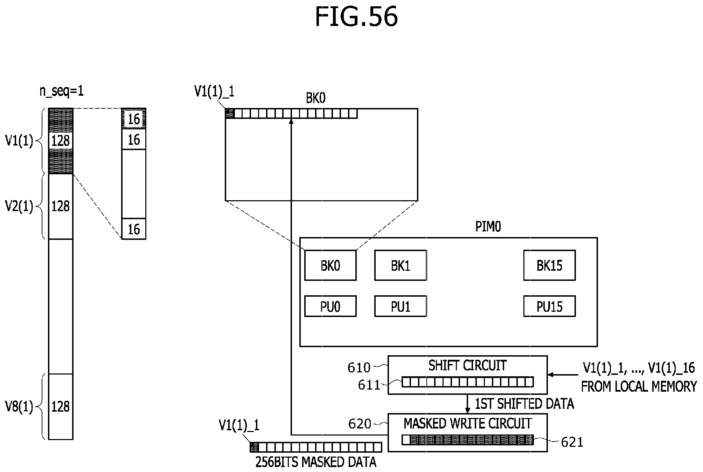

FIG. 56 is a diagram illustrating another example of writing value vectors of a first sequence to a memory bank in a second manner in a neural network architecture according to an embodiment of the present disclosure. The method illustrated in FIG. 56 differs from the methods described above with reference to FIG. 47 through FIG. 49 in that the method is applied when the first through eighth value vectors V1(1) through V8(1) generated in the PIM devices (and in some cases other devices) are stored in a local memory (130 in FIG. 1) of a neural network architecture (10 in FIG. 1).

Referring to FIG. 56, first through sixteenth elements V1(1)_1 through V1(1)_16 of a first value vector V1(1) of the first sequence n_seq=1 stored in the local memory (130 in FIG. 1) are transmitted to a shifter 611 of a shift circuit 610 as 256-bit input data. In a first sequence n_seq=1, the shifter 611 outputs 256-bit output data that is the same as the 256-bit input data as first shifted data. without an initial shifting operation. Accordingly, the uppermost 16 bits of the first shifted data become the first element V1(1)_1 of the first value vector. The first shifted data output from the shift circuit 610 is transmitted to the masked write circuit 620. The 256-bit mask 621 of the masked write circuit 620 writes 16-bit masked data in which all the remaining lower bits except the uppermost 16 bits of the 256 bits of the first shifted data (i.e., the first element V1(1)_1 of the first value vector) are disabled to the first memory bank BK0. Accordingly, the first element V1(1)_1 of the first value vector V1(1)_1 of the first sequence n_seq=1 is written to the first row and the first column of the first memory bank BK0. The process of writing the remaining second through sixteenth elements of the first value vector is the same as the process described with reference to FIG. 48 and FIG. 49. Furthermore, the process of writing the first through sixteenth elements of the first value vector in the second sequence n_seq=2 is the same as the processes described with reference to FIG. 50 through FIG. 52 or the processes described with reference to FIG. 53 through FIG. 55.

A limited number of possible embodiments for the present teachings have been presented above for illustrative purposes. Those of ordinary skill in the art will appreciate that various modifications, additions, and substitutions are possible. While this patent document contains many specifics, these should not be construed as limitations on the scope of the present teachings or of what may be claimed, but rather as descriptions of features that may be specific to particular embodiments. Certain features that are described in this patent document in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

## Claims

1. A neural network architecture comprising a plurality of processing-in-memory (PIM) devices configured to perform multi-head attention for a transformer model,
wherein each of the plurality of PIM devices comprises:
a plurality of memory banks configured to store key vectors and value vectors that are used as input data of the multi-head attention; and
a plurality of processing units corresponding to the plurality of memory banks and configured to perform the multi-head attention via the transformer model using the key vectors and the value vectors, and
wherein the plurality of memory banks are configured to store the key vectors in a first manner and store the value vectors in a second manner that is different from the first manner.

2. The neural network architecture of claim 1,
wherein the first manner is a set of operations in which the key vectors generated in one sequence of a plurality of sequences of the multi-head attention are stored in one memory bank among the plurality of memory banks of each of the plurality of PIM devices, and wherein the second manner is a set of operations in which the value vectors generated in one sequence among the plurality of sequences of the multi-head attention are distributed and stored in the plurality of memory banks of each of the plurality of PIM devices.

3. The neural network architecture of claim 1, wherein when a number of the plurality of PIM devices is "P", a number of the plurality of memory banks is "M", and "L" is a natural number from "1" to "P",
an "L"^{th} PIM device is configured to store the key vectors generated in "(L-1)·M+1"^{th} through "L·M"^{th} sequences among a plurality of sequences.

4. The neural network architecture of claim 3, wherein the key vectors generated in the "(L-1)·M+1"^{th} through "L·M"^{th} sequences are sequentially stored in first through "M"^{th} memory banks of the "L"^{th} PIM device in units of the key vectors generated in one sequence among the "(L-1)·M+1"^{th} through "L·M"^{th} sequences.

5. The neural network architecture of claim 4, wherein the key vectors generated in the "(L-1)·M+1"^{th} through "L·M"^{th} sequences are stored in a same first row in the first through "M"^{th} memory banks of the "L"^{th} PIM device.

6. The neural network architecture of claim 1,
wherein the plurality of PIM devices further comprise global buffers storing query vectors used as input data for the multi-head attention,
when a number of the plurality of PIM devices is "P", a number of the plurality of memory banks is "M", a number of heads in the multi-head attention is "N", and "L" is a natural number from "1" to "P",
wherein "N" query vectors, "N" key vectors, and "N" value vectors are generated each time each of a plurality of sequences is performed,
wherein the "N" key vectors generated in "(L-1)·M+1"^{th} through "L·M"^{th} sequences among the plurality of sequences are sequentially stored in first through "M"^{th} memory banks of an "L"^{th} PIM device in units of the "N" key vectors generated in a single sequence, and
wherein the "N" query vectors generated in each of the "(L-1)·M+1"^{th} through "L·M"^{th} sequences are stored in a global buffer of the "L"^{th} PIM device.

7. The neural network architecture of claim 6,
wherein first through "N"^{th} key vectors generated in a first sequence are sequentially stored in a first row of a first memory bank of a first PIM device in a direction of increasing columns,
wherein first through "N"^{th} query vectors generated in the first sequence are sequentially stored in the global buffer of the first PIM device, and
when "K" is a natural number from "1" to "N",
wherein a first processing unit of the first PIM device performs a first matrix-vector multiplication on a "K"^{th} key vector and a "K"^{th} query vector to generate a "K"^{th} attention score vector in the first sequence.

8. The neural network architecture of claim 7,
wherein the first through "N"^{th} query vectors generated in a second sequence are sequentially stored in the direction of increasing columns in a first row in a second memory bank of the first PIM device among the plurality of PIM devices,
wherein the first through "N"^{th} query vectors generated in the second sequence are sequentially stored in the global buffer of the first PIM device,
when "K" is a natural number from "1" to "N",
wherein the first processing unit of the first PIM device performs the first matrix-vector multiplication on the "K"^{th} key vector and the "K"^{th} query vector generated in the first sequence to generate a first part of the "K"^{th} attention score vector in the second sequence, and
wherein a second processing unit of the first PIM device performs the first matrix-vector multiplication on the "K"^{th} key vector generated in the second sequence and the "K"^{th} query vector generated in the second sequence to generate a second part of the "K"^{th} attention score vector in the second sequence.

9. The neural network architecture of claim 8,
wherein the first through "N"^{th} key vectors generated in an"M"^{th} sequence are sequentially stored in the direction of increasing columns in the first row in the "M"^{th} memory bank of the first PIM device among the plurality of PIM devices,
wherein the first through "N"^{th} query vectors generated in the "M"^{th} sequence are sequentially stored in the global buffer of the first PIM device, and
when "K" is a natural number from "1" to "N",
wherein first through "M"^{th} processing units of the first PIM device sequentially perform first matrix-vector multiplications on "K"^{th} key vectors generated in first through "M"^{th} sequences and the "K"^{th} query vector generated in the "M"^{th} sequence to generate first through "N"^{th} parts of the "K"^{th} attention score vector in the "M"^{th} sequence.

10. The neural network architecture of claim 1,
when a number of the plurality of PIM devices is "P", a number of the plurality of memory banks is "M", and "L" is a natural number from "1" to "P",
wherein the key vectors generated in the "(L-1)·M+1"^{th} through "L·M"^{th} sequences among a plurality of sequences and the key vectors generated in the "((P+(L-1))·M+1"^{th} through "(P+L)·M"^{th} sequences are sequentially stored in first through "M"^{th} memory banks of an "L"^{th} PIM device in units of key vectors generated in one sequence.

11. The neural network architecture of claim 10,
wherein the key vectors generated in the "(L-1)·M+1"^{th} through "L·M"^{th} sequences among the plurality of sequences are stored in the first row in the first through "M"^{th} memory banks of the "L"^{th} PIM device, and
wherein the key vectors generated in the "((P+(L-1))·M+1"^{th} through "(P+L)·M"^{th} sequences are stored in a second row, which is a next row after the first row in each of the first through "M"^{th} memory banks of the "L"^{th} PIM device.

12. The neural network architecture of claim 11,
wherein first through "N"^{th} key vectors generated in the "((P+(L-1))·M+1)"^{th} sequence are sequentially stored in the direction of increasing columns in the second row in the first memory bank of the "L"^{th} PIM device,
wherein first through "N"^{th} query vectors generated in the "((P+(L-1))·M+1)"^{th} sequence are sequentially stored in a global buffer of the "N"^{th} PIM device,
and when "K" is a natural number from "1" to "N",
wherein first through "M"^{th} processing units of each of first through "P"^{th} PIM devices sequentially perform first operations of the first matrix-vector multiplications on the "K"^{th} key vectors generated in first through "((P+(L-1))·M)"^{th} sequences and the "K"^{th} query vector generated in the "M"^{th} sequence to generate first through "((P+(L-1))·M+1)"^{th} parts of the "K"^{th} attention score vector in the "((P+(L-1))·M+1)"^{th} sequence, and
wherein the first processing unit of the first PIM device sequentially performs second operations of the first matrix-vector multiplications on the "K"^{th} key vector generated in the "((P+(L-1))·M)"^{th} sequence and the "K"^{th} query vector generated in the "((P+(L-1))-M)"^{th} sequence to generate the "((P+(L-1))·M+1)"^{th} part of the "K"^{th} attention score vector in the "((P+(L-1))·M+1)"^{th} sequence.

13. The neural network architecture of claim 1,
wherein when a number of the plurality of PIM devices is "P", a number of the plurality of memory banks is "M", and "L" is a natural number from "1" to "P",
the key vectors generated in the "(L-1)·M+1"^{th} through "L·M"^{th} sequences among a plurality of sequences are stored in consecutive first row and second row in each of first through "M"^{th} memory banks of an "L"^{th} PIM device.

14. The neural network architecture of claim 13,
wherein the key vectors generated in the "((P+(L-1))·M+1"^{th} through "(P+L)·M"^{th} sequences are sequentially stored in the first through "M"^{th} memory banks of the "L"^{th} PIM device in units of key vectors generated in a single sequence.

15. The neural network architecture of claim 14,
wherein the key vectors generated in the "((P+(L-1))·M+1"^{th} through "(P+L)·M"^{th} sequences are stored in a third row and a fourth row consecutively following the second row in each of the first through "M"^{th} memory banks of the "L"^{th} PIM device.

16. The neural network architecture of claim 1,
wherein when a number of the plurality of PIM devices is "P", a number of the plurality of memory banks included in each of the plurality of PIM devices is "M", a number of heads of the multi-head attention is "N", one head of the multi-head attention includes "D" elements, "K" is a natural number from 1 to "N", and "D/M" is less than "P",
first through "D"^{th} elements of a "K"^{th} value vector among the "N" value vectors generated in the first sequence, which is one sequence among a plurality of sequences, are distributed by "M" elements and written to first through "D/M"^{th} PIM devices among the plurality of PIM devices.

17. The neural network architecture of claim 16,
wherein the "M" elements written to each of the first through "D/M"^{th} PIM devices among the first through "D"^{th} elements of the "K"^{th} value vector are distributed in units of a single element and written to the "M" memory banks included in each of the first through "D/M"^{th} PIM devices.

18. The neural network architecture of claim 17,
wherein the "M" elements distributed in units of a single element and written to the "M" memory banks included in each of the first through "D/M"^{th} PIM devices are written to the same first row and first column.

19. The neural network architecture of claim 18,
wherein the first through "D"^{th} elements of the "K"^{th} value vector among the "N" value vectors generated in the second sequence, which is the next sequence of the first sequence, are distributed in units of "M" elements and written to the first through "D/M"^{th} PIM devices among the plurality of PIM devices,
wherein the "M" elements written to each of the first through "D/M"^{th} PIM devices among the first through "D"^{th} elements of the first value vector are distributed in units of a single element and written to the "M" memory banks included in each of the first through "D/M"^{th} PIM devices, and
wherein the "M" elements distributed in units of a single element and written in the "M" memory banks included in each of the first through "D/M"^{th} PIM devices are written to the first row and the second column, which is the next column of a first column.

20. The neural network architecture of claim 1,
wherein when a number of the plurality of PIM devices is "P", a number of the plurality of memory banks included in each of the plurality of PIM devices is "M", a number of heads in the multi-head attention is "N", one head in the multi-head attention includes "D" elements, and "D=(P/2)·M",
first through "D"^{th} elements of odd-numbered value vectors among the "N" value vectors generated in the first sequence, which is one sequence among a plurality of sequences, are stored in first through "P/2"^{th} PIM devices among the plurality of PIM devices, and
the first through "D"^{th} elements of even-numbered value vectors among the "N" value vectors generated in the first sequence are stored in the "(P/2)+1"^{th} through "P"^{th} PIM devices among the plurality of PIM devices.

21. The neural network architecture of claim 20,
wherein the first through "D"^{th} elements of the odd-numbered value vectors generated in the first sequence are distributed in units of "M" elements and stored in the first through "P/2"^{th} PIM devices, and
wherein the first through "D"^{th} elements of the even-numbered value vectors generated in the first sequence are distributed in units of "M" elements and stored in the "(P/2)+1"^{th} through "P"^{th} PIM devices.

22. The neural network architecture of claim 21,
wherein the "M" elements of the odd-numbered value vectors generated in the first sequence and distributed and stored in the first through "P/2"^{th} PIM devices are distributed in units of a single element and stored in first through "M"^{th} memory banks of each of the first through "P/2"^{th} PIM devices, and
wherein the "M" elements of the even-numbered value vectors generated in the first sequence and distributed and stored in the "(P/2)+1"^{th} through "P"^{th} PIM devices are distributed in units of a single element and stored in the first through "M"^{th} memory banks of each of the "(P/2)+1"^{th} through "P"^{th} PIM devices.

23. The neural network architecture of claim 22,
wherein the odd-numbered value vectors generated in the first sequence are stored in different rows in the first through "M"^{th} memory banks of each of the first through "P/2"^{th} PIM devices, from the first odd-numbered value vector to the last odd-numbered value vector, and
wherein the even-numbered value vectors generated in the first sequence are stored in different rows in the first through "M"^{th} memory banks of each of the "(P/2)+1"^{th} through "P"^{th} PIM devices, from the first even-numbered value vector to the last even-numbered value vector.

24. The neural network architecture of claim 23,
wherein the odd-numbered value vectors generated in the first sequence are stored as specified by a same first column address in the first through "M"^{th} memory banks of each of the first through "P/2"^{th} PIM devices, and
wherein the even-numbered value vectors generated in the first sequence are stored as specified by the same first column address in the first through "M"^{th} memory banks of each of the "(P/2)+1"^{th} through "P"^{th} PIM devices.

25. The neural network architecture of claim 24,
wherein the odd-numbered value vectors generated in the second sequence following the first sequence of the plurality of sequences are stored in same rows as the rows in which the odd-numbered value vectors generated in the first sequence are stored in the first through "M"^{th} memory banks of each of the first through "P/2"^{th} PIM devices, the odd-numbered value vectors generated in the second sequence being stored as specified by the second column address following a first column address, and
wherein the even-numbered value vectors generated in the second sequence are stored in the same rows as the rows in which the even-numbered value vectors generated in the first sequence are stored in the first through "M"^{th} memory banks of each of the "(P/2)+1"^{th} through "P"^{th} PIM devices, the even-numbered value vectors generated in the second sequence being stored as specified by the second column address.

26. The neural network architecture of claim 24,
wherein each of the plurality of PIM devices further comprises a global buffer storing attention distribution vectors used as input data in a second matrix-vector multiplication of the multi-head attention,
wherein the first through "D"^{th} elements of the odd-numbered attention distribution vectors are stored in the global buffer of the first through "P/2"^{th} PIM devices, and
wherein the first through "D"^{th} elements of the even-numbered attention distribution vectors are stored in the global buffer of the "(P/2)+1"^{th} through "P"^{th} PIM devices.

27. The neural network architecture of claim 22,
wherein the "M" elements of the first value vector of the "N" value vectors generated in the first sequence among the plurality of sequences are distributed and stored as specified by the first column address in the first row of each of the first through "M"^{th} memory banks of each of the first through "P/2"^{th} PIM devices,
wherein the "M" elements of a second value vector among the "N" value vectors generated in the first sequence are distributed and stored as specified by the first column address in the first row of each of the first through "M"^{th} memory banks of each of the "(P/2)+1"^{th} through "P"^{th} PIM devices,
wherein the "M" elements of a third value vector among the "N" value vectors generated in the first sequence are distributed and stored as specified by the first column address in the second row of each of the first through "M"^{th} memory banks of each of the first through "P/2"^{th} PIM devices, and
wherein the "M" elements of a fourth value vector among the "N" value vectors generated in the first sequence are distributed and stored as specified by the first column address in a second row of each of the first through "M"^{th} memory banks of each of the "(P/2)+1"^{th} through "P"^{th} PIM devices.

28. The neural network architecture of claim 27,
wherein each of the plurality of PIM devices further comprises a global buffer storing the attention distribution vectors used as input data in the second matrix-vector multiplication of the multi-head attention,
wherein the odd-numbered attention distribution vectors are stored in the global buffer of each of the first through "P/2"^{th} PIM devices, and
wherein the even-numbered attention distribution vectors are stored in the global buffer of each of the "(P/2)+1"^{th} through "P"^{th} PIM devices.

29. The neural network architecture of claim 28,
wherein first through "M"^{th} processing units of each of the first through "P/2"^{th} PIM devices perform the second matrix-vector multiplication on the "M" elements of the first value vector stored in the first through "M"^{th} memory banks of each of the first through "P/2"^{th} PIM devices and a first attention distribution vector stored in the global buffer of each of the first through "P/2"^{th} PIM devices to generate first through "D"^{th} segments of a first multi-head attention value vector, and
wherein the first through "M"^{th} processing units of each of the "(P/2)+1"^{th} through "P"^{th} PIM devices perform the second matrix-vector multiplication on the "M" elements of the second value vector stored in the first through "M"^{th} memory banks of each of the "(P/2)+1"^{th} through "P"^{th} PIM devices and a second attention distribution vector stored in the global buffer of each of the "(P/2)+1"^{th} through "P"^{th} PIM devices to generate the first through "D"^{th} segments of a second multi-head attention value vector.

30. The neural network architecture of claim 29,
wherein the first through "M"^{th} processing units of each of the first through "P/2"^{th} PIM devices perform the second matrix-vector multiplication on the "M" elements of the third value vector stored in the first through "M"^{th} memory banks of each of the first through "P/2"^{th} PIM devices and a third attention distribution vector stored in the global buffer of each of the first through "P/2"^{th} PIM devices to generate the first through "D"^{th} segments of a third multi-head attention value vector, and
wherein the first through "M"^{th} processing units of each of the "(P/2)+1"^{th} through "P"^{th} PIM devices perform the second matrix-vector multiplication on "M" elements of the fourth value vector stored in the first through "M"^{th} memory banks of each of the "(P/2)+1"^{th} through "P"^{th} PIM devices and the second attention distribution vector stored in the global buffer of each of the "(P/2)+1"^{th} through "P"^{th} PIM devices to generate the first through "D"^{th} segments of a fourth multi-head attention value vector.
